(19) Europäisches Patentamt
European Patent Office
Office européen des brevets

(11) **EP 4 261 778 A1**

(12) **EUROPEAN PATENT APPLICATION**
published in accordance with Art. 153(4) EPC

(43) Date of publication:
**18.10.2023 Bulletin 2023/42**

(21) Application number: **20967715.2**

(22) Date of filing: **31.12.2020**

(51) International Patent Classification (IPC):
***G06T 7/292*** *(2017.01)*

(52) Cooperative Patent Classification (CPC):
**G06T 7/292**

(86) International application number:
**PCT/CN2020/142050**

(87) International publication number:
**WO 2022/141376 (07.07.2022 Gazette 2022/27)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Huawei Digital Power Technologies Co., Ltd.**
**Shenzhen, Guangdong 518129 (CN)**

(72) Inventors:
• **LIU, Chang**
**Shenzhen, Guangdong 518129 (CN)**
• **LIU, Chuangchuang**
**Shenzhen, Guangdong 518129 (CN)**
• **CHEN, Baoyang**
**Shenzhen, Guangdong 518129 (CN)**
• **FANG, Yuntan**
**Shenzhen, Guangdong 518129 (CN)**
• **DONG, Siwei**
**Shenzhen, Guangdong 518129 (CN)**
• **FANG, Shu**
**Shenzhen, Guangdong 518129 (CN)**
• **ZHANG, Huimin**
**Shenzhen, Guangdong 518129 (CN)**

(74) Representative: **Körber, Martin Hans**
**Mitscherlich PartmbB**
**Patent- und Rechtsanwälte**
**Karlstraße 7**
**80333 München (DE)**

(54) **POSTURE ESTIMATION METHOD RELATED APPARATUS**

(57)    A pose estimation method and an apparatus are provided, to obtain a more accurate pose estimation result. The method includes: obtaining a first event image and a first target image (10101), where the first event image is aligned with the first target image in time sequence, the first target image includes an RGB image or a depth image, and the first event image includes an image indicating a movement trajectory that is of a target object and that is generated when the target object moves in a detection range of a motion sensor; determining integration time of the first event image (10102); if the integration time is less than a first threshold, determining that the first target image is not for performing pose estimation (10103); and performing pose estimation based on the first event image (10104).

10100

FIG. 101

**Description**

**TECHNICAL FIELD**

This application relates to the computer field, and in particular, to a pose estimation method and a related apparatus.

**BACKGROUND**

Simultaneous localization and mapping (SLAM) is a technology in which a subject with a specific sensor builds a map of an ambient environment in a movement process and locates the subject based on the built map of the environment. The SLAM technology has a wide application prospect in the fields of robot, self-driving, virtual and augmented reality, and the like.

In the SLAM technology, pose estimation is an important process. Currently, all algorithms for implementing pose estimation are applicable to a static scenario, and it is difficult to implement accurate pose estimation in a dynamic scenario.

**SUMMARY**

Embodiments of this application provide an image processing method and apparatus, to obtain a clearer image.

According to a first aspect, this application provides a switching method, applied to an electronic device. The electronic device includes an RGB sensor and a motion sensor, the red green blue (RGB) sensor is configured to collect an image in a shooting range, and the motion sensor is configured to collect information generated when an object moves relative to the motion sensor in a detection range of the motion sensor. The method includes: selecting at least one of the RGB sensor and the motion sensor based on scenario information, and collecting data via a selected sensor, where the scenario information includes at least one of status information of the electronic device, a type of an application that requests to collect an image and that is in the electronic device, or environment information.

Therefore, in implementations of this application, different sensors in the electronic device may be selected to be started based on different scenarios, to adapt to more scenarios, and a generalization capability is strong. In addition, a corresponding sensor may be started based on an actual scenario, and there is no need to start all sensors, thereby reducing power consumption of the electronic device.

In a possible implementation, the status information includes remaining battery power and remaining storage of the electronic device. The environment information includes a light intensity variation in the shooting range of the color RGB sensor and a shooting range of the motion sensor, or information about the moving object in the shooting range.

Therefore, in implementations of this application, the sensor to be started may be selected based on the status information or the environment information of the electronic device, to adapt to more scenarios, and a generalization capability is strong.

In addition, in the following different implementations, started sensors may be different. When a mentioned sensor collects data, the sensor is already started. Details are not described in the following.

According to a second aspect, this application provides a vision sensor chip that may include: a pixel array circuit, configured to generate, by measuring a light intensity variation, at least one data signal corresponding to a pixel that is in the pixel array circuit, where the at least one data signal indicates a light intensity change event, and the light intensity change event indicates that the light intensity variation measured at the corresponding pixel that is in the pixel array circuit exceeds a predetermined threshold; and a reading circuit, where the reading circuit is coupled to the pixel array circuit, and is for reading the at least one data signal from the pixel array circuit in a first event representation manner. The reading circuit is further configured to provide the at least one data signal for a control circuit. The reading circuit is further configured to: when receiving, from the control circuit, a conversion signal generated based on the at least one data signal, convert to reading the at least one data signal from the pixel array circuit in a second event representation manner. It can be learned from the first aspect that a vision sensor can adaptively switch between the two event representation manners, so that a data reading rate always does not exceed a predetermined data reading rate threshold, thereby reducing costs of data transmission, parsing, and storage of the vision sensor, and significantly improving performance of the sensor. In addition, such the vision sensor may collect statistics on data of events generated in a time period, to predict a possible event generation rate in a next time period, so that a reading mode that is more suitable for a current external environment, application scenario, and movement state can be selected.

In a possible implementation, the first event representation manner is representing an event based on polarity information. The pixel array circuit may include a plurality of pixels. Each pixel may include a threshold comparison unit. The threshold comparison unit is configured to output the polarity information when the light intensity variation exceeds the predetermined threshold. The polarity information indicates whether the light intensity variation is enhanced or reduced. The reading circuit is specifically configured to read the polarity information output by the threshold comparison unit. In this implementation, the first event representation manner is representing an event based on the polarity information. The polarity information is usually represented by one bit or two bits, and carries little information, so as to prevent the vision sensor from facing a problem of sudden increase of events when large-area object movement or light intensity fluctuation occurs (for example, in a scenario of tunnel entrance and exit, and room light on and off) due to a large amount of data, and avoid event loss caused because event data cannot be read when a preset maximum bandwidth (referred to as a preset bandwidth below) of the vision sensor is fixed.

In a possible implementation, the first event representation manner is representing an event based on light intensity information. A pixel array may include a plurality of pixels, and each pixel may include a threshold comparison unit, a readout control unit, and a light intensity capturing unit. The light intensity detection unit is configured to output an electrical signal corresponding to an optical signal irradiated on the light intensity detection unit, where the electrical signal indicates a light intensity. The threshold comparison unit is configured to output a first signal when determining, based on the electrical signal, that the light intensity variation exceeds the predetermined threshold. The readout control unit is configured to: in response to reception of the first signal, indicate the light intensity capturing unit to capture and buffer an electrical signal corresponding to a receiving moment of the first signal. The reading circuit is specifically configured to read the electrical signal buffered by the light intensity capturing unit. In this implementation, the first event representation manner is representing an event based on the light intensity information. When an amount of transmitted data does not exceed a bandwidth limit, the light intensity information is used to represent an event. Generally, the light intensity information is represented by a plurality of bits, for example, 8 bits to 12 bits. Compared with polarity information, the light intensity information may carry more information, and this facilitates event processing and analysis, for example, improves image reconstruction quality.

In a possible implementation, the control circuit is further configured to: determine statistics data based on the at least one data signal received by the reading circuit; and if determining that the statistics data satisfies a predetermined conversion condition, send the conversion signal to the reading circuit, where the predetermined conversion condition is determined based on the preset bandwidth of the vision sensor chip. In this implementation, a manner of converting the two event representation manners is provided, and the conversion condition is obtained based on an amount of data to be transmitted. For example, when the amount of data to be transmitted is relatively large, switching is performed to the manner of representing an event based on the polarity information, so as to ensure that the amount of data can be completely transmitted, and avoid event loss caused because event data cannot be read. When the amount of data to be transmitted is relatively small, switching is performed to the manner of representing an event based on the light intensity information, so that the transmitted event can carry more information, thereby facilitating event processing and analysis, for example, improving image reconstruction quality.

In a possible implementation, when the first event representation manner is representing an event based on light intensity information, and the second event representation manner is representing an event based on polarity information, the predetermined conversion condition is that a total amount of data read from the pixel array circuit in the first event representation manner is greater than the preset bandwidth, or the predetermined conversion condition is that a quantity of the at least one data signal is greater than a ratio of the preset bandwidth to a first bit, where the first bit is a preset bit of a data format of the data signal. In this implementation, a specific condition for switching from the manner of representing an event based on the light intensity information to the manner of representing an event based on the polarity information is given. When the amount of data to be transmitted is greater than the preset bandwidth, switching is performed to the manner of representing an event based on the polarity information, so as to ensure that the amount of data can be completely transmitted, and avoid event loss caused because event data cannot be read.

In a possible implementation, when the first event representation manner is representing an event based on polarity information, and the second event representation manner is representing an event based on light intensity information, the predetermined conversion condition is that if the at least one data signal is read from the pixel array circuit in the second event representation manner, a total amount of read data is not greater than the preset bandwidth, or the predetermined conversion condition is that a quantity of the at least one data signal is not greater than a ratio of the preset bandwidth to a first bit, where the first bit is a preset bit of a data format of the data signal. In this implementation, a specific condition for switching from the manner of representing an event based on the polarity information to the manner of representing an event based on the light intensity information is given. When the amount of data to be transmitted is not greater than the preset bandwidth, switching is performed to the manner of representing an event based on the light intensity information, so that the transmitted event can carry more information, thereby facilitating event processing and analysis, for example, improving image reconstruction quality.

According to a third aspect, this application provides a decoding circuit that may include a reading circuit, configured to read a data signal from a vision sensor chip. The decoding circuit is configured to decode the data signal in a first decoding mode. The decoding circuit is further configured to: when receiving a conversion signal from a control circuit, decode the data signal in a second decoding mode. The decoding circuit provided in the third aspect corresponds to the vision sensor chip provided in the second aspect, and is configured to decode the data signal output by the vision sensor chip provided in the second aspect. The decoding circuit provided in the third aspect may switch different decoding modes for different event representation manners.

In a possible implementation, the control circuit is further configured to determine statistics data based on the data signal read by the reading circuit; and if determining that the statistics data satisfies a predetermined conversion condition, send the conversion signal to the encoding circuit, where the predetermined conversion condition is determined based on a preset bandwidth of the vision sensor chip.

In a possible implementation, the first decoding mode is decoding the data signal based on a first bit corresponding to a first event representation manner, where the first event representation manner is representing an event based on light intensity information. The second decoding mode is decoding the data signal based on a second bit corresponding to a second event representation manner, where the second event representation manner is representing an event based on polarity information, and the polarity information indicates whether a light intensity variation is enhanced or reduced. The conversion condition is that a total amount of data decoded in the first decoding mode is greater than the preset bandwidth, or the preset conversion condition is that a quantity of data signals is greater than a ratio of the preset bandwidth to the first bit, where the first bit is a preset bit of a data format of the data signal.

In a possible implementation, the first decoding mode is decoding the data signal based on a first bit corresponding to a first event representation manner, where the first event representation manner is representing an event based on polarity information, and the polarity information indicates whether a light intensity variation is enhanced or reduced. The second decoding mode is decoding the data signal based on a second bit corresponding to a second event representation manner, where the second event representation manner is representing an event based on light intensity information. The conversion condition is that if the data signal is decoded in the second decoding manner, a total data amount is not greater than the preset bandwidth, or the preset conversion condition is that a quantity of data signals is greater than a ratio of the preset bandwidth to the first bit, where the first bit is a preset bit of a data format of the data signal.

According to a fourth aspect, this application provides a method for operating a vision sensor chip, and the method may include: A pixel array circuit in a vision sensor chip measures a light intensity variation to generate at least one data signal corresponding to a pixel that is in the pixel array circuit, where the at least one data signal indicates a light intensity change event, and the light intensity change event indicates that the light intensity variation measured at the corresponding pixel that is in the pixel array circuit exceeds a predetermined threshold. A reading circuit of the vision sensor chip reads the at least one data signal from the pixel array circuit in a first event representation manner. The reading circuit provides the at least one data signal for a control circuit of the vision sensor chip. When receiving, from the control circuit, a conversion signal generated based on the at least one data signal, the reading circuit converts to reading the at least one data signal from the pixel array circuit in a second event representation manner.

In a possible implementation, the first event representation manner is representing an event based on polarity information, the pixel array circuit may include a plurality of pixels, and each pixel may include a threshold comparison unit. That a reading circuit of the vision sensor chip reads the at least one data signal from the pixel array circuit in a first event representation manner may include: When the light intensity variation exceeds the predetermined threshold, the threshold comparison unit outputs the polarity information. The polarity information indicates whether the light intensity variation is enhanced or reduced. The reading circuit reads the polarity information output by the threshold comparison unit.

In a possible implementation, the first event representation manner is representing an event based on light intensity information. A pixel array may include a plurality of pixels, and each pixel may include a threshold comparison unit, a readout control unit, and a light intensity capturing unit. That a reading circuit of the vision sensor chip reads the at least one data signal from the pixel array circuit in a first event representation manner may include: The light intensity capturing unit outputs an electrical signal corresponding to an optical signal irradiated on the light intensity capturing unit, where the electrical signal indicates a light intensity. The threshold comparison unit outputs a first signal when determining, based on the electrical signal, that the light intensity variation exceeds the predetermined threshold. In response to reception of the first signal, the readout control unit indicates the light intensity capturing unit to capture and buffer an electrical signal corresponding to a receiving moment of the first signal. The reading circuit reads the electrical signal buffered by the light intensity capturing unit.

In a possible implementation, the method may further include: determining statistics data based on the at least one data signal received by the reading circuit; and if determining that the statistics data satisfies a predetermined conversion condition, sending the conversion signal to the reading circuit, where the predetermined conversion condition is determined based on a preset bandwidth of the vision sensor chip.

In a possible implementation, when the first event representation manner is representing an event based on light intensity information, and the second event representation manner is representing an event based on polarity information, the predetermined conversion condition is that a total amount of data read from the pixel array circuit in the first event representation manner is greater than the preset bandwidth, or the predetermined conversion condition is that a quantity of the at least one data signal is greater than a ratio of the preset bandwidth to a first bit, where the first bit is a preset bit of a data format of the data signal.

In a possible implementation, when the first event representation manner is representing an event based on polarity information, and the second event representation manner is representing an event based on light intensity information, the predetermined conversion condition is that if the at least one data signal is read from the pixel array circuit in the second event representation manner, a total amount of read data is not greater than the preset bandwidth, or the predetermined conversion condition is that a quantity of the at least one data signal is not greater than a ratio of the preset bandwidth to a first bit, where the first bit is a preset bit of a data format of the data signal.

According to a fifth aspect, this application provides a decoding method, including: A reading circuit reads a data signal from a vision sensor chip. A decoding circuit decodes the data signal in a first decoding mode. When receiving a conversion signal from a control circuit, the decoding circuit decodes the data signal in a second decoding mode.

In a possible implementation, the method further includes: determining statistics data based on the data signal read by the reading circuit; and if determining that the statistics data satisfies a predetermined conversion condition, sending the conversion signal to the encoding circuit, where the predetermined conversion condition is determined based on a preset bandwidth of the vision sensor chip.

In a possible implementation, the first decoding mode is decoding the data signal based on a first bit corresponding to a first event representation manner, where the first event representation manner is representing an event based on light intensity information. The second decoding mode is decoding the data signal based on a second bit corresponding to a second event representation manner, where the second event representation manner is representing an event based on polarity information, and the polarity information indicates whether a light intensity variation is enhanced or reduced. The conversion condition is that a total amount of data decoded in the first decoding mode is greater than the preset bandwidth, or the preset conversion condition is that a quantity of data signals is greater than a ratio of the preset bandwidth to the first bit, where the first bit is a preset bit of a data format of the data signal.

In a possible implementation, the first decoding mode is decoding the data signal based on a first bit corresponding to a first event representation manner, where the first event representation manner is representing an event based on polarity information, and the polarity information indicates whether a light intensity variation is enhanced or reduced. The second decoding mode is decoding the data signal based on a second bit corresponding to a second event representation manner, where the second event representation manner is representing an event based on light intensity information. The conversion condition is that if the data signal is decoded in the second decoding manner, a total data amount is not greater than the preset bandwidth, or the preset conversion condition is that a quantity of data signals is greater than a ratio of the preset bandwidth to the first bit, where the first bit is a preset bit of a data format of the data signal.

According to a sixth aspect, this application provides a vision sensor chip that may include: a pixel array circuit, configured to generate, by measuring a light intensity variation, at least one data signal corresponding to a pixel that is in the pixel array circuit, where the at least one data signal indicates a light intensity change event, and the light intensity change event indicates that the light intensity variation measured at the corresponding pixel that is in the pixel array circuit exceeds a predetermined threshold; and a first encoding unit, configured to encode the at least one data signal based on a first bit, to obtain first encoded data. The first encoding unit is further configured to: when receiving a first control signal from a control circuit, encode the at least one data signal based on a second bit indicated by the first control signal, where the first control signal is determined by the control circuit based on the first encoded data. It can be learned from the solution provided in the sixth aspect that, in a solution of dynamically adjusting a bit width indicating feature information of a light intensity, when a generation rate of events is relatively small and does not reach a bandwidth limit, the events are quantized based on a maximum bit width, to encode the events; when a generation rate of events is relatively large, the bit width representing the feature information of the light intensity is gradually reduced to meet a bandwidth limit, and then, if the generation rate of the events becomes smaller, the bit width representing the feature information of the light intensity may be increased when the bandwidth limit is not exceeded. A vision sensor chip can adaptively switch between a plurality of event representation manners to better implement an objective of transmitting all events with higher representation precision.

In a possible implementation, the first control signal is determined by the control circuit based on the first encoded data and a preset bandwidth of the vision sensor chip.

In a possible implementation, when a data amount of the first encoded data is not less than the bandwidth, the second bit indicated by the control signal is less than the first bit, so that a total data amount of the at least one data signal encoded based on the second bit is not greater than the bandwidth. When the generation rate of the events is relatively high, the bit width representing the feature information of the light intensity gradually decreases to meet the bandwidth limit.

In a possible implementation, when a data amount of the first encoded data is less than the bandwidth, the second bit indicated by the control signal is greater than the first bit, and a total data amount of the at least one data signal encoded based on the second bit is not greater than the bandwidth. If the generation rate of the events becomes smaller, the bit width representing the feature information of the light intensity may be increased when the bandwidth limit is not exceeded, so as to better implement the objective of transmitting all events with higher representation precision.

In a possible implementation, a pixel array may include N regions, at least two of the N regions have different maximum bits, and the maximum bit represents a preset maximum bit for encoding at least one data signal generated in one region. The first encoding unit is specifically configured to encode, based on the first bit, at least one data signal generated in a first region, to obtain the first encoded data, where the first bit is not greater than a maximum bit of the first region, and the first region is any one of the N regions. The first encoding unit is specifically configured to: when receiving the first control signal from the control circuit, encode, based on the second bit indicated by the first control signal, the at least one data signal generated in the first region, where the first control signal is determined by the control circuit based on the first encoded data. In this implementation, the pixel array may be further divided into regions, and maximum bit widths of different regions are set by using different weights to adapt to different regions of interest in a scenario. For example, a larger weight is set in a region that may include a target object, so that representation precision of an event accordingly output by the region including the target object is higher; a smaller weight is set in a background region, so that representation precision of an event accordingly output by the background region is lower.

In a possible implementation, the control circuit is further configured to send the first control signal to the first encoding unit when determining that a total data amount of the at least one data signal encoded based on a third bit is greater than the bandwidth and the total data amount of the at least one data signal encoded based on the second bit is not greater than the bandwidth, where a difference between the third bit and the second bit is one bit unit. In this implementation, all events may be transmitted with higher representation precision without exceeding the bandwidth limit.

According to a seventh aspect, this application provides a decoding device that may include: a reading circuit, configured to read a data signal from a vision sensor chip; and a decoding circuit, configured to decode the data signal based on a first bit. The decoding circuit is further configured to: when receiving a first control signal from a control circuit, decode the data signal based on a second bit indicated by the first control signal. The decoding circuit provided in the seventh aspect corresponds to the vision sensor chip provided in the sixth aspect, and is configured to decode the data signal output by the vision sensor chip provided in the sixth aspect. The decoding circuit provided in the seventh aspect may dynamically adjust a decoding mode for an encoding bit used by a vision sensor.

In a possible implementation, the first control signal is determined by the control circuit based on the first encoded data and a preset bandwidth of the vision sensor chip.

In a possible implementation, when a total data amount of the data signal decoded based on the first bit is not less than the bandwidth, the second bit is less than the first bit.

In a possible implementation, when a total data amount of the data signal decoded based on the first bit is less than the bandwidth, the second bit is greater than the first bit, and a total data amount of the data signal decoded based on the second bit is not greater than the bandwidth.

In a possible implementation, the reading circuit is specifically configured to read, from the vision sensor chip, a data signal corresponding to a first region, where the first region is any one of N regions that may be included in a pixel array of the vision sensor, and at least two of the N regions have different maximum bits. The maximum bit represents a preset maximum bit for encoding at least one data signal generated in one region. The decoding circuit is specifically configured to decode, based on the first bit, the data signal corresponding to the first region.

In a possible implementation, the control circuit is further configured to send the first control signal to a first encoding unit when determining that a total data amount of the data signal decoded based on a third bit is greater than the bandwidth and the total data amount of the data signal decoded based on the second bit is not greater than the bandwidth, where a difference between the third bit and the second bit is one bit unit.

According to an eighth aspect, this application provides a method for operating a vision sensor chip, and the method may include: A pixel array circuit in a vision sensor chip measures a light intensity variation to generate at least one data signal corresponding to a pixel that is in the pixel array circuit, where the at least one data signal indicates a light intensity change event, and the light intensity change event indicates that the light intensity variation measured at the corresponding pixel that is in the pixel array circuit exceeds a predetermined threshold. A first encoding unit of the vision sensor chip encodes the at least one data signal based on a first bit, to obtain first encoded data. When receiving a first control signal from a control circuit of the vision sensor chip, the first encoding unit encodes the at least one data signal based on a second bit indicated by the first control signal, where the first control signal is determined by the control circuit based on the first encoded data.

In a possible implementation, the first control signal is determined by the control circuit based on the first encoded data and a preset bandwidth of the vision sensor chip.

In a possible implementation, when a data amount of the first encoded data is not less than the bandwidth, the second bit indicated by the control signal is less than the first bit, so that a total data amount of the at least one data signal encoded based on the second bit is not greater than the bandwidth.

In a possible implementation, when a data amount of the first encoded data is less than the bandwidth, the second bit indicated by the control signal is greater than the first bit, and a total data amount of the at least one data signal encoded based on the second bit is not greater than the bandwidth.

In a possible implementation, a pixel array may include N regions, at least two of the N regions have different maximum bits, and the maximum bit represents a preset maximum bit for encoding at least one data signal generated in one region. That a first encoding unit of the vision sensor chip encodes the at least one data signal based on a first bit may include: The first encoding unit encodes, based on the first bit, at least one data signal generated in a first region, to obtain the first encoded data, where the first bit is not greater than a maximum bit of the first region, and the first region is any one of the N regions. That when receiving a first control signal from a control circuit of the vision sensor chip, the first encoding unit encodes the at least one data signal based on a second bit indicated by the first control signal may include: When the first control signal is received from the control circuit via the first encoding unit, encoding, based on the second bit indicated by the first control signal, the at least one data signal generated in the first region, where the first control signal is determined by the control circuit based on the first encoded data.

In a possible implementation, the method may further include: The control circuit sends the first control signal to the first encoding unit when determining that a total data amount of the at least one data signal encoded based on a third bit is greater than the bandwidth and the total data amount of the at least one data signal encoded based on the second bit is not greater than the bandwidth, where a difference between the third bit and the second bit is one bit unit.

According to a ninth aspect, this application provides a decoding method that may include: A reading circuit reads a data signal from a vision sensor chip. A decoding circuit decodes the data signal based on a first bit. When receiving a first control signal from a control circuit, the decoding circuit decodes the data signal based on a second bit indicated by the first control signal.

In a possible implementation, the first control signal is determined by the control circuit based on first encoded data and a preset bandwidth of the vision sensor chip.

In a possible implementation, when a total data amount of the data signal decoded based on the first bit is not less than the bandwidth, the second bit is less than the first bit.

In a possible implementation, when a total data amount of the data signal decoded based on the first bit is less than the bandwidth, the second bit is greater than the first bit, and a total data amount of the data signal decoded based on the second bit is not greater than the bandwidth.

In a possible implementation, that a reading circuit reads a data signal from a vision sensor chip may include: The reading circuit reads, from the vision sensor chip, a data signal corresponding to a first region, where the first region is any one of N regions that may be included in a pixel array of a vision sensor, and at least two of the N regions have different maximum bits. The maximum bit represents a preset maximum bit for encoding at least one data signal generated in one region. That a decoding circuit decodes the data signal based on a first bit may include: The decoding circuit decodes, based on the first bit, the data signal corresponding to the first region.

In a possible implementation, the method may further include: sending the first control signal to a first encoding unit when determining that a total data amount of the data signal decoded based on a third bit is greater than the bandwidth and the total data amount of the data signal decoded based on the second bit is not greater than the bandwidth, where a difference between the third bit and the second bit is one bit unit.

According to a tenth aspect, this application provides a vision sensor chip that may include: a pixel array circuit, configured to generate, by measuring light intensity variations, a plurality of data signals corresponding to a plurality of pixels that are in the pixel array circuit, where the plurality of data signals indicate at least one light intensity change event, and the at least one light intensity change event indicates that the light intensity variation measured at the corresponding pixel that is in the pixel array circuit exceeds a predetermined threshold; and a third encoding unit, configured to encode a first differential value based on a first preset bit, where the first differential value is a difference between the light intensity variation and the predetermined threshold. Event representation precision is reduced, in other words, a bit width representing an event is reduced. In this way, an amount of information that can be carried by the event is reduced, and this is unfavorable to event processing and analysis in some scenarios. Therefore, a manner of reducing event representation precision may not be applied to all scenarios. In other words, in some scenarios, an event needs to be represented by using a bit width of a high bit. However, although the event represented by the bit width of the high bit may carry more data, an amount of the data is also relatively large. When a preset maximum bandwidth of a vision sensor is fixed, event data may fail to be read, resulting in data loss. In the solution provided in the tenth aspect, a manner of encoding a differential value is used, so that costs of data transmission, parsing, and storage of the vision sensor is reduced, and an event can be transmitted with highest precision, thereby significantly improving performance of the sensor.

In a possible implementation, the pixel array circuit may include a plurality of pixels. Each pixel may include a threshold comparison unit. The threshold comparison unit is configured to output polarity information when the light intensity variation exceeds the predetermined threshold. The polarity information indicates whether the light intensity variation is enhanced or reduced. The third encoding unit is further configured to encode the polarity information based on a second preset bit. In this implementation, the polarity information may be also encoded, and whether the light intensity is enhanced or reduced is indicated by the polarity information. This helps obtain current light intensity information based on a light intensity signal and polarity information that are obtained through decoding last time.

In a possible implementation, each pixel may further include a light intensity detection unit, a readout control unit, and a light intensity capturing unit. The light intensity detection unit is configured to output an electrical signal corresponding to an optical signal irradiated on the light intensity detection unit, and the electrical signal indicates a light intensity. The threshold comparison unit is specifically configured to output the polarity information when determining, based on the electrical signal, that the light intensity variation exceeds the predetermined threshold. The readout control unit is configured to: in response to reception of the polarity information, indicate the light intensity capturing unit to capture and buffer an electrical signal corresponding to a receiving moment of the polarity information. The third encoding unit is further configured to encode a first electrical signal based on a third preset bit, where the first electrical signal is an electrical signal that is captured by the light intensity capturing unit and that corresponds to a first receiving moment of the polarity information, and the third preset bit is a maximum bit that is preset by the vision sensor and that represents feature information of a light intensity. After full encoding is performed in an initial state, only the polarity information and the differential value between the light intensity variation and the predetermined threshold need to be encoded in a subsequent event, so that a data amount of encoding can be effectively reduced. Full encoding means encoding an event by using a maximum bit width predefined by the vision sensor. In addition, light intensity information of a current moment may be rebuilt without loss by using light intensity information of a previous event and the polarity information and the differential value that are of the previous event and that are obtained through decoding.

In a possible implementation, the third encoding unit is further configured to encode, at an interval of preset duration based on the third preset bit, the electrical signal captured by the light intensity capturing unit. Full encoding is performed once at the interval of preset duration, to reduce decoding dependency and prevent bit errors.

In a possible implementation, the third encoding unit is specifically configured to: when the first differential value is less than the predetermined threshold, encode the first differential value based on the first preset bit.

In a possible implementation, the third encoding unit is further configured to: when the first differential value is not less than the predetermined threshold, encode a first remaining differential value and the predetermined threshold based on the first preset bit, where the first remaining differential value is a difference between the differential value and the predetermined threshold.

In a possible implementation, the third encoding unit is specifically configured to: when the first remaining differential value is not less than the predetermined threshold, encode a second remaining differential value based on the first preset bit, where the second remaining differential value is a difference between the first remaining differential value and the predetermined threshold; encode the predetermined threshold for the first time based on the first preset bit; and encode the predetermined threshold for the second time based on the first preset bit. Because the vision sensor may have a specific delay, an event may be generated only when a case in which the light intensity variation is greater than the predetermined threshold is met twice or more. In this way, there is a problem that a differential value is greater than or equal to the predetermined threshold, and the light intensity variation is at least twice over the predetermined threshold. For example, the first remaining differential value may not be less than the predetermined threshold. In this case, the second remaining differential value is encoded. If the second remaining differential value is still not less than the predetermined threshold, a third remaining differential value may be encoded, where the third differential value is a difference between the second remaining differential value and the predetermined threshold, and the predetermined threshold may be encoded for the third time. The foregoing process is repeated until a remaining differential value is less than the predetermined threshold.

According to an eleventh aspect, this application provides a decoding device that may include an obtaining circuit, configured to read a data signal from a vision sensor chip; and a decoding circuit, configured to decode the data signal based on a first bit to obtain a differential value, where the differential value is less than a predetermined threshold, and the differential value is a difference between a light intensity variation measured by a vision sensor and the predetermined threshold. When the light intensity variation exceeds the predetermined threshold, the vision sensor generates at least one light intensity change event. The decoding circuit provided in the eleventh aspect corresponds to the vision sensor chip provided in the tenth aspect, and is configured to decode the data signal output by the vision sensor chip provided in the tenth aspect. According to the decoding circuit provided in the eleventh aspect, a corresponding differential decoding mode may be used for a differential encoding mode used by the vision sensor.

In a possible implementation, the decoding circuit is further configured to decode the data signal based on a second bit, to obtain polarity information, where the polarity information indicates whether the light intensity variation is enhanced or reduced.

In a possible implementation, the decoding circuit is further configured to decode, based on a third bit, a data signal received at a first moment, to obtain an electrical signal that corresponds to an optical signal irradiated on the vision sensor and that is output by the vision sensor, where the third bit is a maximum bit that is preset by the vision sensor and that represents feature information of a light intensity.

In a possible implementation, the decoding circuit is further configured to decode, based on the third bit at an interval of preset duration, the data signal received at the first moment.

In a possible implementation, the decoding circuit is specifically configured to decode the data signal based on the first bit, to obtain the differential value and at least one predetermined threshold.

According to a twelfth aspect, this application provides a method for operating a vision sensor chip, and the method may include: A pixel array circuit of a vision sensor chip measures light intensity variations to generate a plurality of data signals corresponding to a plurality of pixels that are in the pixel array circuit, where the plurality of data signals indicate at least one light intensity change event, and the at least one light intensity change event indicates that the light intensity variation measured at the corresponding pixel that is in the pixel array circuit exceeds a predetermined threshold. A third encoding unit of the vision sensor chip encodes a first differential value based on a first preset bit, where the first differential value is a difference between the light intensity variation and the predetermined threshold.

In a possible implementation, the pixel array circuit may include the plurality of pixels, and each pixel may include a threshold comparison unit. The method may further include: The threshold comparison unit outputs polarity information when the light intensity variation exceeds the predetermined threshold, where the polarity information indicates whether the light intensity variation is enhanced or reduced. The third encoding unit encodes the polarity information based on a second preset bit.

In a possible implementation, each pixel may further include a light intensity detection unit, a readout control unit, and a light intensity capturing unit. The method may further include: The light intensity detection unit outputs an electrical signal corresponding to an optical signal irradiated on the light intensity detection unit, where the electrical signal indicates a light intensity. That the threshold comparison unit outputs polarity information may include: When determining, based on the electrical signal, that the light intensity variation exceeds the predetermined threshold, the threshold comparison unit outputs the polarity information. The method may further include: In response to reception of a polarity signal, the readout control unit indicates the light intensity capturing unit to capture and buffer an electrical signal corresponding to a receiving moment of the polarity information. A first electrical signal is encoded based on a third preset bit, where the first electrical signal is an electrical signal that is captured by the light intensity capturing unit and that corresponds to a first receiving moment of the polarity information, and the third preset bit is a maximum bit that is preset by a vision sensor and that represents feature information of a light intensity.

In a possible implementation, the method may further include: encoding, at an interval of preset duration based on a third preset bit, the electrical signal captured by the light intensity capturing unit.

In a possible implementation, that a third encoding unit of the vision sensor chip encodes a first differential value based on a first preset bit may include: When the first differential value is less than the predetermined threshold, the first differential value is encoded based on the first preset bit.

In a possible implementation, that a third encoding unit of the vision sensor chip encodes a first differential value based on a first preset bit may further include: When the first differential value is not less than the predetermined threshold, a first remaining differential value and the predetermined threshold are encoded based on the first preset bit, where the first remaining differential value is a difference between the differential value and the predetermined threshold.

In a possible implementation, that when the first differential value is not less than the predetermined threshold, a first remaining differential value and the predetermined threshold are encoded based on the first preset bit may include: When the first remaining differential value is not less than the predetermined threshold, a second remaining differential value is encoded based on the first preset bit, where the second remaining differential value is a difference between the first remaining differential value and the predetermined threshold. The predetermined threshold is encoded for the first time based on the first preset bit. The predetermined threshold is encoded for the second time based on the first preset bit, where the first remaining differential value may include the second remaining differential value and two predetermined thresholds.

According to a thirteenth aspect, this application provides a decoding method that may include: An obtaining circuit reads a data signal from a vision sensor chip. A decoding circuit decodes the data signal based on a first bit to obtain a differential value, where the differential value is less than a predetermined threshold, and the differential value is a difference between a light intensity variation measured by a vision sensor and the predetermined threshold. When the light intensity variation exceeds the predetermined threshold, the vision sensor generates at least one light intensity change event.

In a possible implementation, the method may further include: decoding the data signal based on a second bit, to obtain polarity information, where the polarity information indicates whether the light intensity variation is enhanced or reduced.

In a possible implementation, the method may further include: decoding, based on a third bit, a data signal received at a first moment, to obtain an electrical signal that corresponds to an optical signal irradiated on the vision sensor and that is output by the vision sensor, where the third bit is a maximum bit that is preset by the vision sensor and that represents feature information of a light intensity.

In a possible implementation, the method may further include: decoding, based on the third bit at an interval of preset duration, the data signal received at the first moment.

In a possible implementation, that a decoding circuit decodes the data signal based on a first bit to obtain a differential value may include: decoding the data signal based on the first bit, to obtain the differential value and at least one predetermined threshold.

According to a fourteenth aspect, this application provides an image processing method, including: obtaining movement information, where the movement information includes information about a movement trajectory that is of a target object and that is generated when the target object moves in a detection range of a motion sensor; generating at least one frame of event image based on the movement information, where the at least one frame of event image is an image indicating the movement trajectory that is of the target object and that is generated when the target object moves in the detection range; obtaining a target task, and obtaining iteration duration based on the target task; and performing an iterative update on the at least one frame of event image to obtain updated at least one frame of event image, where duration of the iterative update on the at least one frame of event image does not exceed the iteration duration.

Therefore, in an implementation of this application, the moving object may be monitored via the motion sensor, and the information about the movement trajectory that is of the object and that is generated when the object moves in the detection range is collected via the motion sensor. After the target task is obtained, the iteration duration may be determined based on the target task. The iterative update is performed on the event image in the iteration duration, so as to obtain an event image matching the target task.

In a possible implementation, the method includes: performing any iterative update on the at least one frame of event image; and the performing any iterative update on the at least one frame of event image includes: obtaining a movement parameter, where the movement parameter indicates a parameter of relative movement between the motion sensor and the target object; and performing an iterative update on a target event image in the at least one frame of event image based on the movement parameter, to obtain an updated target event image.

Therefore, in this implementation of this application, when the iterative update is performed on the event image, the update may be performed based on the parameter of the relative movement between the object and the motion sensor, to compensate for the event image, and obtain a clearer event image.

In a possible implementation, the obtaining a movement parameter includes: obtaining a value that is of an optimization model and that is preset in a previous iterative update process; and obtaining the movement parameter through calculation based on the value of the optimization model.

Therefore, in this implementation of this application, the event image may be updated based on the value of the optimization model, a better movement parameter may be obtained through calculation based on the optimization model, and then the event image is updated by using the movement parameter, to obtain a clearer event image.

In a possible implementation, the performing an iterative update on a target event image in the at least one frame of event image based on the movement parameter includes: compensating, based on the movement parameter, for a movement trajectory of the target object that is in the target event image, to obtain a target event image obtained in a current iteration update.

Therefore, in this implementation of this application, the movement parameter may be specifically used to compensate for the movement trajectory of the target object that is in the event image, so that the movement trajectory of the target object in the event image is clearer, and therefore the event image is clearer.

In a possible implementation, the movement parameter includes one or more of the following: depth, optical flow information, acceleration of movement performed by the motion sensor, or angular velocity of movement performed by the motion sensor, where the depth indicates a distance between the motion sensor and the target object, and the optical flow information indicates information about a movement speed of the relative movement between the motion sensor and the target object.

Therefore, in this implementation of this application, motion compensation may be performed on the target object in the event image based on a plurality of movement parameters, to improve definition of the event image.

In a possible implementation, in a process of the any iterative update, the method further includes: terminating iteration if a result of current iteration meets a preset condition, where the termination condition includes at least one of the following: a quantity of times of iteratively updating the at least one frame of event image reaches a preset quantity of times, or a value change of the optimization model in a process of updating the at least one frame of event image is less than a preset value.

Therefore, in this implementation of this application, in addition to setting the iteration duration, a convergence condition related to a quantity of pieces of iteration, the value of the optimization model, or the like may be further set, so as to obtain, within a constraint of the iteration duration, an event image that meets the convergence condition.

According to a fifteenth aspect, this application provides an image processing method, including: generating at least one frame of event image based on movement information, where the movement information includes information about a movement trajectory that is of a target object and that is generated when the target object moves in a detection range of a motion sensor, and the at least one frame of event image is an image of the movement trajectory generated when the target object moves in the detection range; obtaining a movement parameter, where the movement parameter represents a parameter of relative movement between the motion sensor and the target object; initializing a preset value of an optimization model based on the movement parameter, to obtain a value of the optimization model; and updating the at least one frame of event image based on the value of the optimization model, to obtain updated at least one frame of event image.

In an implementation of this application, the optimization model may be initialized by using the parameter of the relative movement between the motion sensor and the target object, so as to reduce a quantity of pieces of initial iteration performed on the event image, accelerate a convergence speed of iteration performed on the event image, and obtain a clearer event image with fewer iteration times.

In a possible implementation, the movement parameter includes one or more of the following: depth, optical flow information, acceleration of movement performed by the motion sensor, or angular velocity of movement performed by the motion sensor, where the depth indicates a distance between the motion sensor and the target object, and the optical flow information indicates information about a movement speed of the relative movement between the motion sensor and the target object.

In a possible implementation, the obtaining a movement parameter includes: obtaining data collected by an inertial measurement unit IMU sensor; and obtaining the movement parameter through calculation based on the data collected by the IMU sensor. Therefore, in this implementation of this application, the movement parameter may be calculated via the IMU, to obtain a more accurate movement parameter.

In a possible implementation, after the initializing a preset value of an optimization model based on the movement parameter, the method further includes: updating a parameter of the IMU sensor based on the value of the optimization model, where the parameter of the IMU sensor is used by the IMU sensor to collect the data.

Therefore, in this implementation of this application, the parameter of the IMU may be further updated based on the value of the optimization model, to implement deviation correction on the IMU, so that the data collected by the IMU is more accurate.

According to a sixteenth aspect, this application provides an image processing apparatus. The image processing apparatus has a function of implementing the method in any one of the fourteenth aspect or the possible implementations of the fourteenth aspect, or the image processing apparatus has a function of implementing the method in any one of the fifteenth aspect or the possible implementations of the fifteenth aspect. The function may be implemented by hardware, or may be implemented by hardware executing corresponding software. The hardware or the software includes one or more modules corresponding to the function.

According to a seventeenth aspect, this application provides an image processing method, including: obtaining movement information, where the movement information includes information about a movement trajectory that is of a target object and that is generated when the target object moves in a detection range of a motion sensor; generating an event image based on the movement information, where the event image is an image representing the movement trajectory that is of the target object and that is generated when the target object moves in the detection range; and the method includes: performing any iterative update on the at least one frame of event image; and the performing any iterative update on the at least one frame of event image includes:, where a color type of a first pixel is different from that of at least one second pixel, the first pixel is a pixel corresponding to any one of the at least one event in the first rebuilt image, and the at least one second pixel is included in a plurality of pixels that are in the first rebuilt image and that are adjacent to the first pixel.

Therefore, in this implementation of this application, when there is relative movement between a shot object and the motion sensor, image rebuilding may be performed based on data collected by the motion sensor, to obtain a rebuilt image, and a clear image may be obtained even when shooting by an RGB sensor is unclear.

In a possible implementation, the determining, based on at least one event included in the event image, a color type corresponding to each pixel that is in the event image, to obtain a first rebuilt image includes: scanning each pixel in the event image in a first direction, and determining the color type corresponding to each pixel that is in the event image, to obtain the first rebuilt image, where if it is found, through scanning, that there is an event at the first pixel, a color type of the first pixel is determined as a first color type; and if there is no event at a second pixel arranged before the first pixel in the first direction, a color type corresponding to the second pixel is a second color type, where the first color type and the second color type are different color types, and a pixel at which there is an event represents a pixel that corresponds to location change monitored by the motion sensor and that is in the event image.

In this implementation of this application, image rebuilding may be performed based on an event of each pixel in the event image in a manner of scanning the event image, to obtain a clearer event image. Therefore, in this implementation of this application, image rebuilding may be performed by using information collected by the motion sensor, to efficiently and quickly obtain a rebuilt image, thereby improving efficiency of subsequently performing image recognition, image classification, and the like on the rebuilt image. Even if a clear RGB image cannot be shot in some scenarios in which a moving object is shot, there is a shooting shake, and the like, image rebuilding may be performed based on the information collected by the motion sensor, so that a clearer image can be quickly and accurately rebuilt, so as to facilitate a subsequent task such as recognition or classification.

In a possible implementation, the first direction is a preset direction, or the first direction is determined based on data collected by an IMU, or the first direction is determined based on an image shot by a color RGB camera. Therefore, in this implementation of this application, a direction of scanning the event image may be determined in a plurality of manners, to adapt to more scenarios.

In a possible implementation, if there is no event at a plurality of consecutive third pixels arranged after the first pixel in the first direction, color types corresponding to the plurality of third pixels are the first color type. Therefore, in this implementation of this application, when there is no event at a plurality of consecutive pixels, color types corresponding to the consecutive pixels are the same, to avoid a case in which an edge is unclear due to movement of a same object in an actual scenario.

In a possible implementation, if there is an event at a fourth pixel that is arranged after the first pixel in the first direction and that is adjacent to the first pixel, and if there is no event at a fifth pixel that is arranged after the fourth pixel in the first direction and that is adjacent to the fourth pixel, color types corresponding to both the fourth pixel and the fifth pixel are the first color type.

Therefore, when at least two consecutive pixels in the event image have events, when the second event is detected through scanning, a rebuilding color type may not be changed, thereby avoiding an unclear edge of a rebuilt image caused by an excessively wide edge of the target object.

In a possible implementation, after the scanning each pixel in the event image in a first direction, and determining the color type corresponding to each pixel that is in the event image, to obtain the first rebuilt image, the method further includes: scanning the event image in a second direction, and determining the color type corresponding to each pixel that is in the event image, to obtain a second rebuilt image, where the second direction is different from the first direction; and fusing the first rebuilt image and the second rebuilt image, to obtain an updated first rebuilt image.

In an implementation of this application, the event image may be scanned in different directions, to obtain a plurality of rebuilt images in a plurality of directions, and then the plurality of rebuilt images are fused to obtain a more accurate rebuilt image.

In a possible implementation, the method further includes: if the first rebuilt image does not meet a preset requirement, updating the movement information, updating the event image based on updated movement information, and obtaining an updated first rebuilt image based on an updated event image.

In this implementation of this application, the event image may be updated based on the information collected by the motion sensor, so that the updated event image is clearer.

In a possible implementation, before the determining, based on at least one event included in the event image, a color type corresponding to each pixel that is in the event image, to obtain a first rebuilt image, the method further includes: compensating for the event image based on a movement parameter of relative movement between the target object and the motion sensor, to obtain a compensated event image, where the movement parameter includes one or more of the following: depth, optical flow information, acceleration of movement performed by the motion sensor, or angular velocity of movement performed by the motion sensor, where the depth represents a distance between the motion sensor and the target object, and the optical flow information represents information about a movement speed of the relative movement between the motion sensor and the target object.

Therefore, in this implementation of this application, motion compensation may be further performed on the event image based on the movement parameter, so that the event image is clearer, and further, a rebuilt image obtained through rebuilding is clearer.

In a possible implementation, a color type of a pixel in the rebuilt image is determined based on a color collected by the color RGB camera. In this implementation of this application, a color in an actual scenario may be determined based on the RGB camera, so that a color of the rebuilt image matches the color in the actual scenario, thereby improving user experience.

In a possible implementation, the method further includes: obtaining an RGB image based on data collected by the RGB camera; and fusing the RGB image and the first rebuilt image to obtain an updated first rebuilt image. Therefore, in this implementation of this application, the RGB image and the rebuilt image may be fused, so that the finally obtained rebuilt image is clearer.

According to an eighteenth aspect, this application further provides an image processing apparatus. The image processing apparatus has a function of implementing the method in any one of the eighteenth aspect or the possible implementations of the eighteenth aspect. The function may be implemented by hardware, or may be implemented by hardware executing corresponding software. The hardware or the software includes one or more modules corresponding to the function.

According to a nineteenth aspect, this application provides an image processing method, including: obtaining a first event image (an event image) and a plurality of shot first images, where the first event image includes information about an object that moves in a preset range in shooting time periods of the plurality of first images, pieces of exposure duration corresponding to the plurality of first images are different, and the preset range is a shooting range of a camera; calculating, based on the first event image, a first shake degree corresponding to each of the plurality of first images, where the first shake degree represents a degree of camera shake during shooting each of the plurality of first images; determining a fusion weight of each of the plurality of first images based on the first shake degree corresponding to each first image, where the first shake degree corresponding to each of the plurality of first images is in a negative correlation with the fusion weight; and fusing the plurality of first images based on the fusion weight of each first image, to obtain a target image.

Therefore, in this implementation of this application, a shake degree during shooting an RGB image may be quantified based on the event image, and a fusion weight of each RGB image may be determined based on a shake degree of each RGB image. Generally, an RGB image with a lower shake degree corresponds to a higher fusion weight, so that information included in the finally obtained target image is more inclined to be a clearer RGB image, so as to obtain a clearer target image. Generally, an RGB image with a higher shake degree corresponds to a smaller weight value, and an RGB image with a lower shake degree corresponds to a larger weight value, so that the information included in the finally obtained target image is more inclined to be information included in a clearer RGB image. In this way, the final obtained target image is clearer, and user experience is improved. In addition, if the target image is used for subsequent image recognition, feature extraction, or the like, an obtained recognition result or an extracted feature is more accurate.

In a possible implementation, before the determining a fusion weight of each of the plurality of first images based on the first shake degree, the method further includes: if the first shake degree is not greater than a first preset value and is greater than a second preset value, performing de-shaking processing on each first image to obtain each first image after de-shaking.

Therefore, in this implementation of this application, a shaking case may be distinguished based on dynamic data. When there is no shake, direct fusion is performed. When shaking is not strong, adaptively de-shaking is performed on an RGB image. When shaking is strong, an RGB image is re-shot. Scenarios including a plurality of shake degrees are used, and there is a strong generalization capability.

In a possible implementation, the determining a fusion weight of each of the plurality of first images based on the first shake degree includes: re-shooting to obtain a second image if the first shake degree is greater than the first preset value, where a second shake degree of the second image is not higher than the first preset value; and calculating the fusion weight of each first image based on the first shake degree of each first image, and calculating a fusion weight of the second image based on the second shake degree; and the fusing the plurality of first images based on the fusion weight of each first image, to obtain a target image includes: fusing the plurality of first images and the second image based on the fusion weight of each first image and the fusion weight of the second image to obtain the target image.

Generally, an RGB image with a higher shake degree corresponds to a smaller weight value, and an RGB image with a lower shake degree corresponds to a larger weight value, so that the information included in the finally obtained target image is more inclined to be information included in a clearer RGB image. In this way, the final obtained target image is clearer, and user experience is improved. In addition, if the target image is used for subsequent image recognition, feature extraction, or the like, an obtained recognition result or an extracted feature is more accurate. For an RGB image with a high shake degree, an RGB image may be re-shot, to obtain a clearer RGB image with a lower shake degree, so that the clearer image may be used for subsequent image fusion, thereby making the final target image clearer.

In a possible implementation, before the re-shooting to obtain a second image, the method further includes: obtaining a second event image, where the second event image is obtained before the first event image is obtained; and obtaining, through calculation, an exposure parameter based on information included in the second event image, where the exposure parameter is used for shooting the second image.

Therefore, in this implementation of this application, an exposure policy is adaptively adjusted by using information collected by a dynamic sensing camera (namely, a motion sensor). To be specific, by using a high dynamic range sensing feature of dynamic sensing information on a texture in a shooting range, an image with proper exposure duration is adaptively re-shot, so that a capability of a camera on capturing texture information in a strong or dark light region is improved.

In a possible implementation, the re-shooting to obtain a second image further includes: dividing the first event image into a plurality of regions, and dividing a third image into a plurality of regions, where the third image is a first image with a smallest exposure value in the plurality of first images, locations of the plurality of regions included in the first event image correspond to locations of the plurality of regions included in the third image, and the exposure value includes at least one of exposure duration, an exposure amount, or an exposure level; calculating whether each region in the first event image includes first texture information, and whether each region in the third image includes second texture information; and if a first region in the first event image includes the first texture information, and a region that corresponds to the first region and that is in the third image does not include the second texture information, shooting based on the exposure parameter, to obtain the second image, where the first region is any region in a first dynamic region.

Therefore, in this implementation of this application, if a region in the first dynamic region includes texture information, and a region that corresponds to the region and that is in an RGB image with a smallest exposure value does not include texture information, it indicates that a blur degree of the region in the RGB image is relatively high, and an RGB image may be re-shot. If each region in the first event image does not include texture information, an RGB image does not need to be re-shot.

According to a twentieth aspect, this application provides an image processing method, including: first, detecting movement information of a target object, where the movement information may include information about a movement trajectory that is of the target object and that is generated when the target object moves in a preset range, and the preset range is a shooting range of a camera; then, determining focusing information based on the movement information, where the focusing information includes a parameter for focusing on the target object in the preset range; and then, focusing on the target object in the preset range based on the focusing information, and shooting an image in the preset range.

Therefore, in an implementation of this application, the movement trajectory of the target object in the shooting range of the camera may be detected, and then the focusing information is determined based on the movement trajectory of the target object, and focusing is completed, so as to shoot a clearer image. Even if the target object is moving, the target object can be accurately focused on, and a clear image corresponding to a movement state can be shot, thereby improving user experience.

In a possible implementation, the determining focusing information based on the movement information may include: predicting, based on the movement information, namely, the information about the movement trajectory that is of the target object and that is generated when the target object moves in the preset range, a movement trajectory of the target object in preset duration, to obtain a predicted region, where the predicted region is a region in which the target object is located in the preset duration and that is obtained through prediction; and determining a focus region based on the predicted region, where the focus region includes at least one focus for focusing on the target object, and the focusing information includes location information of the at least one focus.

Therefore, in this implementation of this application, a future movement trajectory of the target object may be predicted, and the focus region may be determined based on the predicted region, so that focusing on the target object can be accurately completed. Even if the target object is moving at a high speed, in this implementation of this application, the target object may be focused on in advance in a prediction manner, to enable the target object to be in the focus region, so that a clearer target object moving at the high speed is shot.

In a possible implementation, the determining a focus region based on the predicted region may include: if the predicted region meets a preset condition, determining the predicted region as the focus region; or if the predicted region does not meet a preset condition, re-predicting the movement trajectory of the target object in the preset duration based on the movement information, to obtain a new predicted region, and determining the focus region based on the new predicted region. The preset condition may be that the predicted region includes the complete target object, an area of the predicted region is greater than a preset value, or the like.

Therefore, in this implementation of this application, only when the predicted region meets the preset condition, the focus region is determined based on the predicted region, and a camera is triggered to perform shooting; and when the predicted region does not meet the preset condition, the camera is not triggered to perform shooting. Therefore, an incomplete image of the target object can be avoided from being shot, or meaningless shooting can be avoided. In addition, when shooting is not performed, the camera may be in a disabled state, and the camera is triggered to perform shooting only when the predicted region meets the preset condition, so that power consumption generated by the camera can be reduced.

In a possible implementation, the movement information further includes at least one of a movement direction and a movement speed of the target object. The predicting, based on the movement information, a movement trajectory of the target object in preset duration, to obtain a predicted region may include: predicting the movement trajectory of the target object in the preset duration based on the movement direction and/or the movement speed and the movement trajectory that is of the target object and that is generated when the target object moves in the preset range, to obtain the predicted region.

Therefore, in this implementation of this application, the movement trajectory of the target object in the future preset duration may be predicted based on the movement trajectory of the target object in the preset range, the movement direction and/or the movement speed, and the like. Therefore, the region in which the target object is located in the future preset duration can be accurately predicted, and the target object can be more accurately focused on, thereby shooting a clearer image.

In a possible implementation, the predicting the movement trajectory of the target object in the preset duration based on the movement direction and/or the movement speed and the movement trajectory that is of the target object and that is generated when the target object moves in the preset range, to obtain the predicted region may include: fitting, based on the movement direction and/or the movement speed and the movement trajectory that is of the target object and that is generated when the target object moves in the preset range, a change function that changes with time at a center point of a region in which the target object is located; then obtaining a predicted center point through calculation based on the change function, where the predicted center point is a center point that is obtained through prediction and that is of the region in which the target object is located in the preset duration; and obtaining the predicted region based on the predicted center point.

Therefore, in this implementation of this application, the change function that is of the center point of the region in which the target object is located and that changes with time may be fitted based on the movement trajectory that is of the target object and that is generated when the target object is moving, and then the center point of the region in which the target object is located at a future moment is predicted based on the change function. The predicted region is determined based on the center point, so that more accurate focusing can be performed on the target object, and a clearer image can be shot.

In a possible implementation, the image in the preset range may be shot by an RGB camera, and the focusing on the target object in the preset range based on the focusing information may include: performing focusing by using, as a focus, at least one focus that is in a plurality of focuses of the RGB camera and that has a minimum norm distance from a center point of the focus region.

Therefore, in this implementation of this application, the at least one focus that has the closest norm distance from the center point of the focus region may be selected as the focus to perform focusing, so as to complete focusing on the target object.

In a possible implementation, the movement information includes a region in which the target object is currently located, and the determining focusing information based on the movement information may include: determining the region in which the target object is currently located as the focus region, where the focus region includes the at least one focus for focusing on the target object, and the focusing information includes the location information of the at least one focus.

Therefore, in this implementation of this application, the information about the movement trajectory of the target object in the preset range may include the region in which the target object is currently located and a region in which the target object is historically located. The region in which the target object is currently located may be used as the focus region, so as to complete focusing on the target object. In this way, a clearer image can be shot.

In a possible implementation, before the shooting an image in the preset range, the method may further include: obtaining an exposure parameter; and the shooting an image in the preset range may include: shooting the image in the preset range based on the exposure parameter.

Therefore, in this implementation of this application, the exposure parameter may be further adjusted, so as to complete shooting based on the exposure parameter, to obtain a clear image.

In a possible implementation, the obtaining an exposure parameter may include: determining the exposure parameter based on the movement information, where the exposure parameter includes exposure duration, the movement information includes a movement speed of the target object, and the exposure duration is in a negative correlation with the movement speed of the target object.

Therefore, in this implementation of this application, the exposure duration may be determined based on the movement speed of the target object, so that the exposure duration matches the movement speed of the target object. For example, a faster movement speed indicates shorter exposure duration, and a slower movement speed indicates longer exposure duration. Overexposure, underexposure, or the like can be avoided, so that a clearer image can be subsequently shot, and user experience can be improved.

In a possible implementation, the obtaining an exposure parameter may include: determining the exposure parameter based on a light intensity, where the exposure parameter includes exposure duration, and a value of a light intensity in the preset range is in a negative correlation with the exposure duration.

Therefore, in this implementation of this application, the exposure duration may be determined based on the detected light intensity. When the light intensity is higher, the exposure duration is shorter; when the light intensity is lower, the exposure duration is longer. Therefore, a proper amount of exposure can be ensured, and a clearer image can be shot.

In a possible implementation, after the shooting an image in the preset range, the method may further include: performing fusion on images in the preset range based on monitored information about movement corresponding to the target object in the image, to obtain the target image in the preset range.

Therefore, in this implementation of this application, when an image is shot, movement of the target object in the preset range may be further monitored, to obtain the information about movement corresponding to the target object in the image, for example, information such as an outline of the target object and a location of the target object in the preset range. In addition, enhancement processing is performed on the shot image based on the information, to obtain a clearer target image.

In a possible implementation, the detecting movement information of a target object may include: monitoring movement of the target object in the preset range via a dynamic vision sensor (dynamic vision sensor, DVS), to obtain the movement information.

Therefore, in this implementation of this application, the moving object may be monitored in the shooting range of the camera via the DVS, to obtain accurate movement information. Even if the target object is in a high-speed movement state, the movement information of the target object may be captured in a timely manner via the DVS.

According to a twenty-first aspect, this application further provides an image processing apparatus. The image processing apparatus has a function of implementing the method in any one of the nineteenth aspect or the possible implementations of the nineteenth aspect, or the image processing apparatus has a function of implementing the method in any one of the twentieth aspect or the possible implementations of the twentieth aspect. The function may be implemented by hardware, or may be implemented by hardware executing corresponding software. The hardware or the software includes one or more modules corresponding to the function.

According to a twenty-second aspect, an embodiment of this application provides a graphical user interface GUI. The graphical user interface is stored in an electronic device, the electronic device includes a display, a memory, and one or more processors, and the one or more processors are configured to execute one or more computer programs stored in the memory. The graphical user interface is configured to: in response to shooting an image in a preset range based on a trigger operation for shooting a target object and based on focusing information, display the image in the preset range, where the preset range is a shooting range of a camera, the focusing information includes a parameter for focusing on the target object in the preset range, the focusing information is determined based on movement information of the target object, and the movement information includes information about a movement trajectory that is of the target object and that is generated when the target object moves in the preset range.

For beneficial effects brought by any one of the twenty-second aspect and the possible implementations of the twenty-second aspect, refer to descriptions of any one of the twentieth aspect and the possible implementations of the twentieth aspect.

In a possible implementation, the graphical user interface is configured to: in response to predicting a movement trajectory of the target object in preset duration based on the movement information to obtain a predicted region, where the predicted region is a region in which the target object is located in the preset duration and that is obtained through prediction, and determine a focus region based on the predicted region, displaying the focus region on the display, where the focus region includes at least one focus for focusing on the target object, and the focusing information includes location information of the at least one focus.

In a possible implementation, the graphical user interface may specifically include: if the predicted region meets a preset condition, displaying the focus region on the display in response to determining the focus region based on the predicted region; or if the predicted region does not meet a preset condition, displaying the focus region on the display in response to re-predicting the movement trajectory of the target object in the preset duration based on the movement information to obtain a new predicted region, and determining the focus region based on the new predicted region.

In a possible implementation, the movement information further includes at least one of a movement direction and a movement speed of the target object. The graphical user interface may specifically include: in response to predicting the movement trajectory of the target object in the preset duration based on the movement direction and/or the movement speed and the movement trajectory that is of the target object and that is generated when the target object moves in the preset range, to obtain the predicted region, displaying the predicted region on the display.

In a possible implementation, the graphical user interface may specifically include: in response to fitting, based on the movement direction and/or the movement speed and the movement trajectory that is of the target object and that is generated when the target object moves in the preset range, a change function that is of a center point of a region in which the target object is located and that varies with time, obtaining a predicted center point through calculation based on the change function, where the predicted center point is a center point of the region in which the target object is located and that is obtained through prediction, and obtaining the predicted region based on the predicted center point, displaying the predicted region on the display.

In a possible implementation, the image in the prediction range is shot by an RGB camera, and the graphical user interface may specifically include: in response to performing focusing by using, as a focus, at least one focus that is in a plurality of focuses of the RGB camera and that has a minimum norm distance from a center point of the focus region, displaying, on the display, an image that is shot by performing focusing based on the at least one focus that is used as the focus.

In a possible implementation, the movement information includes a region in which the target object is currently located, and the graphical user interface may specifically include: in response to using the region in which the target object is currently located as the focus region, where the focus region includes the at least one focus for focusing on the target object, and the focusing information includes the location information of the at least one focus, displaying the focus region on the display.

In a possible implementation, the graphical user interface may further include: in response to fusing images in the preset range based on the monitored target object and movement information corresponding to the image to obtain the target image in the preset range, displaying the target image on the display.

In a possible implementation, the movement information is obtained by monitoring movement of the target object in the preset range via a dynamic vision sensor DVS.

In a possible implementation, the graphical user interface may specifically include: in response to obtaining an exposure parameter before the image in the preset range is shot, displaying the exposure parameter on the display; and in response to shooting the image in the preset range based on the exposure parameter, displaying, on the display, the image that is shot in the preset range based on the exposure parameter.

In a possible implementation, the exposure parameter is determined based on the movement information, the exposure parameter includes exposure duration, and the exposure duration is in a negative correlation with the movement speed of the target object.

In a possible implementation, the exposure parameter is determined based on a light intensity, where the light intensity may be a light intensity detected by the camera, or may be a light intensity detected by a motion sensor, the exposure parameter includes exposure duration, and a value of a light intensity in the preset range is in a negative correlation with the exposure duration.

According to a twenty-third aspect, this application provides an image processing method. The method includes: first, respectively obtaining an event stream and a frame of RGB image (which may be referred to as a first RGB image) via a motion sensor (for example, a DVS) and an RGB sensor of a camera, where the obtained event stream includes at least one frame of event image, each of the at least one frame of event image is generated based on information about a movement trajectory that is of a target object (namely, a moving object) and that is generated when the target object moves in a monitoring range of the motion sensor, and the first RGB image is superposition of shooting scenarios captured by the camera at each moment in exposure duration; after the event stream and the first RGB image are obtained, constructing a mask based on the event stream, where the mask is for determining a movement region of each frame of event image in the event stream, in other words, is for determining a location of the moving object in the RGB image; and after the event stream, the first RGB image, and the mask are obtained according to the foregoing steps, obtaining a second RGB image based on the event stream, the first RGB image, and the mask, where the second RGB image is an RGB image obtained by removing the target object.

In the foregoing implementation of this application, the moving object may be removed based only on one RGB image and the event stream, to obtain the RGB image without the moving object. Compared with a manner in a conventional technology of removing a moving object based on a plurality of RGB images and an event stream, this manner requires only one RGB image shot by a user, and provides better user experience.

In a possible implementation, before the constructing a mask based on the event stream, the method may further include: when the motion sensor monitors, at a first moment, that a sudden movement change occurs in the monitoring range, triggering the camera to shoot a third RGB image; and the obtaining a second RGB image based on the event stream, the first RGB image, and the mask includes: obtaining the second RGB image based on the event stream, the first RGB image, the third RGB image, and the mask. In this case, the obtaining a second RGB image based on the event stream, the first RGB image, and the mask may be: obtaining the second RGB image based on the event stream, the first RGB image, the third RGB image, and the mask.

In the foregoing implementation of this application, it may be determined whether there is a sudden movement change in movement data collected by the motion sensor. When there is a sudden movement change, the camera is triggered to shoot the third RGB image. Then, the event stream and the frame of first RGB image are obtained in a manner similar to the foregoing manner, and the mask is constructed based on the event stream. Finally, the second RGB image without the moving object is obtained based on the event stream, the first RGB image, the third RGB image, and the mask. The third RGB image is obtained by triggering the camera to automatically take snapshots during sudden movement change, and sensitivity is high. Therefore, a frame of image can be obtained at a beginning when the user perceives that there is a change on the moving object. In this case, a better removal effect can be implemented on the moving object based on the third RGB image and the first RGB image.

In a possible implementation, that the motion sensor monitors, at a first moment, that a sudden movement change occurs in the monitoring range includes: In the monitoring range, an overlapping part between a generation region of a first event stream collected by the motion sensor at the first moment and a generation region of a second event stream collected by the motion sensor at a second moment is less than a preset value.

In the foregoing implementations of this application, a condition for determining a sudden movement change is specifically described, and is feasible.

In a possible implementation, a manner of constructing the mask based on the event stream may be as follows: First, the monitoring range of the motion sensor may be divided into a plurality of preset neighborhoods (set as neighborhoods k). Then, in a range of each neighborhood k, if a quantity of event images in the event stream in a preset duration $\Delta t$ range exceeds a threshold P, the corresponding neighborhood is determined as a movement region, and the movement region may be marked as 0; if a quantity of event images in the event stream in a preset duration $\Delta t$ range does not exceed a threshold P, the corresponding neighborhood is determined as a background region, and the background region may be marked as 1.

In the foregoing implementation of this application, a mask construction method is specifically described, and is simple and easy to operate.

According to a twenty-fourth aspect, this application further provides an image processing apparatus. The image processing apparatus has a function of implementing the method in any one of the twenty-second aspect or the possible implementations of the twenty-second aspect. The function may be implemented by hardware, or may be implemented by hardware executing corresponding software. The hardware or the software includes one or more modules corresponding to the function.

According to a twenty-fifth aspect, this application provides a pose estimation method, applied to a simultaneous localization and mapping (simultaneous localization and mapping, SLAM) scenario. The method includes: A terminal obtains a first event image and a first RGB image, where the first event image is aligned with a first target image in time sequence, the first target image includes an RGB image or a depth image, and the first event image is an image indicating a movement trajectory that is of a target object and that is generated when the target object moves in a detection range of a motion sensor. The terminal determines integration time of the first event image. If the integration time is less than a first threshold, the terminal determines that the first target image is not for performing pose estimation. The terminal performs pose estimation based on the first event image.

In this solution, when the terminal determines, based on a case in which the integration time of the event image is less than the threshold, that the terminal is currently in a scenario in which it is difficult for an RGB camera to collect effective environment information, the terminal determines that an RGB image of poor quality is not for performing pose estimation, so as to improve pose estimation precision.

Optionally, in a possible implementation, the method further includes: determining obtaining time of the first event image and obtaining time of the first target image; and if a time difference between the obtaining time of the first event image and the obtaining time of the first target image is less than a second threshold, determining that the first event image is aligned with the first target image in time sequence. The second threshold may be determined based on precision of the SLAM and frequency of capturing the RGB image by the RGB camera. For example, a value of the second threshold may be 5 milliseconds or 10 milliseconds.

Optionally, in a possible implementation, the obtaining a first event image includes: obtaining N consecutive DVS events; and integrating the N consecutive DVS events into the first event image. The method further includes: determining the obtaining time of the first event image based on obtaining time of the N consecutive DVS events.

Optionally, in a possible implementation, the determining integration time of the first event image includes: determining the N consecutive DVS events that are integrated into the first event image; and determining the integration time of the first event image based on obtaining time of a 1st DVS event and obtaining time of a last DVS event in the N consecutive DVS events. Because the first event image is obtained by integrating the N consecutive DVS events, the terminal may determine the obtaining time of the first event image based on the obtaining time corresponding to the N consecutive DVS events, in other words, determine that the obtaining time of the first event image is a time period from obtaining the 1st DVS event to obtaining the last DVS event in the N consecutive DVS events.

Optionally, in a possible implementation, the method further includes: obtaining a second event image, where the second event image is an image indicating a movement trajectory that is of the target object and that is generated when the target object moves in the detection range of the motion sensor, where a time period in which the motion sensor detects and obtains the first event image is different from a time period in which the motion sensor detects and obtains the second event image; and if no RGB image is aligned with the second event image in time sequence, determining that the second event image does not have an RGB image for jointly performing pose estimation; and performing pose estimation based on the second event image.

Optionally, in a possible implementation, before the determining a pose based on the second event image, the method further includes: if determining that there is inertial measurement unit IMU data that is aligned with the second event image in time sequence, determining a pose based on a second event image and the IMU data corresponding to the second event image; or if determining that no inertial measurement unit IMU data is aligned with the second event image in time sequence, determining a pose based only on the second event image.

Optionally, in a possible implementation, the method further includes: obtaining a second target image, where the second target image includes an RGB image or a depth image; if no event image is aligned with the second target image in time sequence, determining that the second target image does not have an event image for jointly performing pose estimation; and determining the pose based on the second target image.

Optionally, in a possible implementation, the method further includes: performing loopback detection based on the first event image and a dictionary, where the dictionary is a dictionary constructed based on event images. To be specific, before performing loopback detection, the terminal may construct the dictionary based on the event images in advance, so that loopback detection can be performed based on the dictionary in a process of performing loopback detection.

Optionally, in a possible implementation, the method further includes: obtaining a plurality of event images, where the plurality of event images are event images for training, and the plurality of event images may be event images shot by the terminal in different scenarios; obtaining visual features of the plurality of event images, where the visual feature may include, for example, a feature such as a texture, a pattern, or grayscale statistics of the image; clustering the visual features based on a clustering algorithm, to obtain clustered visual features, where the clustered visual feature has a corresponding descriptor, and by clustering the visual features, similar visual features may be classified into one category, so as to facilitate subsequent matching of the visual features; and finally, constructing the dictionary based on the clustered visual features.

Optionally, in a possible implementation, the performing loopback detection based on the first event image and a dictionary includes: determining a descriptor of the first event image; determining, in the dictionary, a visual feature corresponding to the descriptor of the first event image; determining, based on the visual feature, a bag of words vector corresponding to the first event image; and determining a similarity between the bag of words vector corresponding to the first event image and a bag of words vector of another event image, to determine an event image matching the first event image.

According to a twenty-sixth aspect, this application provides a key frame selection method, including: obtaining an event image; determining first information of the event image, where the first information includes an event and/or a feature in the event image; and if determining, based on the first information, that the event image meets at least a first condition, determining that the event image is a key frame, where the first condition is related to a quantity of events and/or a quantity of features.

In this solution, whether a current event image is a key frame is determined by determining information such as a quantity of events, event distribution, a quantity of features, and/or feature distribution in the event image, a key frame can be quickly selected, an algorithm quantity is small, and a key frame in scenarios such as video analysis, video encoding and decoding, or security surveillance can be quickly selected.

Optionally, in a possible implementation, the first condition includes one or more of: a quantity of events in the event image is greater than a first threshold, a quantity of event effective regions in the event image is greater than a second threshold, a quantity of features in the event image is greater than a third threshold, and a quantity of feature effective regions in the event image is greater than a fourth threshold.

Optionally, in a possible implementation, the method further includes: obtaining a depth image aligned with the event image in time sequence; and if determining, based on the first information, that the event image meets at least the first condition, determining that the event image and the depth image are key frames.

Optionally, in a possible implementation, the method further includes: obtaining an RGB image aligned with the event image in time sequence; obtaining a quantity of features and/or a quantity of feature effective regions of the RGB image; and if determining, based on the first information, that the event image meets at least the first condition, and the quantity of features of the RGB image is greater than a fifth threshold and/or the quantity of feature effective regions of the RGB image is greater than a sixth threshold, determining that the event image and the RGB image are key frames.

Optionally, in a possible implementation, the if determining, based on the first information, that the event image meets at least a first condition, determining that the event image is a key frame includes: if determining, based on the first information, that the event image meets at least the first condition, determining second information of the event image, where the second information includes a movement feature and/or a pose feature in the event image; and if determining, based on the second information, that the event image meets at least a second condition, determining that the event image is the key frame, where the second condition is related to a movement variation and/or a pose variation.

Optionally, in a possible implementation, the method further includes: determining a definition and/or a brightness consistency indicator of the event image; and if determining, based on the second information, that the event image meets at least the second condition, and the definition of the event image is greater than a definition threshold and/or the brightness consistency indicator of the event image is greater than a preset indicator threshold, determining that the event image is the key frame.

Optionally, in a possible implementation, the determining a brightness consistency indicator of the event image includes: if a pixel in the event image represents a light intensity change polarity, calculating an absolute value of a difference between the quantity of events in the event image and a quantity of events in an adjacent key frame, and dividing the absolute value by a quantity of pixels in the event image, to obtain the brightness consistency indicator of the event image; or if a pixel in the event image represents a light intensity, performing pixel-by-pixel subtraction between the event image and an adjacent key frame, calculating an absolute value of a difference, performing a sum operation on the absolute value corresponding to each group of pixels, and dividing an obtained sum result by a quantity of pixels, to obtain the brightness consistency indicator of the event image.

Optionally, in a possible implementation, the method further includes: obtaining the RGB image aligned with the event image in time sequence; determining a definition and/or a brightness consistency indicator of the RGB image; and if determining, based on the second information, that the event image meets at least the second condition, and the definition of the RGB image is greater than a definition threshold and/or the brightness consistency indicator of the RGB image is greater than a preset indicator threshold, determining that the event image and the RGB image are key frames.

Optionally, in a possible implementation, the second condition includes one or more of: a distance between the event image and a previous key frame exceeds a preset distance value, a rotation angle between the event image and a previous key frame exceeds a preset angle value, and a distance between the event image and a previous key frame exceeds a preset distance value and a rotation angle between the event image and the previous key frame exceeds a preset angle value.

According to a twenty-seventh aspect, this application provides a pose estimation method, including: obtaining a first event image and a target image corresponding to the first event image, where environment information captured in the first event image is the same as that captured in the target image, and the target image includes a depth image or an RGB image; determining a first movement region that is in the first event image; determining, based on the first movement region, a corresponding second movement region that is in the target image; and performing pose estimation based on the second movement region that is in the target image.

In this solution, a dynamic region in a scenario is captured based on an event image, and a pose is determined based on the dynamic region, so that pose information can be determined accurately.

Optionally, in a possible implementation, the determining a first movement region that is in the first event image includes: if a DVS that captures the first event image is still, obtaining pixels at which there are event responses and that are in the first event image; and determining the first movement region based on the pixels at which there are the event responses.

Optionally, in a possible implementation, the determining the first movement region based on the pixels at which there are the event responses includes: determining an outline formed by the pixels at which there are the event responses and that are in the first event image; and if an area surrounded by the outline is greater than a first threshold, determining that the region surrounded by the outline is the first movement region.

Optionally, in a possible implementation, the determining a first movement region that is in the first event image includes: if a DVS that captures the first event image is moving, obtaining a second event image, where the second event image is a previous frame of event image of the first event image; calculating a displacement magnitude and a displacement direction of a pixel in the first event image relative to the second event image; and if the displacement direction of the pixel in the first event image is different from a displacement direction of a surrounding pixel, or a difference between the displacement magnitude of the pixel in the first event image and a displacement magnitude of a surrounding pixel is greater than a second threshold, determining that the pixel belongs to the first movement region.

Optionally, in a possible implementation, the method further includes: determining, based on the first movement region, a corresponding still region that is in the image; and determining the pose based on the still region that is in the image.

According to a twenty-eighth aspect, this application further provides a data processing apparatus. The data processing apparatus has a function of implementing the method in any one of the twenty-fifth aspect or the possible implementations of the twenty-fifth aspect. Alternatively, the data processing apparatus has a function of implementing the method in any one of the twenty-sixth aspect or the possible implementations of the twenty-sixth aspect. Alternatively, the data processing apparatus has a function of implementing the method in any one of the twenty-seventh aspect or the possible implementations of the twenty-seventh aspect. The function may be implemented by hardware, or may be implemented by hardware executing corresponding software. The hardware or the software includes one or more modules corresponding to the function.

According to a twenty-ninth aspect, an embodiment of this application provides an apparatus, including a processor and a memory. The processor and the memory are interconnected through a line, and the processor invokes program code in the memory to perform a processing-related function in the method shown in any one of the first aspect to the twenty-seventh aspect. Optionally, the apparatus may be a chip.

According to a thirtieth aspect, this application provides an electronic device. The electronic device includes a display module, a processing module, and a storage module.

The display module is configured to display a graphical user interface of an application stored in the storage module. The graphical user interface may be the graphical user interface described in any one of the twenty-second aspect and possible implementations thereof.

According to a thirty-first aspect, an embodiment of this application provides an apparatus. The apparatus may also be referred to as a digital processing chip or a chip. The chip includes a processing unit and a communication interface. The processing unit obtains program instructions through the communication interface, and the program instructions are executed by the processing unit. The processing unit is configured to perform a processing-related function in any optional implementation of the first aspect to the twenty-seventh aspect.

According to a thirty-second aspect, an embodiment of this application provides a computer-readable storage medium, including instructions. When the instructions are run on a computer, the computer is enabled to perform the method in any optional implementation of the first aspect to the twenty-seventh aspect.

According to a thirty-third aspect, an embodiment of this application provides a computer program product including instructions. When the computer program product runs on a computer, the computer is enabled to perform the method in any optional implementation of the first aspect to the twenty-seventh aspect.

**BRIEF DESCRIPTION OF DRAWINGS**

FIG. 1A is a schematic architectural diagram of a system according to this application;

FIG.1B is a schematic diagram of a structure of an electronic device according to this application;

FIG. 2 is another schematic architectural diagram of a system according to this application;

FIG. 3-a is a schematic diagram of a relationship between time and an amount of data read in an asynchronous reading mode based on an event stream;

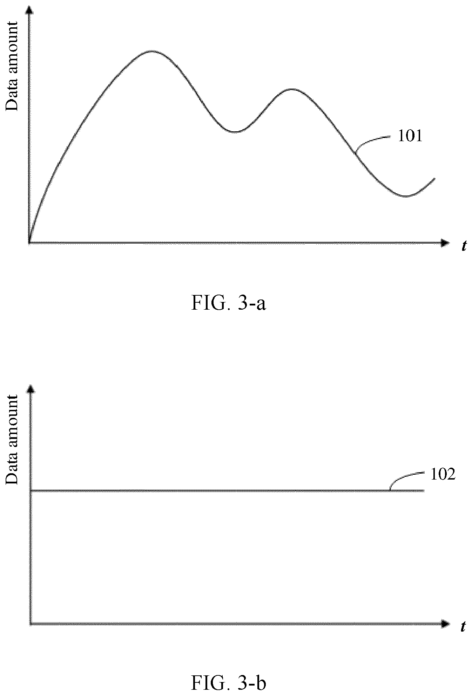

FIG. 3-b is a schematic diagram of a relationship between time and an amount of data read in a synchronous reading mode based on frame scanning;

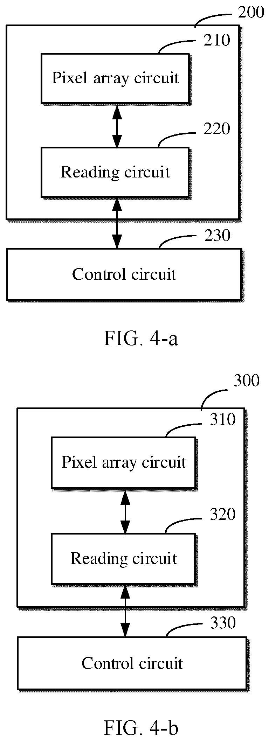

FIG. 4-a is a block diagram of a visual sensor according to this application;

FIG. 4-b is a block diagram of another visual sensor according to this application;

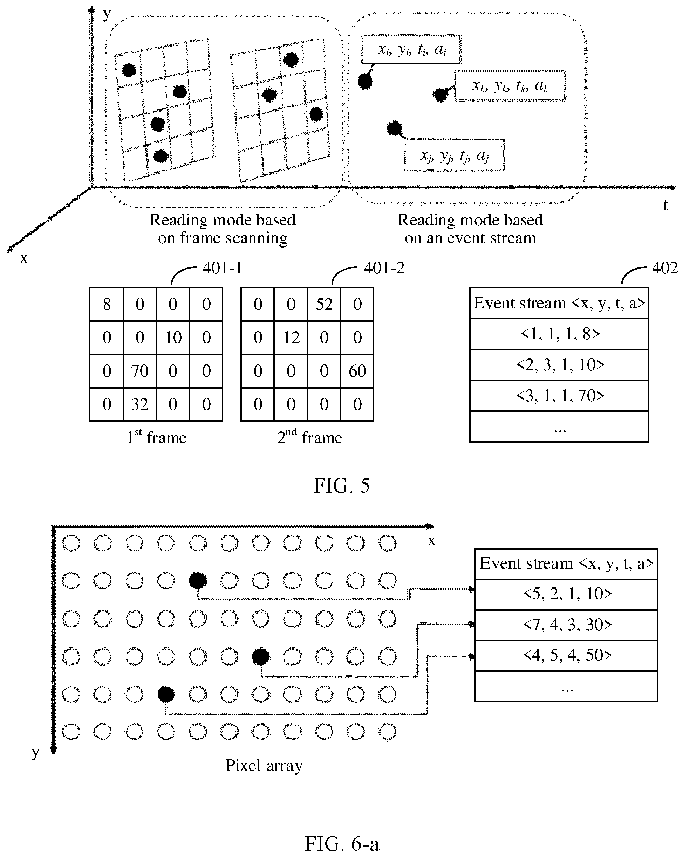

FIG. 5 is a schematic diagram of principles of a synchronous reading mode based on frame scanning and an asynchronous reading mode based on an event stream according to an embodiment of this application;

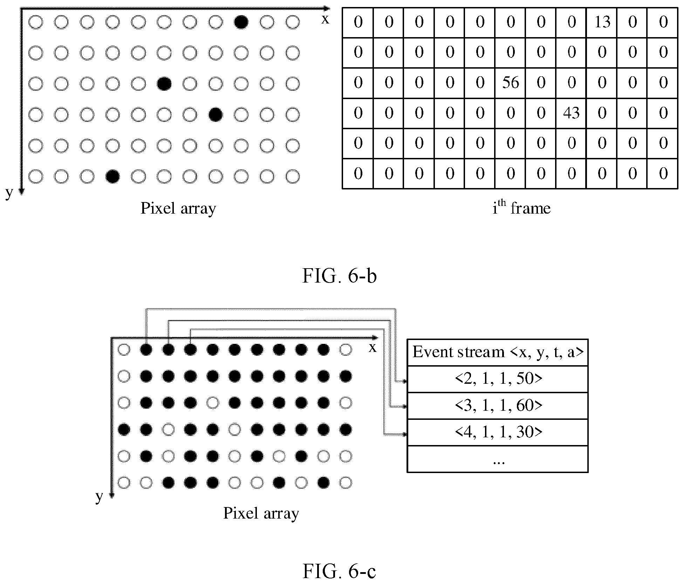

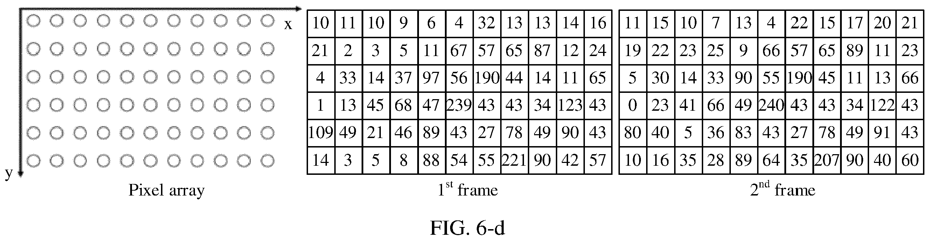

FIG. 6-a is a schematic diagram of operation of a vision sensor in a reading mode based on frame scanning according to an embodiment of this application;

FIG. 6-b is a schematic diagram of operation of a vision sensor in a reading mode based on an event stream according to an embodiment of this application;

FIG. 6-c is a schematic diagram of operation of a vision sensor in a reading mode based on an event stream according to an embodiment of this application;

FIG. 6-d is a schematic diagram of operation of a vision sensor in a reading mode based on frame scanning according to an embodiment of this application;

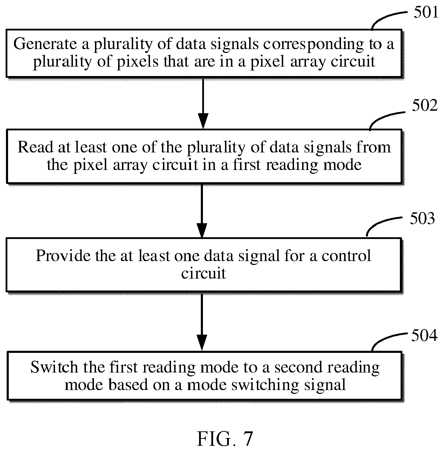

FIG. 7 is a possible flowchart of a method for operating a vision sensor chip according to an embodiment of this application;

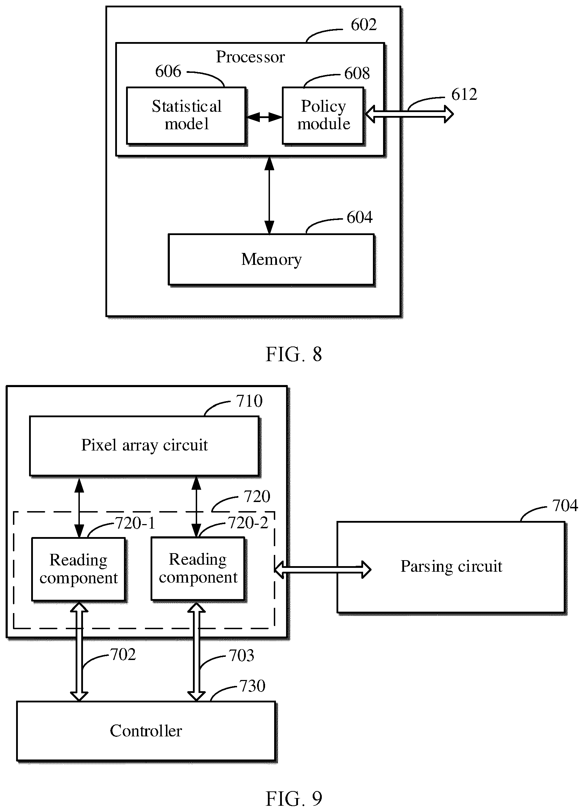

FIG. 8 is a block diagram of a control circuit according to this application;

FIG. 9 is a block diagram of an electronic device according to this application;

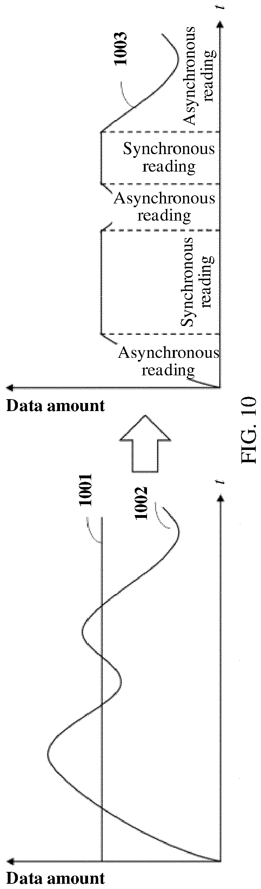

FIG. 10 is a possible schematic diagram in which a data amount changes with time in a single data reading mode and an adaptively switched reading mode according to an embodiment of this application;

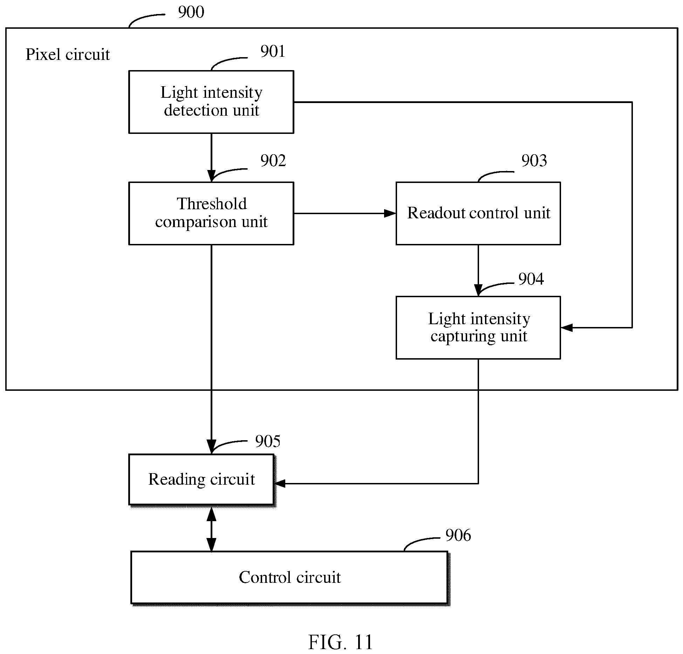

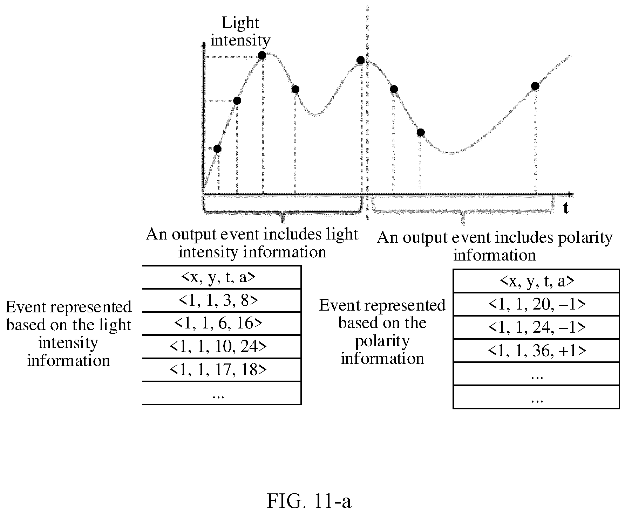

FIG. 11 is a schematic diagram of a pixel circuit according to this application;

FIG. 11-a is a schematic diagram of an event represented based on light intensity information and an event represented based on polarity information;

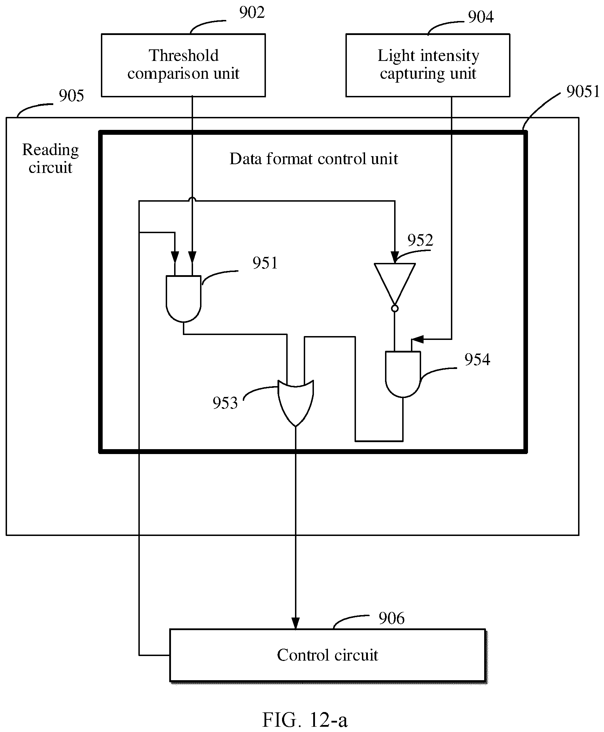

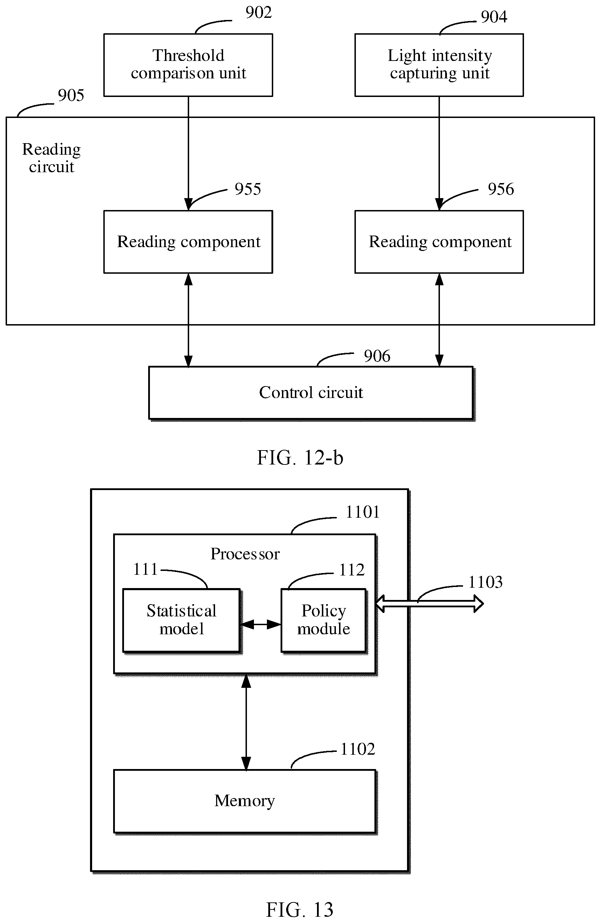

FIG. 12-a is a schematic diagram of a structure of a data format control unit in a reading circuit according to this application;

FIG. 12-b is another schematic diagram of a structure of a data format control unit in a reading circuit according to this application;

FIG. 13 is a block diagram of another control circuit according to this application;

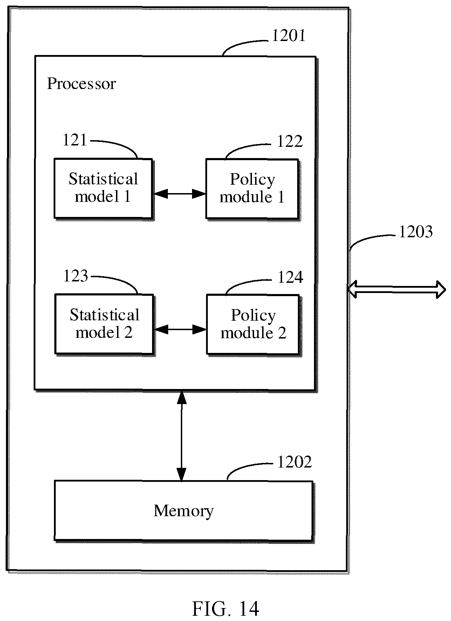

FIG. 14 is a block diagram of another control circuit according to this application;

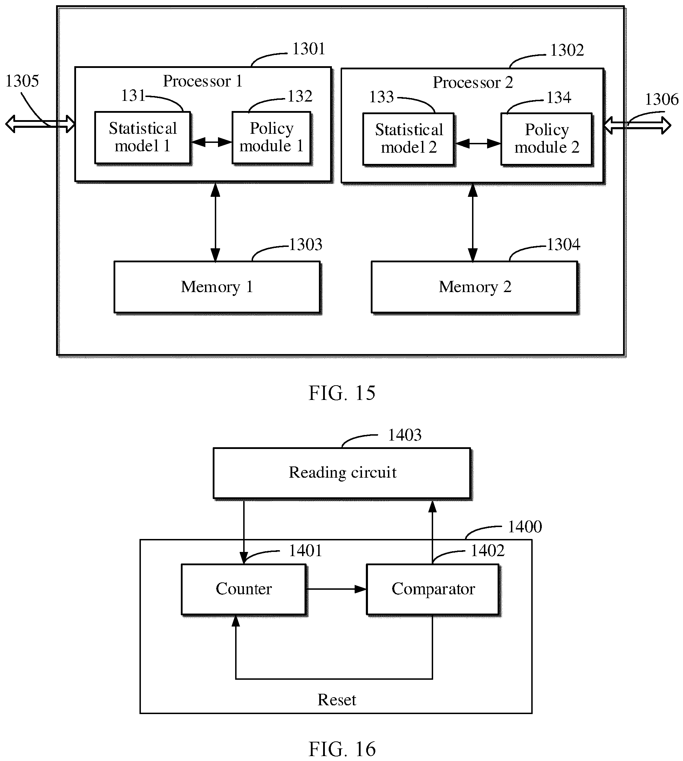

FIG. 15 is a block diagram of another control circuit according to this application;

FIG. 16 is a block diagram of another control circuit according to this application;

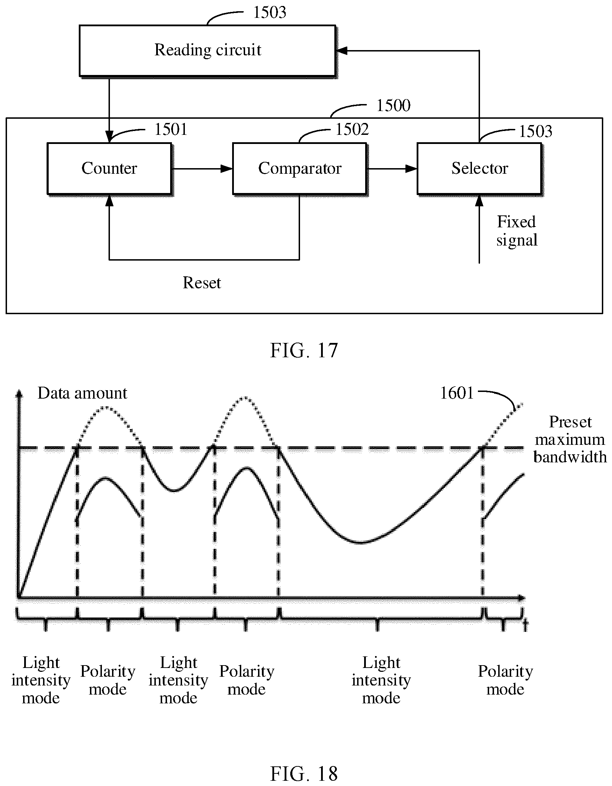

FIG. 17 is a block diagram of another control circuit according to this application;

FIG. 18 is a schematic diagram of differences between a single event representation manner and an adaptive conversion event representation manner according to this application;

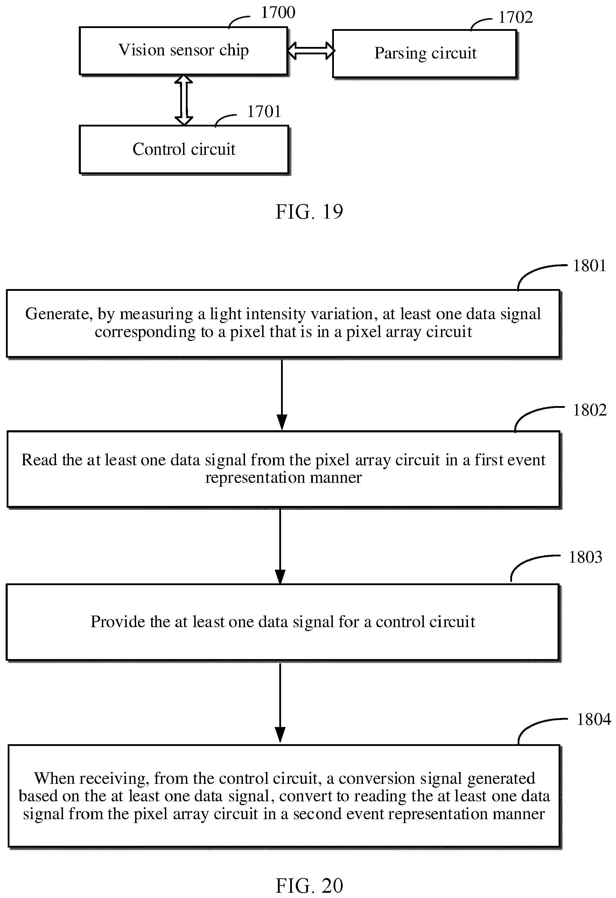

FIG. 19 is a block diagram of another electronic device according to this application;

FIG. 20 is a possible flowchart of a method for operating a vision sensor chip according to an embodiment of this application;

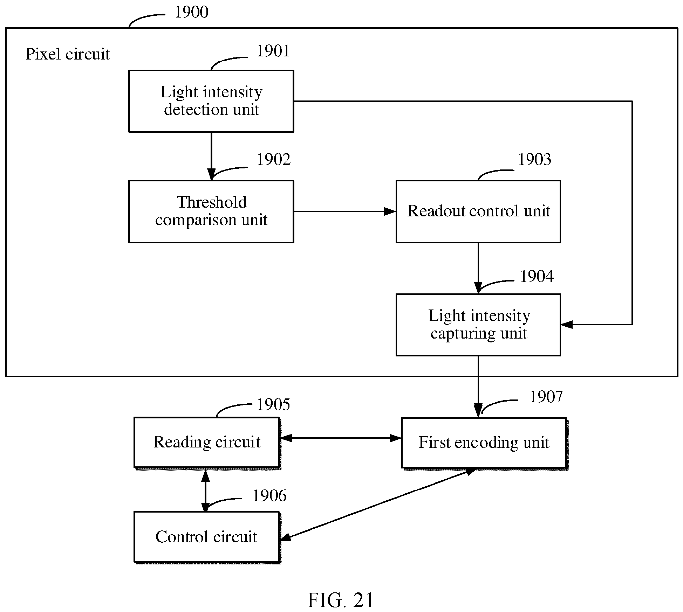

FIG. 21 is a schematic diagram of another pixel circuit according to this application;

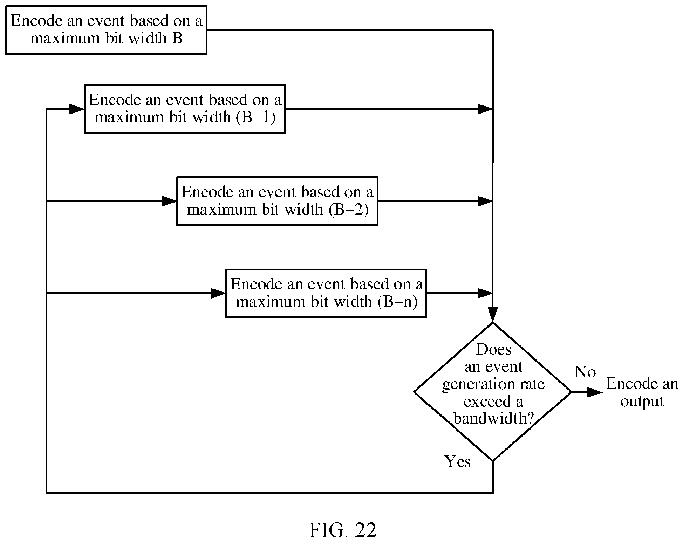

FIG. 22 is a schematic flowchart of an encoding mode according to this application;

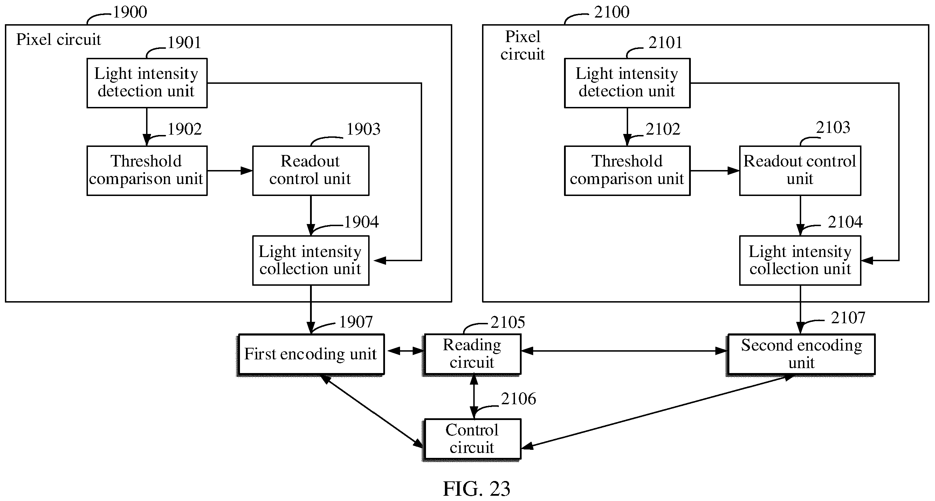

FIG. 23 is a block diagram of another visual sensor according to this application;

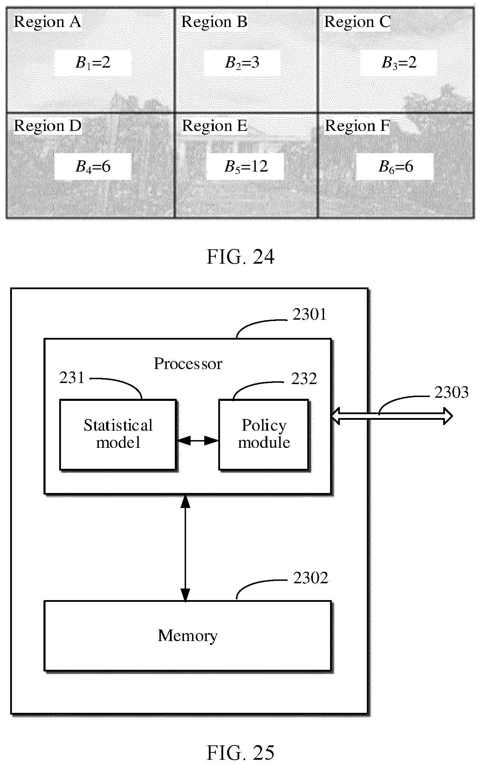

FIG. 24 is a schematic diagram of region division performed on a pixel array;

FIG. 25 is a block diagram of another control circuit according to this application;

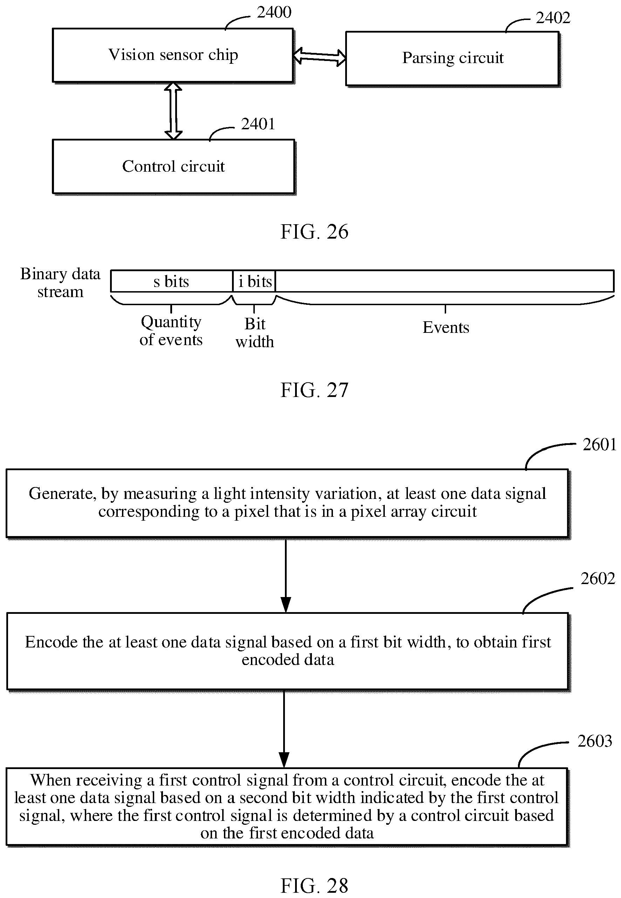

FIG. 26 is a block diagram of another electronic device according to this application;

FIG. 27 is a schematic diagram of a binary data stream;

FIG. 28 is a possible flowchart of a method for operating a vision sensor chip according to an embodiment of this application;

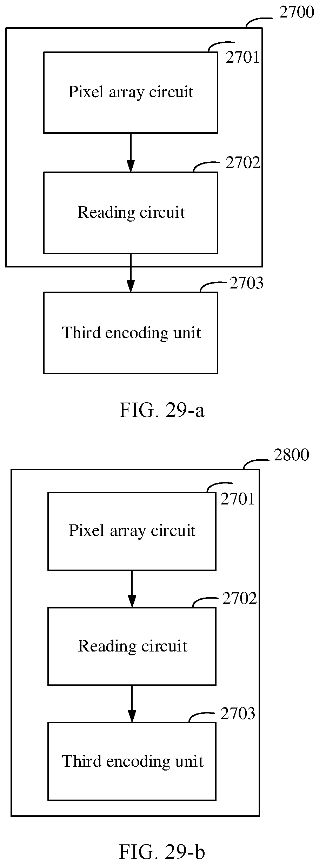

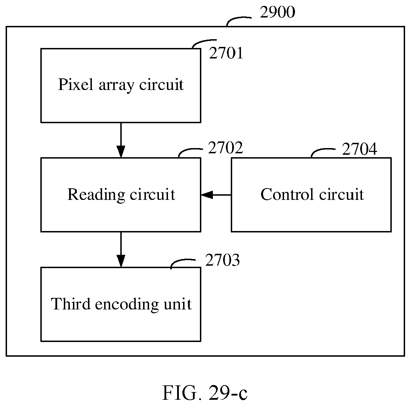

FIG. 29-a is a block diagram of another visual sensor according to this application;

FIG. 29-b is a block diagram of another visual sensor according to this application;

FIG. 29-c is a block diagram of another visual sensor according to this application;

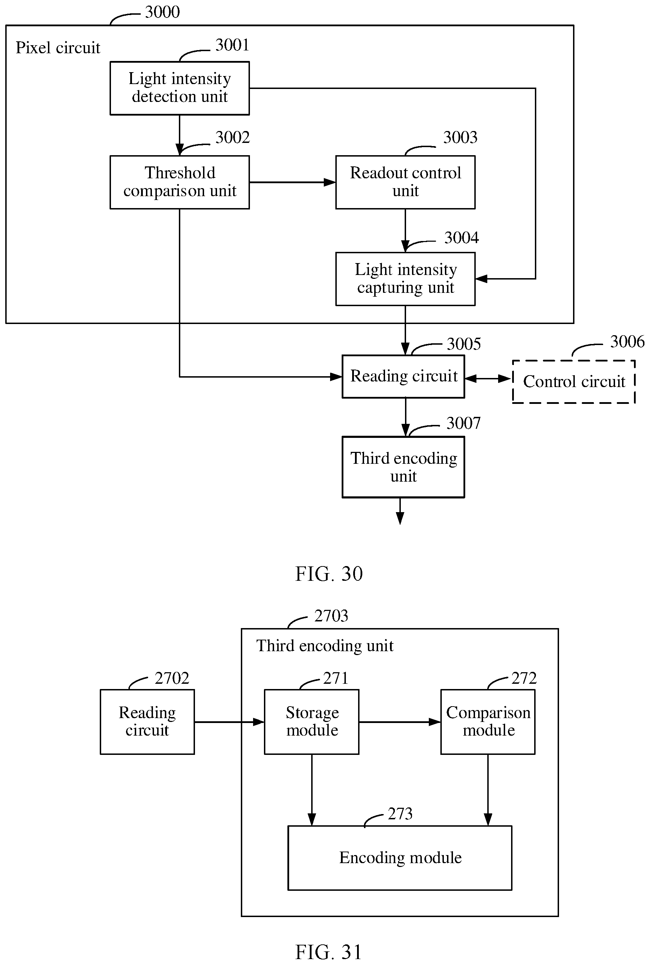

FIG. 30 is a schematic diagram of another pixel circuit according to this application;

FIG. 31 is a schematic block diagram of a third encoding unit according to this application;

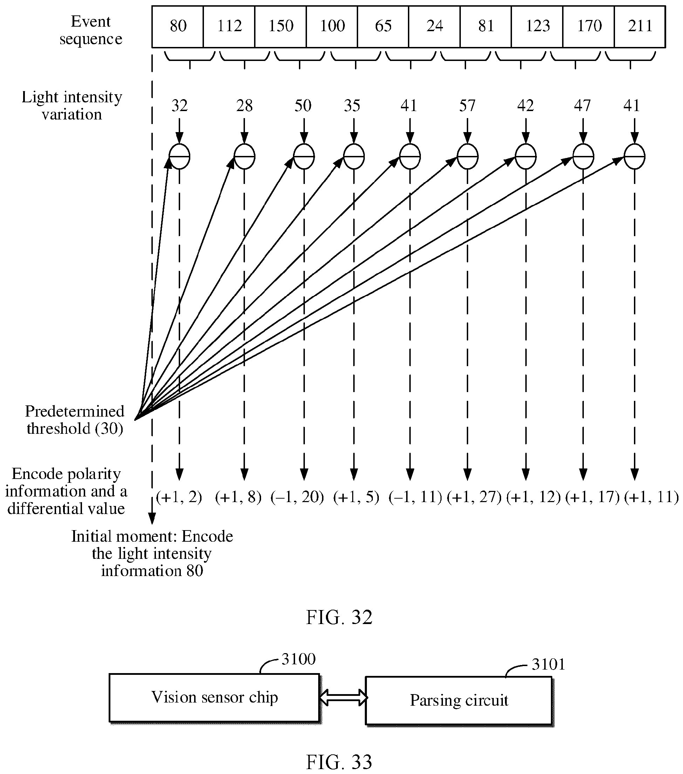

FIG. 32 is a schematic flowchart of another encoding mode according to this application;

FIG. 33 is a block diagram of another electronic device according to this application;

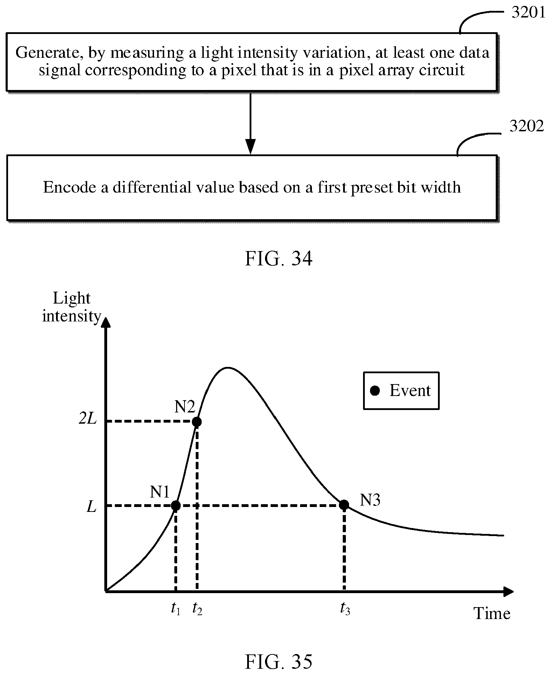

FIG. 34 is a possible flowchart of a method for operating a vision sensor chip according to an embodiment of this application;

FIG. 35 is a schematic diagram of an event according to this application;

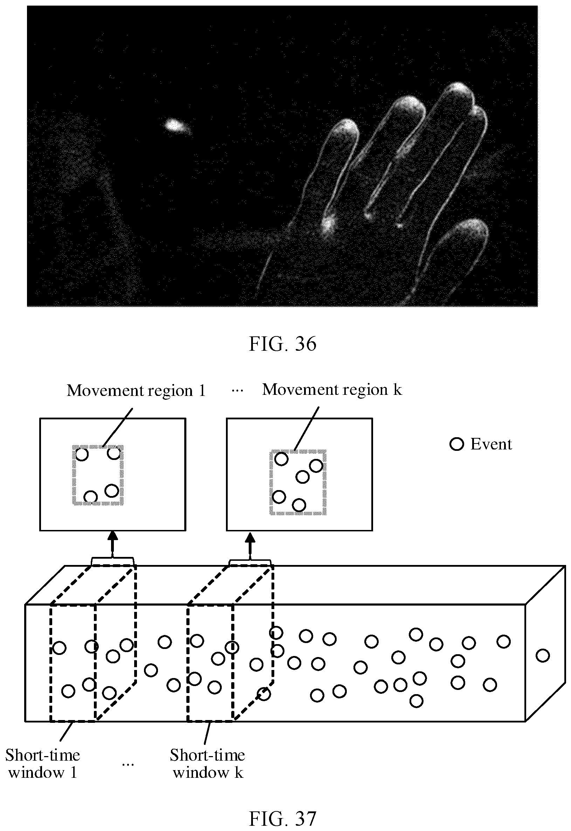

FIG. 36 is a schematic diagram of an event at a moment according to this application;

FIG. 37 is a schematic diagram of a movement region according to this application;

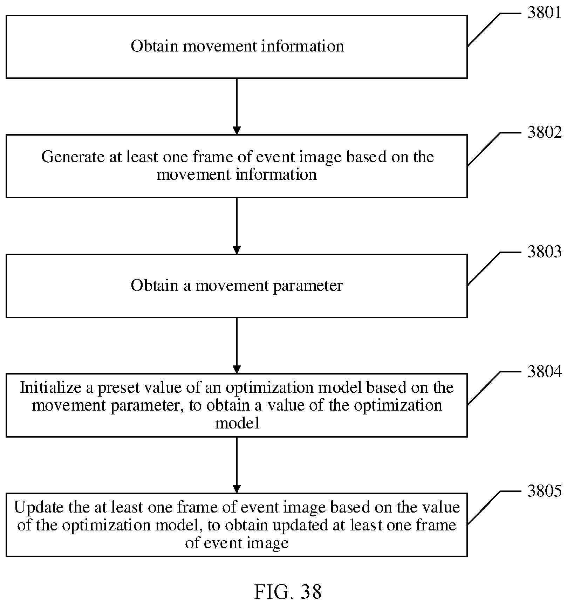

FIG. 38 is a schematic flowchart of an image processing method according to this application;

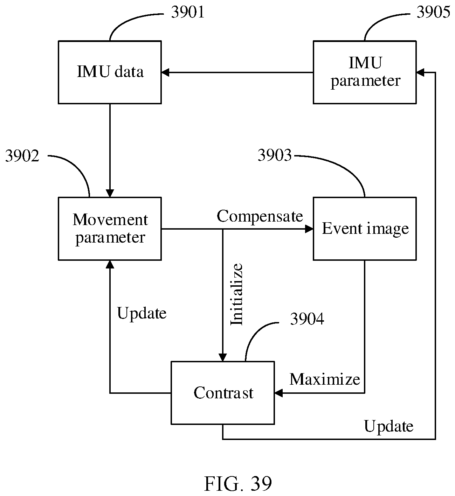

FIG. 39 is a schematic flowchart of another image processing method according to this application;

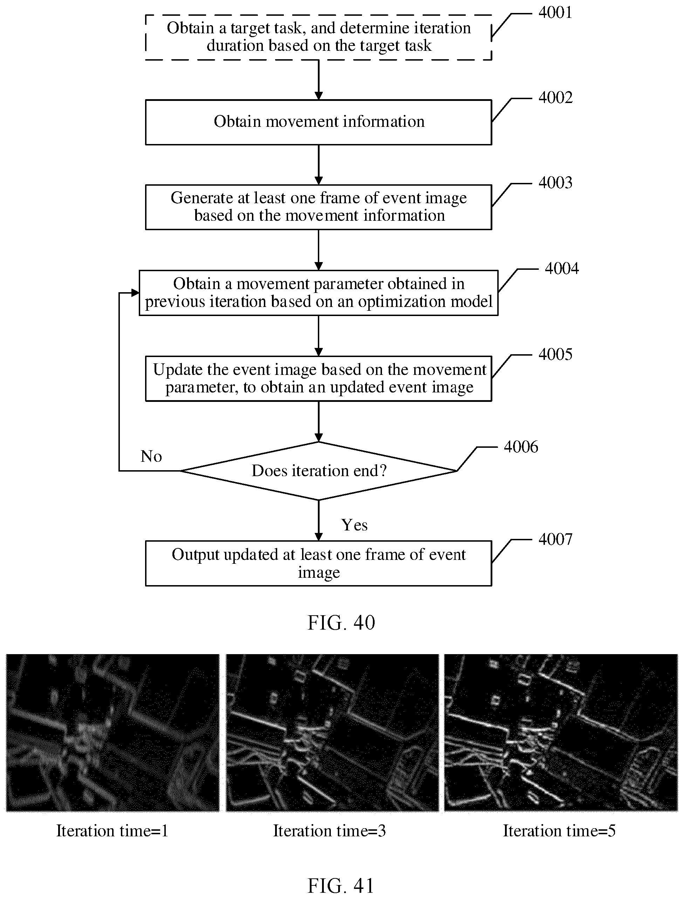

FIG. 40 is a schematic flowchart of another image processing method according to this application;

FIG. 41 is a schematic diagram of an event image according to this application;

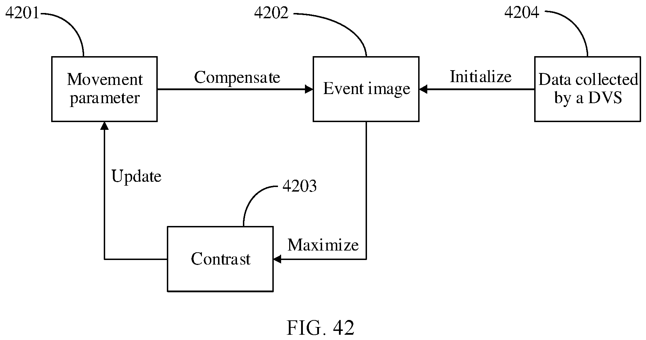

FIG. 42 is a schematic flowchart of another image processing method according to this application;

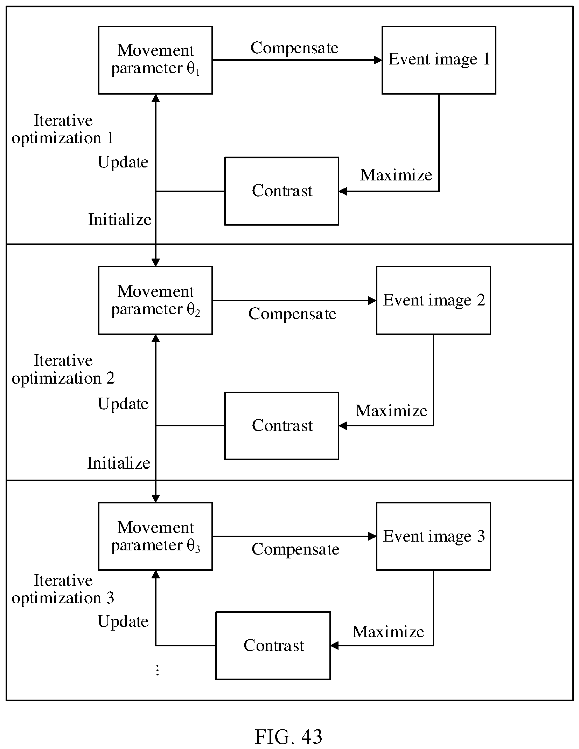

FIG. 43 is a schematic flowchart of another image processing method according to this application;

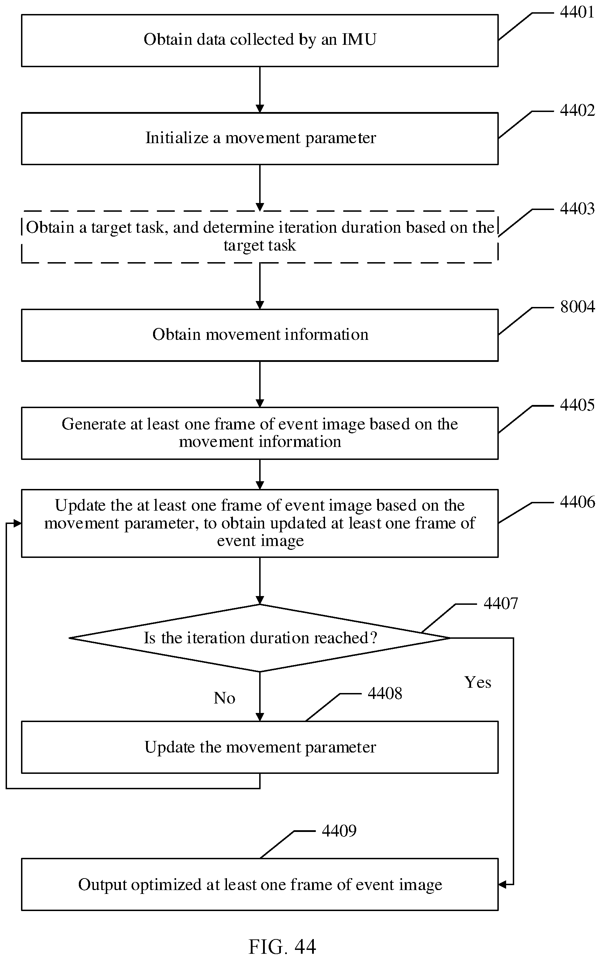

FIG. 44 is a schematic flowchart of another image processing method according to this application;

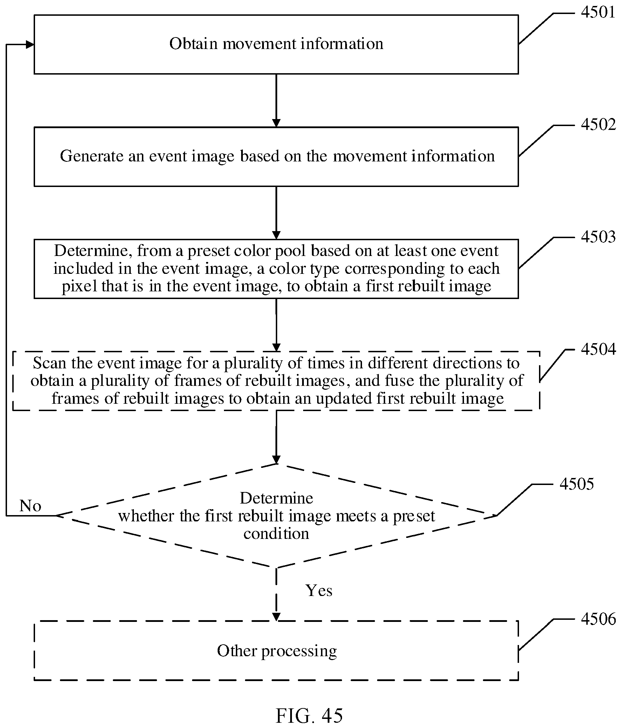

FIG. 45 is a schematic flowchart of an image processing method according to this application;

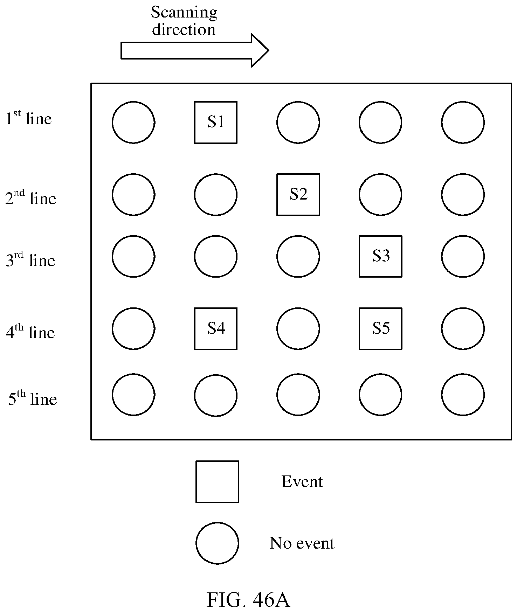

FIG. 46A is another schematic diagram of an event image according to this application;

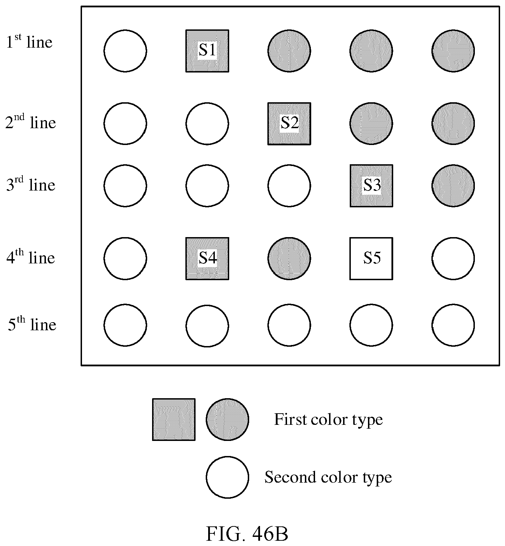

FIG. 46B is another schematic diagram of an event image according to this application;

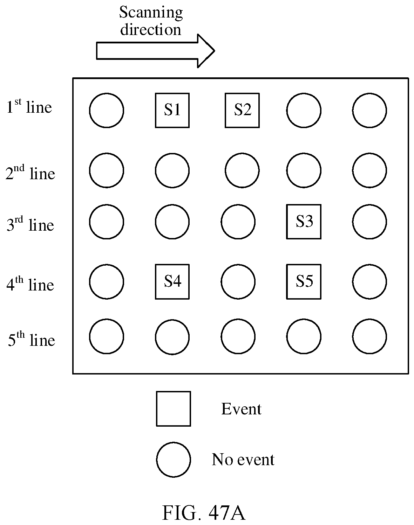

FIG. 47A is another schematic diagram of an event image according to this application;

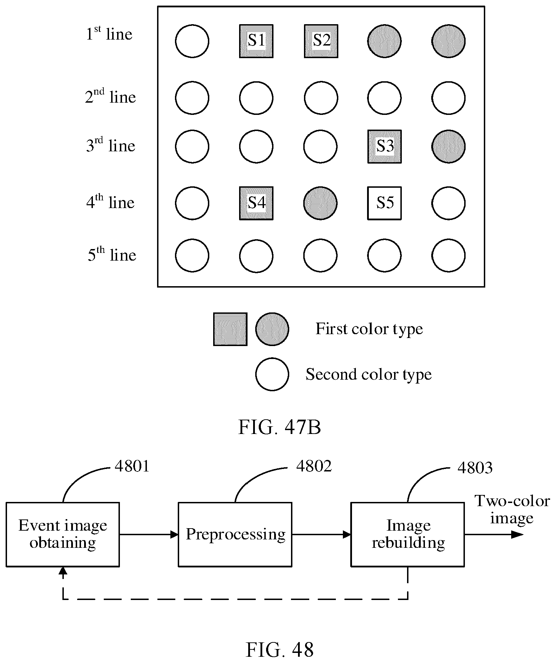

FIG. 47B is another schematic diagram of an event image according to this application;

FIG. 48 is a schematic flowchart of another image processing method according to this application;

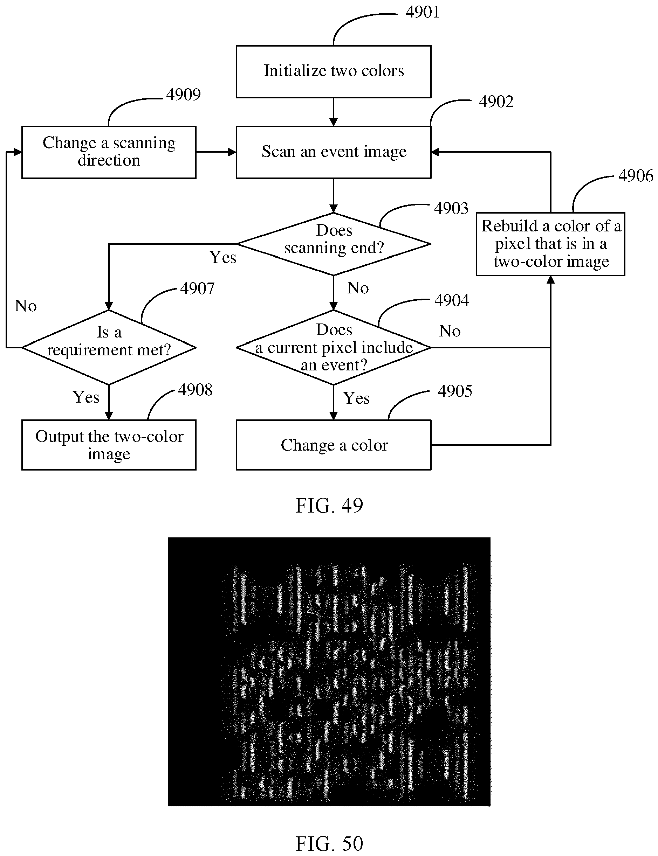

FIG. 49 is a schematic flowchart of another image processing method according to this application;

FIG. 50 is another schematic diagram of an event image according to this application;

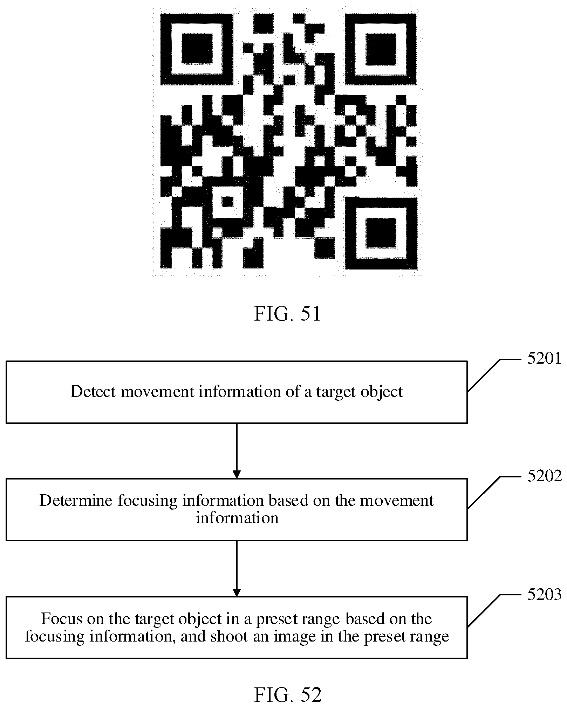

FIG. 51 is a schematic diagram of a rebuilt image according to this application;

FIG. 52 is a schematic flowchart of an image processing method according to this application;

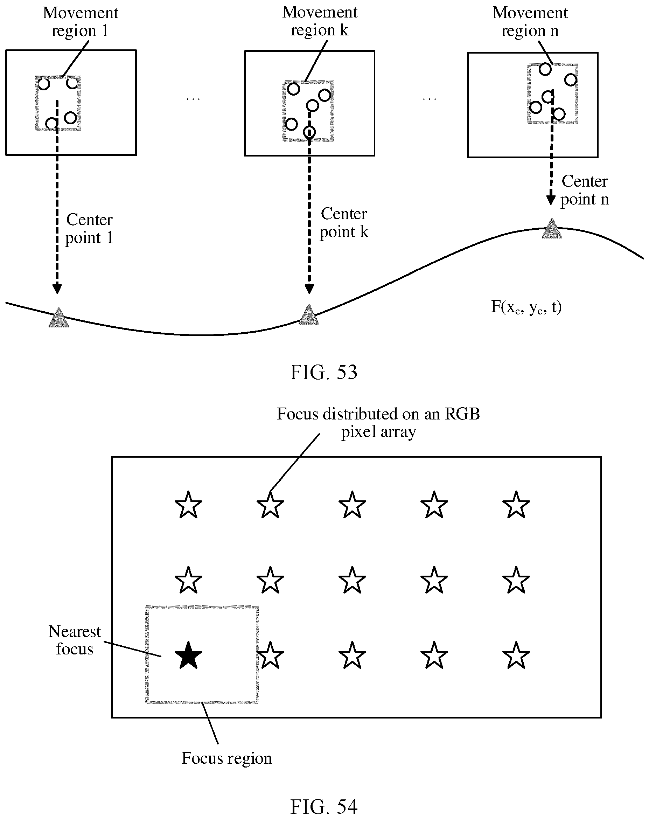

FIG. 53 is a schematic diagram of a manner of fitting a movement trajectory according to this application;

FIG. 54 is a schematic diagram of a manner of determining a focus according to this application;

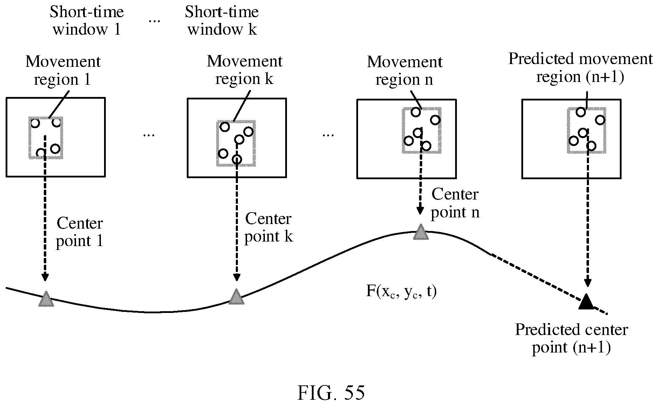

FIG. 55 is a schematic diagram of a manner of determining a prediction center according to this application;

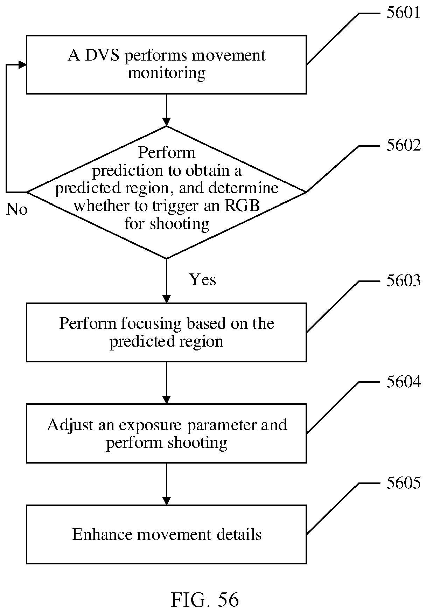

FIG. 56 is a schematic flowchart of another image processing method according to this application;

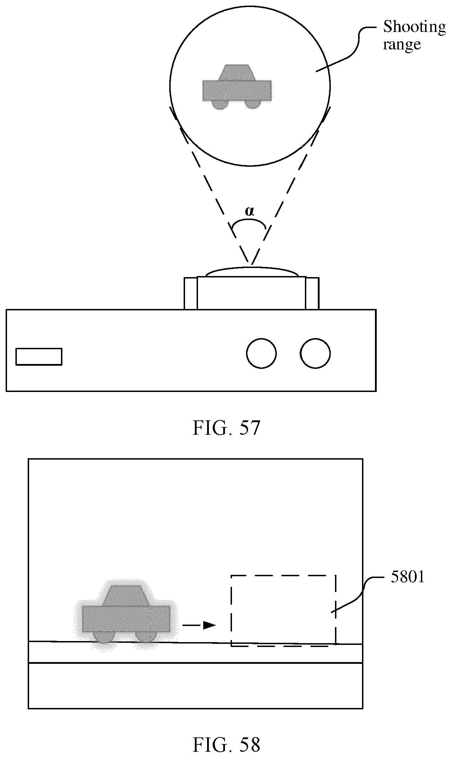

FIG. 57 is a schematic diagram of a shooting range according to this application;

FIG. 58 is a schematic diagram of a predicted region according to this application;

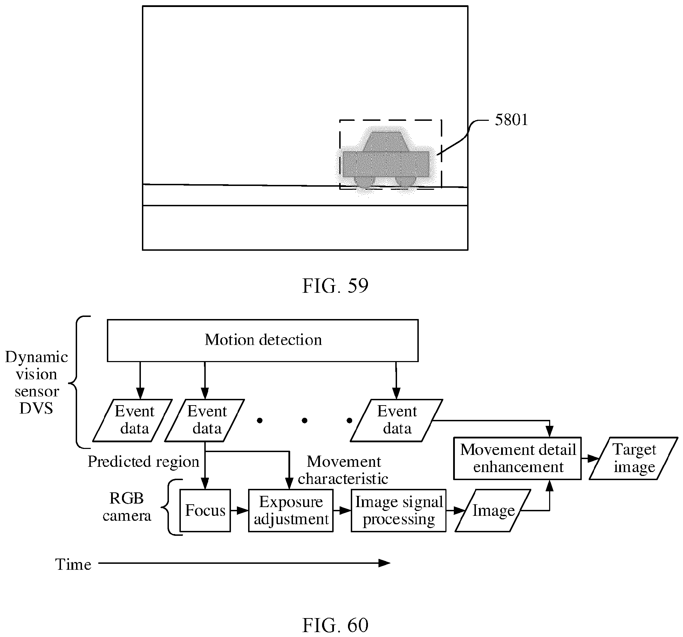

FIG. 59 is a schematic diagram of a focus region according to this application;

FIG. 60 is a schematic flowchart of another image processing method according to this application;

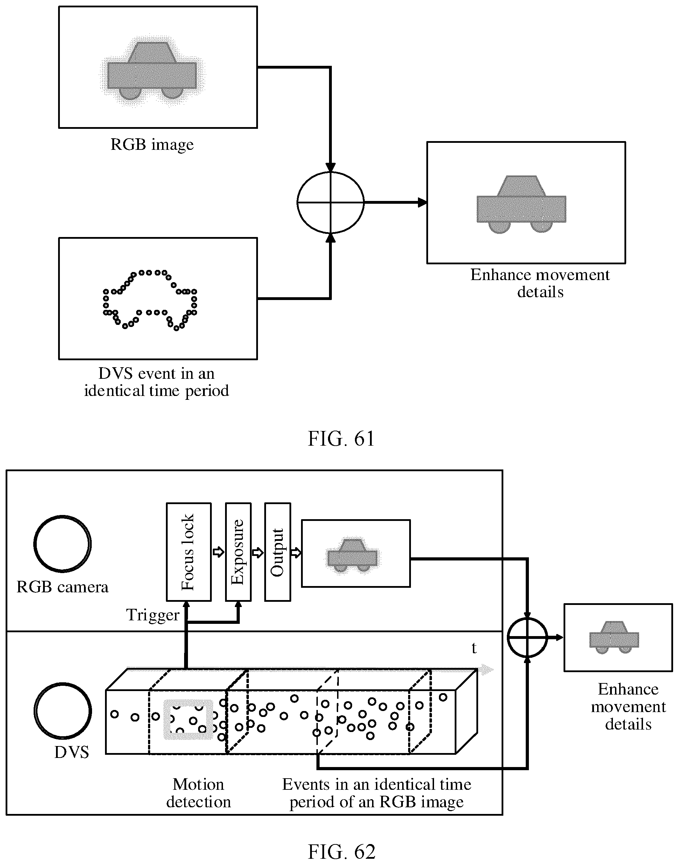

FIG. 61 is a schematic diagram of an image enhancement manner according to this application;

FIG. 62 is a schematic flowchart of another image processing method according to this application;

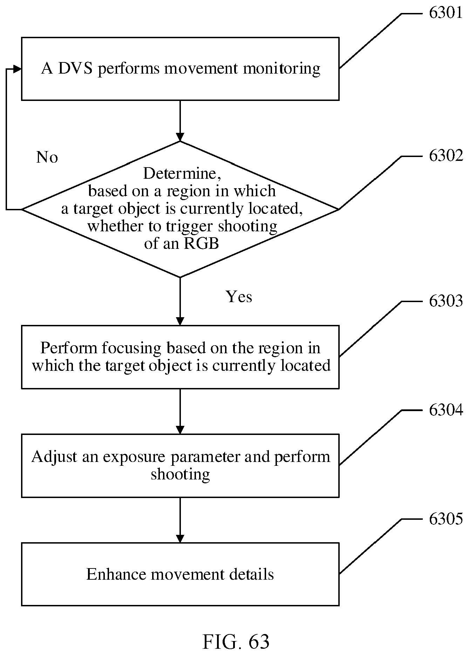

FIG. 63 is a schematic flowchart of another image processing method according to this application;

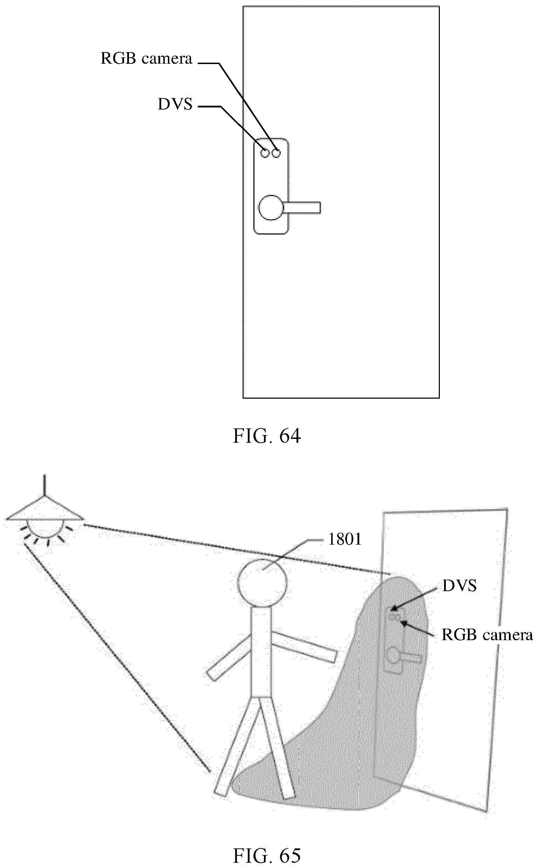

FIG. 64 is a schematic diagram of a scenario for application according to this application;

FIG. 65 is a schematic diagram of another scenario for application according to this application;

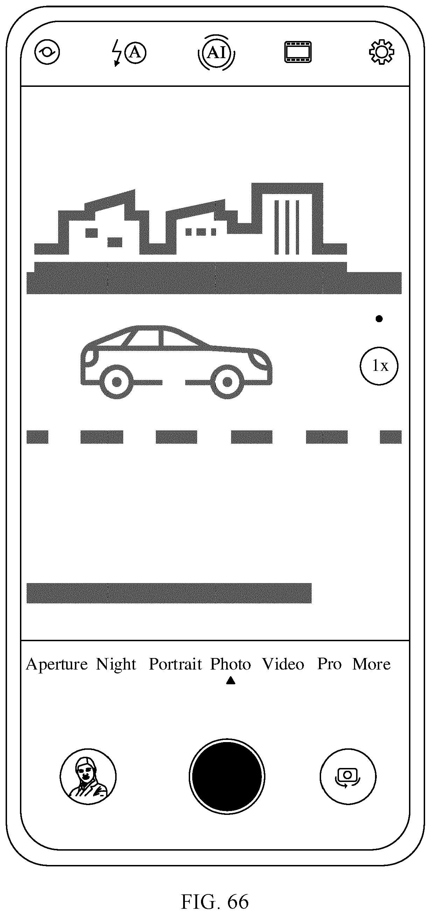

FIG. 66 is a schematic presenting diagram of a GUI according to this application;

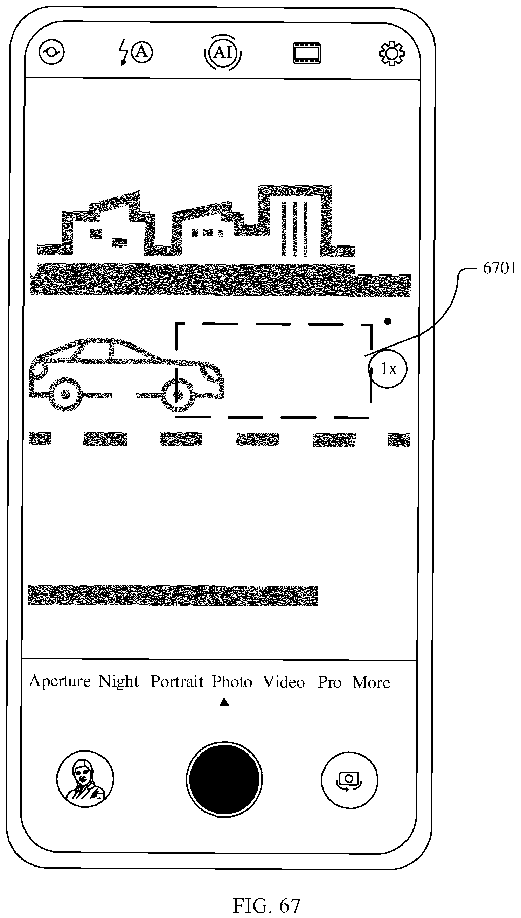

FIG. 67 is another schematic presenting diagram of a GUI according to this application;

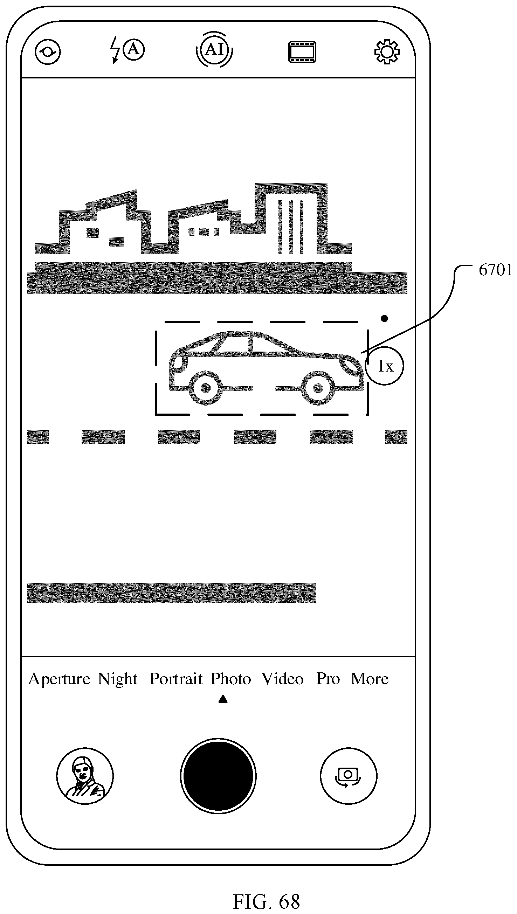

FIG. 68 is another schematic presenting diagram of a GUI according to this application;

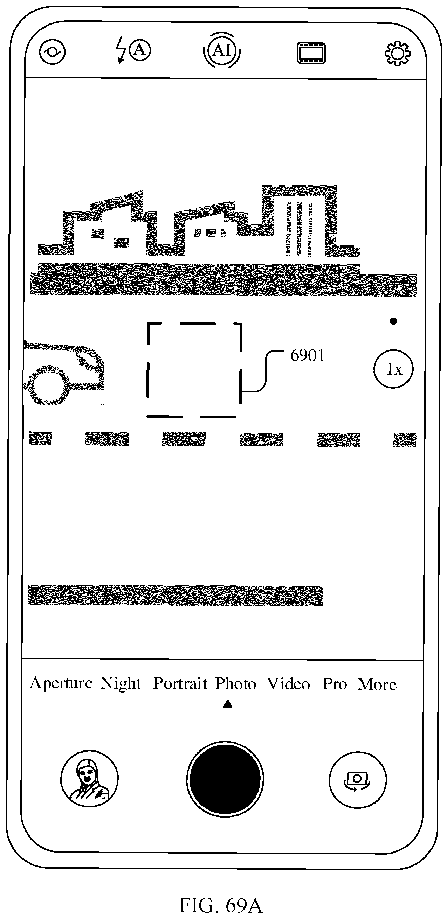

FIG. 69A is another schematic presenting diagram of a GUI according to this application;

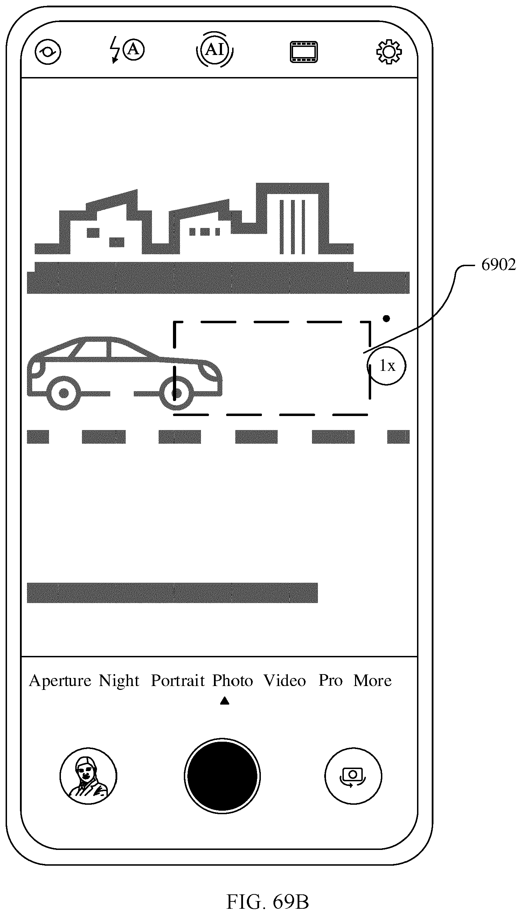

FIG. 69B is another schematic presenting diagram of a GUI according to this application;

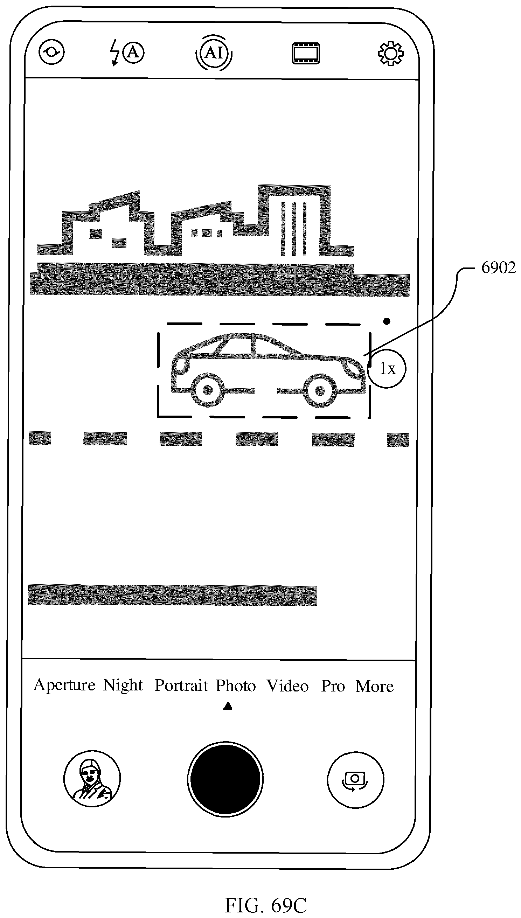

FIG. 69C is another schematic presenting diagram of a GUI according to this application;

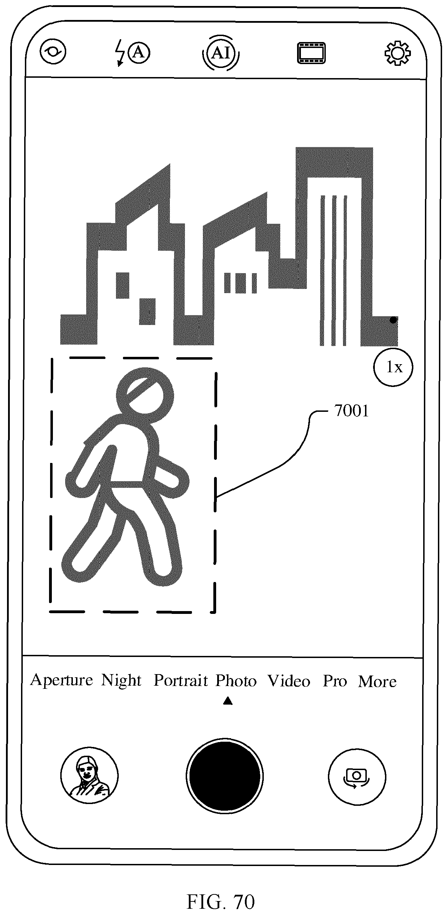

FIG. 70 is another schematic presenting diagram of a GUI according to this application;

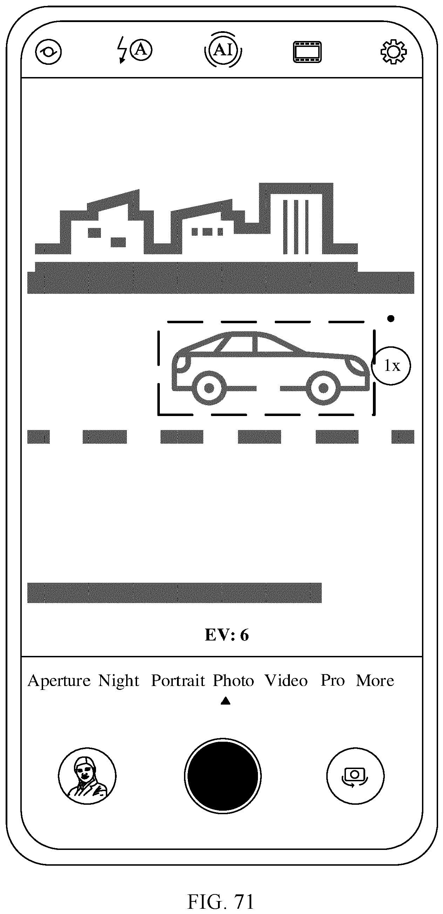

FIG. 71 is another schematic presenting diagram of a GUI according to this application;

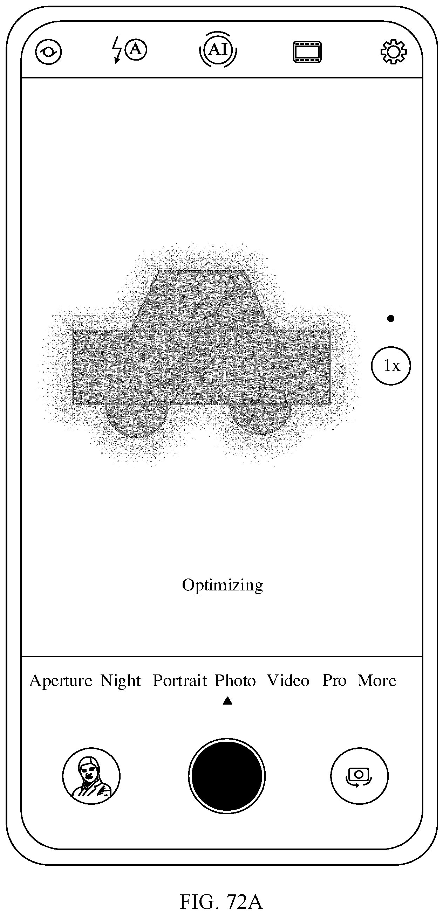

FIG. 72A is another schematic presenting diagram of a GUI according to this application;

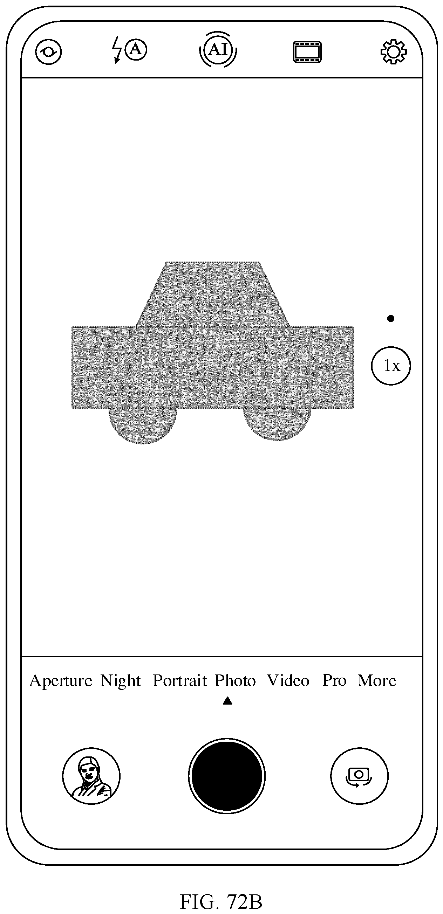

FIG. 72B is another schematic presenting diagram of a GUI according to this application;

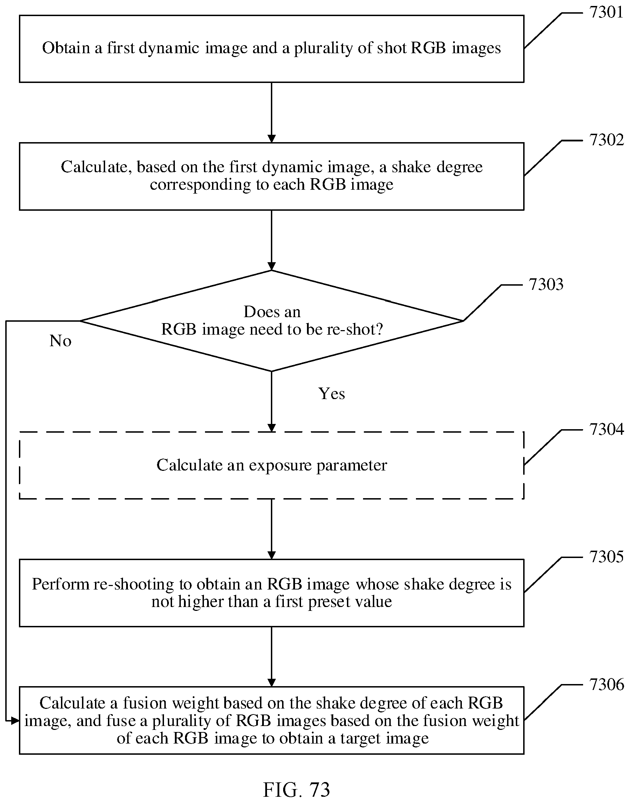

FIG. 73 is a schematic flowchart of another image processing method according to this application;

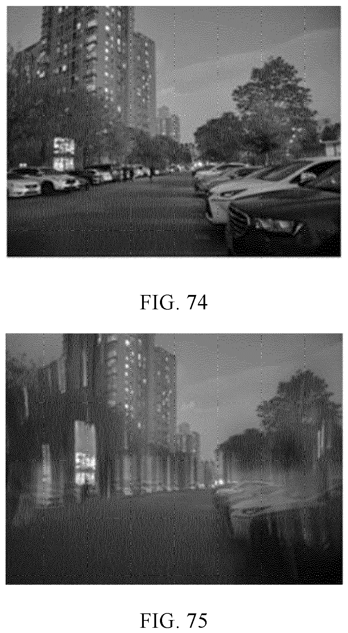

FIG. 74 is a schematic diagram of an RGB image with a low shake degree according to this application;

FIG. 75 is a schematic diagram of an RGB image with a high shake degree according to this application;

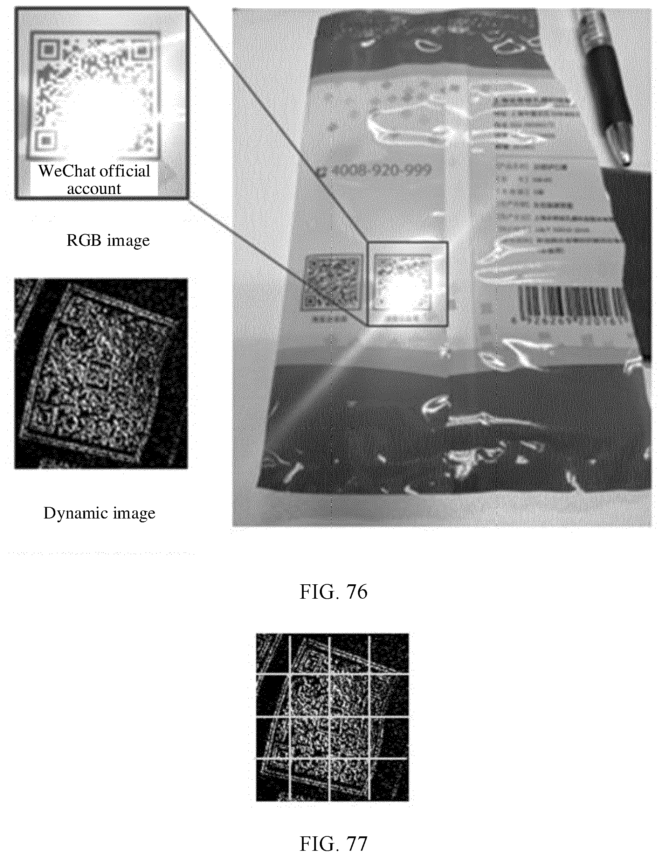

FIG. 76 is a schematic diagram of an RGB image in a scenario with a large light ratio according to this application;

FIG. 77 is another schematic diagram of an event image according to this application;

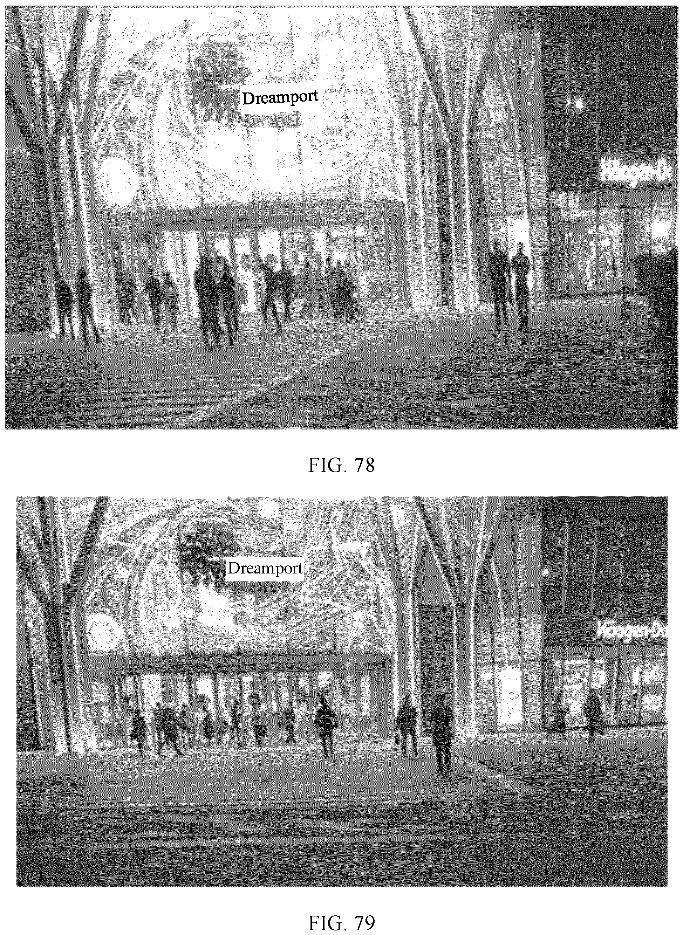

FIG. 78 is a schematic diagram of an RGB image according to this application;

FIG. 79 is another schematic diagram of an RGB image according to this application;

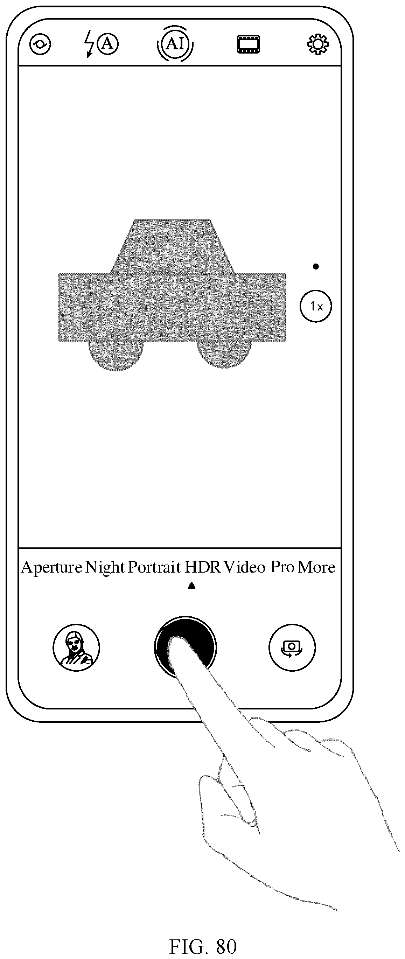

FIG. 80 is a schematic diagram of another GUI according to this application;

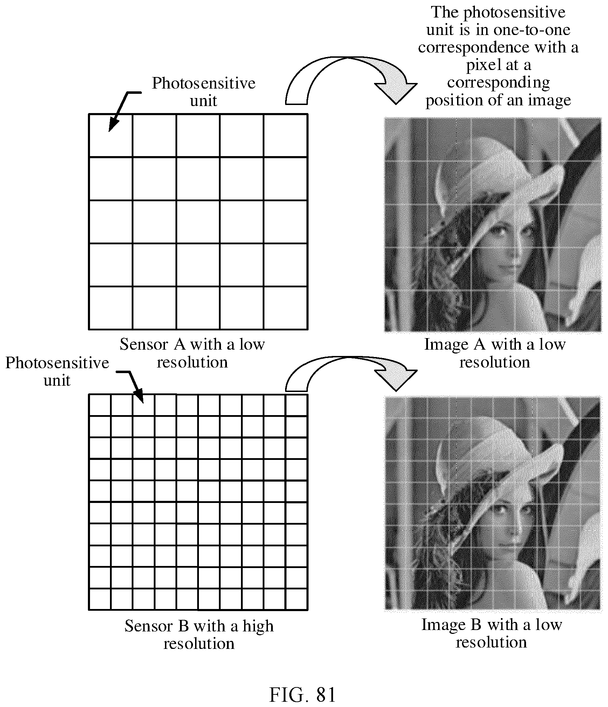

FIG. 81 is a schematic diagram of a relationship between a photosensitive unit and a pixel value according to this application;

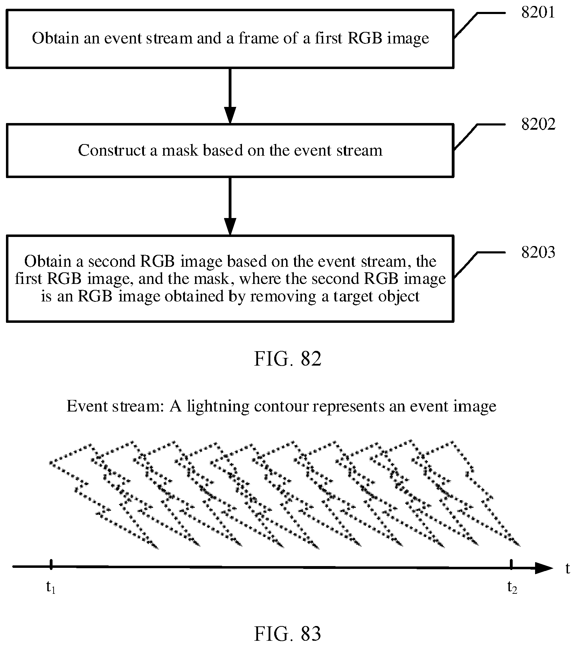

FIG. 82 is a schematic flowchart of an image processing method according to this application;

FIG. 83 is a schematic diagram of an event stream according to this application;

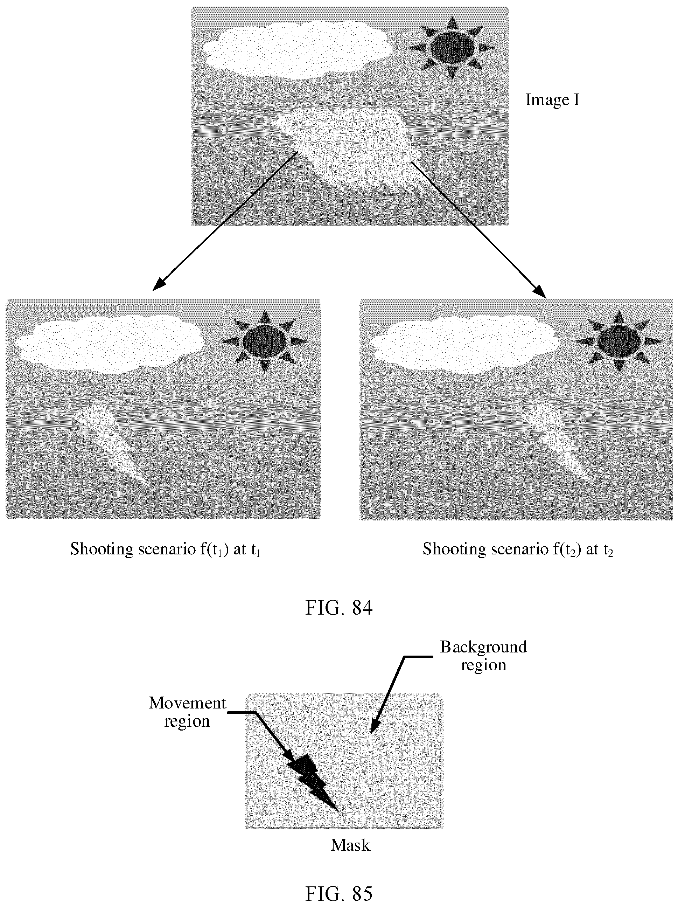

FIG. 84 is a schematic diagram of a blurred image obtained by performing exposure and superposition in a plurality of shooting scenarios according to this application;

FIG. 85 is a schematic diagram of a mask according to this application;

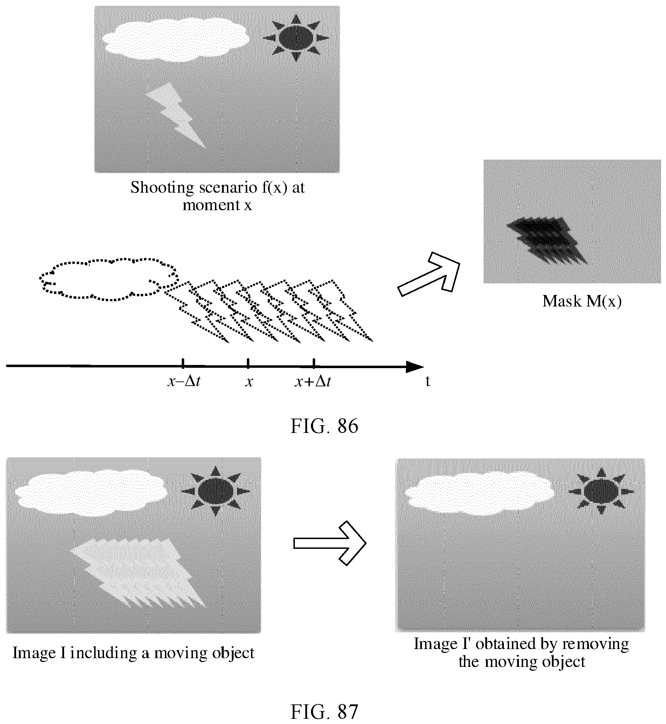

FIG. 86 is a schematic diagram of constructing a mask according to this application;

FIG. 87 is an effect diagram of removing a moving object from an image I to obtain an image I' according to this application;

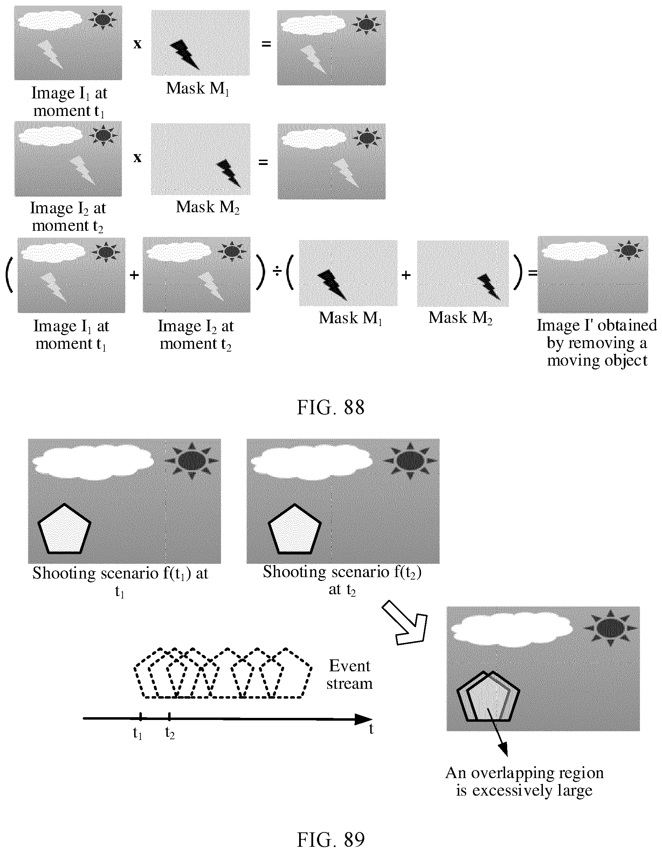

FIG. 88 is a schematic flowchart of removing a moving object from an image I to obtain an image I' according to this application;

FIG. 89 is a schematic diagram of a relatively small movement of a moving object in a shooting process according to this application;

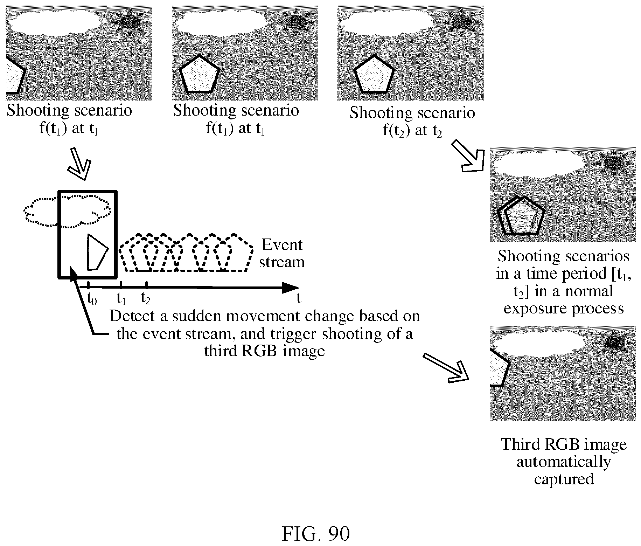

FIG. 90 is a schematic diagram of triggering a camera to shoot a third RGB image according to this application;

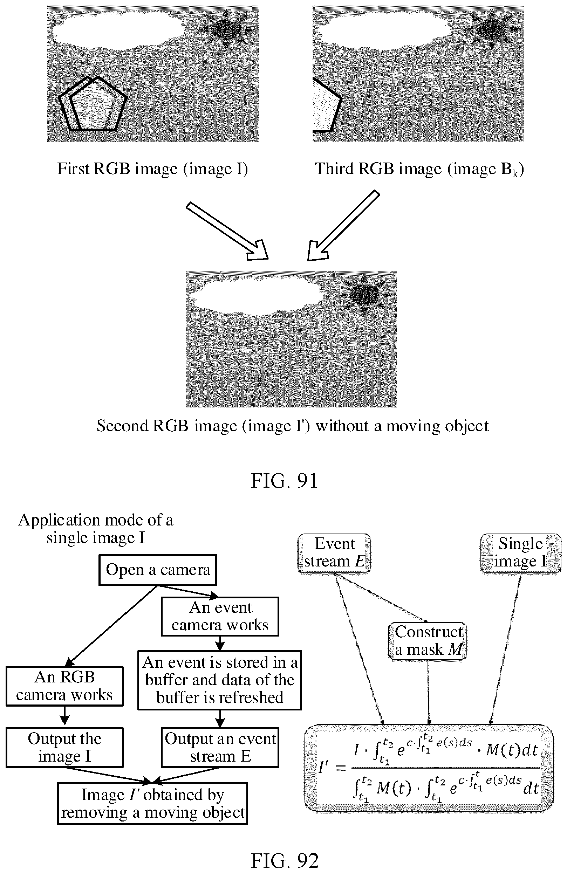

FIG. 91 is a schematic diagram of an image $B_k$ that is obtained by triggering a camera to take snapshots based on a sudden movement change and an image I that is actively shot by a user in specific exposure time according to this application;

FIG. 92 is a schematic flowchart of obtaining a second RGB image without a moving object based on one frame of first RGB image and an event stream E according to this application;

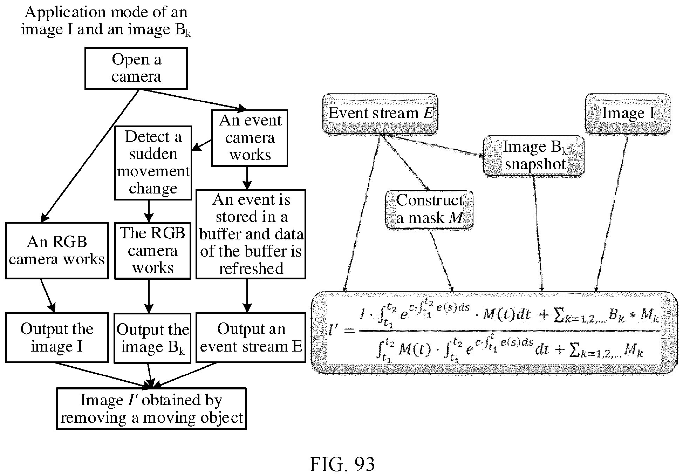

FIG. 93 is a schematic flowchart of obtaining a second RGB image without a moving object based on one frame of first RGB image, a third RGB image, and an event stream E according to this application;

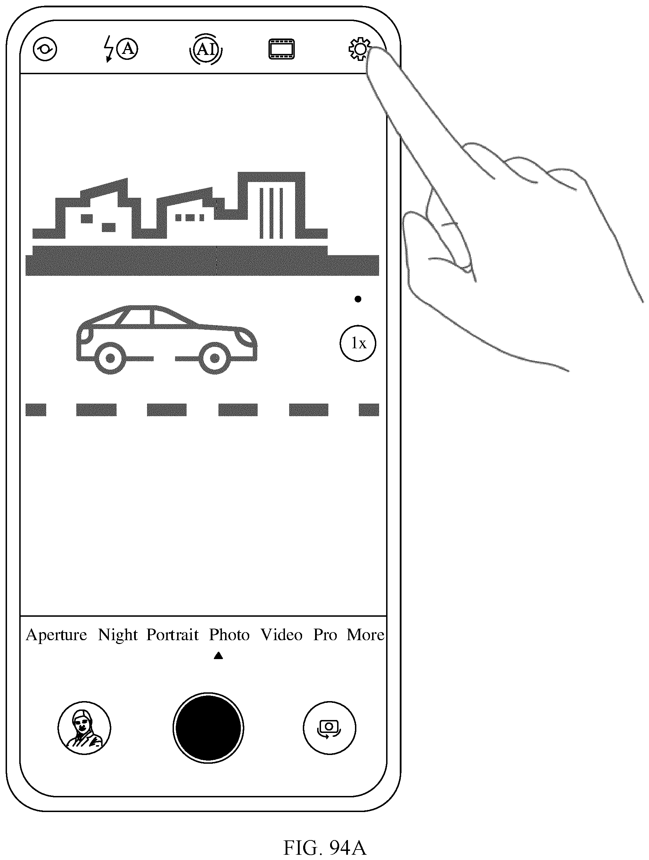

FIG. 94A is another schematic diagram of a GUI according to this application;

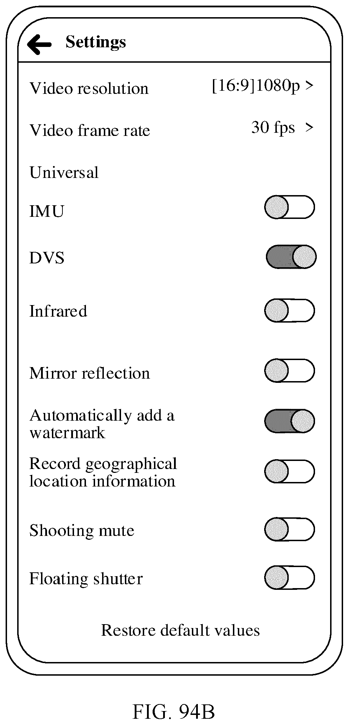

FIG. 94B is a schematic diagram of another GUI according to this application;

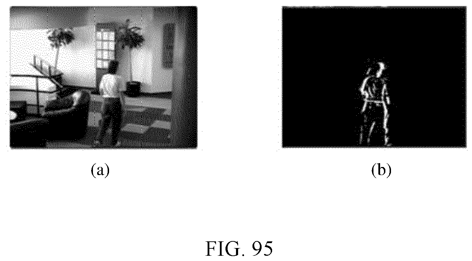

FIG. 95 is a schematic diagram of comparison between a scenario shot by a conventional camera and a DVS according to this application;

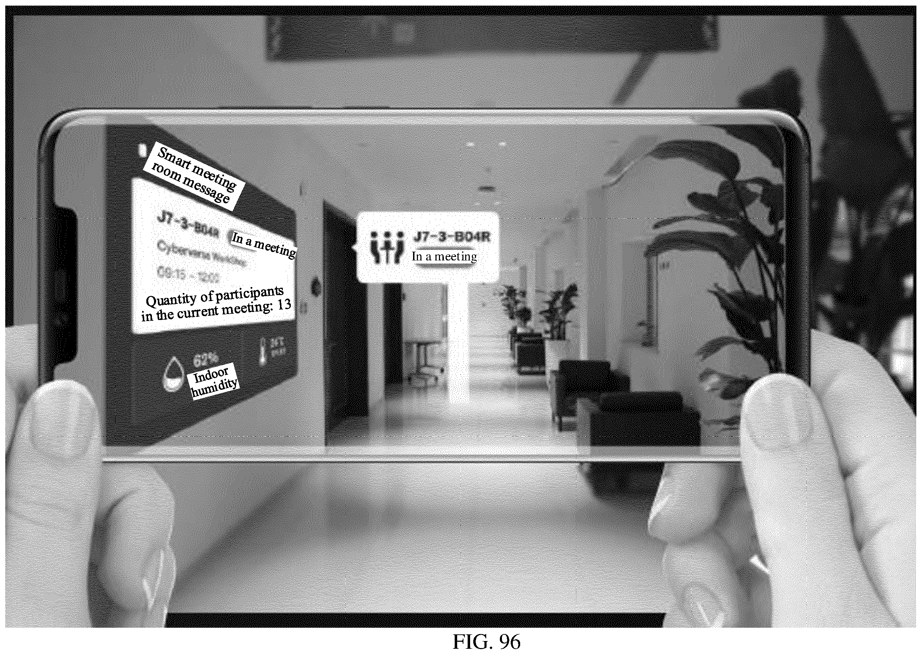

FIG. 96 is a schematic diagram of comparison between a scenario shot by a conventional camera and a DVS according to this application;

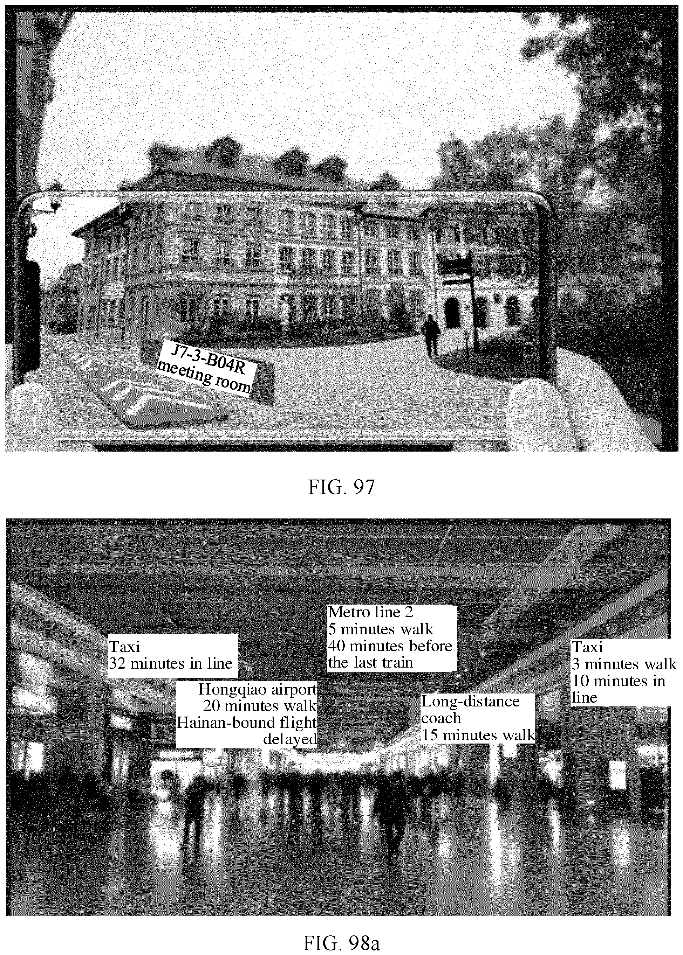

FIG. 97 is a schematic diagram of outdoor navigation to which a DVS is applied according to this application;

FIG. 98a is a schematic diagram of station navigation to which a DVS is applied according to this application;

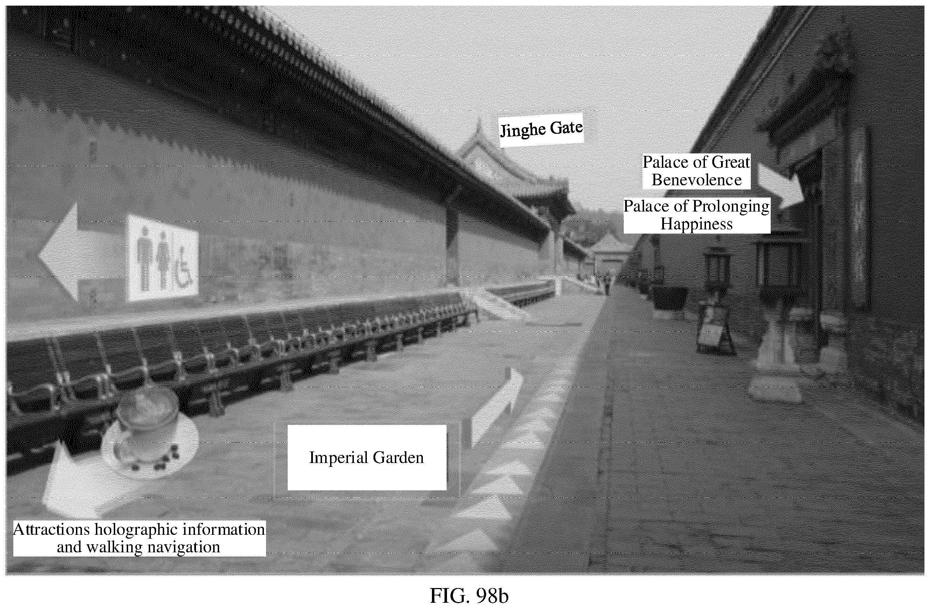

FIG. 98b is a schematic diagram of scenic spot navigation to which a DVS is applied according to this application;

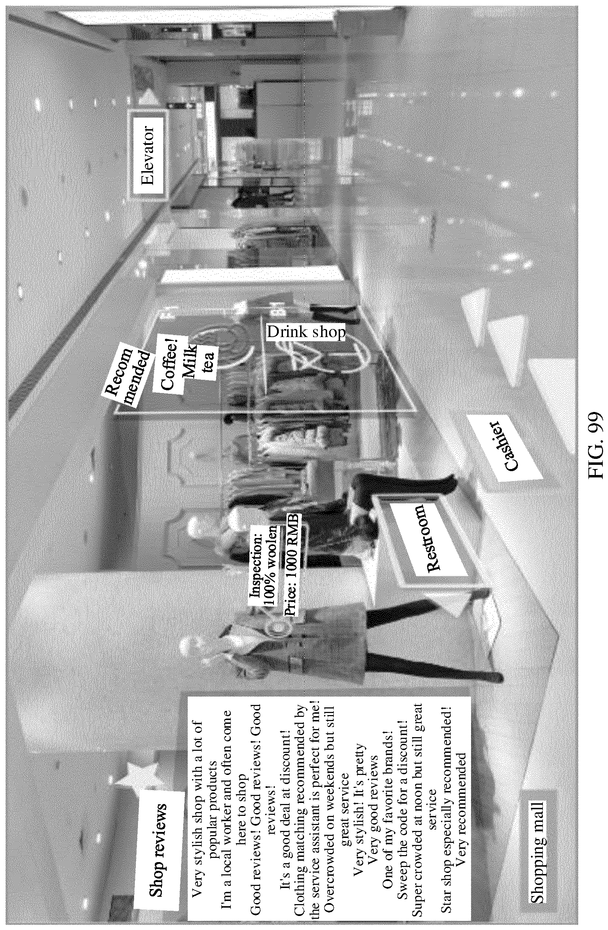

FIG. 99 is a schematic diagram of shopping mall navigation to which a DVS is applied according to this application;

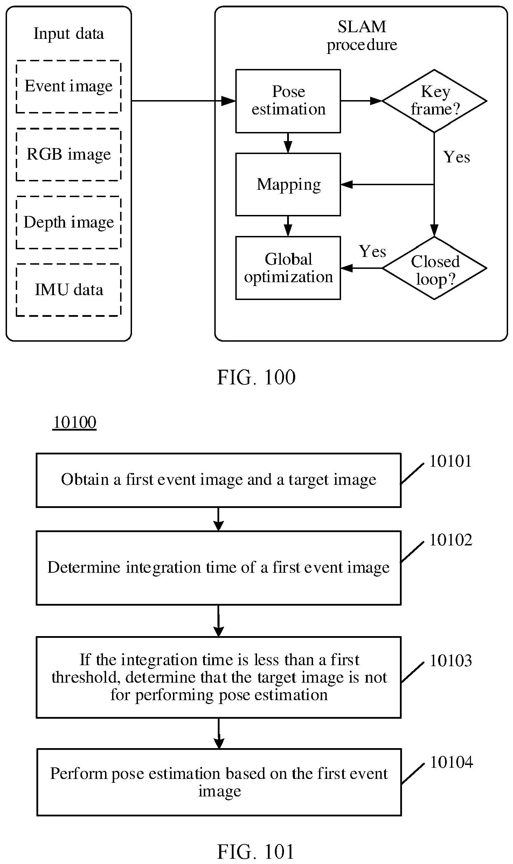

FIG. 100 is a schematic flowchart of performing SLAM according to this application;

FIG. 101 is a schematic flowchart of a pose estimation method 10100 according to this application;

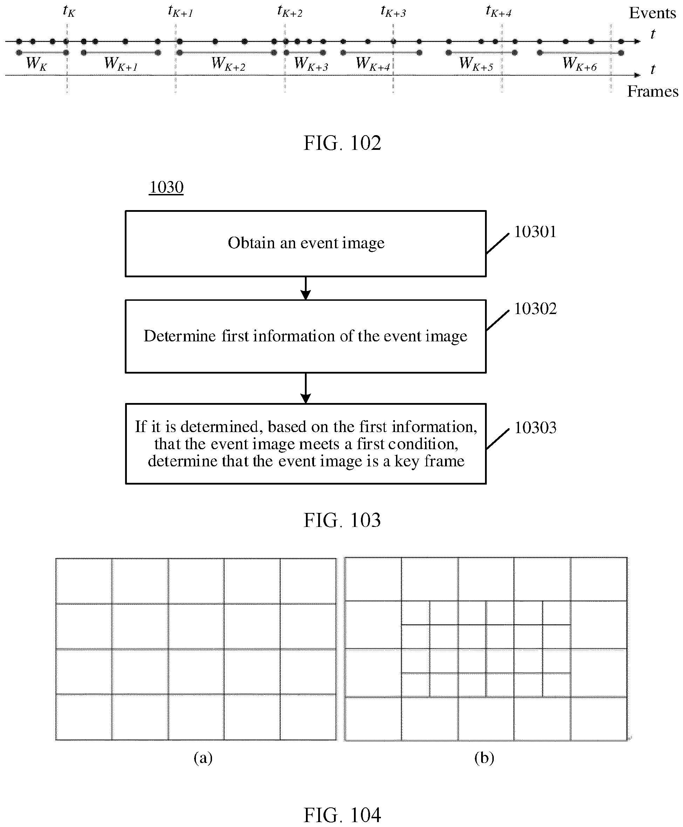

FIG. 102 is a schematic diagram of integrating a DVS event into an event image according to this application;

FIG. 103 is a schematic flowchart of a key frame selection method 10300 according to this application;

FIG. 104 is a schematic diagram of region division of an event image according to this application;

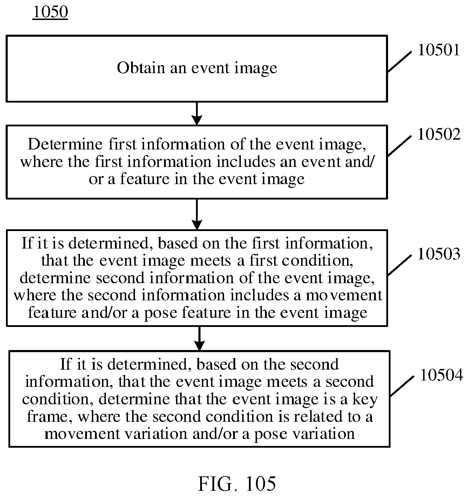

FIG. 105 is a schematic flowchart of a key frame selection method 10500 according to this application;

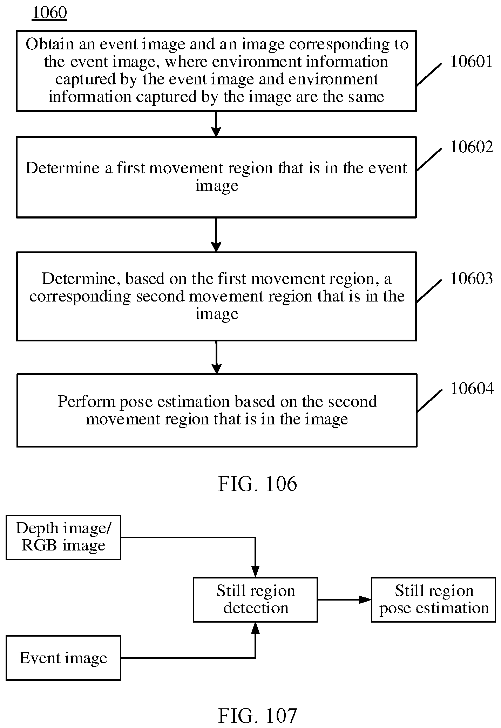

FIG. 106 is a schematic flowchart of a pose estimation method 1060 according to this application;

FIG. 107 is a schematic flowchart of performing pose estimation based on a still region of an image according to this application;

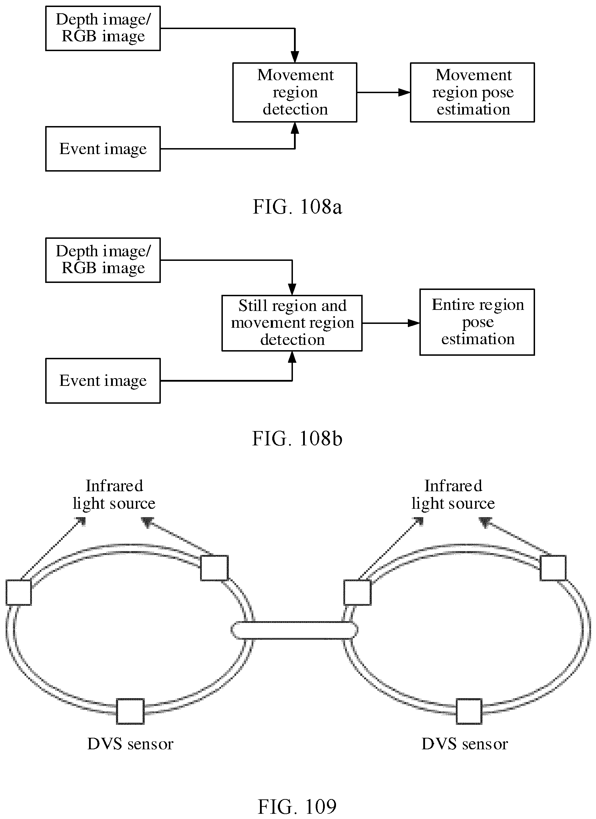

FIG. 108a is a schematic flowchart of performing pose estimation based on a movement region of an image according to this application;

FIG. 108b is a schematic flowchart of performing pose estimation based on an entire region of an image according to this application;

FIG. 109 is a schematic diagram of a structure of AR/VR glasses according to this application;

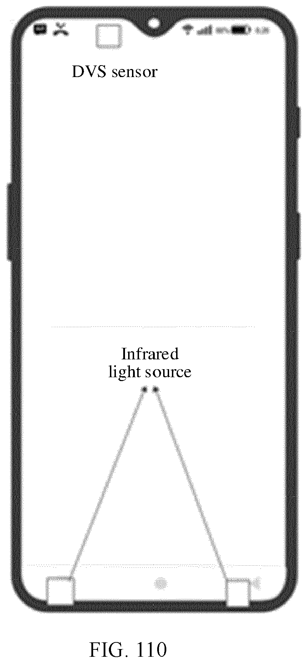

FIG. 110 is a schematic diagram of a structure of gaze perception according to this application;

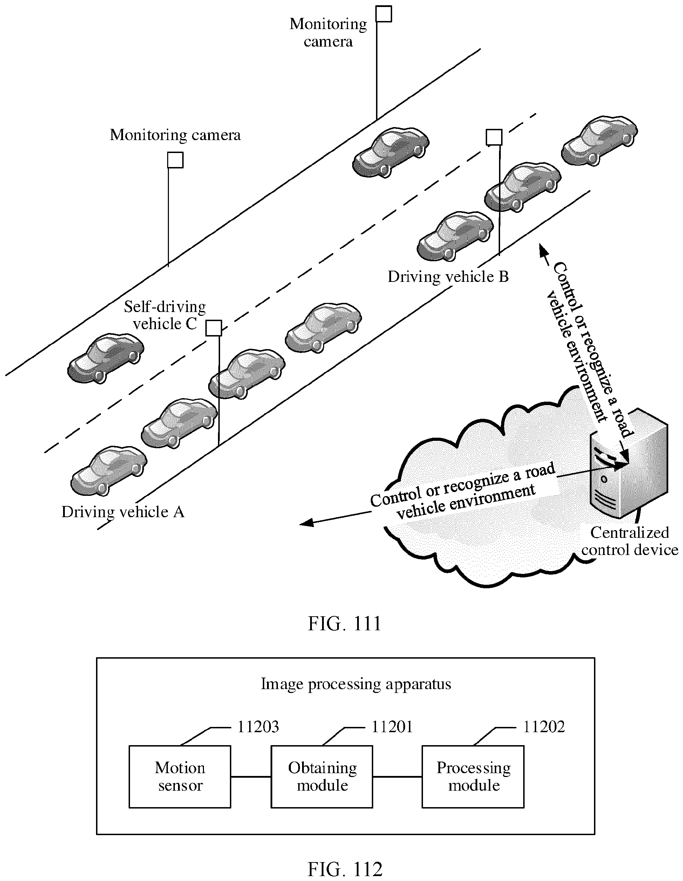

FIG. 111 is a schematic diagram of a network architecture according to this application;

FIG. 112 is a schematic diagram of a structure of an image processing apparatus according to this application;

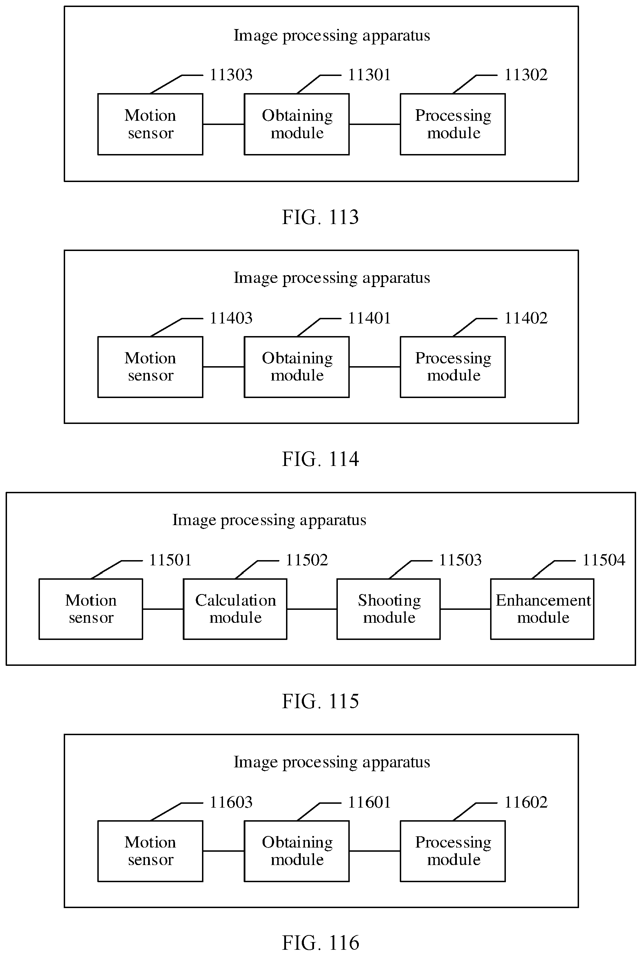

FIG. 113 is a schematic diagram of a structure of another image processing apparatus according to this application;

FIG. 114 is a schematic diagram of a structure of another image processing apparatus according to this application;

FIG. 115 is a schematic diagram of a structure of another image processing apparatus according to this application;

FIG. 116 is a schematic diagram of a structure of another image processing apparatus according to this application;

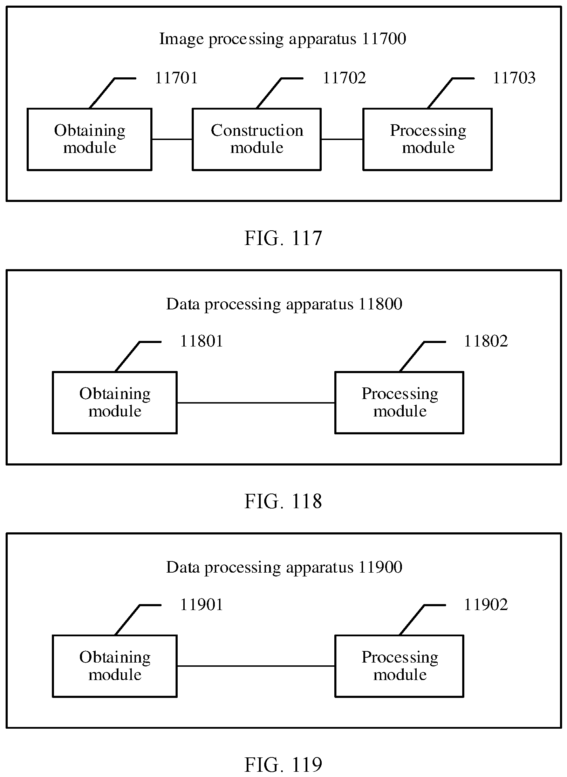

FIG. 117 is a schematic diagram of a structure of another image processing apparatus according to this application;

FIG. 118 is a schematic diagram of a structure of another image processing apparatus according to this application;

FIG. 119 is a schematic diagram of a structure of another data processing apparatus according to this application;

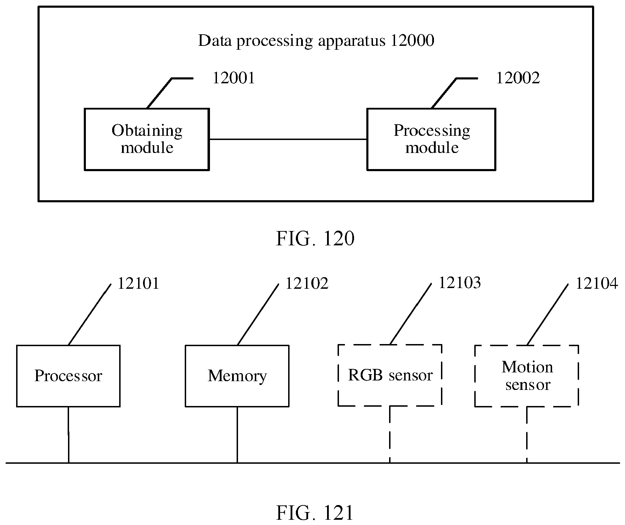

FIG. 120 is a schematic diagram of a structure of another data processing apparatus according to this application; and

FIG. 121 is a schematic diagram of a structure of another electronic device according to this application.

## DESCRIPTION OF EMBODIMENTS

The following describes technical solutions in embodiments of this application with reference to the accompanying drawings in embodiments of this application. It is clear that the described embodiments are merely some but not all of embodiments of this application. All other embodiments obtained by a person of ordinary skill in the art based on embodiments of this application without creative efforts shall fall within the protection scope of this application.

The following describes in detail an electronic device, a system architecture, and a method procedure provided in this application from different perspectives.

I. Electronic device

A method provided in this application may be applied to various electronic devices, or the electronic device performs the method provided in this application. The electronic device may be applied to a shooting scenario, for example, a shooting scenario, a security shooting scenario, a self-driving shooting scenario, or an unmanned aerial vehicle shooting scenario.

The electronic device in this application may include but is not limited to a smart mobile phone, a television, a tablet computer, a wristband, a head mount display (HMD), an augmented reality (AR) device, a mixed reality (mixed reality, MR) device, a cellular phone, a smartphone, a personal digital assistant (PDA), a vehicle-mounted electronic device, a laptop computer, a personal computer (PC), a monitoring device, a robot, a vehicle-mounted terminal, a self-driving vehicle, and the like. Certainly, in the following embodiments, a specific form of the electronic device is not limited.

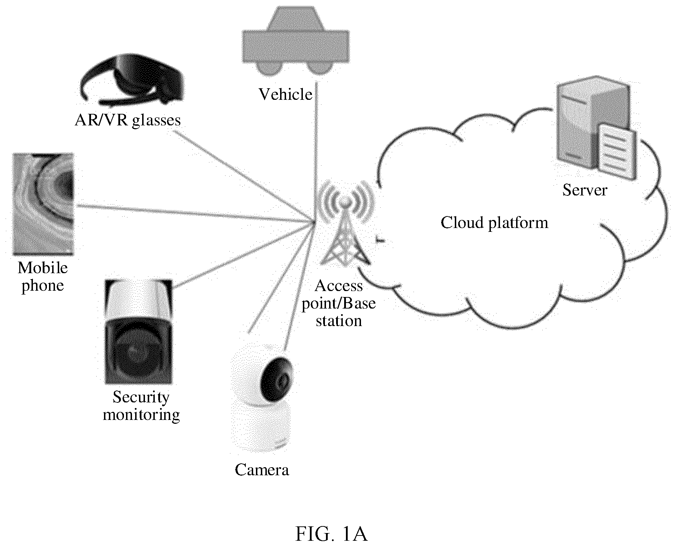

For example, an architecture of the electronic device application provided in this application is shown in FIG. 1A.

The electronic device like a device such as a vehicle, a mobile phone, AR/VR glasses, a security monitoring device, a camera shown in FIG. 1A, or another smart home terminal may access a cloud platform through a wired or wireless network. A server is disposed on the cloud platform, and the server may include a centralized server, or may include a distributed server. The electronic device may communicate with the server of the cloud platform through the wired or wireless network, to implement data transmission. For example, after data is collected, the electronic device may perform storage or backup on the cloud platform, to prevent data loss.

The electronic device may be connected to an access point or a base station, to implement wireless or wired access to the cloud platform. For example, the access point may be a base station, a SIM card is disposed in the electronic device, and network authentication of an operator is implemented via the SIM card, so as to access the wireless network. Alternatively, the access point may include a router. The electronic device accesses the router through a 2.4 GHz or 5 GHz wireless network, so as to access the cloud platform via the router.

In addition, the electronic device may independently perform data processing, or may implement data processing by collaborating with a cloud, and this may be specifically adjusted based on an actual application scenario. For example, a DVS may be disposed in the electronic device, and the DVS may work in cooperation with a camera or another sensor in the electronic device, or may work independently. A processor disposed in the DVS or a processor disposed in the electronic device processes data collected by the DVS or the another sensor, and can also collaborate with a cloud device to process the data collected by DVSs or the another sensor.

The following describes a specific structure of the electronic device by using an example.

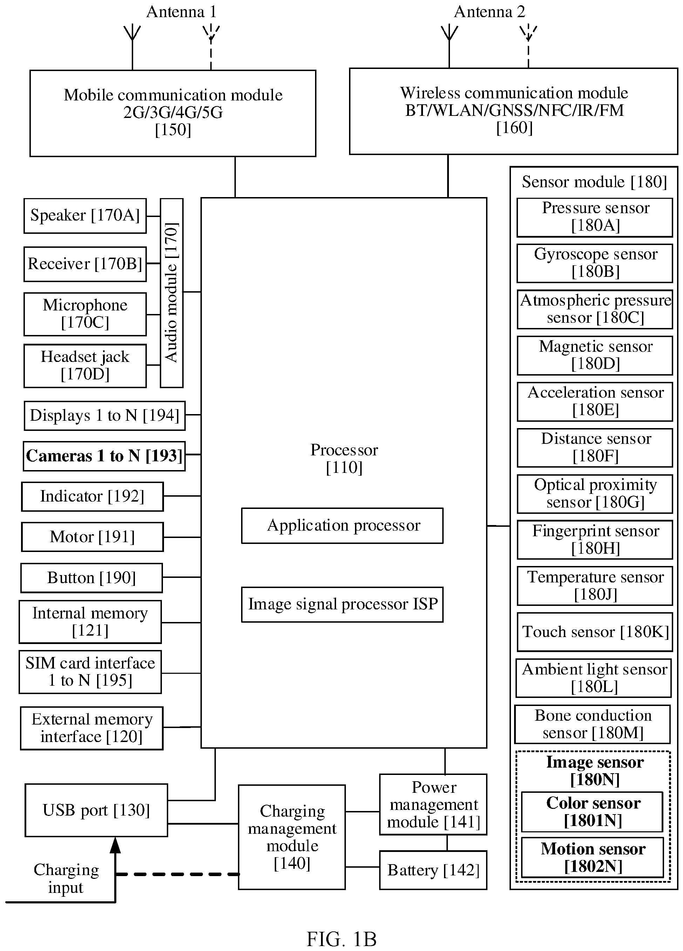

For example, refer to FIG. 1B. The following uses a specific structure as an example to describe the structure of the electronic device provided in this application.

It should be noted that the electronic device provided in this application may include more or fewer components than those in FIG. 1B. The electronic device shown in FIG. 1B is merely an example for description. A person skilled in the art may add components to or delete components from the electronic device based on a requirement. This is not limited in this application.

An electronic device 100 may include a processor 110, an external memory interface 120, an internal memory 121, a universal serial bus (USB) port 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (SIM) card interface 195, and the like. The sensor module 180 may include a pressure sensor 180A, a gyroscope sensor 180B, an atmospheric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient optical sensor 180L, a bone conduction sensor 180M, an image sensor 180N, and the like. The image sensor 180N may include an independent color sensor 1801N and an independent motion sensor 1802N, or may include a photosensitive unit (which may be referred to as a color sensor pixel, and is not shown in FIG. 1B) of a color sensor and a photosensitive unit (which may be referred to as a motion sensor pixel, not shown in FIG. 1B) of a motion sensor.

It may be understood that the structure shown in this embodiment of the present invention does not constitute a specific limitation on the electronic device 100. In some other embodiments of this application, the electronic device 100 may include more or fewer components than those shown in the figure, or combine some components, or split some components, or have different component arrangements. The illustrated components may be implemented in hardware, software, or a combination of software and hardware.

The processor 110 may include one or more processing units. For example, the processor 110 may include an application processor (AP), a modem processor, a graphics processing unit (GPU), an image signal processor (ISP), a controller, a video codec, a digital signal processor (DSP), a baseband processor, and/or a neural network processing unit (NPU). Different processing units may be independent components, or may be integrated into one or more processors.

The controller may generate an operation control signal based on an instruction operation code and a time sequence signal, and complete control of instruction fetching and instruction execution.

A memory may be further disposed in the processor 110, and is configured to store instructions and data. In some embodiments, the memory in the processor 110 is a cache memory. The memory may store instructions or data that is just used or cyclically used by the processor 110. If the processor 110 needs to use the instructions or the data again, the instructions or the data may be directly invoked from the memory. Repeated access is avoided, waiting time of the processor 110 is reduced, and efficiency of a system is improved.

In some embodiments, the processor 110 may include one or more interfaces. The interface may include an inter-integrated circuit (I2C) interface, an inter-integrated circuit sound (I2S) interface, a pulse code modulation (PCM) interface, a universal asynchronous receiver/transmitter (UART) interface, a mobile industry processor interface (mobile industry processor interface, MIPI), a general-purpose input/output (GPIO) interface, a subscriber identity module (SIM) interface, and/or a universal serial bus (USB) port.

The I2C interface is a bidirectional synchronous serial bus that includes a serial data line (SDA) and a serial clock line (SCL). In some embodiments, the processor 110 may include a plurality of groups of I2C buses. The processor 110 may be separately coupled to the touch sensor 180K, a charger, a flashlight, the camera 193, and the like through different I2C bus interfaces. For example, the processor 110 may be coupled to the touch sensor 180K through the I2C interface, so that the processor 110 communicates with the touch sensor 180K through an I2C bus interface, to implement a touch function of the electronic device 100.

The I2S interface can be used for audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transfer an audio signal to the wireless communication module 160 through the I2S interface, to implement a function of answering a call via a Bluetooth headset.

The PCM interface can also be used for audio communication, to sample, quantize, and encode an analog signal. In some embodiments, the audio module 170 and the wireless communication module 160 may be coupled through the PCM bus interface. In some embodiments, the audio module 170 may alternatively transfer an audio signal to the wireless communication module 160 through the PCM interface, to implement a function of answering a call via a Bluetooth headset. Both the I2S interface and the PCM interface may be used for audio communication.

The UART interface is a universal serial data bus for asynchronous communication. The bus may be a bidirectional communication bus. The UART interface converts data to be transmitted between serial communication and parallel communication. In some embodiments, the UART interface is usually configured to connect the processor 110 to the wireless communication module 160. For example, the processor 110 communicates with a Bluetooth module in the wireless communication module 160 through the UART interface, to implement a Bluetooth function. In some embodiments, the audio module 170 may transfer an audio signal to the wireless communication module 160 through the UART interface, to implement a function of playing music via a Bluetooth headset.

The MIPI interface may be configured to connect the processor 110 to peripheral devices such as the display 194 and the camera 193. The MIPI interface includes a camera serial interface (CSI), a display serial interface (DSI), and the like. In some embodiments, the processor 110 and the camera 193 communicate with each other through the CSI interface, to implement a shooting function of the electronic device 100. The processor 110 communicates with the display 194 through the DSI interface, to implement a display function of the electronic device 100.

The GPIO interface can be configured by software. The GPIO interface can be configured as a control signal or a data signal. In some embodiments, the GPIO interface may be configured to connect the processor 110 to the camera 193, the display 194, the wireless communication module 160, the audio module 170, the sensor module 180, and the like. The GPIO interface can also be configured as an I2C interface, an I2S interface, a UART interface, or an MIPI interface.

The USB interface 130 is an interface that complies with a USB standard specification, and may be specifically a Mini USB interface, a Micro USB interface, a USB Type C interface, or the like. The USB interface 130 may be configured to connect to the charger to charge the electronic device 100, or may be configured to transmit data between the electronic device 100 and a peripheral device, or may be configured to connect to a headset to play audio via the headset. The interface may be further configured to connect to another electronic device such as an AR device.

It may be understood that the interface connection relationship between modules shown in this embodiment of the present invention is merely an example for description, and does not constitute a limitation on the structure of the electronic device 100. In some other embodiments of this application, the electronic device 100 may alternatively use different interface connection manners or a combination of a plurality of interface connection manners in the foregoing embodiment.

The charging management module 140 is configured to receive charging input from the charger. The charger may be a wireless charger, or may be a wired charger. In some wired charging embodiments, the charging management module 140 may receive charging input of the wired charger through the USB interface 130. In some wireless charging embodiments, the charging management module 140 may receive wireless charging input via a wireless charging coil of the electronic device 100. When charging the battery 142, the charging management module 140 may further supply power to the electronic device via the power management module 141.

The power management module 141 is configured to connect to the battery 142, the charging management module 140, and the processor 110. The power management module 141 receives input of the battery 142 and/or the charging management module 140, and supplies power to the processor 110, the internal memory 121, the display 194, the camera 193, the wireless communication module 160, and the like. The power management module 141 may be further configured to monitor parameters such as a battery capacity, a quantity of battery cycles, and a battery health status (leakage and impedance). In some other embodiments, the power management module 141 may also be disposed in the processor 110. In some other embodiments, the power management module 141 and the charging management module 140 may also be disposed in a same component.

A wireless communication function of the electronic device 100 may be implemented by the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication bands. Different antennas may also be reused to improve antenna utilization. For example, the antenna 1 may be reused as a diversity antenna of a wireless local area network. In some other embodiments, the antenna may be used together with a tuning switch.

The mobile communication module 150 may provide a solution of wireless communication, applied to the electronic device 100, including 2G/3G/4G/5G or the like. The mobile communication module 150 may include at least one filter, a switch, a power amplifier, a low noise amplifier (LNA), and the like. The mobile communication module 150 may receive an electromagnetic wave through the antenna 1, perform processing such as filtering and amplification on the received electromagnetic wave, and transmit the electromagnetic wave to the modem processor for demodulation. The mobile communication module 150 may further amplify the signal modulated by the modem processor, and convert the signal into an electromagnetic wave for radiation through the antenna 1. In some embodiments, at least some functional modules of the mobile communication module 150 may be disposed in the processor 110. In some embodiments, at least some functional modules of the mobile communication module 150 and at least some modules of the processor 110 may be disposed in a same component.

The modem processor may include a modulator and a demodulator. The modulator is configured to modulate a to-be-sent low-frequency baseband signal into a medium-high frequency signal. The demodulator is configured to demodulate the received electromagnetic wave signal into a low-frequency baseband signal. Then, the demodulator transmits the demodulated low-frequency baseband signal to the baseband processor for processing. The low-frequency baseband signal is processed by the baseband processor and then transferred to the application processor. The application processor outputs a sound signal via an audio device (which is not limited to the speaker 170A, the receiver 170B, and the like), or displays an image or a video via the display 194. In some embodiments, the modem processor may be an independent component. In some other embodiments, the modem processor may be independent of the processor 110, and is disposed in a same component as the mobile communication module 150 or another functional module.

The wireless communication module 160 may provide a solution of wireless communication, applied to the electronic device 100, including a wireless local area network (WLAN) (such as a wireless fidelity (Wi-Fi) network), Bluetooth (BT), a global navigation satellite system (GNSS), frequency modulation (FM), a near field communication (NFC) technology, and an infrared (IR) technology. The wireless communication module 160 may be one or more components that integrate at least one communication processing module. The wireless communication module 160 receives an electromagnetic wave signal through the antenna 2, performs frequency modulation and filtering processing on the electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, the antenna 1 of the electronic device 100 is coupled to the mobile communication module 150, and the antenna 2 is coupled to the wireless communication module 160, so that the electronic device 100 can communicate with a network and another device by using a wireless communication technology. The wireless communication technology may include but is not limited to a fifth generation (5G) mobile communication technology system, a global system for mobile communications (GSM), a general packet radio service (GPRS), code division multiple access (CDMA), wideband code division multiple access (WCDMA), time division-code division multiple access (TD-SCDMA), long term evolution (LTE), Bluetooth, a global navigation satellite system (GNSS), wireless fidelity (Wi-Fi), near field communication (NFC), FM (which may also be referred to as frequency modulation broadcasting), a Zigbee protocol, a radio frequency identification (RFID) technology, and/or an infrared (IR) technology. The GNSS may include a global positioning system (GPS), a global navigation satellite system (GLONASS), a BeiDou navigation satellite system (BDS), a quasi-zenith satellite system (QZSS), and/or a satellite based augmentation system (SBAS).

In some implementations, the electronic device 100 may alternatively include a wired communication module (not shown in FIG. 1B), or the mobile communication module 150 or the wireless communication module 160 herein may be replaced with a wired communication module (not shown in FIG. 1B). The wired communication module may enable the electronic device to communicate with another device through the wired network. The wired network may include but is not limited to one or more of the following: an optical transport network (OTN), a synchronous digital hierarchy (SDH), a passive optical network (PON), Ethernet, flexible Ethernet (FlexE), or the like.

The electronic device 100 implements a display function via the GPU, the display 194, the application processor, and the like. The GPU is an image processing microprocessor, and is connected to the display 194 and the application processor. The GPU is used to perform mathematical and geometric calculation for graphics rendering. The processor 110 may include one or more GPUs that execute program instructions to generate or change display information.

The display 194 is configured to display an image, a video, and the like. The display 194 includes a display panel. The display panel may be a liquid crystal display (liquid crystal display, LCD), an organic light-emitting diode (OLED), an active-matrix organic light-emitting diode (AMOLED), a flexible light emitting diode (FLED), Miniled, MicroLed, Micro-oLed, quantum dot light emitting diodes (, QLED), or the like. In some embodiments, the electronic device 100 may include one or N displays 194, where N is a positive integer greater than 1.

The electronic device 100 may implement a shooting function via the ISP, the camera 193, the video codec, the GPU, the display 194, the application processor, and the like.

The ISP is configured to process data fed back by the camera 193. For example, during shooting, a shutter is opened, light is transferred to a photosensitive element of the camera through a lens, an optical signal is converted into an electrical signal, the photosensitive element of the camera transfers the electrical signal to the ISP for processing, and the ISP converts the electrical signal into an image visible to naked eyes. The ISP can also optimize noise, brightness, and skin tone in the image. The ISP can also optimize parameters such as exposure and a color temperature of a shooting scenario. In some embodiments, the ISP may be disposed in the camera 193.

The camera 193 is configured to capture a static image or a video. An object is projected to the photosensitive element by generating an optical image through the lens. The photosensitive element may be a charge coupled device (CCD) or a complementary metal-oxide-semiconductor (CMOS) phototransistor. The photosensitive element converts the optical signal into the electrical signal, and then transfers the electrical signal to the ISP to convert the electrical signal into a digital image signal. The ISP outputs the digital image signal to the DSP for processing. The DSP converts the digital image signal into image signals in formats such as standard RGB camera (or referred to as RGB sensor) 0 and YUV. In some embodiments, the electronic device 100 may include one or N cameras 193, where N is a positive integer greater than 1.

The digital signal processor is configured to process a digital signal, and may process another digital signal in addition to the digital image signal. For example, when the electronic device 100 selects a frequency, the digital signal processor is configured to perform Fourier transform or the like on frequency energy.

The video codec is used to compress or decompress a digital video. The electronic device 100 may support one or more video codecs. In this way, the electronic device 100 may play or record videos in a plurality of encoding formats, for example, moving picture experts group (MPEG) 1, MPEG 2, MPEG 3, and MPEG 4.

The NPU is a neural network (NN) computing processor. By referring to a structure of a biological neural network, for example, by referring to a transferring mode between human brain neurons, the NPU quickly processes input information, and may further continuously perform self-learning. Applications such as intelligent cognition of the electronic device 100 may be implemented via the NPU, for example, image recognition, facial recognition, speech recognition, and text understanding.

The external memory interface 120 may be configured to connect to an external memory card, for example, a Micro SD card, to expand a storage capability of the electronic device 100. The external memory card communicates with the processor 110 through the external memory interface 120, to implement a data storage function. For example, music and video files are stored in the external memory card.

The internal memory 121 may be configured to store computer-executable program code. The executable program code includes instructions. The internal memory 121 may include a program storage area and a data storage area. The program storage area may store an operating system, an application required by at least one function (for example, a sound playing function or an image playing function). The data storage area may store data (such as audio data and a phone book) created in a process of using the electronic device 100. In addition, the internal memory 121 may include a high-speed random access memory, and may further include a non-volatile memory, for example, at least one magnetic disk storage device, a flash memory device, or a universal flash memory (UFS). The processor 110 runs the instructions stored in the internal memory 121 and/or instructions stored in a memory disposed in the processor, to execute various function applications of the electronic device 100 and data processing.

The electronic device 100 may implement an audio function via the audio module 170, the speaker 170A, the receiver 170B, the microphone 170C, the headset interface 170D, the application processor, and the like, for example, music playback, and recording.

The audio module 170 is configured to convert digital audio information into an analog audio signal for output, and is also configured to convert analog audio input into a digital audio signal. The audio module 170 may be further configured to encode and decode an audio signal. In some embodiments, the audio module 170 may be disposed in the processor 110, or some functional modules of the audio module 170 may be disposed in the processor 110.

The speaker 170A, also referred to as a "horn", is configured to convert an audio electrical signal into a sound signal. The electronic device 100 may listen to music or listen to a handsfree call through the speaker 170A.

The receiver 170B, also referred to as an "earpiece", is configured to convert an audio electrical signal into a sound signal. When the electronic device 100 answers a call or voice information, the receiver 170B may be placed close to a human ear to answer a voice.

The microphone 170C is configured to convert a sound signal into an electrical signal. When making a call or sending voice information, a user may make a sound by using a human mouth close to the microphone 170C, and input the sound signal to the microphone 170C. The electronic device 100 may be provided with at least one microphone 170C. In some other embodiments, the electronic device 100 may be provided with two microphones 170C. In addition to collecting a sound signal, the microphones may further implement a noise reduction function. In some other embodiments, the electronic device 100 may further be provided with three, four, or more microphones 170C, to implement sound signal collection and noise reduction, and may further recognize a sound source, implement a directional recording function, and the like.

The headset interface 170D is configured to connect to a wired headset. The headset interface 170D may be the USB port 130, or may be a 3.5 mm open mobile terminal platform (OMTP) standard interface, or a cellular telecommunications industry association of the USA (CTIA) standard interface.

The pressure sensor 180A is configured to sense a pressure signal, and may convert the pressure signal into an electrical signal. In some embodiments, the pressure sensor 180A may be disposed on the display 194. There are many types of pressure sensors 180A, such as a resistive pressure sensor, an inductive pressure sensor, and a capacitive pressure sensor. The capacitive pressure sensor may include at least two parallel plates having an electrically conductive material. When a force is applied to the pressure sensor 180A, a capacitance between electrodes changes. The electronic device 100 determines a strength of pressure based on a change of the capacitance. When a touch operation is performed on the display 194, the electronic device 100 detects an intensity of the touch operation based on the pressure sensor 180A. The electronic device 100 may also calculate a touch location based on a detection signal of the pressure sensor 180A. In some embodiments, touch operations that act on a same touch location but have different touch operation intensities may correspond to different operation instructions. For example, when a touch operation whose touch operation intensity is less than a first pressure threshold acts on an SMS message application icon, instructions for viewing an SMS message are executed. When a touch operation whose touch operation intensity is greater than or equal to a first pressure threshold acts on an SMS message application icon, instructions for creating an SMS message are executed.

The gyroscope sensor 180B may be configured to determine a movement posture of the electronic device 100. In some embodiments, angular velocities of the electronic device 100 around three axes (namely, x, y, and z axes) may be determined via the gyroscope sensor 180B. The gyroscope sensor 180B may be used for image stabilization during shooting. For example, when the shutter is pressed, the gyroscope sensor 180B detects an angle of shaking of the electronic device 100, and calculates, based on the angle, a distance that needs to be compensated by a lens module, so that the lens eliminates the shaking of the electronic device 100 through reverse movement, to implement image stabilization. The gyroscope sensor 180B may also be used for navigation and somatic game scenarios.

The atmospheric pressure sensor 180C is used to measure an atmospheric pressure. In some embodiments, the electronic device 100 calculates an altitude based on an atmospheric pressure value measured by the atmospheric pressure sensor 180C, to assist positioning and navigation.

The magnetic sensor 180D includes a Hall sensor. The electronic device 100 may detect opening and closing of a flap cover by using the magnetic sensor 180D. In some embodiments, when the electronic device 100 is a flip phone, the electronic device 100 may detect opening and closing of a flip based on the magnetic sensor 180D. Then, a feature such as automatic unlocking of the flip is set based on a detected opening or closing state of the cover or a detected opening or closing state of the flip.

The acceleration sensor 180E may detect magnitudes of accelerations of the electronic device 100 in all directions (generally three axes). When the electronic device 100 is still, a magnitude and a direction of gravity may be detected. The acceleration sensor 180E may also be used to recognize a posture of the electronic device, and is used in applications such as switch between landscape and portrait modes and a pedometer.

The distance sensor 180F is configured to measure a distance. The electronic device 100 may measure the distance through infrared or laser. In some embodiments, in a shooting scenario, the electronic device 100 may measure the distance via the distance sensor 180F to implement fast focusing.

The optical proximity sensor 180G may include, for example, a light emitting diode (LED) and a photodetector such as a photodiode. The light emitting diode may be an infrared light emitting diode. The electronic device 100 emits infrared light outwards via the light emitting diode. The electronic device 100 detects infrared reflected light from a nearby object via the photodiode. When abundant reflected light is detected, the electronic device 100 may determine that there is an object near the electronic device 100. When insufficient reflected light is detected, the electronic device 100 may determine that there is no object near the electronic device 100. The electronic device 100 may detect, via the optical proximity sensor 180G, that the user holds the electronic device 100 close to an ear to make a call, so as to automatically turn off a screen to save power. The proximity sensor 180G can also be used in automatic unlock and screen lock in a cover mode or a pocket mode.

The ambient optical sensor 180L is used to sense ambient light brightness. The electronic device 100 may adaptively adjust brightness of the display 194 based on the perceived ambient light brightness. The ambient optical sensor 180L can also be used to automatically adjust a white balance during shooting. The ambient optical sensor 180L may further work with the proximity sensor 180G to detect whether the electronic device 100 is in a pocket, to prevent accidental touch.

The fingerprint sensor 180H is configured to collect a fingerprint. The electronic device 100 may implement, by using a collected fingerprint feature, fingerprint unlocking, application lock access, fingerprint shooting, incoming call answering using a fingerprint, and the like.

The temperature sensor 180J is used to detect a temperature. In some embodiments, the electronic device 100 executes a temperature processing policy by using the temperature detected by the temperature sensor 180J. For example, when the temperature reported by the temperature sensor 180J exceeds a threshold, the electronic device 100 reduces performance of a processor located near the temperature sensor 180J, so as to reduce power consumption and implement thermal protection. In some other embodiments, when the temperature is lower than another threshold, the electronic device 100 heats the battery 142, to avoid abnormal shutdown of the electronic device 100 caused by a low temperature. In some other embodiments, when the temperature is lower than still another threshold, the electronic device 100 boosts an output voltage of the battery 142, to avoid abnormal shutdown caused by a low temperature.

The touch sensor 180K is also called a "touch control component". The touch sensor 180K may be disposed on the display 194, and the touch sensor 180K and the display 194 form a touchscreen, which is also referred to as a "touch panel". The touch sensor 180K is configured to detect a touch operation acting on or near the touch sensor 180K. The touch sensor may transfer the detected touch operation to the application processor, to determine a touch event type. A visual output associated with the touch operation may be provided through the display 194. In some other embodiments, the touch sensor 180K may also be disposed on a surface of the electronic device 100, and a location of the touch sensor 180K is different from that of the display 194.

The bone conduction sensor 180M may obtain a vibration signal. In some embodiments, the bone conduction sensor 180M may obtain a vibration signal of a vibration bone of a human body vocal part. The bone conduction sensor 180M may also contact a human pulse and receive a blood pressure beat signal. In some embodiments, the bone conduction sensor 180M may also be disposed in an earphone and combined into a bone conduction earphone. The audio module 170 may parse out a speech signal based on the vibration signal, of the vibration bone of the vocal part, obtained by the bone conduction sensor 180M, to implement a speech function. The application processor may parse the heart rate information based on the blood pressure beat signal obtained by the bone conduction sensor 180M, to implement a heart rate detection function.

The image sensor 180N, also referred to as a photosensitive component or photosensitive element, is a device for converting an optical image into electronic signals, and is widely used in a digital camera and another electronic optical device. The image sensor uses a photoelectric conversion function of an optoelectronic component to convert the optical image on a photosensitive surface into the electrical signals proportional to the optical image. Compared with photosensitive elements of "point" light sources such as a photosensitive diode and a phototransistor, the image sensor is a functional component that divides the light image on a light receiving surface of the image sensor into many small units (namely, pixels) and converts the small units into usable electrical signals. Each small unit corresponds to one photosensitive unit in the image sensor, and the photosensitive unit may also be referred to as a sensor pixel. Image sensors are classified into a vidicon and a solid-state image sensor. Compared with the vidicon, the solid-state image sensor has features of a small size, a light weight, high integration, a high resolution, low power consumption, a long life, and a low price. Based on different elements, solid-state image sensors may be classified into two categories of charge coupled device (CCD) and complementary metal-oxide semiconductor (CMOS). Based on different types of shot optical images, solid-state image sensors may be classified into the color sensor 1801N and the motion sensor 1802N.

Specifically, the color sensor 1801N includes a conventional RGB image sensor, and may be configured to detect an object in a shooting range of the camera. Each photosensitive unit corresponds to one image point in the image sensor. Because the photosensitive unit can sense only intensity of light, and cannot capture color information, a color filter needs to cover the photosensitive unit. As for how to use the color filter for covering, different sensor manufacturers have different solutions. A most common manner is to use RGB red, green, and blue filters in a 1:2:1 composition to cover four image points for forming a color pixel (to be specific, the red filter and the blue filter separately cover one image point, and the green filter cover the remaining two image points). A reason for this ratio is that human eyes are sensitive to green. After receiving illumination, the photosensitive units generates corresponding currents, and a magnitude of the current corresponds to a light intensity. Therefore, the electrical signals directly output by the photosensitive units are analog, and then the output analog electrical signals are converted into digital signals. Finally, all the digital signals are output to a dedicated DSP processing chip in a form of a digital image matrix. The conventional color sensor outputs a full-frame image of the shooting region in a frame format.

Specifically, the motion sensor 1802N may include a plurality of different types of vision sensors. For example, the motion sensor 1802N may include a frame-based motion detection vision sensor (MDVS) and an event-based motion detection vision sensor. The motion sensor may be used to detect a moving object in the shooting range of the camera, collect a movement outline or a movement trajectory of the moving object, and the like.

In a possible scenario, the motion sensor 1802N may include a motion detection (MD) vision sensor, and is a type of vision sensor for detecting movement information. The movement information comes from relative movement between the camera and a target. The relative movement may be that the camera moves, may be that the target moves, or may be that both the camera and the target move. The motion detection vision sensor includes a frame-based motion detection vision sensor and an event-based motion detection vision sensor. The frame-based motion detection vision sensor needs exposure integration and obtains the movement information based on a frame difference. The event-based motion detection vision sensor does not need integration and can obtain the movement information by asynchronous event detection.

In a possible scenario, the motion sensor 1802N may include a motion detection vision sensor (MDVS), a dynamic vision sensor (DVS), an active pixel sensor (APS), an infrared sensor, a laser sensor, an inertial measurement unit (IMU), and the like. The DVS may specifically include a sensor such as a DAVIS (Dynamic and Active-pixel Vision Sensor), an ATIS (Asynchronous Time-based Image Sensor), or a CeleX sensor. The DVS draws on features of biological vision, and each pixel simulates a neuron and responds independently to a relative change in a light intensity. For example, if the motion sensor is the DVS, when a relative change in a light intensity exceeds a threshold, an event signal is output at the pixel, where the event signal includes a pixel location, a timestamp, and feature information of the light intensity. It should be understood that, in the following implementations of this application, the mentioned movement information, dynamic data, a dynamic image, or the like may be collected by the motion sensor.

For example, the motion sensor 1802N may include the inertial measurement unit (IMU) that is an apparatus for measuring a three-axis angular velocity and an acceleration of an object. The IMU usually includes three uniaxial accelerometers that measure an acceleration signal of the object and three uniaxial gyroscopes that measure an angular velocity signal relative to a navigation coordinate system, and calculate a posture of the object based on the acceleration signal and the angular velocity signal. For example, the foregoing IMU may specifically include the foregoing gyroscope sensor 180B and the foregoing acceleration sensor 180E. An advantage of the IMU is high collection frequency. Data collection frequency of the IMU can reach 100 Hz or more, and a consumer-grade IMU can capture data of up to 1600 Hz. In short time, the IMU can give a high-precision measurement result.

For example, the motion sensor 1802N may include an active pixel sensor (APS). For example, the active pixel sensor captures RGB images at high frequency above 100 Hz, and performs subtraction between two adjacent frames of images to obtain a change value. If the change value is greater than a threshold, for example, >0, the change value is set to 1. If the change value is not greater than a threshold, for example, =0, the change value is set to 0. Data finally obtained by the active pixel sensor is similar to data obtained by the DVS, and the active pixel sensor completes capture of an image of a moving object.

The button 190 includes a power button, a volume button, and the like. The button 190 may be a mechanical button, or may be a touch button. The electronic device 100 may receive button input and generate button signal input related to a user setting and functional control that are of the electronic device 100.

The motor 191 may generate a vibration alert. The motor 191 may be used for an incoming call vibration prompt, or may be used for a touch vibration feedback. For example, touch operations performed on different applications (such as shooting and audio playing) may correspond to different vibration feedback effects. For touch operations performed on different regions of the display 194, the motor 191 may also correspond to different vibration feedback effects. Different application scenarios (such as a time reminder, information receiving, an alarm clock, and a game) may also correspond to different vibration feedback effects. The touch vibration feedback effect can also be customized.

The indicator 192 may be an indicator, and may indicate a charging state and a battery power change, or may indicate a message, a missed call, a notification, and the like.

The SIM card interface 195 is configured to connect to a SIM card. The SIM card may be inserted into the SIM card interface 195, or removed from the SIM card interface 195, to implement contact and separation from the electronic device 100. The electronic device 100 may support one or N SIM card interfaces, where N is a positive integer greater than 1. The SIM card interface 195 may support a nano-SIM card, a micro-SIM card, a SIM card, and the like. Aplurality of cards may be all inserted into a same SIM card interface 195. Types of the plurality of cards may be the same or different. The SIM card interface 195 may also be compatible with different types of SIM cards. The SIM card interface 195 may also be compatible with an external memory card. The electronic device 100 interacts with a network via the SIM card, to implement functions such as call and data communication. In some embodiments, the electronic device 100 uses an eSIM card, namely, an embedded SIM card. The eSIM card may be embedded in the electronic device 100, and cannot be separated from the electronic device 100.

II. System architecture

A process in which an electronic device shoots, reads, or stores an image involves a change between a plurality of components. The following describes in detail data collection, data encoding and decoding, image enhancement, image reconstruction, or application scenarios in this application.

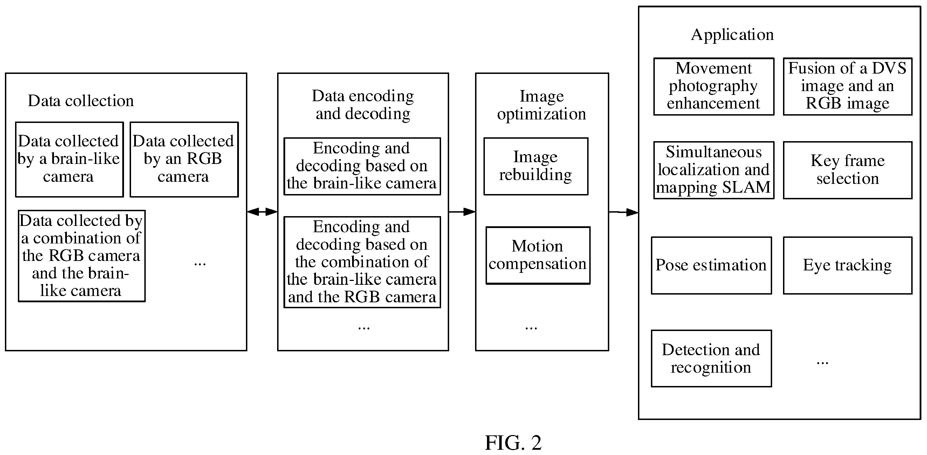

For example, an image collection and processing scenario is used as an example. As shown in FIG. 2, a processing procedure of the electronic device is described as an example.

Data collection: Data can be collected via a brain-like camera, an RGB camera, or a combination thereof. The brain-like camera may include a simulation vision sensor, and simulates a biological retina by using an integrated circuit. Each pixel simulates a biological neuron, and expresses a change in a light intensity in a form of an event. After development, a plurality of different types of bionic vision sensors emerge, and a common feature of the sensors such as the foregoing motion sensor DVS or DAVIS is that a pixel array independently asynchronously monitors a change of a light intensity, and outputs the change as an event signal. The RGB camera converts an analog signal into a digital signal and stores the digital signal in storage media. Alternatively, data may be collected via a combination of the brain-like camera and the RGB camera. For example, the data collected by the brain-like camera and the RGB camera is projected to a same canvas. A value of each pixel may be determined based on a value fed back by the brain-like camera and/or the RGB camera. Alternatively, a value of each pixel may include a value of the brain-like camera and the RGB that are separately used as an independent channel. An optical signal may be converted into an electrical signal via the brain-like camera, the RGB camera, or a combination thereof, to obtain a data stream in a unit of a frame or an event stream in a unit of an event. In this application, an image collected by the RGB camera is referred to as an RGB image, and an image collected by the brain-like camera is referred to as an event image.

Data encoding and decoding: Data encoding and data decoding are included. The data encoding may include: after data collection, encoding collected data, and storing encoded data in a storage medium. The data decoding may include reading data from a storage medium, decoding the data, and decoding the data into data that can be used for subsequent recognition, detection, and the like. In addition, a data collection manner may be further adjusted based on a data encoding and decoding scheme, so as to implement more efficient data collection and data encoding and decoding. Data encoding and decoding may be classified into a plurality of types, including encoding and decoding based on a brain-like camera, encoding and decoding based on a brain-like camera and an RGB camera, or encoding and decoding based on an RGB camera. Specifically, in an encoding process, data collected by the brain-like camera, the RGB camera, or a combination thereof may be encoded and is stored in a storage medium in a specific format. In a decoding process, the data stored in the storage medium may be decoded into data for subsequent use. For example, on a first day, a user may collect data of a video or an image via the brain-like camera, the RGB camera, or a combination thereof, encode the data of the video or image, and store the data of the video or image in a storage medium. On the next day, the data may be read from the storage medium, and the data is decoded, to obtain the playable video or image.

Image optimization: After the foregoing brain-like camera or RGB camera captures an image, the collected image is read, and then optimization processing such as enhancement or reconstruction is performed on the collected image, so that subsequent processing is performed based on an optimized image. For example, image enhancement and reconstruction may include image rebuilding, motion compensation, or the like. An example of motion compensation is as follows: Compensation is performed on a moving object in an event image or an RGB image based on a movement parameter that is of the moving object and that is collected by a DVS, so that the obtained event image or RGB image is clearer. An example of image rebuilding is as follows: rebuilding of an RGB image is performed based on the image collected by the brain-like vision camera, so that a clear RGB image can be obtained based on data collected by a DVS even in a movement scenario.

Application scenario: After an optimized RGB image or event image is obtained through image optimization, further application may be performed by using the optimized RGB image or event image. Certainly, further application may also be performed on a collected RGB image or event image. This may be specifically adjusted based on an actual application scenario.

Specifically, the application scenario may include movement photography enhancement, fusion of a DVS image and an RGB image, detection and recognition, simultaneous localization and mapping (SLAM), eye tracking, key frame selection, pose estimation, and the like. For example, movement photography enhancement is to perform enhancement processing on a shot image in a scenario in which a moving object is shot, so as to shoot a clearer moving object. Fusion of the DVS image and the RGB image is to enhance an RGB image based on a moving object captured by the DVS, and the moving object or an object affected by a large light ratio in the RGB image is compensated for, so as to obtain a clearer RGB image. Detection and recognition is to perform target detection or target recognition based on an RGB image or an event image. Eye tracking is to track eye movement of a user based on the collected RGB image or event image, or the optimized RGB image or event image, to determine information such as a gaze point and a gaze direction of the user. Key frame selection is to select some frames as key frames from video data collected by the RGB camera based on information collected by the brain-like camera.

In addition, in the following implementations of this application, different sensors may need to be started in different implementations. For example, when data is collected and an event image is optimized through motion compensation, a motion sensor may be started, and optionally, an IMU, a gyroscope, or the like may be started. In an implementation of image rebuilding, the motion sensor may be started to collect the event image, and then optimization is performed based on the event image. Alternatively, in an implementation of movement photography enhancement, a motion sensor, an RGB sensor, and the like may be started. Therefore, in different implementations, a corresponding sensor may be selected to be started.

Specifically, a method provided in this application may be applied to an electronic device. The electronic device may include an RGB sensor, a motion sensor, and the like. The RGB sensor is configured to collect an image in a shooting range. The motion sensor is configured to collect information of an object and that is generated when the object moves relative to the motion sensor in a detection range of the motion sensor. The method includes: selecting at least one of the RGB sensor and the motion sensor based on scenario information, and collecting data via a selected sensor, where the scenario information includes at least one of status information of the electronic device, a type of an application that requests to collect an image and that is in the electronic device, or environment information.

In a possible implementation, the foregoing status information includes information such as remaining battery power, remaining storage (or available storage), or a CPU load of the electronic device.

In a possible implementation, the foregoing environment information may include a change value of a light intensity in the shooting range of the color RGB sensor and a shooting range of the motion sensor, or information about the moving object in the shooting range. For example, the environment information may include a change status of the light intensity in the shooting range of the RGB sensor or the DVS sensor, or movement of the object in the shooting range, for example, information such as a movement speed or a movement direction of the object, or abnormal movement of the object in the shooting range, for example, a sudden change on a speed of the object, or a sudden change on a direction of the object.

The type of the application that requests to collect an image and that is in the electronic device may be understood as follows: The electronic device carries a system such as Android, Linux, or Harmony, the application may run in the system, and applications running in the system may be classified into a plurality of types such as an application of a shooting type or an application for target detection.

Generally, the motion sensor is sensitive to a movement change, is insensitive to a static scenario, and responds to a movement change by provisioning an event. Because almost no event is provisioned in a static region, event data of the motion sensor represents only light intensity information of a movement change region, and is not complete light intensity information of a full scenario. An RGB color camera is good at recording a natural scenario in full color, and reproducing texture details in the scenario.

An example in which the foregoing electronic device is a mobile phone is used, and a default configuration is that a DVS camera (namely, the DVS sensor) is disabled. When a camera is to be used, which camera is started is determined based on a type of a currently invoked application. For example, if the camera is invoked by a shooting app and the mobile phone is in a high-speed movement state, the DVS camera and the RGB camera (namely, the RGB sensor) need to be both started. If the app that requests to invoke the camera is an app for object detection or motion detection and does not require object shooting or facial recognition, the DVS camera may be selected to be started and the RGB camera may not be started.

Optionally, a camera startup mode may also be selected based on a current device status. For example, when current battery power is lower than a specific threshold, a user enables a power saving mode and cannot perform normal shooting, and only the DVS camera may be started. This is because although photo imaging of the DVS camera is not clear, power consumption is low, and high-definition imaging is not required during moving object detection.

Optionally, the device may perceive an ambient environment to determine whether to switch a camera mode. For example, in a night scenario or when the device is currently moving at a high speed, the DVS camera may be started. In a static scenario, the DVS camera may not be started.

A camera power startup mode is determined based on the foregoing application type, environment information, and device status. In addition, in a running process, whether to trigger camera mode switching may be determined, so that different sensors are started in different scenarios, and a strong adaptability is implemented.

It may be understood that there are three startup modes: only the RGB camera is started, only the DVS camera is started, and both the RGB and DVS cameras are started. In addition, for different products, reference factors for detecting application types and environment detection may be different.

For example, a camera in a security scenario has a motion detection function, and the camera stores recordings only when detecting a moving object, thereby reducing a storage space and prolonging hard disk storage duration. Specifically, when the DVS and RGB cameras are used as a home or security camera, only the DVS camera is started by default to perform motion detection and analysis. When the DVS camera detects abnormal movement and an abnormal behavior (such as sudden movement of the object or a sudden change of direction of movement). For example, if a person approaches or a light intensity changes significantly, the RGB camera is started for shooting and a full-scenario texture image of such a time period is recorded as a monitoring certificate. After the abnormal movement ends, switching to the DVS is performed. The RGB camera works in standby mode, and this significantly reduces a data amount and power consumption of a monitoring device.

The foregoing intermittent shooting method takes advantage of low power consumption of the DVS, and the DVS performs event-based motion detection that has faster response and more accurate detection than image-based motion detection, to enable 24/7 uninterrupted detection, so that a more accurate, low power consumption, and storage space saving method is implemented.

For another example, when the DVS camera and the RGB camera are used in vehicle-mounted auxiliary/self-driving, in a driving process, when a high beam lamp is turned on for an incoming vehicle, a vehicle encounters a direct sunset, or a vehicle enters or exits a tunnel, the RGB camera may fail to capture effective scenario information. In this case, although the DVS cannot obtain texture information, the DVS can obtain approximate outline information in a scenario, and this greatly helps a driver perform judgment. In addition, in foggy weather, the outline information captured by the DVS can also help determine road conditions. Therefore, a primary/secondary working status switch between the DVS and RGB cameras may be triggered in a specific scenario, for example, when a light intensity changes sharply or in extreme weather.

When the DVS camera is used in AR/VR glasses, the foregoing process is also applicable. When the DVS is used for SLAM or eye tracking, a camera startup mode can be determined based on a device status and the ambient environment.

In the following implementations of this application, when data collected by a sensor is used, the sensor is turned on. Details are not described in the following.

The following describes different implementations provided in this application with reference to the foregoing different working modes and FIG. 2.

III. Method procedure

The foregoing describes the electronic device and the system architecture provided in this application as examples. The following describes the method provided in this application in detail with reference to FIG. 1A to FIG. 2. Specifically, with reference to the architecture in FIG. 2, a method corresponding to each module is separately described. It should be understood that the following method steps in this application may be implemented independently, or may be combined and implemented in one device, and may be specifically adjusted based on an actual application scenario.

1. Data collection, encoding, and decoding

The following describes a process of data collection and data encoding and decoding together as examples.

In a conventional technology, a vision sensor (such as the foregoing motion sensor) generally adopts an asynchronous reading mode based on an event stream (referred to as a "reading mode based on an event stream" or an "asynchronous reading mode" below) and a synchronous reading mode based on frame scanning (referred to as a "reading mode based on frame scanning" or "synchronous reading mode" below). For a vision sensor that has been manufactured, only one of the two modes can be used. Based on a specific application scenario and movement state, amounts of signal data that needs to be read in unit time in the foregoing two reading modes may vary significantly, and further, costs required for outputting read data are also different. FIG. 3-a and FIG. 3-b are schematic diagrams of a relationship between the amount of read data in the asynchronous reading mode based on an event stream and the synchronous reading mode based on frame scanning and time.

On the one hand, because a bionic vision sensor has a movement-sensitive feature, and a light intensity change event (also referred to as an "event" in this specification) is usually not generated at a static region in an environment, almost all sensors of such a type use the asynchronous reading mode based on an event stream, where the event stream means events that are arranged in a specific sequence. The following uses a DVS as an example to describe the asynchronous reading mode. According to a sampling principle of the DVS, by comparing a current light intensity with a light intensity used when a previous event is generated, an event is generated and output when a variation of the light intensity reaches a predetermined issuing threshold C (referred to as a predetermined threshold below). In other words, when a difference between the current light intensity and the light intensity used when the previous event is generated exceeds the predetermined threshold C, the DVS generates an event, which may be described by Formula 1-1:

$$|L - L'| \geq C \quad (1\text{-}1)$$

L indicates the light intensity at a current moment, and L' indicates the light intensity used when the previous event is generated.

For the asynchronous reading mode, each event may be represented as <x, y, t, m>, where (x, y) represents a pixel location at which the event is generated, t represents time at which the event is generated, and m represents feature information of a light intensity. Specifically, the variation of the light intensity in the environment is measured at a pixel in a pixel array circuit of the vision sensor. If the measured variation of the light intensity exceeds the predetermined threshold, a data signal indicating an event may be output at the pixel. Therefore, in the asynchronous reading mode based on the event stream, pixels of the vision sensor are further classified into a pixel at which a light intensity change event is generated and a pixel at which a light intensity change event is not generated. The light intensity change event may be represented based on coordinate information (x, y) of the pixel at which the event is generated, feature information of a light intensity at the pixel, time t at which the feature information of the light intensity is read, and the like. The coordinate information (x, y) may be used to uniquely identify the pixel in the pixel array circuit, for example, x represents a row index in which the pixel is located in the pixel array circuit, and y represents a column index in which the pixel is located in the pixel array circuit. By identifying coordinates and a timestamp associated with the pixel, a spatial-temporal location at which the light intensity change event occurs can be uniquely determined, and then all events can form an event stream in occurrence order.

In some DVS sensors (such as a DAVIS sensor and an ATIS sensor), m represents a change trend of a light intensity, may also be referred to as polarity information, and is generally represented by one bit or two bits, and a value may be ON/OFF, where ON represents light intensity enhancement, and OFF represents light intensity reduction. To be specific, when the light intensity increases and exceeds a predetermined threshold, an ON pulse is generated; when the light intensity decreases and is lower than a predetermined threshold, an OFF pulse is generated. (In this application, "+1" indicates light intensity enhancement, and "-1" indicates light intensity reduction). In a scenario in which some DVS sensors, like a CeleX sensor, perform moving object monitoring, m represents absolute light intensity information, which may also be referred to as light intensity information, and is usually represented by a plurality of bits, for example, 8 bits to 12 bits.

In the asynchronous reading mode, only the data signal at the pixel at which the light intensity change event is generated is read. Therefore, for the bionic vision sensor, the event data that needs to be read has features of sparse and asynchronous. As shown in a curve 101 of FIG. 3-a, the vision sensor operates in the asynchronous reading mode based on the event stream. When a rate of the light intensity change event occurring in the pixel array circuit changes, an amount of data required to be read by the vision sensor also changes with time.

On the other hand, a conventional vision sensor, such as a mobile phone camera or a digital camera, usually uses the synchronous reading mode based on frame scanning. In the reading mode, whether a light intensity change event is generated at a pixel of the vision sensor or not is not distinguished. Whether a light intensity change event is generated at a pixel or not, a data signal generated at the pixel is read. When reading data signals, the vision sensor scans a pixel array circuit in a predetermined order, synchronously reads feature information m of a light intensity at each pixel (where the feature information m of the light intensity has been described above, and details are not described herein again), and outputs the 1$^{st}$ frame of data, the 2$^{nd}$ frame of data, and the like in sequence. Thus, as shown by a curve 102 of FIG. 3-b, in the synchronous reading mode, an amount of each frame of data that is read by the vision sensor has an identical size, and the amount of data remains unchanged over time. For example, assuming that 8 bits are used to represent a light intensity value of one pixel, and a total quantity of pixels in the vision sensor is 66, a data amount of one frame of data is 528 bits. Generally, frame data is output at an equal time interval. For example, frame data may be output at a rate of 30 frames per second, 60 frames per second, or 120 frames per second.

The applicant finds that the current vision sensor still has defects, including at least the following aspects.

First, a single reading mode cannot adapt to all scenarios and is not conducive to relieving pressure on data transmission and storage.

As shown in a curve 101 of FIG. 3-a, the vision sensor operates in the asynchronous reading mode based on the event stream. When a rate of the light intensity change event occurring in the pixel array circuit changes, an amount of data required to be read by the vision sensor also changes with time. Few light intensity change events are generated in a static scenario, so the total amount of data required to be read by the vision sensor is low. However, in a dynamic scenario, for example, during intense exercise, a large quantity of light intensity change events are generated, and a total amount of data that needs to be read by the vision sensor also increases accordingly. In some scenarios, a large quantity of light intensity change events are generated, and consequently, a total amount of data exceeds a bandwidth limit. There may be loss of events or delayed readouts. As shown by a curve 102 in FIG. 3-b, in a synchronous readout mode based on a frame, the vision sensor needs to represent a state or an intensity value of a pixel in one frame regardless of whether the pixel changes. This representation is costly when pixels of only a small quantity change.

Output and storage costs in the two modes may vary significantly in different application scenarios and movement states. For example, when shooting a static scenario, light intensity change events are generated at pixels of only a small quantity in a time period. Through example, light intensity change events are generated at only three pixels in the pixel array circuit in one scanning. In the asynchronous reading mode, only coordinate information (x, y), time information t, and light intensity variations of the three pixels need to be read, to represent three light intensity change events. Assuming that in the asynchronous reading mode, four bits and two bits, two bits, and two bits are allocated respectively for coordinates, a reading timestamp, and a light intensity variation of one pixel, a total amount of data that needs to be read in the reading mode is 30 bits. By contrast, in the synchronous reading mode, although valid data signals indicating the light intensity change events are generated at only three pixels, data signals output at all pixels of the entire array still need to be read to form one complete frame of data. Assuming that in the synchronous reading mode, 8 bits are allocated to each pixel, and a total quantity of pixels of the pixel array circuit is 66, a total amount of data that needs to be read is 528 bits. It can be seen that even if there are a large quantity of pixels that are in the pixel array circuit and at which no event is generated, so many bits still need to be allocated in the synchronous reading mode. This is uneconomical from a perspective of presentation costs, and increases pressure on data transfer and storage. Therefore, in this case, it is more economical to use the asynchronous reading mode.

In another example, when intense movement occurs in the scenario or a light intensity changes intensely in the environment, for example, a large quantity of people walk or a light is suddenly turned on and off, a light intensity change is measured and data signals indicating light intensity change events are generated in a short time period at a large quantity of pixels in the vision sensor. Since an amount of data representing a single event in the asynchronous reading mode is greater than an amount of data representing a single event in the synchronous reading mode, using the asynchronous reading mode in this case may require significant representation costs. Specifically, light intensity change events may be generated at a plurality of consecutive pixels in each row of the pixel array circuit, and coordinate information (x, y), time information t, and feature information m of a light intensity need to be transmitted for each event. Coordinate changes between these events tend to be only one unit of deviation, and the reading time is basically the same. In this case, representation costs of the asynchronous reading mode are large for coordinate and time information, and this causes a sharp increase in a data amount. By contrast, in the synchronous reading mode, regardless of a quantity of light intensity change events generated in the pixel array circuit at any moment, a data signal indicating only a light intensity variation is output at each pixel, and there is no need to allocate bits for coordinate information and time information of each pixel. Therefore, it is more economical to use the synchronous reading mode in a case of dense events.

Second, a single event representation manner cannot adapt to all scenarios. Using light intensity information to represent an event is not conducive to relieving pressure on data transmission and storage. Using polarity information to represent an event affects event processing and analysis.

The synchronous reading mode and the asynchronous reading mode are described above. All read events need to be represented based on the feature information m of the light intensity, and the feature information of the light intensity includes the polarity information and the light intensity information. The event represented based on the polarity information is referred to herein as an event in a polarity format, and the event represented based on the light intensity information is referred to herein as an event in a light intensity format. For a vision sensor that has been manufactured, only one of the two event formats can be used, to be specific, the vision sensor can use the polarity information to represent an event or use the light intensity information to represent an event. The following uses the asynchronous reading mode as an example to describe advantages and disadvantages of the event in a polarity format and the event in a light intensity format.

In the asynchronous reading mode, when the polarity information is used to represent an event, polarity information p is usually represented by one bit or two bits, carries little information, and can indicate only whether a change trend of a light intensity increases or decreases. Therefore, using the polarity information to represent an event affects the processing and analysis of the event. For example, for an event represented by using the polarity information, it is difficult to reconstruct an image, and precision for object recognition is also poor. When the light intensity information is used to represent an event, the light intensity information is usually represented by a plurality of bits, for example, 8 bits to 12 bits. Compared with the polarity information, the light intensity information may carry more information, and this facilitates event processing and analysis, for example, improves image reconstruction quality. However, due to a large data amount, it takes longer time to obtain the event represented based on the light intensity information. According to a DVS sampling principle, an event is generated when a light intensity variation of a pixel exceeds a predetermined threshold. When a large area of object movement or light intensity fluctuation occurs in a scenario (for example, scenario such as tunnel entrance and exit or room light on and off), the visual sensor faces a problem of sudden increase of events. When a preset maximum bandwidth (referred to as a bandwidth below) of the visual sensor is fixed, there is a case in which event data cannot be read. Currently, random discarding is usually used. If random discarding is used, although it can be ensured that an amount of data to be transmitted does not exceed the bandwidth, data loss is caused. In some special application scenarios (for example, self-driving), randomly discarded data may be of high importance. In other words, when a large quantity of events are triggered, a data amount exceeds the bandwidth, and the data in a light intensity format cannot be completely output to the outside of the DVS. Consequently, some events are lost. These missing events may be unfavorable to event processing and analysis, for example, may cause movement blur and an incomplete outline during brightness rebuilding.

To resolve the foregoing problem, an embodiment of this application provides a vision sensor, where data amounts in two reading modes are compared based on a statistical result of a light intensity change event generated by a pixel array circuit, to switch to the reading mode suitable for a current application scenario and movement state. In addition, based on the statistical result of the light intensity change event generated by the pixel array circuit, comparison for a relationship between a data amount of an event represented based on light intensity information and a bandwidth is performed, so as to adjust expression precision of the event. When a bandwidth limitation is met, all events are transmitted in an appropriate representation manner, and all the events are transmitted with as much representation precision as possible.

The following describes the vision sensor provided in embodiments of this application.

FIG. 4-a is a block diagram of a visual sensor according to this application. The vision sensor may be implemented as a vision sensor chip and can read a data signal indicating an event in at least one of a reading mode based on frame scanning and a reading mode based on an event stream. As shown in FIG. 4-a, a vision sensor 200 includes a pixel array circuit 210 and a reading circuit 220. The vision sensor is coupled to a control circuit 230. It should be understood that the vision sensor shown in FIG. 4-a is for example purposes only and does not imply any limitation on the scope of this application. Embodiments of this application may be further embodied in different sensor architectures. In addition, it should be further understood that the vision sensor may further include other elements or entities configured to implement an objective such as image collection, image processing, and image transmission. For ease of description, these elements or entities are not shown, but it does not mean that embodiments of this application do not have these elements or entities.

The pixel array circuit 210 may include one or more pixel arrays. Each pixel array includes a plurality of pixels, and each pixel having location information for unique identification, for example, coordinates (x, y). The pixel array circuit 210 may be configured to measure a light intensity variation, and generate a plurality of data signals corresponding to the plurality of pixels. In some possible embodiments, each pixel is configured to independently respond to a light intensity change in the environment. In some possible embodiments, the measured light intensity variation is compared with a predetermined threshold at the pixel. If the measured light intensity variation exceeds the predetermined threshold, a first data signal indicating a light intensity change event is generated at the pixel. For example, the first data signal includes polarity information, for example, +1 or -1. Alternatively, the first data signal may be absolute light intensity information. In this example, the first data signal may indicate a light intensity change trend or an absolute light intensity value at the corresponding pixel. In some possible embodiments, if the measured light intensity variation does not exceed the predetermined threshold, a second data signal, such as 0, different from the first data signal is generated at the pixel. In embodiments of this application, the data signal may indicate, but is not limited to, a light intensity polarity, an absolute light intensity value, a change value of a light intensity, and the like. The light intensity polarity may indicate a trend of the light intensity change, for example, enhancement or reduction, usually expressed as +1 or -1. The absolute light intensity value may represent a light intensity value measured at a current moment. Based on structures, usage, and types of the sensor, a light intensity or the light intensity variation may have different physical meanings. The scope of this application is not limited in this regard.

The reading circuit 220 is coupled to and may communicate with the pixel array circuit 210 and the control circuit 230. The reading circuit 220 is configured to read the data signals output by the pixel array circuit 210. It may be understood that the reading circuit 220 reads the data signals output by the pixel array 210 and transmits the data signals to the control circuit 230. The control circuit 230 is configured to control a mode in which the reading circuit 220 reads the data signals, and the control circuit 230 may also be configured to control a representation manner of the output data signals, in other words, control representation precision of the data signals. For example, the control circuit may control the vision sensor to output an event represented based on the polarity information, an event represented based on the light intensity information, an event represented based on a fixed quantity of bits, or the like, and this is described below with reference to specific implementations.

According to a possible embodiment of this application, the control circuit 230 may be used as an independent circuit or chip outside the vision sensor 200 as shown in FIG. 4-a, and is connected to the vision sensor 200 through a bus interface. In some other possible embodiments, the control circuit 230 may alternatively be used as a circuit or a chip inside the vision sensor, and is integrated with the pixel array circuit and the reading circuit in the vision sensor. FIG. 4-b is a block diagram of another visual sensor 300 according to a possible embodiment of this application. The vision sensor 300 may be an example implementation of the vision sensor 200. FIG. 4-b is a block diagram of another visual sensor according to this application. The vision sensor includes a pixel array circuit 310, a reading circuit 320, and a control circuit 330. The pixel array circuit 310, the reading circuit 320, and the control circuit 330 are respectively functionally the same as the pixel array circuit 210, the reading circuit 220, and the control circuit 230 shown in FIG. 4-a. Therefore, details are not described herein again. It should be understood that the vision sensor is for example purposes only and does not imply any limitation on the scope of this application. Embodiments of this application may be further embodied in different vision sensors. In addition, it should be further understood that the vision sensor may further include other elements, modules, or entities that are not shown for clarity. However, it does not mean that embodiments of this application do not have these elements or entities.

Based on the foregoing architecture of the vision sensor, the vision sensor provided in this application is described in detail below.

The reading circuit 220 may be configured to scan pixels in the pixel array circuit 210 in a predetermined order to read data signals generated at the corresponding pixels. In embodiments of this application, the reading circuit 220 is configured to be capable of reading, in one of more than one signal reading mode, the data signals output by the pixel array circuit 210. For example, the reading circuit 220 may perform reading in one of a first reading mode and a second reading mode. In a context of this specification, the first reading mode corresponds to one of the reading mode based on frame scanning and the reading mode based on an event stream, and the second reading mode corresponds to the other reading mode. Further, the first reading mode may refer to a current reading mode of the reading circuit 220, and the second reading mode may refer to a switchable alternative reading mode.

FIG. 5 is a schematic diagram of principles of a synchronous reading mode based on frame scanning and an asynchronous reading mode based on an event stream according to an embodiment of this application. As shown in an upper half part of FIG. 5, a black dot represents a pixel at which a light intensity change event is generated, and a white dot represents a pixel at which a light intensity change event is not generated. A dashed box on the left represents the synchronous reading mode based on frame scanning, where electrical signals are generated at all pixels based on a received optical signal and data signals are output after analog-to-digital conversion is performed. In the mode, the reading circuit 220 constructs one frame of data by reading the data signals generated at all the pixels. A dashed-line box on the right represents the asynchronous reading mode based on an event stream. In this mode, coordinate information (x, y) of the pixel can be obtained when the reading circuit 220 detects, through scanning, the pixel at which the light intensity change event is generated. Then, the reading circuit reads only a data signal generated at the pixel at which the light intensity change event is generated, and records reading time t. When a plurality of pixels at which light intensity change events are generated exist in the pixel array circuit, the reading circuit 220 sequentially reads data signals generated at the plurality of pixels in a scanning sequence, and forms an event stream as an output.

A lower half part of FIG. 5 depicts the two reading modes from the perspective of representation costs (such as an amount of data that needs to be read). As shown in FIG. 5, in the synchronous reading mode, the reading circuit 220 reads data of a same amount each time, for example, one frame of data. The 1st frame data 401-1 and the 2nd frame data 401-2 are shown in FIG. 5. Based on a data amount (such as a quantity $B_p$ of bits) of a single pixel and a total quantity $M$ of the pixels in the pixel array circuit, an amount of one frame of data to be read may be determined as $M \cdot B_p$. In the asynchronous reading mode, the reading circuit 220 reads the data signals indicating the light intensity change events, and then uses all the events to form an event stream 402 in occurrence order. In this case, an amount of data read by the reading circuit 220 each time is related to an amount $B_{ev}$ of event data for representing a single event (for example, a sum of coordinates (x, y) representing the pixel at which the event is generated, a reading timestamp t, and a quantity of bits of feature information of a light intensity) and a quantity $N_{ev}$ of the light intensity change events.

In some implementations, the reading circuit 220 may be configured to provide at least one read data signal for the control circuit 230. For example, the reading circuit 220 may provide, for the control circuit 230, data signals read in a time period, so that the control circuit 230 collects statistics of historical data and performs analysis.

In some possible embodiments, when the currently used first reading mode is the reading mode based on an event stream, the reading circuit 220 reads the data signal generated at the pixel at which the light intensity change event is generated and that is in the pixel array circuit 210. For ease of description, hereinafter, the data signal is also referred to as a first data signal. Specifically, the reading circuit 220 determines, by scanning the pixel array circuit 210, location information (x, y) of the pixel related to the light intensity change event. Based on the location information (x, y) of the pixel, the reading circuit 220 reads the first data signal that is generated at the pixel and that is in the plurality of data signals, to obtain the feature information of the light intensity and the reading time information t that are indicated by the first data signal. Through example, in the reading mode based on an event stream, an amount of event data read by the reading circuit 220 per second may be expressed as $B_{ev} \cdot N_{ev}$ bits, in other words, a data reading rate of the reading circuit 220 is $B_{ev} \cdot N_{ev}$ bits per second (bit per second, bps), where $B_{ev}$ is an event data amount (such as a quantity of bits) allocated to each light intensity change event in the reading mode based on an event stream, the first $b_x$ and $b_y$ bits indicate pixel coordinates (x, y), next $b_t$ bits indicate a timestamp t at which a data signal is read, and the last $b_f$ bits indicate feature information that is of a light intensity and that is indicated by the data signal, that is, $B_{ev} = b_x + b_y + b_t + b_f$. $N_{ev}$ is an average quantity that is of events generated per second and that is obtained by the reading circuit 220 based on historical statistics of a quantity of light intensity change events generated in the pixel array circuit 210 over a time period. In the reading mode based on frame scanning, an amount of each frame of data read by the reading circuit 220 may be expressed as $M \cdot B_p$ bits, and a data amount read per second *is* $M \cdot B_p \cdot f$ bits, that is, a data reading rate of the reading circuit 220 is $M \cdot B_p \cdot f$ bps, where it is given that a total quantity of pixels in the vision sensor 200 is M, $B_p$ is an amount (such as a quantity of bits) of pixel data allocated to each pixel in the reading mode based on frame scanning, and f is a predetermined frame rate of the reading circuit 220 in the reading mode based on frame scanning, in other words, the reading circuit 220 scans the pixel array circuit 210 at the predetermined frame rate $f$ Hz in the mode to read the data signals generated at all the pixels in the pixel array circuit 210. Therefore, M, $B_p$, and f are all known variations, and the data reading rate of the reading circuit 220 in the reading mode based on frame scanning can be directly obtained.

In some possible embodiments, when the currently used first reading mode is the reading mode based on frame scanning, the reading circuit 220 may obtain, through calculation based on historical statistics of a quantity of light intensity change events generated in the pixel array circuit 210 over a time period, an average quantity $N_{ev}$ of events generated per second. Based on $N_{ev}$ obtained in the reading mode based on frame scanning, the amount of event data read by the reading circuit 220 per second in the reading mode based on the event stream can be calculated as $B_{ev} \cdot N_{ev}$ bits, that is, the data reading rate of the reading circuit 220 is $B_{ev} \cdot N_{ev}$ bps in the reading mode based on an event stream.

It can be learned from the foregoing two implementations that the data reading rate of the reading circuit 220 in the reading mode based on frame scanning may be directly obtained through calculation based on a predefined parameter, and the data reading rate of the reading circuit 220 in the reading mode based on an event stream may be obtained through calculation based on $N_{ev}$ obtained in either of the two modes.

The control circuit 230 is coupled to the reading circuit 220, and is configured to control the reading circuit 220 to read, in a specific reading mode, the data signal generated by the pixel array circuit 210. In some possible embodiments, the control circuit 230 may obtain the at least one data signal from the reading circuit 220, and determine, based on at least the at least one data signal, which one of the current reading mode and the alternative reading mode is more suitable for a current application scenario and movement state. Further, in some embodiments, the control circuit 230 may indicate, based on the determining, the reading circuit 220 to switch from the current data reading mode to the other data reading mode.

In some possible embodiments, the control circuit 230 may send, to the reading circuit 220 based on the historical statistics of light intensity change events, an indication about switching the reading mode. For example, the control circuit 230 may determine, based on the at least one data signal received from the reading circuit 220, statistics data related to at least one light intensity change event. If it is determined that the statistics data satisfies a predetermined switching condition, the control circuit 230 sends a mode switching signal to the reading circuit 220, so that the reading circuit 220 switches to the second reading mode. For ease of comparison, the statistics data may be used for separately measuring the data reading rates in the first reading mode and the second reading mode.

In some embodiments, the statistics data may include a total data amount of a quantity of events measured by the pixel array circuit 210 in unit time. If a total amount of data that is of light intensity change events and that is read by the reading circuit 220 in the first reading mode has been greater than or equal to a total amount of data of the light intensity change events in the second reading mode, it indicates that the reading circuit 220 needs to switch from the first reading mode to the second reading mode. In some embodiments, it is given that the first reading mode is the reading mode based on frame scanning and the second reading mode is the reading mode based on an event stream. The control circuit 230 may determine, based on the pixel quantity $M$, the frame rate $f$, and the pixel data amount $B_p$ of the pixel array circuit, the total amount $M \cdot B_p \cdot f$ of data that is of the light intensity change events and that is read in the first reading mode. The control circuit 230 may determine, based on the quantity $N_{ev}$ of the light intensity change events and the event data amount $B_{ev}$ associated with the reading mode based on an event stream, the total data amount $B_{ev} \cdot N_{ev}$ of the light intensity change events, namely, the total amount $B_{ev} \cdot N_{ev}$ of data that is of the light intensity change events and that is read in the second reading mode. In some embodiments, a switching parameter may be used to adjust a relationship between the total data amounts in the two reading modes. As shown in the following formula (1), when the total amount $M \cdot B_p \cdot f$ of data that is of the light intensity change events and that is read in the first reading mode is greater than or equal to the total data amount $B_{ev} \cdot N_{ev}$ of the light intensity change events in the second reading mode, the reading circuit 220 needs to switch to the second reading mode.

$$\eta \cdot M \cdot B_P \cdot f \geq B_{ev} \cdot N_{ev} \quad (1)$$

$\eta$ is a switching parameter for adjustment. It may be further obtained from the foregoing formula (1) that a first threshold data amount $d_1 = M \cdot B_p \cdot f \cdot \eta$. To be specific, if the total data amount $B_{ev} \cdot N_{ev}$ of the light intensity change events is less than or equal to the threshold data amount $d_1$, it indicates that the total amount of data that is of the light intensity change events and that is read in the first reading mode has already been greater than or equal to the total data amount of the light intensity change events in the second reading mode. The control circuit 230 may determine that statistics data of the light intensity change events satisfies the predetermined switching condition. In this embodiment, the threshold data amount $d_1$ may be determined based on at least the pixel quantity $M$ of the pixel array circuit, and the frame rate $f$ and the pixel data amount $B_p$ that are associated with the reading mode based on frame scanning.

In an alternative implementation of the foregoing embodiment, a case in which the total amount $M \cdot B_p \cdot f$ of data that is of the light intensity change events and that is read in the first reading mode is greater than or equal to the total

data amount $B_{ev} \cdot N_{ev}$ of the light intensity change events in the second reading mode may be shown in the following formula (2):

$$M \cdot B_P \cdot f - B_{ev} \cdot N_{ev} \geq \theta \quad (2)$$

$\theta$ is a switching parameter for adjustment. It may be further obtained from the foregoing formula (2) that a second threshold data amount $d_2 = M \cdot B_p \cdot f - \theta$.

To be specific, if the total data amount $B_{ev} \cdot N_{ev}$ of the light intensity change events is less than or equal to the second threshold data amount $d_2$, it indicates that the total amount of data that is of the light intensity change events and that is read in the first reading mode has already been greater than or equal to the total data amount of the light intensity change events in the second reading mode. The control circuit 230 may determine that statistics data of the light intensity change event satisfies the predetermined switching condition. In this embodiment, the threshold data amount $d_2$ may be determined based on at least the pixel quantity $M$ of the pixel array circuit, and the frame rate $f$ and the pixel data amount $B_p$ that are associated with the reading mode based on frame scanning.

In some embodiments, the first reading mode is the reading mode based on an event stream and the second reading mode is the reading mode based on frame scanning. Since in the reading mode based on an event stream, the reading circuit 220 reads only the data signal generated at the pixel at which the event is generated. Accordingly, the control circuit 230 can directly determine, based on a quantity of data signals provided by the reading circuit 220, the quantity $N_{ev}$ of light intensity change events generated by the pixel array circuit 210. The control circuit 230 may determine, based on the quantity $N_{ev}$ of events and the event data amount $B_{ev}$ associated with the reading mode based on an event stream, the total data amount of the light intensity change events, namely, the total amount $B_{ev} \cdot N_{ev}$ of data that is of the events and that is read in the first reading mode. Similarly, the control circuit 230 may further determine, based on the pixel quantity $M$, the frame rate $f$, and the pixel data amount $B_p$ of the pixel array circuit, the total amount $M \cdot B_p \cdot f$ of data that is of the light intensity change events and that is read in the second reading mode. As shown in the following formula (3), the total amount $B_{ev} \cdot N_{ev}$ of data that is of the light intensity change events and that is read in the first reading mode is greater than or equal to the total data amount $M \cdot B_p \cdot f$ of the light intensity change events in the second reading mode, and the reading circuit 220 needs to switch to the second reading mode:

$$B_{ev} \cdot N_{ev} \geq \eta \cdot M \cdot B_P \cdot f \quad (3)$$

$\eta$ is a switching parameter for adjustment. It may be further obtained from the foregoing formula (3) that a first threshold data amount $d_1 = \eta \cdot M \cdot B_P \cdot f$. If the total data amount $B_{ev} \cdot N_{ev}$ of the light intensity change events is greater than or equal to the threshold data amount $d_1$, the control circuit 230 determines that the statistics data of the light intensity change events meets the predetermined switching condition. In this embodiment, the threshold data amount $d_1$ may be determined based on at least the pixel quantity $M$ of the pixel array circuit, and the frame rate $f$ and the pixel data amount $B_p$.

In an alternative implementation of the foregoing embodiment, a case in which the total amount $B_{ev} \cdot N_{ev}$ of data that is of the light intensity change events and that is read in the first reading mode is greater than or equal to the total data amount $M \cdot B_p \cdot f$ of the light intensity change events in the second reading mode may be shown in the following formula (4):

$$M \cdot B_P \cdot f - B_{ev} \cdot N_{ev} \leq \theta \quad (4)$$

$\theta$ is a switching parameter for adjustment. It may be further learned from the foregoing formula (4) that a second threshold data amount $d_2 = M \cdot B_P \cdot f - \theta$. If the total data amount $B_{ev} \cdot N_{ev}$ of the light intensity change events is greater than or equal to the threshold data amount $d_2$, the control circuit 230 determines that the statistics data of the light intensity change events meets the predetermined switching condition. In this embodiment, the threshold data amount $d_2$ may be determined based on at least the pixel quantity $M$ of the pixel array circuit, and the frame rate $f$ and the pixel data amount $B_p$.

In other embodiments, the statistics data may include the quantity $N_{ev}$ of events measured by the pixel array circuit 210 in unit time. If the first reading mode is the reading mode based on frame scanning and the second reading mode is the reading mode based on an event stream, the control circuit 230 determines the quantity $N_{ev}$ of light intensity change events based on a quantity of first data signals that are in the plurality of data signals provided by the reading circuit 220. If the quantity $N_{ev}$ that is indicated by the statistics data and that is of light intensity change events is less than a first threshold quantity $n_1$, the control circuit 230 determines that the statistics data of the light intensity change events satisfies the predetermined switching condition, and may determine the first threshold quantity $n_1$ based on at least the quantity $M$ of pixels of the pixel array circuit, the frame rate $f$ and the pixel data amount $B_p$ that are associated with the reading mode based on frame scanning, and the event data amount $B_{ev}$ associated with the reading mode based on an event stream. For example, in the foregoing embodiment, the following formula (5) may be further obtained based on formula (1):

$$N_{ev} \leq \frac{\eta \cdot M \cdot B_p \cdot f}{B_{ev}} \quad (5)$$

That is, the first threshold quantity $n_1$ may be determined as $n_1 = \frac{\eta \cdot M \cdot B_p \cdot f}{B_{ev}}$ .

In an alternative implementation of the foregoing embodiment, the following formula (6) may be further obtained based on formula (2):

$$N_{ev} \leq \frac{M \cdot B_p \cdot f - \theta}{B_{ev}} \quad (6)$$

Correspondingly, a second threshold quantity $n_2$ may be determined as $n_2 = \frac{M \cdot B_p \cdot f - \theta}{B_{ev}}$ .

In still other embodiments, if the first reading mode is the reading mode based on an event stream and the second reading mode is the reading mode based on frame scanning, the control circuit 230 may directly determine the quantity $N_{ev}$ of light intensity change events based on a quantity of the at least one data signal provided by the reading circuit 220. If the quantity $N_{ev}$ that is indicated by the statistics data and that is of light intensity change events is greater than or equal to a first threshold quantity $n_1$, the control circuit 230 determines that the statistics data of the light intensity change events meets the predetermined switching condition. The first threshold quantity $n_1 = \eta \cdot M \cdot B_p \cdot f / B_{ev}$ may be determined based on at least the quantity $M$ of pixels of the pixel array circuit 210, the frame rate $f$ and the pixel data amount $B_p$ that are associated with the reading mode based on frame scanning, and the event data amount $B_{ev}$ associated with the reading mode based on an event stream. For example, in the foregoing embodiment, the following formula (7) may be further obtained based on formula (3):

$$N_{ev} \geq \frac{\eta \cdot M \cdot B_p \cdot f}{B_{ev}} \quad (7)$$

That is, the first threshold quantity $n_1$ may be determined as $n_1 = \frac{\eta \cdot M \cdot B_p \cdot f}{B_{ev}}$ .

In an alternative implementation of the foregoing embodiment, the following formula (8) may be further obtained based on formula (4):

$$N_{ev} \geq \frac{M \cdot B_p \cdot f - \theta}{B_{ev}} \quad (8)$$

Correspondingly, a second threshold quantity $n_2$ may be determined as $n_2 = \frac{M \cdot B_p \cdot f - \theta}{B_{ev}}$ .

It should be understood that the formula, the switching condition, and the related calculation method provided above are merely examples of implementations of embodiments of this application, and another proper mode switching condition, switching policy, and calculation method may also be used. The scope of this application is not limited in this regard.

FIG. 6-a is a schematic diagram of operation of a vision sensor in a reading mode based on frame scanning according to an embodiment of this application. FIG. 6-b is a schematic diagram of operation of a vision sensor in a reading mode based on an event stream according to an embodiment of this application. As shown in FIG. 6-a, the reading circuit 220 or 320 currently operates in the first reading mode, namely, the reading mode based on frame scanning. Because the control circuit 230 or 330 determines, based on historical statistics, that a quantity of events generated in the current pixel array circuit 210 or 310 is relatively small, for example, there are only four pieces of valid data in one frame of data, and then predicts that a possible event generation rate in a next time period is relatively low. If the reading circuit 220 or 320 continues to read in the reading mode based on frame scanning, bits are repeatedly allocated to the pixel at which the event is generated, and consequently, a large amount of redundant data is generated. In this case, the control circuit 230 or 330 sends a mode switching signal to the reading circuit 220 or 320 to switch the reading circuit 220 or 320 from the first reading mode to the second reading mode. After switching, as shown in FIG. 6-b, the reading circuit 220 or 320 operates in the second reading mode, and reads only valid data signals, thereby avoiding transmission bandwidths and storage resources occupied by a large quantity of invalid data signals.

FIG. 6-c is a schematic diagram of operation of a vision sensor in a reading mode based on an event stream according to an embodiment of this application. FIG. 6-d is a schematic diagram of operation of a vision sensor in a reading mode based on frame scanning according to an embodiment of this application. As shown in FIG. 6-c, the reading circuit 220 or 320 currently operates in the first reading mode, namely, the reading mode based on an event stream. The control circuit 230 or 330 determines, based on historical statistics, that a quantity of events currently generated in the pixel array circuit 210 or 310 is relatively large. For example, data signals separately indicating that a light intensity variation is higher than a predetermined threshold are generated at almost all pixels in the pixel array circuit 210 or 310 in short time. Then, the reading circuit 220 or 320 may predict that a possible event generation rate in a next time period is relatively high. Because there is a large amount of redundant data in the read data signals, for example, nearly identical pixel location information and reading timestamps, if the reading circuit 220 or 320 continues to read in the reading mode based on an event stream, an amount of read data increases sharply. Thus, in this case, the control circuit 230 or 330 sends a mode switching signal to the reading circuit 220 or 320 to switch the reading circuit 220 or 320 from the first reading mode to the second reading mode. After switching, as shown in FIG. 6-d, the reading circuit 220 or 320 operates in the mode based on frame scanning, to read the data signals in the reading mode with lower representation costs of a single pixel, thereby relieving pressure on storing and transmitting the data signals.

In some possible embodiments, the vision sensor 200 or 300 may further include a parsing circuit, and the parsing circuit may be configured to parse the data signals output by the reading circuit 220 or 320. In some possible embodiments, the parsing circuit may parse the data signals by using a parsing mode suitable for a current data reading mode of the reading circuit 220 or 320. This is described in detail below.

It should be understood that another existing or to-be-developed future data reading mode, data parsing mode, and the like are also applicable to possible embodiments of this application, and all values in embodiments of this application are illustrative rather than limitative. For example, in a possible embodiment of this application, switching may be performed between more than two data reading modes.

According to a possible embodiment of this application, a vision sensor chip is provided, and can adaptively switch between a plurality of reading modes based on historical statistics of light intensity change events generated in a pixel array circuit. In this way, no matter in a dynamic scenario or a static scenario, the vision sensor chip can always implement good reading and parsing performance, to avoid generation of redundant data, and relieve pressure on image processing, transmission, and storage.

FIG. 7 is a flowchart of a method for operating a vision sensor chip according to a possible embodiment of this application. In some possible embodiments, the method may be implemented by using the vision sensor 200 shown in FIG. 4-a, the vision sensor 300 shown in FIG. 4-b, and an electronic device shown in FIG. 9 below, or may be implemented by using any appropriate device, including various devices currently known or to be developed in the future. For ease of discussion, the method is described below based on the vision sensor 200 shown in FIG. 4-a.

Refer to FIG. 7. A method for operating a vision sensor chip according to an embodiment of this application may include the following steps.

501: Generate a plurality of data signals corresponding to a plurality of pixels that are in a pixel array circuit.

The pixel array circuit 210 generates, by measuring light intensity variations, the plurality of data signals corresponding to the plurality of pixels in the pixel array circuit 210. In a context of this specification, the data signal may indicate that a light intensity polarity, an absolute light intensity value, a change value of a light intensity, and the like are included, but these are not limited.

502: Read at least one of the plurality of data signals from the pixel array circuit in a first reading mode.

The reading circuit 220 reads the at least one of the plurality of data signals from the pixel array circuit 210 in the first reading mode, and the data signals occupy storage and transmission resources in the vision sensor 200 after being read. Based on a particular reading mode, a manner in which the vision sensor chip 200 reads the data signals may vary. In some possible embodiments, for example, in a reading mode based on an event stream, the reading circuit 220 determines, by scanning the pixel array circuit 210, location information (x, y) of a pixel related to a light intensity change event. Based on the location information, the reading circuit 220 may read a first data signal of the plurality of data signals. In this embodiment, the reading circuit 220 obtains, by reading the data signal, feature information of a light intensity, the location information (x, y) of the pixel at which the light intensity change event is generated, a timestamp t at which the data signal is read, and the like.

In some other possible embodiments, the first reading mode may be a reading mode based on frame scanning. In this mode, the vision sensor 200 scans the pixel array circuit 210 at frame frequency associated with the reading mode based on frame scanning, to read all the data signals generated by the pixel array circuit 210. In this embodiment, the reading circuit 220 obtains the feature information of the light intensity by reading the data signals.

503: Provide the at least one data signal for the control circuit.

The reading circuit 220 provides the at least one read data signal for the control circuit 230, so that the control circuit 230 collects statistics and performs analysis. In some embodiments, the control circuit 230 may determine, based on the at least one data signal, statistics data related to at least one light intensity change event. The control circuit 230 may use a switching policy module to analyze the statistics data. If it is determined that the statistics data satisfies a predetermined switching condition, the control circuit 230 sends a mode switching signal to the reading circuit 220.

When the first reading mode is the reading mode based on frame scanning and the second reading mode is the reading mode based on an event stream, in some embodiments, the control circuit 230 may determine a quantity of light intensity change events based on a quantity of first data signals in the plurality of data signals. Further, the control circuit 230 compares the quantity of light intensity change events with a first threshold quantity. If the quantity that is indicated by the statistics data and that is of light intensity change events is less than or equal to the first threshold quantity, the control circuit 230 determines that the statistics data of the light intensity change events meets the predetermined switching condition, and transmits the mode switching signal. In this embodiment, the control circuit 230 may determine or adjust the first threshold quantity based on a quantity of pixels of the pixel array circuit, a frame rate and a pixel data amount that are associated with the reading mode based on frame scanning, and an event data amount associated with the reading mode based on an event stream.

When the first reading mode is the reading mode based on an event stream and the second reading mode is the reading mode based on frame scanning, in some embodiments, the control circuit 230 may determine, based on the first data signal received from the reading circuit 220, the statistics data related to the light intensity change events. Further, the control circuit 230 compares the quantity of light intensity change events with a second threshold quantity. If the quantity of light intensity change events is greater than or equal to the second threshold quantity, the control circuit 230 determines that the statistics data of the light intensity change events meets the predetermined switching condition, and transmits the mode switching signal. In this embodiment, the control circuit 230 may determine or adjust the second threshold quantity based on a quantity of pixels of the pixel array circuit, a frame rate and a pixel data amount that are associated with the reading mode based on frame scanning, and an event data amount associated with the reading mode based on an event stream.

504: Switch the first reading mode to the second reading mode based on the mode switching signal.

The reading circuit 220 switches from the first reading mode to the second reading mode based on the mode switching signal received from the control circuit 220. Further, the reading circuit 220 reads, in the second reading mode, the at least one data signal generated by the pixel array circuit 210. The control circuit 230 may then continue to collect historical statistics of the light intensity change events generated by the pixel array circuit 210, and when the switching condition is met, send the mode switching signal to enable the reading circuit 220 to switch from the second reading mode to the first reading mode.

According to the method provided in a possible embodiment of this application, the control circuit continuously performs, in an entire reading and parsing process, historical statistics collection and real-time analysis on the light intensity change events generated in the pixel array circuit, and sends the mode switching signal once the switching condition is met, so that the reading circuit switches from a current reading mode to a more suitable alternative switching mode. The adaptive switching process is repeated until all the data signals are read.

FIG. 8 is a possible block diagram of a control circuit according to an embodiment of this application. The control circuit may be configured to implement the control circuit 230 in FIG. 4-a, the control circuit 330 in FIG. 5, and the like, or may be implemented by using another suitable device. It should be understood that the control circuit is for example purposes only and does not imply any limitation on the scope of this application. Embodiments of this application may be further embodied in different control circuits. In addition, it should be further understood that the control circuit may further include other elements, modules, or entities that are not shown for clarity. However, it does not mean that embodiments of this application do not have these elements or entities.

As shown in FIG. 8, the control circuit includes at least one processor 602, at least one memory 604 coupled to the processor 602, and a communication mechanism 612 coupled to the processor 602. The memory 604 is configured to store at least a computer program and a data signal obtained from a reading circuit. A statistical model 606 and a policy module 608 are preconfigured on the processor 602. The control circuit 630 may be communicatively coupled through the communication mechanism 612 to the reading circuit 220 of the vision sensor 200 as shown in FIG. 4-a or to a reading circuit outside the vision sensor, to implement a control function on the reading circuit. For ease of description, the following refers to the reading circuit 220 in FIG. 4-a. However, this embodiment of this application is also applicable to a configuration of a peripheral reading circuit.

Similar to the control circuit 230 shown in FIG. 4-a, in some possible embodiments, the control circuit may be configured to control the reading circuit 220 to read, in a specific data reading mode (such as a synchronous reading mode based on frame scanning or an asynchronous reading mode based on an event stream), a plurality of data signals generated by the pixel array circuit 210. In addition, the control circuit may be configured to obtain the data signals from the reading circuit 220, and the data signal may indicate, but is not limited to, a light intensity polarity, an absolute light intensity value, a change value of a light intensity, and the like. For example, the light intensity polarity may indicate a trend of a light intensity change, for example, enhancement or reduction, usually expressed as +1 or -1. The absolute light intensity value may represent a light intensity value measured at a current moment. Based on structures, usage, and types of the sensor, information about a light intensity or the light intensity variation may have different physical meanings.

The control circuit determines, based on the data signals obtained from the reading circuit 220, statistics data related to at least one light intensity change event. In some embodiments, the control circuit may obtain, from the reading circuit 220, data signals generated by the pixel array circuit 210 in a time period, and store the data signals in the memory 604 for historical statistics collection and analysis. In a context of this application, a first reading mode may be one of the asynchronous reading mode based on an event stream and the synchronous reading mode based on frame scanning, and a second reading mode may be the other. However, it should be noted that all features described herein of adaptively switching reading modes are equally applicable to other types of sensors and data reading modes that are currently known or to be developed in the future, as well as switching between more than two data reading modes.

In some possible embodiments, the control circuit may perform, by using one or more preconfigured statistical models 606, historical statistics collection on light intensity change events that are generated in a time period by the pixel array circuit 210 and that are provided by the reading circuit 220. The statistical model 606 may then transmit the statistics data to the policy module 608 as an output. As described above, the statistics data may indicate a quantity of light intensity change events, or may indicate a total data amount of light intensity change events. It should be understood that any proper statistical model or statistical algorithm may be applied to possible embodiments of this application, and the scope of this application is not limited in this regard.

Because the statistics data is a statistical result of a historical status of light intensity change events generated by the vision sensor in a time period, the policy module 608 can analyze and predict an event generation rate in a next time period. The policy module 608 may be preconfigured with one or more switching decisions. When there are a plurality of switching decisions, the control circuit may select one of the plurality of switching decisions for analysis and decision based on a requirement, for example, based on factors such as a type of the vision sensor 200, a feature of the light intensity change event, an attribute of an external environment, and a movement state. In a possible embodiment of this application, another proper policy module and mode switching condition or policy may also be used. The scope of this application is not limited in this regard.

In some embodiments, if the policy module 608 determines that the statistics data satisfies a mode switching condition, an indication for switching the reading mode is output to the reading circuit 220. In another embodiment, if the policy module 608 determines that the statistics data does not meet a mode switching condition, no indication for switching the reading mode is output to the reading circuit 220. In some embodiments, the indication for switching the reading mode may be in an explicit form as described in the foregoing embodiments, for example, in a form of a switching signal or a flag bit to indicate the reading circuit 220 to switch the reading mode.

FIG. 9 is a possible block diagram of an electronic device according to an embodiment of this application. As shown in FIG. 9, the electronic device includes a vision sensor chip. It should be understood that an electronic device is used for example purposes and may be implemented with any suitable device, including various sensor devices currently known and to be developed in the future. Embodiments of this application may be further embodied in different sensor systems. In addition, it should be further understood that the electronic device may further include other elements, modules, or entities that are not shown for clarity. However, it does not mean that embodiments of this application do not have these elements, modules, or entities.

As shown in FIG. 9, the vision sensor includes a pixel array circuit 710 and a reading circuit 720, where reading components 720-1 and 720-2 of the reading circuit 720 are coupled to a control circuit 730 via communication interfaces 702 and 703 respectively. In this embodiment of this application, the reading components 720-1 and 720-2 may be separately implemented by using independent devices, or may be integrated into a same device. For example, the reading circuit 220 shown in FIG. 4-a is an example implementation of integration. For ease of description, the reading components 720-1 and 720-2 may be configured to implement a data reading function in a reading mode based on frame scanning and a reading mode based on an event stream, respectively.

The pixel array circuit 710 may be implemented by using the pixel array circuit 210 in FIG. 4-a or the pixel array circuit 310 in FIG. 5, or may be implemented by using any other suitable device. This is not limited in this application. Features of the pixel array circuit 710 are not described herein again.

The reading circuit 720 may read, in a specific reading mode, a data signal generated by the pixel array circuit 710. For example, in an example in which the reading component 720-1 is turned on and the reading component 720-2 is turned off, the reading circuit 720 initially reads the data signal by using the reading mode based on frame scanning. In the example in which the reading component 720-2 is turned on and the reading component 720-1 is turned off, the reading circuit 720 initially reads the data signal by using the reading mode based on an event stream. The reading circuit 720 may be implemented by using the reading circuit 220 in FIG. 4-a or the reading circuit 320 in FIG. 5, or may be implemented by using any other suitable device. Features of the reading circuit 720 are not described herein again.

In this embodiment of this application, the control circuit 730 may indicate, based on an indication signal or a flag bit, the reading circuit 720 to switch from a first reading mode to a second reading mode. In this case, the reading circuit 720 may receive, from the control circuit 730, an indication for switching the reading mode, for example, turning on the reading component 720-1 and turning off the reading component 720-2, or turning on the read component 720-2 and turning off the read component 720-1.

As described above, the electronic device may further include a parsing circuit 704. The parsing circuit 704 may be configured to parse the data signal read by the reading circuit 720. In a possible embodiment of this application, the parsing circuit may use a parsing mode suitable for a current data reading mode of the reading circuit 720. In an example, if the reading circuit 720 initially reads the data signal in the reading mode based on an event stream, the parsing circuit accordingly parses the data signal based on a first data amount $B_{ev} \cdot N_{ev}$ associated with the reading mode. When the reading circuit 720 switches, based on the indication of the control circuit 730, from the reading mode based on an event stream to the reading mode based on frame scanning, the parsing circuit starts to parse the data signal based on a second data amount, namely, a size $M \cdot B_p$ of one frame of data. When the reading circuit 720 switches from the reading mode based on frame scanning to the reading mode based on an event stream, the parsing circuit starts to parse the data signal based on the first data amount.

In some embodiments, the parsing circuit 704 may implement switching of the parsing mode of the parsing circuit without explicitly switching a signal or a flag bit. For example, the parsing circuit 704 may use the same or corresponding statistical model and switching policy as the control circuit 730 to make same statistical analysis and consistent switching prediction as the control circuit 730 on the data signal provided by the reading circuit 720. In an example, if the reading circuit 720 initially reads the data signal in the reading mode based on an event stream, correspondingly, the parsing circuit initially parses data based on a first data amount $B_{ev} \cdot N_{ev}$ associated with the reading mode. For example, the first $b_x$ bits obtained through parsing by the parsing circuit indicate coordinates x of a pixel, the next $b_y$ bits indicate coordinates $y$ of the pixel, subsequent $b_t$ bits indicate reading time, and finally, $b_f$ bits are used to indicate feature information of a light intensity. The parsing circuit obtains at least one data signal from the reading circuit 720 and determines statistics data related to at least one light intensity change event. If the parsing circuit 704 determines that the statistics data satisfies a switching condition, the parsing circuit 704 switches to a parsing mode corresponding to the reading mode based on frame scanning, and parses the data signal by the size $M \cdot B_p$ of the frame data.

In another example, if the reading circuit 720 initially reads the data signal in the reading mode based on frame scanning, the parsing circuit 704 sequentially extracts a value of each pixel location in a frame every $B_p$ bits in the parsing mode corresponding to the reading mode, and a value of a location of a pixel at which a light intensity change event is not generated is 0. The parsing circuit 704 may collect statistics on a quantity of non-zeros in one frame based on the data signal, namely, the quantity of light intensity change events in the frame.

In some possible embodiments, the parsing circuit 704 obtains the at least one data signal from the reading circuit 720, and determines, based on at least the at least one data signal, which one of a current parsing mode and an alternative parsing mode corresponds to the reading mode of the reading circuit 720. Further, in some embodiments, the parsing circuit 704 may switch from the current parsing mode to the other parsing mode based on the determining.

In some possible embodiments, the parsing circuit 704 may determine, based on historical statistics on light intensity change events, whether to switch the parsing mode. For example, the parsing circuit 704 may determine, based on the at least one data signal received from the reading circuit 720, the statistics data related to the at least one light intensity change event. If it is determined that the statistics data satisfies the switching condition, the parsing circuit 704 switches from the current parsing mode to the alternative parsing mode. For ease of comparison, the statistics data may be used for separately measuring data reading rates in the first reading mode and the second reading mode of the reading circuit 720.

In some embodiments, the statistics data may include a total data amount of a quantity of events measured by the pixel array circuit 710 in unit time. If the parsing circuit 704 determines, based on the at least one data signal, that a total amount of data that is of light intensity change events and that is read by the reading circuit 720 in the first reading mode has been greater than or equal to a total amount of data of the light intensity change events in the second reading mode of the reading circuit 720, it indicates that the reading circuit 720 has switched from the first reading mode to the second reading mode. In this case, the parsing circuit 704 needs to accordingly switch to the parsing mode corresponding to the current reading mode.

In some embodiments, it is given that the first reading mode is the reading mode based on frame scanning and the second reading mode is the reading mode based on an event stream. In this embodiment, the parsing circuit 704 initially parses, in a parsing mode that is based on frame scanning and that corresponds to the first reading mode, the data signal obtained from the reading circuit 720. The parsing circuit 704 may determine, based on a quantity $M$ of pixels, a frame rate $f$, and a pixel data amount $B_p$ of the pixel array circuit 710, the total amount $M \cdot B_p \cdot f$ of data that is of light intensity change events and that is read by the reading circuit 720 in the first reading mode. The parsing circuit 704 may determine, based on a quantity $N_{ev}$ of the light intensity change events and an event data amount $B_{ev}$ associated with the reading mode based on an event stream, the total amount $B_{ev} \cdot N_{ev}$ of data that is of the light intensity change events and that is read by the reading circuit 720 in the second reading mode. In some embodiments, a switching parameter may be used to adjust a relationship between the total data amounts in the two reading modes. Further, the parsing circuit 704 may determine, according to, for example, the foregoing formula (1), whether the total amount $M \cdot B_p \cdot f$ of data that is of the light intensity change events and that is read by the reading circuit 720 in the first reading mode is greater than or equal to the total data amount $B_{ev} \cdot N_{ev}$ of the light intensity change events in the second reading mode. If the data amount in the first reading mode is greater than the data amount in the second reading mode, the parsing circuit 704 determines that the reading circuit 720 has switched to the reading mode based on an event stream, and accordingly switches from the parsing mode based on a frame scanning to a parsing mode based on an event stream.

In an alternative implementation of the foregoing embodiment, the parsing circuit 704 may determine, according to the foregoing formula (2), whether the total amount $M \cdot B_p \cdot f$ of data that is of the light intensity change events and that is read by the reading circuit 720 in the first reading mode is greater than or equal to the total amount $B_{ev} \cdot N_{ev}$ of data that is of the light intensity change events and that is read by the reading circuit 720 in the second reading mode. Similarly, when determining that the total amount $M \cdot B_p \cdot f$ of data that is of light intensity change events and that is read by the reading circuit 720 in the first reading mode is greater than or equal to the total data amount $B_{ev} \cdot N_{ev}$ of the light intensity change events in the second reading mode, the parsing circuit 704 determines that the reading circuit 720 has switched to the reading mode based on an event stream, and accordingly switches from the parsing mode based on a frame to the parsing mode based on an event stream.

In some embodiments, the first reading mode is the reading mode based on an event stream and the second reading mode is the reading mode based on frame scanning. In this embodiment, the parsing circuit 704 initially parses, in a parsing mode that is based on an event stream and that corresponds to the first reading mode, the data signal obtained from the reading circuit 720. As described above, the parsing circuit 704 can directly determine, based on a quantity of first data signals provided by the reading circuit 720, the quantity $N_{ev}$ of light intensity change events generated by the pixel array circuit 710. The parsing circuit 704 may determine, based on a quantity $N_{ev}$ and an event data amount $B_{ev}$ associated with the reading mode based on an event stream, the total amount $B_{ev} \cdot N_{ev}$ of data that is of the events and that is read by the reading circuit 720 in the first reading mode. Similarly, the parsing circuit 704 may further determine, based on a quantity $M$ of pixels, a frame rate $f$, and a pixel data amount $B_p$ of the pixel array circuit, the total amount $M \cdot B_p \cdot f$ of data that is of light intensity change events and that is read by the reading circuit 720 in the second reading mode. Then, the parsing circuit 704 may determine, according to, for example, the foregoing formula (3), whether the total amount $B_{ev} \cdot N_{ev}$ of data that is of the light intensity change events and that is read in the first reading mode is greater than or equal to the total data amount $M \cdot B_p \cdot f$ of the light intensity change events in the second reading mode. Similarly, when determining that the total amount $B_{ev} \cdot N_{ev}$ of data that is of light intensity change events and that is read by the reading circuit 720 in the first reading mode is greater than or equal to the total data amount $M \cdot B_p \cdot f$ of the light intensity change events in the second reading mode, the parsing circuit 704 determines that the reading circuit 720 has switched to the reading mode based on frame scanning, and accordingly switches from the parsing mode based on an event stream to the parsing mode based on a frame.

In an alternative implementation of the foregoing embodiment, the parsing circuit 704 may determine, according to the foregoing formula (4), whether the total amount $B_{ev} \cdot N_{ev}$ of data that is of the light intensity change events and that is read by the reading circuit 720 in the first reading mode is greater than or equal to the total amount $M \cdot B_p \cdot f$ of data that is of the light intensity change events and that is read by the reading circuit 720 in the second reading mode. Similarly, when determining that the total amount $B_{ev} \cdot N_{ev}$ of data that is of light intensity change events and that is read by the reading circuit 720 in the first reading mode is greater than or equal to the total data amount $M \cdot B_p \cdot f$ of the light intensity change events in the second reading mode, the parsing circuit 704 determines that the reading circuit 720 has switched to the reading mode based on frame scanning, and accordingly switches from the parsing mode based on an event stream to the parsing mode based on frame scanning.

For reading time $t$ of events in the reading mode based on frame scanning, all events in an identical frame have identical reading time $t$ by default. When a requirement on precision of the event reading time is relatively high, reading time of each event may be further determined in the following manner. The foregoing embodiment is used as an example, in the reading mode based on frame scanning, if frequency at which the reading circuit 720 scans the pixel array circuit is $f$ Hz, a time interval for reading two adjacent frames of data is S=1/$f$, and start time of each frame is given as follows:

$$T_k = T_0 + \mathrm{k}S \quad (9)$$

$T_0$ is start time of the 1st frame, and $k$ is a frame sequence number. In this case, time required for performing digital-to-analog conversion at one of $M$ pixels may be determined according to the following formula (10):

$$\Delta\mathrm{t} = \frac{S}{M} = \frac{1}{f \cdot M} \quad (10)$$

Time at which a light intensity change event is generated at an $i^{th}$ pixel in a $k^{th}$ frame may be determined according to the following formula (11):

$$T_i = T_k + \frac{i-1}{f \cdot M} \quad (11)$$

$i$ is a positive integer. If the current reading mode is a synchronous reading mode, switching to an asynchronous reading mode is performed, and data is parsed by using $B_{ev}$ bits for each event. In the foregoing embodiments, switching of the parsing mode may be implemented without explicitly switching a signal or a flag bit. For another currently known or to-be-developed future data reading mode, the parsing circuit may also parse data in a similar manner that is suitable for the data reading mode, and details are not described herein.

FIG. 10 is a possible schematic diagram in which a data amount changes with time in a single data reading mode and an adaptively switched reading mode according to an embodiment of this application. The left half part of FIG. 10 is a schematic diagram of an amount that is of read data and that changes over time for a conventional vision sensor or sensor system that uses only a synchronous reading mode or an asynchronous reading mode. When only the synchronous reading mode is used, as shown by a curve 1001, since each frame has a fixed amount of data, the amount of read data remains constant over time, in other words, a data reading rate (an amount of data read in unit time) is stable. As described above, when a large quantity of events are generated in a pixel array circuit, it is more reasonable to read data signals in a reading mode based on frame scanning, and most of frame data is valid data indicating the generated events, and there is little redundancy. However, when few events are generated in a pixel array circuit, there is a large amount of invalid data that indicates the generated events in one frame. In this case, if light intensity information at pixels is still represented and read based on a frame data structure, this generates redundancy, and wastes a transmission bandwidth and a storage resource.

When only the asynchronous reading mode is used, as shown by a curve 1002, an amount of read data varies with an event generation rate, and therefore a data reading rate is not fixed. When few events are generated in the pixel array circuit, bits for representing coordinate information (x, y) of a pixel, a timestamp t at which a data signal is read, and feature information f of a light intensity need to be allocated to only a small quantity of events, and a total amount of data to be read is small. In this case, it is reasonable to use the asynchronous reading mode. When the large quantity of events are generated in the pixel array circuit in short time, a large quantity of bits for representing these events need to be allocated. However, pixel coordinates are almost adjacent and data signals are read at almost the same time. That is, there is a large amount of duplicate data in read event data. Consequently, a redundancy problem also exists in the asynchronous reading mode. In this case, the data reading rate even exceeds the data reading rate in the synchronous reading mode, and it is unreasonable to still use the asynchronous reading mode.

A right half part of FIG. 10 is a possible schematic diagram in which a data amount changes with time in an adaptively data reading mode according to an embodiment of this application. The adaptive data reading mode may be implemented by using the vision sensor 200 shown in FIG. 4-a, the vision sensor 300 shown in FIG. 4-b, or the electronic device shown in FIG. 9, or a conventional vision sensor or sensor system may implement the adaptive data reading mode by using the control circuit shown in FIG. 8. For ease of description, features of the adaptive data reading mode are described below with reference to the vision sensor 200 shown in FIG. 4-a. As shown by a curve 1003, the vision sensor 200 selects, for example, an asynchronous reading mode in an initialization state. Because a quantity $B_{ev}$ of bits used to represent each event in this mode is predetermined (where for example, $B_{ev}=b_x+b_y+b_t+b_f$). As events are generated and read, the vision sensor 200 may collect statistics on a data reading rate in the current mode. In addition, a quantity $B_p$ of bits for representing each pixel of each frame in the synchronous reading mode is also predetermined, so that the data reading rate in the synchronous reading mode in this time period can be obtained through calculation. The vision sensor 200 may then determine whether a relationship between the data rates in the two reading modes satisfies a mode switching condition. For example, the vision sensor 200 may compare, based on a predefined threshold, which of the two reading modes has a smaller data reading rate. Once it is determined that the mode switching condition is met, the vision sensor 200 switches to another reading mode, for example, switches from the initial asynchronous reading mode to the synchronous reading mode. The foregoing steps are continuously performed in a process of reading and parsing data signals, until all data is output. As shown by the curve 1003, the vision sensor 200 adaptively selects an optimal reading mode in an entire data reading process, and the two reading modes alternately occur, so that the data reading rate of the vision sensor 200 always does not exceed the data reading rate of the synchronous reading mode. Therefore, costs of data transmission, parsing, and storage of the vision sensor are reduced.

In addition, according to the adaptive data reading manner provided in embodiments of this application, the visual sensor 200 may collect statistics on historical data of events to predict a possible event generation rate in a next time period. Therefore, a reading mode that is more suitable for an application scenario and a movement state can be selected.

According to the foregoing solution, the vision sensor can adaptively switch between a plurality of data reading modes, so that the data reading rate always does not exceed a predetermined data reading rate threshold, thereby reducing costs of data transmission, parsing, and storage of the vision sensor, and significantly improving performance of the sensor. In addition, such the vision sensor may collect statistics on data of events generated in a time period to predict a possible event generation rate in a next time period, so that a reading mode that is more suitable for a current external environment, application scenario, and movement state can be selected.

As described above, the pixel array circuit may be configured to measure the light intensity variation and generate the plurality of data signals corresponding to the plurality of pixels. The data signal may indicate that a light intensity polarity, an absolute light intensity value, a change value of a light intensity, and the like are included, but these are not limited. The following describes in detail a case in which the pixel array circuit outputs the data signal.

FIG. 11 is a schematic diagram of a pixel circuit 900 according to this application. Each of the pixel array circuit 210, the pixel array circuit 310, and the pixel array circuit 710 may include one or more pixel arrays, and each pixel array includes a plurality of pixels. Each pixel may be considered as one pixel circuit, and each pixel circuit is configured to generate a data signal corresponding to the pixel. FIG. 11 is a schematic diagram of a pixel circuit according to an embodiment of this application. In this application, one pixel circuit is sometimes referred to as one pixel for short. As shown in FIG. 11, the pixel circuit in this application includes a light intensity detection unit 901, a threshold comparison unit 902, a readout control unit 903, and a light intensity capturing unit 904.

The light intensity detection unit 901 is configured to convert an obtained optical signal into a first electrical signal. The light intensity detection unit 901 may monitor, in real time, light intensity information irradiated on the pixel circuit, convert the obtained optical signal into the electrical signal in real time, and output the electrical signal. In some possible embodiments, the light intensity detection unit 901 may convert the obtained optical signal into a voltage signal. A specific structure of the light intensity detection unit is not limited in this application. A structure that can convert an optical signal into an electrical signal may be used in embodiments of this application. For example, the light intensity detection unit may include a photodiode and a transistor. An anode of the photodiode is grounded, a cathode of the photodiode is connected to a source of the transistor, and a drain and a gate of the transistor are connected to a power supply.

The threshold comparison unit 902 is configured to determine whether the first electrical signal is greater than a first target threshold, or whether the first electrical signal is less than a second target threshold. When the first electrical signal is greater than the first target threshold, or the first electrical signal is less than the second target threshold, the threshold comparison unit 902 outputs a first data signal, where the first data signal indicates that there is a light intensity conversion event at the pixel. The threshold comparison unit 902 is configured to compare whether a difference between a current light intensity and a light intensity used when a previous event is generated exceeds a predetermined threshold, which may be understood with reference to Formula 1-1. The first target threshold may be understood as a sum of a first predetermined threshold and a second electrical signal, and the second target threshold may be understood as a sum of a second predetermined threshold and the second electrical signal. The second electrical signal is an electrical signal output by the light intensity detection unit 901 when the previous event occurs. The threshold comparison unit in embodiments of this application may be implemented by hardware, or may be implemented by software. This is not limited in embodiments of this application. Types of first data signals output by the threshold comparison unit 902 may be different. In some possible embodiments, the first data signal includes polarity information, for example, +1 or -1, indicating light intensity enhancement or light intensity reduction. In some possible embodiments, the first data signal may be an activation signal, and indicates the readout control unit 903 to control the light intensity capturing unit 904 to collect the first electrical signal and buffer the first electrical signal. When the first data signal is an activation signal, the first data signal may also be polarity information. When obtaining the first data signal, the readout control unit 903 controls the light intensity capturing unit 904 to collect the first electrical signal.

The reading control unit 903 is further configured to: indicate the reading circuit to read the first electrical signal stored in the light intensity capturing unit 904; or indicate the reading circuit to read the first data signal output by the threshold comparing unit 902, where the first data signal is polarity information.

The reading circuit 905 may be configured to scan pixels in the pixel array circuit in a predetermined order to read data signals generated at the corresponding pixels. In some possible embodiments, for the reading circuit 905, refer to the reading circuit 220, the reading circuit 320, and the reading circuit 720 for understanding. To be specific, the reading circuit 905 is configured to be capable of reading, in more than one signal reading mode, the data signal output by the pixel circuit. For example, the reading circuit 905 may perform reading in one of a first reading mode and a second reading mode, where the first reading mode corresponds to one of a reading mode based on frame scanning and a reading mode based on an event stream, and the second reading mode corresponds to the other mode. In some possible embodiments, the reading circuit 905 may also read, in only one signal reading mode, the data signal output by the pixel circuit. For example, the reading circuit 905 is configured to read, in only the reading mode based on frame scanning, the data signal output by the pixel circuit. Alternatively, the reading circuit 905 is configured to read, in only the reading mode based on an event stream, the data signal output by the pixel circuit. In the embodiment corresponding to FIG. 11, the data signal read by the reading circuit 905 is represented in different manners. To be specific, in some possible embodiments, the data signal read by the reading circuit is represented based on polarity information. For example, the reading circuit may read polarity information output by the threshold comparison unit. In some possible embodiments, the data signal read by the reading circuit may be represented based on light intensity information. For example, the reading circuit may read an electrical signal buffered by the light intensity capturing unit.

Refer to FIG. 11-a. An example in which a data signal output by a pixel circuit is read in a reading mode based on an event stream is used to describe an event represented based on light intensity information and an event represented based on polarity information. As shown in an upper half part of FIG. 11-a, a black dot indicates a pixel at which a light intensity change event is generated. FIG. 11-a includes eight events in total. The first five events are represented based on light intensity information, and the last three events are represented based on polarity information. As shown in a lower half part of FIG. 11-a, both the event represented based on light intensity information and the event represented based on polarity information need to include coordinate information (x, y) and time information t. A difference lies in that, in the event represented based on light intensity information, feature information m of a light intensity is light intensity information a; in the event represented based on polarity information, feature information m of a light intensity is polarity information p. A difference between the light intensity information and the polarity information has been described above, and is not described herein again. It is only emphasized that a data amount of the event represented based on the polarity information is less than a data amount of the event represented based on the light intensity information.

How to determine which type of information is used to represent the data signal read by the reading circuit needs to be determined based on an indication sent by a control circuit, and this is described in detail below.

In some implementations, the reading circuit 905 may be configured to provide at least one read data signal for the control circuit 906. For example, the reading circuit 905 may provide the control circuit 906 with a total data amount of the data signal read in a time period, so that the control circuit 906 collect statistics of historical data and performs analysis. In one implementation, the reading circuit 905 may obtain, by collecting statistics on a quantity of light intensity change events generated by each pixel circuit 900 in the pixel array circuit over a time period, a quantity $N_{ev}$ of events generated by the pixel array circuit per second. $N_{ev}$ may be obtained in one of the reading mode based on frame scanning and the reading mode based on an event stream.

The control circuit 906 is coupled to the reading circuit 905, and is configured to control the reading circuit 906 to read, in a particular event representation manner, the data signal generated by the pixel circuit 900. In some possible embodiments, the control circuit 906 may obtain the at least one data signal from the reading circuit 905, and determine, based on at least the at least one data signal, which one of a current event representation manner and an alternative event representation manner is more suitable for a current application scenario and movement state. Further, in some embodiments, the control circuit 906 may indicate, based on the determining, the reading circuit 905 to switch from the current event representation manner to the other event representation manner.

In some possible embodiments, the control circuit 906 may send, to the reading circuit 905 based on historical statistics of light intensity change events, an indication about switching the event representation manner. For example, the control circuit 906 may determine, based on the at least one data signal received from the reading circuit 905, statistics data related to at least one light intensity change event. If the statistics data is determined to satisfy a predetermined conversion condition, the control circuit 906 sends an indication signal to the reading circuit 905 to enable the reading circuit 905 to convert a reading event format.

In some possible embodiments, it is assumed that the reading circuit 905 is configured to read, in only the reading mode based on an event stream, the data signal output by the pixel circuit, and data provided by the reading circuit 905 for the control circuit 906 is a total data amount of a quantity of events (light intensity conversion events) measured by the pixel array circuit in unit time. Assuming that the current control circuit 906 controls the reading circuit 905 to read data output by the threshold comparison unit 902, that is, the event is represented based on the polarity information, the reading circuit 905 may determine, based on a quantity $N_{ev}$ of light intensity change events and a bit width H of a data format, a total data amount $N_{ev} \times H$ of light intensity change events. The bit width of the data format is

$H=b_x+b_y+b_t+B_p$, where $B_p$ bits indicate polarity information, of a light intensity, indicated by a data signal, and are usually one bit or two bits. Because the polarity information of the light intensity is usually represented by one bit or two bits, a total data amount of the events represented based on the polarity information is certainly less than a bandwidth. To ensure that event data with higher precision can be transmitted as much as possible without exceeding a bandwidth limit, if a total data amount of the events represented based on the light intensity information is also less than or equal to the bandwidth, the event representation manner is converted to representing an event based on the light intensity information. In some embodiments, a relationship between a data amount in an event representation manner and a bandwidth K may be adjusted by using a conversion parameter. As shown in the following formula (12), the total data amount $N_{ev}\times$H of the events represented based on the light intensity information is less than or equal to the bandwidth.

$$N_{\mathrm{ev}} \times H \leq \alpha \times K \quad (12)$$

$\alpha$ is a conversion parameter for adjustment. It may be further learned from the foregoing formula (12) that if the total data amount of the events represented based on the light intensity information is less than or equal to the bandwidth, the control circuit 906 may determine that the statistics data of the light intensity change event meets a predetermined switching condition. Some possible application scenarios include a case in which a pixel collection circuit generates few events in a time period or a case in which a pixel collection circuit generates an event at a relatively low rate in a time period. In these cases, the event may be represented based on the light intensity information. The event represented based on the light intensity information may carry more information, and this facilitates subsequent processing and analysis of the event, for example, may improve image reconstruction quality.

In some implementations, assuming that the current control circuit 906 controls the reading circuit 905 to read the electrical signal buffered by the light intensity capturing unit 904, that is, the event is represented based on the light intensity information, the reading circuit 905 may determine, based on a quantity $N_{ev}$ of light intensity change events and a bit width H of a data format, a total data amount $N_{ev}\times$H of light intensity change events. When the reading mode based on an event stream is used, the bit width of the data format is $H=b_x+b_y+b_t+b_a$, and $b_a$ bits indicate light intensity information indicated by a data signal, and are usually a plurality of bits, for example, 8 bits to 12 bits. In some embodiments, a relationship between a data amount in an event representation manner and a bandwidth K may be adjusted by using a conversion parameter. As shown in the following formula (13), the total data amount $N_{ev}\times$H of events represented based on the light intensity information is greater than the bandwidth. In this case, the reading circuit 220 needs to read the data output by the threshold comparison unit 902, that is, the event representation manner is converted to representing an event based on the polarity information.

$$N_{\mathrm{ev}} \times H > \beta \times K \quad (13)$$

$\beta$ is a conversion parameter for adjustment. It can be further learned from the foregoing formula (13) that if the total data amount $N_{ev} \times$ H of the light intensity change event is greater than the threshold data amount $\beta \times K$, it indicates that the total data amount of the light intensity change event represented based on the light intensity information is greater than or equal to the bandwidth, and the control circuit 905 may determine that the statistics data of the light intensity change event meets the predetermined conversion condition. Some possible application scenarios include a case in which a large quantity of events are generated by the pixel collection circuit in a time period, or a case in which an event is generated by the pixel collection circuit at a relatively high rate in a time period. In these cases, if the event continues to be represented based on the light intensity information, an event loss may occur. Therefore, the event can be represented based on the polarity information, and this relieves pressure on data transmission and reduces data loss.

In some implementations, the data provided by the reading circuit 905 for the control circuit 906 is the quantity $N_{ev}$ of events measured by the pixel array circuit in unit time. In some possible embodiments, assuming that the current control circuit 906 controls the reading circuit 905 to read the data output by the threshold comparison unit 902, that is, the event is represented based on the polarity information, the control circuit may determine a relationship between the quantity $N_{ev}$ of light intensity change events and $\frac{\alpha K}{H}$, and determine whether the predetermined conversion condition is met. If $N_{ev}$ is less than or equal to $\frac{\alpha K}{H}$, the reading circuit 220 needs to read the electrical signal buffered in the light intensity capturing unit 904, that is, the event representation manner is converted to representing an event based on the light intensity information. In this way, the current representing an event based on the polarity information is converted to representing an event based on the light intensity information. For example, in the foregoing embodiment, the following formula (14) may be further obtained based on formula (12):

$$N_{\text{ev}} \leq \frac{\alpha K}{H} \ (14)$$

In some implementations, assuming that the current control circuit 906 controls the reading circuit 905 to read the electrical signal buffered by the light intensity capturing unit 904, that is, the event is represented based on the light intensity information, the control circuit 906 may determine, based on the relationship between the quantity $N_{ev}$ of light intensity change events and $\frac{\beta K}{H}$, whether the predetermined conversion condition is met. *If $N_{ev}$ is greater than* $\frac{\beta K}{H}$, the reading circuit 220 needs to read the signal output from the threshold comparison unit 902, that is, the event representation manner is converted to representing an event based on the polarity information. In this way, the current representing an event based on the light intensity information is converted to representing an event based on the polarity information. For example, in the foregoing embodiment, the following formula (15) may be further obtained based on formula (12):

$$N_{\text{ev}} > \frac{\beta K}{H} \ (15)$$

In some possible embodiments, it is assumed that the reading circuit 905 is configured to read, in only the reading mode based on frame scanning, the data signal output by the pixel circuit, and data provided by the reading circuit 905 for the control circuit 906 is a total data amount of a quantity of events (light intensity conversion events) measured by the pixel array circuit in unit time. When the reading mode based on frame scanning is used, the bit width H of the data format is H=$B_p$, where $B_p$ is a pixel data amount (such as a quantity of bits) allocated to each pixel in the reading mode based on frame scanning. When the event is represented based on the polarity information, $B_p$ is usually one bit or two bits; when the event is represented based on the light intensity information, $B_p$ is usually 8 to 12 bits. The reading circuit 905 may determine a total data amount $M \times H$ of the light intensity change event, where M represents a total quantity of pixels. It is assumed that the current control circuit 906 controls the reading circuit 905 to read the data output by the threshold comparison unit 902, that is, the event is represented based on the polarity information. A total data amount of the events represented based on the polarity information is certainly less than a bandwidth. To ensure that event data with higher precision can be transmitted as much as possible without exceeding the bandwidth limit, if a total data amount of the events represented based on the light intensity information is also less than or equal to the bandwidth, the event representation manner is converted to representing an event based on the light intensity information. In some embodiments, a relationship between a data amount in an event representation manner and a bandwidth K may be adjusted by using a conversion parameter. As shown in the following formula (16), the total data amount $N_{ev} \times H$ of events represented based on the light intensity information is less than or equal to the bandwidth.

$$M \times H \leq \alpha \times K \ (16)$$

In some implementations, assuming that the current control circuit 906 controls the reading circuit 905 to read the electrical signal buffered by the light intensity capturing unit 904, that is, the event is represented based on the light intensity information, the reading circuit 905 may determine the total data amount $M \times H$ of the light intensity change event. In some embodiments, a relationship between a data amount in an event representation manner and a bandwidth K can be adjusted by using a conversion parameter. As shown in the following formula (17), the total data amount $M \times H$ of the event represented based on the light intensity information is greater than the bandwidth. In this case, the reading circuit 220 needs to read the data output by the threshold comparison unit 902, that is, the event representation manner is converted to representing an event based on the polarity information.

$$M \times H > \alpha \times K \ (17)$$

In some possible embodiments, it is assumed that the reading circuit 905 is configured to perform reading in one of the first reading mode and the second reading mode, where the first reading mode corresponds to one of the reading mode based on frame scanning and the reading mode based on an event stream, and the second reading mode corresponds to the other mode. For example, the following uses a combination mode of a case in which the reading circuit 905 currently reads, in the reading mode based on an event stream, the data signal output by the pixel circuit, and a case in which the control circuit 906 controls the reading circuit 905 to read the data output by the threshold comparison unit 902, that is, the event is represented based on the polarity information, to describe how the control circuit determines whether the switching condition is met.

In an initial state, any reading mode may be selected. For example, the reading mode based on frame scanning may be selected, or the reading mode based on an event stream may be selected. In addition, in the initial state, any event representation manner may be selected. For example, the control circuit 906 controls the reading circuit 905 to read the electrical signal buffered by the light intensity capturing unit 904, that is, the event is represented based on the light intensity information. Alternatively, the control circuit 906 controls the reading circuit 905 to read the data output by the threshold comparison unit 902, that is, the event is represented based on the polarity information. It is assumed that the reading circuit 905 currently reads, in the reading mode based on an event stream, the data signal output by the pixel circuit, and the control circuit 906 controls the reading circuit 905 to read the data output by the threshold comparison unit 902, that is, the event is represented based on the polarity information. The data provided by the reading circuit 905 for the control circuit 906 may be a first total data amount of the quantity of events (light intensity conversion events) measured by the pixel array circuit in unit time. The total quantity $M$ of pixels is known, the amount $B_p$ of pixel data allocated to each pixel in the reading mode based on frame scanning is known, and the bit width H, of the data format, used when the event is represented based on the light intensity information is known. Based on the foregoing known $M$, $B_p$, and H, a second total data amount of a quantity of events measured by the pixel array circuit in unit time may be obtained in a combination mode of a case in which the data signal output by the pixel circuit is read based on the reading mode based on an event stream, and a case in which an event is represented based on the light intensity information; a third total data amount of a quantity of events measured by the pixel array circuit in unit time may be obtained in a combination mode of a case in which the data signal output by the pixel circuit is read based on the reading mode based on frame scanning, and a case in which an event is represented based on the polarity information; a fourth total data amount of a quantity of events measured by the pixel array circuit in unit time may be obtained in a combination mode of a case in which the data signal output by the pixel circuit is read based on the reading mode based on frame scanning, and a case in which an event is represented based on the light intensity information. Specific manners of calculating the second data amount, the third data amount, and the fourth data amount based on M, $B_p$, and H are described above, and details are not described herein again. Whether the switching condition is met is determined based on a relationship between the bandwidth K and the first total data amount provided by the reading circuit 905, the second total data amount obtained through calculation, the third total data amount obtained through calculation, or the fourth total amount obtained through calculation. If a current combination mode cannot ensure that event data with higher precision is transmitted as much as possible without exceeding the bandwidth limit, it is determined that the switching condition is met, and the combination mode is switched to a combination mode that can ensure that event data with higher precision is transmitted as much as possible without exceeding the bandwidth limit.

To better understand the foregoing process, the following provides descriptions with reference to a specific example.

It is assumed that the bandwidth limit is $K$, and a bandwidth adjustment factor is $\alpha$. In the reading mode based on an event stream, when an event is represented based on the polarity information, the bit width of the data format is $H=b_x+b_y+b_t+B_p$; when an event is represented based on the light intensity information, the bit width of the data format is $H=b_x+b_y+b_t+b_a$. Generally, $1 \le b_p < b_a$. For example, $b_p$ is usually one bit or two bits, and $b_a$ is usually 8 bits to 12 bits.

In the reading mode based on frame scanning, coordinates and time do not need to be represented for an event, and events are determined based on a state of each pixel. It is assumed that a data bit width allocated to each pixel is $b_{sp}$ in a polarity mode, and is $b_{sa}$ in a light intensity mode, and the total quantity of pixels is $M$. It is assumed that the bandwidth limit $K=1000$ bps, $b_x=5$ bits, $b_y=4$ bits, $b_t=10$ bits, $b_p=1$ bit, $b_a=8$ bits, $b_{sp}=1$ bit, $b_{sa}=8$ bits, the total quantity $M$ of pixels is 100, and the bandwidth adjustment factor $\alpha$ is 0.9. It is assumed that 10 events are generated at the 1st second, 15 events are generated at the 2nd second, and 30 events are generated at the 3rd second.

It is assumed that in the initial state, the reading mode based on an event stream, and the event represented in the polarity mode are used by default.

Hereinafter, the reading mode based on an event stream and the event represented based on the polarity information is referred to as an asynchronous polarity mode, the reading mode based on an event stream and the event represented based on the light intensity information is referred to as an asynchronous light intensity mode, the reading mode based on frame scanning and the event represented based on the polarity information is referred to as a synchronous polarity mode, and the reading mode based on frame scanning and the event represented based on the light intensity information is referred to as a synchronous light intensity mode.

1st second: 10 events are generated.

Asynchronous polarity mode: $N_{ev}=10$, $H=b_x+b_y+b_t+b_p=5+4+10+1=20$ bits, and an estimated data amount $N_{ev} \cdot H$ is 200 bits. $N_{ev} \cdot H < \alpha \cdot K$, and this meets the bandwidth limit.

Asynchronous light intensity mode: In this case, $H=b_x+b_y+b_t+b_a=5+4+10+8=27$ bits, and an estimated data

amount $N_{ev} \cdot H$ in the light intensity mode is 270 bits. $N_{ev} \cdot H < \alpha \cdot K$, and this still meets the bandwidth limit.

Synchronous polarity mode: $M$=100, and $H=b_{sp}$=1 bit. In this case, an estimated data amount is $M \cdot H$=100 bits. $M \cdot H < \alpha \cdot K$, and this still meets the bandwidth limit.

Synchronous light intensity mode: $M$ =100, and $H=b_{sa}$ =8 bits. In this case, an estimated data amount is $M \cdot H$=800 bits. $M \cdot H < \alpha \cdot K$, and this still meets the bandwidth limit.

In conclusion, in the asynchronous light intensity mode selected at the 1st second, light intensity information of all the 10 events is transmitted at the small data amount (270 bits) without exceeding the bandwidth limit. When the control circuit 906 determines that a current combination mode cannot ensure that event data with higher precision is transmitted as much as possible without exceeding the bandwidth limit, the control circuit 906 determines that the switching condition is met. In this case, the control circuit 906 controls to switch from the asynchronous polarity mode to the asynchronous light intensity mode. For example, the control circuit 906 sends an indication signal to indicate the reading circuit 905 to switch from the current event representation manner to another event representation manner.

2nd second: 15 events are generated.

Asynchronous polarity mode: An estimated data amount is $N_{ev} \cdot H$=15×20=300 bits, and this meets the bandwidth limit.

Asynchronous light intensity mode: An estimated data amount is $N_{ev} \cdot H$=15×27=405 bits, and this meets the bandwidth limit.

Synchronous polarity mode: An estimated data amount is $M \cdot H$=100×1=100 bits, and this meets the bandwidth limit.

Synchronous light intensity mode: An estimated data amount is $M \cdot H$=100×8=800 bits, and this meets the bandwidth limit.

In conclusion, at the 2nd second, the control circuit 906 determines that the current combination mode can ensure that event data with higher precision is transmitted as much as possible without exceeding the bandwidth limit, determines that the switching condition is not met, and still selects the asynchronous light intensity mode.

3rd second: 30 events are generated.

Asynchronous polarity mode: An estimated data amount is $N_{ev} \cdot H$=30×20=600 bits, and this meets the bandwidth limit.

Asynchronous light intensity mode: An estimated data amount is $N_{ev} \cdot H$=30×27=810 bits, and this meets the bandwidth limit.

Synchronous polarity mode: An estimated data amount is $M \cdot H$=100×1=100 bits, and this meets the bandwidth limit.

Synchronous light intensity mode: An estimated data amount is $M \cdot H$=100×8=800 bits, and this meets the bandwidth limit.

At the 3rd second, in the synchronous light intensity mode, light intensity information of all the 30 events can be transmitted at the data amount of 800 bits. At the 3rd second, using the current combination mode (asynchronous light intensity mode) cannot ensure that event data with higher precision is transmitted as much as possible without exceeding the bandwidth limit, and it is determined that the switching condition is met. In this case, the control circuit 906 controls to switch the asynchronous light intensity mode to the synchronous light intensity mode. For example, the control circuit 906 sends an indication signal to indicate the reading circuit 905 to switch from the current event reading mode to another event reading mode.

It should be understood that the formula, the conversion condition, and the related calculation method provided above are merely examples of implementations of embodiments of this application, and a conversion condition, conversion policy, and calculation method of another proper event representation manner may also be used. The scope of this application is not limited in this regard.

In some implementations, the reading circuit 905 includes a data format control unit 9051, configured to control the reading circuit to read the signal output by the threshold comparison unit 902, or read the electrical signal buffered in the light intensity capturing unit 904. For example, the following describes the data format control unit 9051 according to two implementations.

FIG. 12-a is a schematic diagram of a structure of a data format control unit in a reading circuit according to an embodiment of this application. The data format control unit may include an AND gate 951, an AND gate 954, an OR gate 953, and a NOT gate 952. An input end of the AND gate 951 is configured to receive a conversion signal sent by the control circuit 906 and polarity information output by the threshold comparison unit 902, and an input end of the AND gate 954 is configured to receive a conversion signal that is sent by the control circuit 906 and that passes through the NOT gate 952, and an electrical signal (light intensity information) output by the light intensity capturing unit 904. Output ends of the AND gate 951 and the AND gate 954 are connected to an input end of the OR gate 953, and an output end of the OR gate 953 is coupled to the control circuit 906. In a possible implementation, the conversion signal may be 0 or 1, and the data format control unit 9051 may control reading of the polarity information output by the threshold comparison unit 902, or control reading of the light intensity information output by the light intensity capturing unit 904.

For example, if the conversion signal is 0, the data format control unit 9051 may control output of the polarity information in the threshold comparison unit 902; if the conversion signal is 1, the data format control unit 9051 may control output of the light intensity information that is in the light intensity capturing unit 904. In a possible implementation, the data format control unit 9051 may be connected to the control unit 906 through a format signal cable, and receive, through the format signal cable, the conversion signal sent by the control unit 906.

It should be noted that the data format control unit shown in FIG. 12-a is merely a possible structure, and another logical structure that can implement line switching may also be used in this embodiment of this application. As shown in FIG. 12-b, a reading circuit 905 may include reading components 955 and 956. The reading component 955 and the reading component 956 may be separately implemented by using independent devices, or may be integrated into a same device. The reading component 955 may be configured to read data output by a threshold comparison unit 902, and the reading component 956 may be configured to read an electrical signal buffered by a light intensity capturing unit.

The reading circuit 905 may read, in a specific event representation manner, a data signal generated by a pixel array circuit. For example, in an example in which the control circuit may control the reading component 955 to be turned on and the reading component 956 to be turned off, the reading circuit 905 reads, at a reading interval, the data output from the threshold comparison unit 902, and the reading circuit reads an event represented based on polarity information. In an example in which the reading component 956 is turned on and the reading component 955 is turned off, the reading circuit 905 reads, by reading the electrical signal buffered in the light intensity capturing unit 904, an event represented based on light intensity information.

Then, it should be noted that, in some possible implementations, the reading circuit may further include another circuit structure, for example, may further include an analog-to-digital conversion unit, configured to convert an analog signal into a digital signal. For another example, the reading circuit may further include a statistics capturing unit, configured to collect statistics on a quantity $N_{ev}$ of events measured by the pixel array circuit in unit time. For still another example, the reading circuit may further include a calculation unit, configured to calculate a total data amount of a quantity of events (light intensity conversion events) measured by the pixel array circuit in unit time. In addition, it should be noted that the connection in this application may indicate direct connection or coupling. For example, the OR gate 953 is connected to the control circuit 906. In a possible implementation, the connection may indicate that the OR gate 953 is coupled to the control circuit 906. The OR gate 953 may be connected to an input end of the statistics capturing unit, and the control circuit 906 may be connected to an output end of the statistics capturing unit.

According to the method provided in possible embodiments of this application, the control circuit 906 continuously performs, in an entire reading and parsing process, historical statistics collection and real-time analysis on the light intensity change events generated in the pixel array circuit, and sends a conversion signal once a conversion condition is met, so that the reading circuit 905 converts from reading information that is in the threshold comparison unit 902 to reading information that is in the light intensity capturing unit 904, or the reading circuit 905 converts from reading information that is in the light intensity capturing unit 904 to reading information that is in the threshold comparison unit 902. This adaptive conversion process is repeated until all data signals are read.

FIG. 13 is a possible block diagram of a control circuit according to an embodiment of this application. The control circuit may be configured to implement the control circuit 906 and the like in FIG. 11 and FIG. 12-a. As shown in FIG. 13, the control circuit includes at least one processor 1101, at least one memory 1102 coupled to the processor 1101, and a communication mechanism 1103 coupled to the processor 1101. The memory 1102 is configured to store at least a computer program and a data signal obtained from a reading circuit. A statistical model 111 and a policy module 112 are preconfigured on the processor 1101. The control circuit may be communicatively coupled through the communication mechanism 1103 to the reading circuit 905 of the vision sensor as shown in FIG. 11 and FIG. 12-a or a reading circuit outside the vision sensor, to implement a control function on the reading circuit.

In some possible embodiments, the control circuit may be configured to control the reading circuit 905 to read, in a specific event representation manner, a plurality of data signals generated by a pixel array circuit. In addition, the control circuit may be configured to obtain the data signals from the reading circuit 905. When the control circuit controls the reading circuit 905 to read an event represented based on light intensity information, the data signal may indicate an absolute light intensity value, where the absolute light intensity value may represent a light intensity value measured at a current moment. When the control circuit controls the reading circuit 905 to read the event represented based on polarity information, the data signal may indicate a light intensity polarity or the like. For example, the light intensity polarity may indicate a trend of a light intensity change, for example, enhancement or reduction, usually expressed as +1 or -1.

The control circuit determines, based on the data signals obtained from the reading circuit, statistics data related to at least one light intensity change event. For example, the statistics data mentioned above may be a total data amount of a quantity of events (light intensity conversion events) measured by the pixel array circuit in unit time, or the statistics data may be a quantity $N_{ev}$ of events measured by the pixel array circuit in unit time. In some embodiments, the control circuit may obtain, from the reading circuit 905, data signals generated by the pixel array circuit in a time period, and store the data signals in the memory 1102 for historical statistics collection and analysis.

In some possible embodiments, the control circuit may perform, by using one or more preconfigured statistical models 111, historical statistics collection on light intensity change events that are generated in a time period by the pixel array circuit and that are provided by the reading circuit 906. The statistical model 111 may then transmit the statistics data to the policy module 112. As described above, the statistics data may indicate a quantity of light intensity change events, or may indicate a total data amount of light intensity change events. It should be understood that any proper statistical model or statistical algorithm may be applied to possible embodiments of this application, and the scope of this application is not limited in this regard.

Because the statistics data is a statistical result of a historical status of light intensity change events generated by the vision sensor in a time period, the policy module 112 can analyze and predict an event generation rate or a data amount in a next time period. The policy module 112 may be preconfigured with one or more conversion decisions. When there are a plurality of conversion decisions, the control circuit may select one of the plurality of conversion decisions for analysis and decision based on a requirement, for example, based on factors such as a type of the vision sensor, a feature of the light intensity change event, an attribute of an external environment, and a movement state.

In some embodiments, the processor may include a plurality of statistical models and policy modules corresponding to the plurality of statistical models. FIG. 14 is a block diagram of another control circuit according to an embodiment of this application. For a statistical model 1 (121), refer to the statistical model 111 corresponding to FIG. 13 for understanding. For a policy module 1 (122), refer to the policy module 112 corresponding to FIG. 13 for understanding. For a statistical model 2 (123), refer to the statistical model 606 corresponding to FIG. 8 for understanding. For a policy module 2 (124), refer to the policy module 608 corresponding to FIG. 8 for understanding. For a communication mechanism 1203, refer to the communication mechanism 1103 corresponding to FIG. 13 and the communication mechanism 612 corresponding to FIG. 8 for understanding. In these implementations, the control circuit may be configured to control the reading circuit 220 to read, in a specific data reading mode (such as a synchronous reading mode based on frame scanning or an asynchronous reading mode based on an event stream), a plurality of data signals generated by the pixel array circuit. In addition, the control circuit may be configured to obtain data signals of different representation manners from the reading circuit (for example, obtain a data signal represented based on polarity information, and a data signal represented based on light intensity information). The memory 1202 is configured to store at least a computer program and a data signal obtained from the reading circuit. The computer program stored in the memory 1202 may include a program related to switching a data reading mode and a program related to switching an event representation manner. In addition, it should be noted that the statistical model 1 and the statistical model 2 may collect statistics based on different data. For example, the statistical model 1 collects statistics based on a quantity $N_{ev}$ of events measured by the pixel array circuit in unit time, and outputs a result to a policy module 1. The statistical model 2 collects statistics based on a total data amount of the quantity of events (light intensity conversion events) measured by the pixel array circuit in unit time and outputs a result to the policy module 2. Alternatively, the statistical model 1 collects statistics based on a total data amount of a quantity of events (light intensity conversion events) measured by the pixel array circuit in unit time, and outputs a result to the policy module 1. The statistical model 2 collects statistics based on the quantity $N_{ev}$ of events measured by the pixel array circuit in unit time, and outputs a result to the policy module 2.

In some embodiments, refer to FIG. 15. A plurality of processors (such as a processor 1301 and a processor 1302) may be included. Each processor is configured to output a control policy. For a statistical model 1 (131), a policy module 1 (132), a statistical model 2 (133), and a policy module 2 (134), refer to the statistical model 1, the policy module 1, the statistical model 2, and the policy module 2 in the embodiment corresponding to FIG. 14 for understanding. Details are not described herein again. In some embodiments, refer to FIG. 15. A plurality of memories (such as a memory 1303 and a memory 1304) may be included. Each memory is configured to store a computer program related to a control policy or a data signal obtained from a reading circuit. For example, a memory 1 is configured to store a data signal obtained from the reading circuit and a program related to converting an event representation manner, and a memory 2 is configured to store a data signal obtained from the reading circuit and a program related to switching a data reading mode. For another example, one memory is configured to store a data signal obtained from a reading circuit, and the other memory is configured to store a computer program related to a control policy (this solution is not shown in the figure).

In some embodiments, only one communication mechanism may be included, or a plurality of communication mechanisms may be included. A communication mechanism 1305 and a communication mechanism 1306 in FIG. 15 may be understood as one communication mechanism, or may be understood as two different communication mechanisms. For understanding, refer to the communication mechanism 1203 and the communication mechanism 1204 corresponding to FIG. 14.

In some embodiments, if the policy module determines that statistics data meets a conversion condition, the policy module outputs, to the reading circuit, an indication of converting an event representation manner. In another embodiment, if the policy module determines that statistics data does not meet a conversion condition, the policy module does not output, to the reading circuit, an indication of converting an event representation manner. In some embodiments, the indication of converting an event representation manner may be in an explicit form as described in the foregoing embodiments, for example, in a manner in which a conversion signal is 0 or 1.

It should be understood that the control circuit is for example purposes only and does not imply any limitation on the scope of this application. Embodiments of this application may be further embodied in different control circuits. In addition, it should be further understood that the control circuit may further include other elements, modules, or entities that are not shown for clarity. However, it does not mean that embodiments of this application do not have these elements or entities. For example, the following provides a solution in which a control circuit controls, in a hardware manner, a reading circuit to read events that are in different representation manners.

FIG. 16 is a block diagram of a control circuit according to an embodiment of this application. A control circuit 1400 may be configured to implement the control circuit 906 in FIG. 11 or FIG. 12-a, or the like. As shown in FIG. 16, the control circuit 1400 may include a counter 1401 and a comparator 1402. The counter is coupled to the comparator. The counter may communicate with a reading circuit 1403 through a communication mechanism. The comparator may also communicate with the reading circuit 1403 through a communication mechanism.

The control circuit 1400 may be configured to control the reading circuit 1403 to read, in a particular event representation manner, a plurality of data signals generated by a pixel array circuit. The control circuit 1400 may obtain, via the counter 1401, the data signals transmitted by the reading circuit 1403. Each time the counter 1401 receives an event, a value of the counter is increased by 1. The counter may send a counted quantity of events to the comparator 1402, and the comparator 1402 determines, based on a conversion condition and a quantity that is of events and that is indicated by the counter, whether to output a conversion signal to the reading circuit 1403. For example, if the event is currently represented based on polarity information, the conversion condition may be understood according to formula (14). When the comparator determines that the value output by the counter is less than or equal to $\dfrac{\alpha K}{H}$, the comparator 1402 outputs the conversion signal to the reading circuit 1403, and controls the reading circuit 1403 to read an electrical signal buffered in a light intensity capturing unit. For another example, if the event is currently represented based on light intensity information, the conversion condition may be understood according to formula (15). If the comparator determines that the value output by the counter is greater than or equal to $\dfrac{\beta K}{H}$, the comparator 1402 outputs the conversion signal to the reading circuit 1403, and controls the reading circuit 1403 to read a signal output by a threshold comparison unit. Each time the comparator 1402 completes comparison, the comparator indicates the counter 1401 to reset. For the reading circuit 1403, refer to the reading circuit 905 corresponding to FIG. 11 and FIG. 12-a for understanding.

In some embodiments, a user may further be allowed to customize selection of an event representation manner. FIG. 17 is a block diagram of another control circuit 1500 according to an embodiment of this application. A fixed signal indicates a reading circuit to read a data signal in a fixed event representation manner, for example, indicates the reading circuit to read a signal (an event represented based on polarity information) output by a threshold unit, or read a signal (an event represented based on light intensity information) buffered by a light intensity capturing unit. A selector 1503 is configured to receive the fixed signal and a signal output by a comparator 1502. When receiving the fixed signal, the selector 1503 controls the reading circuit based on the indication of the fixed signal. If the selector 1503 does not receive the fixed signal, the selector 1503 controls the reading circuit based on a conversion signal output by the comparator 1502. For the counter 1501, refer to the counter 1401 in FIG. 16 for understanding. For the comparator 1502, refer to the comparator 1402 in FIG. 16 for understanding. For the reading circuit 1503, refer to the reading circuit 1403 in FIG. 16 for understanding.

FIG. 18 is a schematic diagram of differences between a single event representation manner and an adaptively converted event representation manner according to this application. As shown in FIG. 18, a single event representation manner is used. For example, a manner of representing an event based on light intensity information (where the manner is represented as a light intensity mode in FIG. 18) is used. When an amount of data that needs to be transmitted by a vision sensor exceeds a preset maximum bandwidth of the vision sensor, some data is randomly discarded. As shown by a curve 1601 in FIG. 18, when a large quantity of events are generated in a pixel array circuit, and an amount of data to be transmitted is greater than the bandwidth as shown by a dashed line part in the curve 1601, there is a case in which event data cannot be read, that is, there is a case in which data is lost. When the solution provided in this application is used, comparison for a relationship between the data amount of the event represented based on the light intensity information and the bandwidth is performed, to adjust event representation precision. When the data amount is relatively small and the amount of transmitted data does not exceed the bandwidth, the event is represented based on the light intensity information, so that sampled changing pixel brightness information may be output as much as possible, and representation precision of the event is relatively high. The light intensity information may be directly used in subsequent processing, for example, during brightness rebuilding, and no complicated processing is required. When events of a large quantity are triggered, and the data amount of the events exceeds the bandwidth, the event representation manner is switched to a manner of representing an event based on polarity information (where the manner is represented as a polarity mode in FIG. 18), and event representation precision is relatively low. Because the polarity information usually requires only one bit or two bits, the data amount can be greatly reduced, thereby relieving transmission pressure and reducing data loss. It should be noted that a manner of performing brightness rebuilding based on the polarity information may be used in embodiments of this application. For example, a method of modeling and estimation may be used. The event is generated because a brightness change is greater than a specified threshold C. When brightness at a moment before a rebuilding moment is known, brightness rebuilding may be represented according to formula 1-2 based on polarity information between the two moments and an event generation principle.

$$I(x, y, t) = I(x, y, t_{pre}) + C \times \int_{t_{pre}}^{t} e_p(x, y, t)dt \quad (1\text{-}2)$$

x and y represent row and column coordinates (coordinate information) of a pixel, and t is a timestamp (time information) of the rebuilding moment. $e_p$ represents an event currently represented based on polarity information. $I(x, y, t_{pre})$ represents brightness information at the moment before the rebuilding moment. If more accurate brightness information needs to be obtained, estimation may be performed based on spatial information and time domain information of the pixel. For example, a linear interpolation method or a double cubic interpolation method may be used. In some possible embodiments, $I(x, y, t_{pre})$ representing a previous moment of the rebuilding moment, so that a quantization error may be further reduced. It should be noted that, in a conventional technology, it is relatively difficult to perform brightness rebuilding based on the polarity information, and precision of object recognition is also poor. Different from the conventional technology, in the solution provided in this application, because conversion between an event represented based on the polarity information and an event represented based on the light intensity information is used, in a process of performing brightness rebuilding based on the polarity information, the brightness (light intensity information) at the moment before the rebuilding moment may be used. Compared with the conventional technology, this application can reduce brightness rebuilding difficulty, and improve object recognition precision. It should be noted that in this application, the light intensity information may also be referred to as brightness information, and the two have a same meaning.

To better demonstrate an advantage of the adaptively converted event representation manner, the following provides descriptions based on a specific example. It is assumed that the preset maximum bandwidth of the vision sensor is 200 bps, and $\alpha$ and $\beta$ are both set to 1. It is assumed that an initial event representation manner is representing an event based on the light intensity information, each event is represented by 8 bits, and data amounts of the pixel array circuit in 4 seconds are respectively: 30 events generated at the 1st second, 60 events generated at the 2nd second, 40 events generated at the 3rd second, 20 events generated at the 4th second, and 15 events generated at the 5th second. If the event is always represented based on the light intensity information, at the 1st second, because a generated data amount is 240 bits and is greater than the bandwidth 200 bits, only 25 events may be normally transmitted, and other events may be lost due to the limited bandwidth. At the 2nd second, for a same reason, a generated data amount is greater than the bandwidth. Due to limitation of the bandwidth, only some events are normally transmitted and some events are lost. At the 3rd second, similarly, due to limitation of the bandwidth, only some events are transmitted normally and some events are lost. At the 4th second, all the events can be transmitted normally. At the 5th second, all data amounts can be transmitted normally. When the solution of the adaptively converted event representation manner provided in this application is used, because the amount of data that needs to be transmitted at the 1st second exceeds the bandwidth, a conversion condition is met, and the event representation manner is converted to representing an event based on the polarity information. It is assumed that when the event is represented based on the polarity information, each event is represented by 2 bits. Because a quantity of bits required for representing one event based on the polarity information is less than that of representing one event based on the light intensity information, an event loss rate can be reduced by representing the event based on the polarity information. At the 2nd second, if the event is represented based on the polarity information, a total amount of data to be transmitted is less than the bandwidth; if the event is represented based on the light intensity information, the amount of data to be transmitted exceeds the bandwidth. Therefore, the event is still represented based on the polarity information, so as to reduce an event loss rate. At the 3rd second, if the event is represented based on the light intensity information, the amount of data that needs to be transmitted still exceeds the bandwidth, and therefore the event is still represented based on the polarity information, thereby reducing the event loss rate. At the 4th second, if the event is represented based on the polarity information, a total amount of data that needs to be transmitted is less than the bandwidth. In addition, if the event is represented based on the light intensity information, the amount of data that needs to be transmitted is less than the bandwidth. Therefore, the conversion condition is met, and the event representation manner is converted to representing the event based on the light intensity information, so that precision of event representation is improved, and the event can carry more information. At the 5th second, because the amount of data that needs to be transmitted is less than the bandwidth when the event is currently represented based on the light intensity information, the conversion condition is not met, and the event is still represented by using the light intensity information, so that the event can carry more information.

It can be learned from this example that when a single event representation manner is used, for example, only a manner of representing an event based on the light intensity information is used, a data loss rate is 36.4%. When the solution of the adaptively converted event representation manner provided in this application is used, when an amount of data to be transmitted is greater than the bandwidth, the event representation manner is converted to representing the event based on the polarity information, and this greatly reduces the event loss rate. In addition, the limited bandwidth is not exceeded in which the event carries more information is used as much as possible.

FIG. 19 is a possible block diagram of an electronic device according to an embodiment of this application. As shown in FIG. 19, the electronic device includes a vision sensor chip 1700, a control circuit 1701, and a parsing circuit 1702. For the control circuit 1701, refer to the control circuit 906 for understanding. It should be understood that an electronic device is used for example purposes and may be implemented with any suitable device, including various sensor devices currently known and to be developed in the future. Embodiments of this application may be further embodied in different sensor systems. In addition, it should be further understood that the electronic device may further include other elements, modules, or entities that are not shown for clarity. However, it does not mean that embodiments of this application do not have these elements, modules, or entities.

For the vision sensor chip 1700 and the control circuit 1701, refer to the vision sensor and the control circuit described in FIG. 11 to FIG. 18 for understanding. Details are not described herein again. The parsing circuit 1702 may be configured to parse a data signal read by a reading circuit that is in the vision sensor chip 1700. In a possible embodiment of this application, the parsing circuit 1702 may use a parsing mode adapted to a current event representation manner of the reading circuit that is in the vision sensor chip 1700. In an example, if the reading circuit initially reads the event represented based on the polarity information, the parsing circuit accordingly parses the event based on a quantity of bits associated with the representation manner. For example, it is predetermined that the polarity information is represented by one bit. In this case, the parsing circuit accordingly parses the event based on the one bit. When the reading circuit initially reads the event represented based on the light intensity information, the parsing circuit accordingly parses the event based on a quantity of bits associated with the representation manner. For example, it is predetermined that the light intensity information is represented by 12 bits. In this case, the parsing circuit accordingly parses the event based on the 12 bits.

In some embodiments, the parsing circuit 1702 may implement switching of the parsing mode of the parsing circuit without explicitly switching a signal or a flag bit. For example, the parsing circuit 1702 may use the same or corresponding statistical model and conversion policy as the control circuit 1701 to make same statistical analysis and consistent conversion prediction as the control circuit 1701 on the data signal provided by the reading circuit. An example in which the reading circuit reads a data signal in a reading mode based on an event stream is used for description. As described above, in the reading mode based on an event stream, each event may be represented as <x, y, t, m>, where (x, y) represents a pixel location at which the event is generated, t represents time at which the event is generated, m represents feature information of a light intensity, and m includes polarity information and light intensity information. It is assumed that x is represented by $b_x$ bits, y is represented by $b_y$ bits, t is represented by $b_t$ bits, and m is represented by one bit when representing the polarity information, or m is represented by 12 bits when representing the light intensity information. Correspondingly, if the control circuit 1701 controls the reading circuit in an initial state to read the event represented based on the polarity information, correspondingly, when the parsing circuit 1702 is in the initial state, the first $b_x$ bits obtained through parsing indicate the coordinates x of a pixel, the next $b_y$ bits indicate the coordinates y of the pixel, subsequent $b_t$ bits indicate reading time, and finally one bit is used to indicate the feature information of the light intensity. Specifically, the feature information of the light intensity is the polarity information. The parsing circuit 1702 obtains the data signal from the reading circuit and determines statistics data related to a light intensity change event. If the parsing circuit 1702 determines that the statistics data satisfies a conversion condition, the parsing circuit 1702 converts to a parsing mode corresponding to the event represented based on the light intensity information. For example, when representing an event based on the polarity information is converted to representing an event based on the light intensity information, the first $b_x$ bits obtained by the parsing circuit 1702 through parsing indicate the coordinates x of the pixel, the next $b_y$ bits indicate the coordinates y of the pixel, subsequent $b_t$ bits indicate the reading time, and finally 12 bits are used to indicate the feature information of the light intensity. Specifically, the feature information of the light intensity is the light intensity information.

In another example, if the reading circuit 905 initially reads a data signal represented based on the light intensity information, the parsing circuit 1702 is in a parsing mode corresponding to the event representation manner. For example, the first $b_x$ bits obtained through parsing indicate coordinates x of a pixel, the next $b_y$ bits indicate coordinates y of the pixel, subsequent $b_t$ bits indicate reading time, and finally, 12 bits are used to indicate feature information of a light intensity. The parsing circuit 1702 obtains the data signal from the reading circuit and determines statistics data related to a light intensity change event. If the parsing circuit 1702 determines that the statistics data satisfies a conversion condition, the parsing circuit 1702 switches to a parsing mode corresponding to the event represented based on the polarity information. For example, when representing an event based on the light intensity information is converted to representing an event based on the polarity information, the first $b_x$ bits obtained by the parsing circuit 1702 through parsing indicate the coordinates x of the pixel, the next $b_y$ bits indicate the coordinates y of the pixel, subsequent $b_t$ bits indicate the reading time, and finally one bit is used to indicate the polarity information.

In another example, if the reading circuit 905 initially reads, in a reading mode based on an event stream, a data signal output by a pixel array circuit, specifically reads a data signal represented based on the light intensity information, the parsing circuit 1702 parses, in a parsing mode corresponding to the reading mode and the event representation manner, for example, in a mode corresponding to the reading mode based on an event stream, the data signal obtained from the reading circuit 905. The first $b_x$ bits obtained through parsing indicate coordinates x of a pixel, the next $b_y$ bits indicate coordinates y of the pixel, subsequent $b_t$ bits indicate reading time, and finally 12 bits are used to indicate the light intensity information. The parsing circuit 1702 obtains the data signal from the reading circuit and determines statistics data related to a light intensity change event. If the parsing circuit 1702 determines that the statistics data satisfies a conversion condition, the parsing circuit 1702 switches to a parsing mode corresponding to the event represented based on the polarity information. For example, when representing an event based on the polarity information is converted to representing an event based on the light intensity information, the first $b_x$ bits obtained by the parsing circuit 1702 through parsing indicate the coordinates x of the pixel, the next $b_y$ bits indicate the coordinates y of the pixel, subsequent $b_t$ bits indicate the reading time, and finally one bit is used to indicate the polarity information.

In some possible embodiments, the parsing circuit 1702 obtains a data signal from the reading circuit 905, and determines, based on the data signal, which one of a current parsing mode and an alternative parsing mode corresponds to a representation manner of an event read by the reading circuit 905. Further, in some embodiments, the parsing circuit 1702 may switch from the current parsing mode to the other parsing mode based on the determining.

An embodiment of this application further provides a method for operating a vision sensor chip. FIG. 20 is a possible flowchart of a method for operating a vision sensor chip according to an embodiment of this application. The method may include the following steps.

1801: Generate, by measuring a light intensity variation, at least one data signal corresponding to a pixel that is in a pixel array circuit.

The pixel array circuit generates, by measuring the light intensity variation, the at least one data signal corresponding to the pixel that is in the pixel array circuit, where the at least one data signal indicates a light intensity change event, and the light intensity change event indicates that the light intensity variation measured at the corresponding pixel that is in the pixel array circuit exceeds a predetermined threshold. The pixel array circuit may include one or more pixel arrays, and each pixel array includes a plurality of pixels. Each pixel may be considered as one pixel circuit. For the pixel circuit, refer to the pixel circuit 900 for understanding.

1802: Read the at least one data signal from the pixel array circuit in a first event representation manner.

The reading circuit reads the at least one data signal from the pixel array circuit in the first event representation manner. For the reading circuit, refer to the reading circuit 905 for understanding.

In some possible embodiments, the first event representation manner is representing an event based on polarity information. The pixel array circuit includes a plurality of pixels. Each pixel includes a threshold comparison unit. The threshold comparison unit is configured to output the polarity information when the light intensity variation exceeds the predetermined threshold. The polarity information indicates whether the light intensity variation is enhanced or reduced. The reading circuit is specifically configured to read the polarity information output by the threshold comparison unit.

In some possible embodiments, the first event representation manner is representing an event based on light intensity information. A pixel array includes a plurality of pixels, and each pixel includes a threshold comparison unit, a readout control unit, and a light intensity capturing unit.

The light intensity detection unit is configured to output an electrical signal corresponding to an optical signal irradiated on the light intensity detection unit, where the electrical signal indicates a light intensity.

The threshold comparison unit is configured to output a first signal when determining, based on the electrical signal, that the light intensity variation exceeds the predetermined threshold.

The readout control unit is configured to: in response to reception of the first signal, indicate the light intensity capturing unit to capture and buffer an electrical signal corresponding to a receiving moment of the first signal.

The reading circuit is specifically configured to read the electrical signal buffered by the light intensity capturing unit.

For the light intensity detection unit, refer to the light intensity detection unit 901 for understanding. For the threshold comparison unit, refer to the threshold comparison unit 902 for understanding. For the reading control unit, refer to the reading control unit 903 for understanding. For the light intensity capturing unit, refer to the light intensity capturing unit 904 for understanding.

1803: Provide the at least one data signal for a control circuit.

The reading circuit is further configured to provide the at least one data signal for the control circuit. For the control circuit, refer to the control circuit 906 for understanding.

1804: When receiving, from the control circuit, a conversion signal generated based on the at least one data signal, convert to reading the at least one data signal from the pixel array circuit in a second event representation manner.

The reading circuit is configured to: when receiving, from the control circuit, the conversion signal generated based on the at least one data signal, convert to reading the at least one data signal from the pixel array circuit in the second event representation manner.

In a possible embodiment, the control circuit is further configured to: determine statistics data based on the at least one data signal received by the reading circuit; and if determining that the statistics data satisfies a predetermined conversion condition, send the conversion signal to the reading circuit, where the predetermined conversion condition is determined based on a preset bandwidth of the vision sensor chip.

In a possible embodiment, when the first event representation manner is representing an event based on polarity information, and the second event representation manner is representing an event based on light intensity information, the predetermined conversion condition is that if the at least one data signal is read from the pixel array circuit in the second event representation manner, a total amount of read data is not greater than the preset bandwidth, or the predetermined conversion condition is that a quantity of the at least one data signal is not greater than a ratio of the preset bandwidth to a first bit, where the first bit is a preset bit of a data format of the data signal.

In a possible embodiment, when the first event representation manner is representing an event based on light intensity information, and the second event representation manner is representing an event based on polarity information, the predetermined conversion condition is that a total amount of data read from the pixel array circuit in the first event representation manner is greater than the preset bandwidth, or the predetermined conversion condition is that a quantity of the at least one data signal is greater than a ratio of the preset bandwidth to a first bit, where the first bit is a preset bit of a data format of the data signal. According to the adaptive event representation manner provided in this embodiment of this application, a vision sensor may collect statistics on historical data of the event to predict a possible event generation rate in a next time period. Therefore, an event representation manner that is more suitable for an application scenario and a movement state can be selected.

According to the foregoing solution, the vision sensor can adaptively switch between the two event representation manners, so that a data reading rate always does not exceed a predetermined data reading rate threshold, thereby reducing costs of data transmission, parsing, and storage of the vision sensor, and significantly improving performance of the sensor. In addition, such the vision sensor may collect statistics on data of events generated in a time period to predict a possible event generation rate in a next time period, so that a reading mode that is more suitable for a current external environment, application scenario, and movement state can be selected.

It is described above that the vision sensor can adaptively switch between the two event representation manners, where the two event representation manners include representing an event based on the polarity information and representing an event based on the light intensity information. When the adaptive event representation manner provided in this application is used, comparison for a relationship between the data amount of the event represented based on the light intensity information and the bandwidth is performed, so as to adjust expression precision of the event. When a bandwidth limit is met, all events are transmitted in an appropriate representation manner, and all the events are transmitted with as much representation precision as possible. In some implementations, the visual sensor may adaptively switch between a plurality of event representation manners, so as to better achieve an objective of transmitting all the events with greater representation precision. This is described below with reference to some specific embodiments.

FIG. 21 is a schematic diagram of a pixel circuit 1900 according to this application. Each of the pixel array circuit 210, the pixel array circuit 310, and the pixel array circuit 710 may include one or more pixel arrays, and each pixel array includes a plurality of pixels. Each pixel may be considered as one pixel circuit, and each pixel circuit is configured to generate a data signal corresponding to the pixel. FIG. 21 is a schematic diagram of another pixel circuit according to an embodiment of this application. In this application, one pixel circuit is sometimes referred to as one pixel for short. As shown in FIG. 21, the pixel circuit in this application includes a light intensity detection unit 1901, a threshold comparison unit 1902, a readout control unit 1903, and a light intensity capturing unit 1904.

The light intensity detection unit 1901 is configured to convert an obtained optical signal into a first electrical signal. For the light intensity detection unit 1901, refer to the light intensity detection unit 901 in the embodiment corresponding to FIG. 11 for understanding, and details are not described herein again.

The threshold comparison unit 1902 is configured to determine whether the first electrical signal is greater than a first target threshold, or whether the first electrical signal is less than a second target threshold. When the first electrical signal is greater than the first target threshold, or the first electrical signal is less than the second target threshold, the threshold comparison unit 1902 outputs a first data signal, where the first data signal indicates that there is a light intensity conversion event at the pixel. The threshold comparison unit 1902 is configured to compare whether a difference between a current light intensity and a light intensity used when a previous event is generated exceeds a predetermined threshold, which may be understood with reference to Formula 1-1. The first target threshold may be understood as a sum of a first predetermined threshold and a second electrical signal, and the second target threshold may be understood as a sum of a second predetermined threshold and the second electrical signal. The second electrical signal is an electrical signal output by the light intensity detection unit 901 when the previous event occurs. The threshold comparison unit in embodiments of this application may be implemented by hardware, or may be implemented by software. This is not limited in embodiments of this application.

When obtaining the first data signal, the readout control unit 1903 controls the light intensity capturing unit 1904 to collect the first electrical signal. The readout control unit 1903 is further configured to indicate the readout circuit 1905 to read a data signal output by the pixel circuit.

The reading circuit 1905 may be configured to scan pixels in the pixel array circuit in a predetermined order to read data signals generated at the corresponding pixels. In some possible embodiments, for the reading circuit 905, refer to the reading circuit 220, the reading circuit 320, and the reading circuit 720 for understanding. To be specific, the reading circuit 905 is configured to be capable of reading, in more than one signal reading mode, the data signal output by the pixel circuit. For example, the reading circuit 1905 may perform reading in one of a first reading mode and a second reading mode, where the first reading mode corresponds to one of a reading mode based on frame scanning and a reading mode based on an event stream, and the second reading mode corresponds to the other mode. In some possible embodiments, the reading circuit 1905 may also read, in only one signal reading mode, the data signal output by the pixel circuit. For example, the reading circuit 1905 is configured to read, in only the reading mode based on frame scanning, the data signal output by the pixel circuit. Alternatively, the reading circuit 1905 is configured to read, in only the reading mode based on an event stream, the data signal output by the pixel circuit.

The first encoding unit 1907 is configured to perform, based on a currently obtained bit width, encoding processing on the first electrical signal buffered by the light intensity capturing unit 1904. The reading circuit 1905 is further configured to read a data signal encoded by the first encoding unit 1907. The first encoding unit 1907 needs to be controlled by the control circuit 1906 to perform encoding processing on the first electrical signal based on the obtained bit width, and this is described in detail below.

In some implementations, the reading circuit 1905 may be configured to provide at least one read data signal to the control circuit 1906. The control circuit 1906 may control, based on the data signal obtained from the reading circuit 1905, the first encoding unit 1907 to encode the event by using a bit width.

The reading circuit 1905 may provide the control circuit 1906 with a data signal read in a time period, so that the control circuit 1906 performs inference and indicates the first encoding unit 1902 to encode the event by using a bit width. In some possible embodiments, the control circuit 1906 may obtain the at least one data signal from the reading circuit 1905, determine, based on at least the at least one data signal, whether an encoding scheme currently used by the first encoding unit 1907 is suitable for a current application scenario and movement state, and then adjust the encoding scheme of the first coding unit 1907. In some possible implementations, the first encoding unit 1907 may directly interact with the control circuit 1906 rather than perform interaction via the reading circuit. For example, the first encoding unit sends the encoded data signal to the control circuit 1906, and the control circuit 1906 determines, based on the received encoded data signal, whether the encoding scheme currently used by the first encoding unit 1907 is suitable for the current application scenario and movement state, and further adjusts the encoding scheme of the first encoding unit 1907.

In some possible embodiments, data provided by the reading circuit 1905 for the control circuit 1906 is a quantity $N_{ev}$ of events (light intensity conversion events) measured by the pixel array circuit in unit time. It is assumed that a currently used bit width representing feature information of a light intensity is Hi, to be specific, it is assumed that the control circuit 1906 controls the first encoding unit 1907 to currently use $H_1$ bits to encode feature information of a light intensity of each event (referred to as encode each event below). Assuming that the bit width of the feature information of the light intensity is encoded by using i bits as preset, and the quantity of events is encoded by using s bits as preset, the vision sensor needs to transmit bits of a quantity $N=N_{ev}\times H_1+i+s$ in total. If the quantity N of bits that need to be transmitted by the vision sensor in total is greater than or equal to a bandwidth K, the control circuit 1906 determines that the bit width of the feature information of the light intensity needs to be reduced. The control circuit calculates a quantity of bits that need to be transmitted by the vision sensor in total when the bit width of the feature information of the light intensity is $H_2$. Specifically, when $H_2$ bits are used to encode each event, the vision sensor needs to transmit bits of a quantity $N=N_{ev}\times H_2+i+s$ in total. In this case, if the quantity N of bits that need to be transmitted by the vision sensor in total is less than or equal to the bandwidth K, the control circuit 1906 controls the first encoding unit 1907 to encode each event by using $H_2$ bits, where $H_2$ is less than $H_1$.

In some possible embodiments, the data provided by the reading circuit 1905 for the control circuit 1906 may be a total data amount of the quantity of events (light intensity conversion events) measured by the pixel array circuit in unit time. For example, it is assumed that the currently used bit width of the feature information of the light intensity is Hi, and the total data amount that is of the quantity of events measured by the pixel array circuit in unit time and that is provided by the reading circuit 1905 for the control circuit 1906 is $N_{ev}\times H_1$.

As described above, when the bandwidth of the vision sensor is fixed, there is a case in which event data cannot be read. Currently, random discarding is usually used. If random discarding is used, although it can be ensured that an amount of data to be transmitted does not exceed the bandwidth, data loss is caused. In some special application scenarios (for example, self-driving), randomly discarded data may be of high importance. In the solutions described in FIG. 11 to FIG. 20, comparison for the relationship between the data amount of the event represented based on the light intensity information and the bandwidth is performed, so as to adjust the representation precision of the event, where the adjustment is implemented by adaptively switching between the two event representation manners. When the bandwidth limit is met, all the events are transmitted in an appropriate representation manner, and all the events are transmitted with as much representation precision as possible. In the solutions described in FIG. 11 to FIG. 20 and an existing solution, the bit width of the feature information of the light intensity is fixed. To resolve the problem in the conventional technology, this application further provides a solution to dynamically adjust the bit width of the feature information of the light intensity. Compared with solutions of only two event representation manners in FIG. 11 to FIG. 20, in the solution of dynamically adjusting the bit width of the feature information of the light intensity, all the events can be transmitted with higher representation precision when the bandwidth limit is met. In the solution of dynamically adjusting the bit width of the feature information of the light intensity, when an amount of data that needs to be transmitted by a vision sensor in a time period (for example, in unit time) exceeds the bandwidth, the bit width of the feature information of the light intensity is reduced, in other words, precision of event representation is reduced, until the bandwidth limit is met. When the bandwidth limit is met, a bit width that is of the feature information of the light intensity and that meets the bandwidth limit is used to encode the event (specifically, encode the feature information of the light intensity of the event). The bit width that is of the feature information of the light intensity and that meets the bandwidth limit (also referred to as a bit width, or a bit width representing the feature information of the light intensity below) may be determined in a plurality of manners. The following provides descriptions with reference to several implementations.

In some possible embodiments, an optimal bit width representing the feature information of the light intensity may be determined in a decreasing bit width manner. As shown in FIG. 22, in an initial state, the first encoding unit 1907 may first encode an event based on a maximum bit width B, and the control circuit 1906 calculates, based on the data that is in unit time and that is provided by the reading circuit 1905, whether an event generation rate exceeds the bandwidth limit. If the rate exceeds the bandwidth, quantization precision is gradually reduced, in other words, the bit width of the feature information of the light intensity is gradually reduced. For example, the bit width representing the feature information of the light intensity is adjusted to (B - 1), and it is determined that whether the event generation rate exceeds the bandwidth when the bit width is (B - 1); whether the event generation rate exceeds the bandwidth when the bit width is (B-2); and whether the event generation rate exceeds the bandwidth when the bit width is (B-n), where n is a positive integer. The control circuit 1906 compares an adjusted estimated event occurrence rate with the bandwidth. If the rate meets the bandwidth limit (in other words, is not greater than the bandwidth), the control circuit 1906 controls the first encoding unit 1907 to encode the event by using a bit width of a current level. For example, it is determined that the event generation rate does not exceed the bandwidth limit when the bit width representing the feature information of the light intensity is (B-1). In this case, the event is encoded by using (B - 1). To better understand this embodiment, an example is described below. It is assumed that the maximum bit width B is 12 bits, to be specific, it is pre-specified that a maximum of only 12 bits can be used to encode an event. It is assumed that the bandwidth is limited to 3000 bps (where a maximum of 3000 bits are allowed to be transmitted per second), in other words, the preset maximum bandwidth is 3000 bps. It is assumed that in an actual scenario, 100 events are generated at the 1st second, 300 events are generated at the 2nd second, 400 events are generated at the 3rd second, and 180 events are generated at the 4th second.

If the random discarding solution in the conventional technology is used, the following cases may occur.

1st second: 100 events are transmitted, 0 events are lost, and an event loss rate is 0. The vision sensor transmits 1200 bits in total.

2nd second: 250 events are transmitted, 50 events are lost, and an event loss rate is 16.7%. The vision sensor transmits 3000 bits in total.

3rd second: 250 events are transmitted, 150 events are lost, and an event loss rate is 37.5%. The vision sensor transmits 3000 bits in total.

4th second: 180 events are transmitted, 0 events are lost, and an event loss rate is 0. The vision sensor transmits 2160 bits in total.

In this solution, 200 events are lost, 9360 bits are transmitted in total, and a loss rate is 20.4%.

If the solution provided in this application is used, the bit width representing the feature information of the light intensity is dynamically adjusted, for example, an optimal bit width that represents the feature information of the light intensity is determined in a decreasing bit width manner, and an event loss rate can be effectively reduced. This continues to be described with reference to the foregoing example. As described above, the parameter s represents s bits used to encode a quantity of events, and the parameter i represents i bits used to encode the bit width of the feature information of the light intensity. Because the maximum bit width B is 12 bits, a size of the bit width may be represented by only

$\lceil log_2 12 \rceil = 4$ bits. Herein $\lceil \cdot \rceil$ represents rounding up. That is, a maximum value of i may be 4. In addition, it is assumed that s is 32 herein, to be specific, 32 bits are used to encode a quantity of events.

In this case, if the solution for dynamically adjusting the bit width representing the feature information of the light intensity provided in this application is used, the event loss rate can be reduced:

1st second: 100 events are generated, and calculation is first performed based on the maximum bit width B. That is, an event generation rate is 100× 12 bps, and a corresponding data amout is less than 3000 bits, and does not exceed the bandwidth limit. Besides, a quantity 100 of events (32 bits) and a size 12 of the bit width (4 bits) are to be transmitted. Then, 100 events are transmitted, each event is encoded based on 12 bits, and 32+4+100×12=1236 bits need to be transmitted in total.

2nd second: An event generation rate first calculated based on the maximum bit width of 12 bits is 300×12 bps, a corresponding data amout is greater than 3000 bits, and exceeds the bandwidth limit. If an event is still encoded based on the maximum bit width, event loss occurs. In this case, the bit width decreases, and the event generation rate calculated by a computer based 11 bits is 300×11 bps, a corresponding data amout is greater than 3000 bits, and still exceeds the bandwidth limit. In this case, the bit width continues to decrease, and the event generation rate calculated based on 10 bits is 300×10=3000 bps. Considering that 32 bits corresponding to the quantity of events and 4 bits corresponding to the size of the bit width are also to be transmitted, the bandwidth is still exceeded overall. In this case, the bit width continues to decrease, and the event generation rate calculated based on 9 bits is 300×9=2700 bps. Considering 32 bits corresponding to the quantity of events and 4 bits corresponding to the bit width, the bandwidth limit is still not exceeded. Therefore, it is determined that the optimal bit width is 9 bits. In this case, the control circuit controls the first encoding unit to encode an event by using 9 bits. In addition, the quantity 300 of events (32 bits) and the size 9 of the bit width (4 bits) are also to be transmitted. Then, 300 events are transmitted, each event is encoded based on 9 bits, and 32+4+300×9=2736 bits need to be transmitted in total.

3rd second: The event generation rate first calculated based on the maximum bit width of 12 bits is 400× 12 bps, is greater than 3000 bits, and exceeds the bandwidth limit. In this case, the bit width decreases, and the event generation rate calculated based 11 bits is 400×11 bps, a corresponding data amout is greater than 3000 bits, and still exceeds the bandwidth limit. The event generation rate calculated based on 10 bits is 400×10 bps, and a corresponding data amout is greater than 3000 bits, and still exceeds the bandwidth limit. The event generation rate calculated based on 9 bits is 400×9 bps, a corresponding data amout is greater than 3000 bits, and still exceeds the bandwidth limit. The event generation rate calculated based on 8 bits is 400×8 bps, a corresponding data amout is greater than 3000 bits, and still exceeds the bandwidth limit. The event generation rate calculated based on 7 bits is 400×7=2800 bps. Therefore, it is determined that the optimal bit width is 7 bits. In this case, the control circuit controls the first encoding unit to encode an event by using 7 bits. In addition, the quantity 400 of events (32 bits) and the size 7 of the bit width (4 bits) are to be transmitted. Then, 400 events are transmitted, each event is encoded based on 7 bits, and 32+4+400×7=2836 bits need to be transmitted in total, in other words, the event generation rate is 2836 bps.

4th second: The event generation rate first calculated based on the maximum bit width of 12 bits is 180×12=2160 bps, and does not exceed the bandwidth limit. In this case, the control circuit controls the first encoding unit to encode an event by using 12 bits. 32+4+180×12=2196 bits need to be transmitted in total.

According to the solution of dynamically adjusting the bit width representing the feature information of the light intensity provided in this application, in the foregoing example, 0 events are lost, only 9004 bits are transmitted in total, a data amount is further reduced by 3.8%, and each event can be transmitted with different precision. Compared with an amount of raw data in a solution in which event loss is not considered and each event is encoded based on 12 bits, in this solution, the data amount can be reduced by 23.4%.

In the foregoing example, the control circuit calculates the event generation rate based on the maximum bit width every second, and when the bandwidth limit is not met, the maximum bit width decreases to meet the bandwidth limit. In this way, it can be always ensured that when no event is lost, all events are transmitted with maximum representation precision. In some possible embodiments, the event generation rate may be calculated based on a current bit width every second, and when the bandwidth limit is not met, the current bit width decreases to meet the bandwidth limit, or when the bandwidth limit is met, the bandwidth may be increased when it is ensured that the bandwidth limit is met. In this way, all events are transmitted with maximum representation precision. This is further described below with reference to the foregoing example.

1st second: 100 events are generated, and calculation is first performed based on the maximum bit width B. That is, the event generation rate is 100×12 bps, and a corresponding data amout is less than 3000 bits, and does not exceed the bandwidth limit. Besides, a quantity 100 of events (32 bits) and a size 12 of the bit width (4 bits) are to be transmitted. Then, 100 events are transmitted, each event is encoded based on 12 bits, and 32+4+100×12=1236 bits need to be transmitted in total.

2nd second: The event generation rate first calculated based on the current bit width, namely, the event generation rate calculated based on the bit width of 12 bits is 300×12 bps, is greater than 3000 bits, and exceeds the bandwidth limit. If an event is still encoded based on 12 bits, event loss occurs. In this case, the bit width decreases, and the event generation rate calculated by a computer based 11 bits is 300×11 bps, is greater than 3000 bits, and still exceeds the bandwidth limit. In this case, the bit width continues to decrease, and the event generation rate calculated based on 10 bits is 300×10=3000 bps. Considering that 32 bits corresponding to the quantity of events and 4 bits corresponding to the size of the bit width are also to be transmitted, the bandwidth is still exceeded overall. In this case, the bit width continues to decrease, and the event generation rate calculated based on 9 bits is 300×9=2700 bps. Considering 32 bits corresponding to the quantity of events and 4 bits corresponding to the bit width, the bandwidth limit is still not exceeded. Therefore, it is determined that the optimal bit width is 9 bits. In this case, the control circuit controls the first encoding unit to encode an event by using 9 bits. In addition, the quantity 300 of events (32 bits) and the size 9 of the bit width (4 bits) are also to be transmitted. Then, 300 events are transmitted, each event is encoded based on 9 bits, and 32+4+300×9=2736 bits need to be transmitted in total.

3rd second: The event generation rate first calculated based on the current bit width, namely, the event generation rate calculated based on 9 bits is 400×9 bps, is greater than 3000 bits, and exceeds the bandwidth limit. The event generation rate calculated based on 8 bits is 400×8 bps, is greater than 3000 bits, and still exceeds the bandwidth limit. The event generation rate calculated based on 7 bits is 400×7=2800 bps. Therefore, it is determined that the optimal bit width is 7 bits. In this case, the control circuit controls the first encoding unit to encode an event by using 7 bits. In addition, the quantity 300 of events (32 bits) and the size 9 of the bit width (4 bits) are also to be transmitted. Then, 300 events are transmitted, each event is encoded based on 7 bits, and 32+4+400×7=2836 bps need to be transmitted in total, in other words, the event generation speed is 2836 bps.

4th second: The event generation rate first calculated based on the current bit width, namely, the event generation rate calculated based on 7 bits is 180×7 bps, and is less than 3000 bits. Considering 32 bits corresponding to the quantity of events and 4 bits corresponding to the size of the bit width that need to be transmitted, the bandwidth limit is still not exceeded overall. In this case, the bit width increases, and the event generation rate calculated based on 8 bits is 180×8 bps, is less than 3000 bits, and still does not exceed the bandwidth limit overall. In this case, the bit width continues to increase, and the event generation rate calculated based on 9 bits is 180×9 bps, is less than 3000 bits, and still does not exceed the bandwidth limit overall. In this case, the bit width continues to increase, and the event generation rate calculated based on 10 bits is 180×10 bps, is less than 3000 bits, and still does not exceed the bandwidth limit overall. In this case, the bit width continues to increase, and the event generation rate calculated based on 11 bits is 180× 11 bps, is less than 3000 bits, and still does not exceed the bandwidth limit overall. In this case, the bit width continues to increase, and the event generation rate calculated based on 12 bits is 180× 12=2160 bps, and does not exceed the bandwidth limit. Because 12 bits are already the maximum bit width, the optimal bit width is determined as 12 bits, and the control circuit controls the first encoding unit to encode an event by using 12 bits. 32+4+180×12=2196 bits need to be transmitted in total.

The bit width that represents the feature information of the light intensity and that meets the bandwidth limit can be determined by dynamically adjusting, in the bit width decreasing manner mentioned above, the bit width that represents the feature information of the light intensity, or may be determined in another manner. The following continues to provide descriptions with reference to several implementations.

In some possible embodiments, the bit width that represents the feature information of the light intensity and that meets the bandwidth limit may be further determined according to a binary search method. An example of 400 events generated at the 3rd second is used for description. First, one event is encoded based on 12 bits, and the control circuit determines that an event generation rate is 400×12 bps, and is greater than 3000 bits. Then, the event generation rate calculated based on half of 12 bits, namely, 6 bits is 400×6 bps, is less than 3000 bits, and does not exceed the bandwidth limit. In this case, the event generation rate calculated based on a midpoint, namely, 9 bits, of 12 bits and 6 bits is 400×9 bps, is greater than 3000 bits, and still exceeds the bandwidth limit. In this case, the event generation rate calculated based on a midpoint, namely, 8 bits, of 9 bits and 6 bits is 400×8 bps, is greater than 3000 bits, and still exceeds the bandwidth limit. In this case, the event generation rate calculated based on a midpoint, namely, 7 bits, of 8 bits and 6 bits is 400×7 bps, is less than 3000 bits, and is less than the bandwidth limit. Because the event generation rate corresponding to 8 bits exceeds the bandwidth limit, and both the event generation rates corresponding to 6 bits and 7 bits do not exceed the bandwidth limit, 7 bits with higher quantization precision are used to encode the event. In the above process, only five comparisons are needed, and an algorithm complexity is $O(logB)$.

In some possible embodiments, an approximate value estimation method may be used to determine the bit width that represents the feature information of the light intensity and that meets the bandwidth limit. For example, 400 events are generated in total at the 3rd second, and the bandwidth limit is 3000 bps. In this case, it may be learned, through rough calculation, that a bit width of each event cannot exceed $\lfloor 3000/400 \rfloor = 7 \ bits$, where $\lfloor \cdot \rfloor$ herein represents rounding down. The control circuit controls the first encoding unit to encode an event by using 7 bits.

In the solution of dynamically adjusting the bit width representing the feature information of the light intensity, when the generation rate of events is relatively small and does not reach the bandwidth limit, the events are quantized based on the maximum bit width, to encode the events; when the generation rate of events is relatively large, the bit width representing the feature information of the light intensity is gradually reduced to meet the bandwidth limit, and then, if the generation rate of the events becomes smaller, the bit width representing the feature information of the light intensity may be increased when the bandwidth limit is not exceeded.

In some embodiments, the pixel array may be further divided into regions, and maximum bit widths of different regions are set by using different weights to adapt to different regions of interest in a scenario. For example, a larger weight is set in a region that may include a target object, so that representation precision of an event accordingly output by the region including the target object is higher; a smaller weight is set in a background region, so that representation precision of an event accordingly output by the background region is lower. The following provides descriptions with reference to a specific embodiment.

FIG. 23 is a block diagram of another visual sensor according to this application. In the vision sensor, region division is performed on a pixel array circuit, and different regions use different encoding schemes, in other words, representation precision of events output by the different regions is different. As shown in FIG. 23, two pixel circuits are used as an example for description. It is assumed that a pixel circuit 1900 is a pixel circuit in a first region of the pixel array circuit of the vision sensor, and a pixel circuit 2100 is a pixel circuit in a second region of the pixel array circuit. The first region and the second region are two different regions in the pixel array circuit, and representation precision of time output in the first region and the second region is different.

A reading circuit 2105 may be separately configured to: read a data signal generated by the pixel circuit 1900 and a data signal generated by the pixel circuit 2100, and transmit an encoded data signal output by a first encoding unit 1907 to a control circuit 2106, and transmit an encoded data signal output by a second encoding unit 2107 to the control circuit 2106. The control circuit 2106 may separately control, based on data transmitted by the reading circuit, a quantity of bits to be used by the first encoding unit 1907 to encode an event, and a quantity of bits to be used by the second encoding unit 2107 to encode an event. That is, the control circuit 2106 may separately control representation precision of events output by the pixel circuit 1900 and the pixel circuit 2100.

For a light intensity detection unit 2101, a threshold comparison unit 2102, a reading control unit 2103, a light intensity capturing unit 2104, and a second coding unit 2107, respectively refer to a light intensity detection unit 1901, a threshold comparison unit 1902, a reading control unit 1903, a light intensity capturing unit 1904, and a first encoding unit 1907 for understanding. Details are not described herein again.

The following describes, with reference to a specific example, a case in which the control circuit controls the pixel array circuit to use different encoding schemes in different regions. FIG. 24 is a schematic diagram of region division performed on a pixel array. Refer to FIG. 24. The pixel array is divided into six regions: region A, region B, region C, region D, region E, and region F. Different weights may be set for different regions. For example, a larger weight is set for a region that may include a target object, and a smaller weight is set for a background region. For example, in FIG. 24, larger weights are set for region D, region E, and region F, and smaller weights are set for region A, region B, and region C. Specifically, the weight of region A is 0.05, the weight of region B is 0.1, the weight of region C is 0.05, the weight of region D is 0.2, the weight of region E is 0.4, and the weight of region F is 0.2. For example, if a maximum bit width is 12 bits, the maximum bit width of 12 bits is set for region E with a maximum weight. Accordingly, based on the weight of each region, a maximum bit width set for region A is 2 bits, a maximum bit width set for region B is 3 bits, a maximum bit width set for region C is 2 bits, a maximum bit width set for region D is 6 bits, and a maximum bit width set for region F is 6 bits. It should be noted that, in FIG. 24, the pixel array divided into six regions and the weight set for each region is for description purposes, and does not represent a limitation on the solution. Actually, based on a requirement, division into different quantities of regions may be performed, and different maximum bit widths may be set for different regions. A manner in which the control circuit determines an optimal bit width corresponding to each region is the same as a manner in which the control circuit determines the optimal bit width corresponding to the pixel circuit 1900. A bit width decreasing manner, a binary search method, an approximate value estimation method, and the like may be used. For example, the following provides further explanation and description in the bit width decreasing manner.

It is assumed that the bandwidth limit is 3000 bps. Because the pixel array is divided into regions, and a bandwidth allocated to each region is also different. The foregoing example is still used for description. The weight of region A is 0.05, and a bandwidth allocated to region A is $3000 \times 0.05 = 150$ bps. The weight of region B is 0.1, and a bandwidth allocated to region B is $3000 \times 0.1 = 300$ bps. The weight of region C is 0.05, and a bandwidth allocated to region C is $3000 \times 0.05 = 150$ bps. The weight of region D is 0.2, and a bandwidth allocated to region D is $3000 \times 0.2 = 600$ bps. The weight of region E is 0.4, and a bandwidth allocated to region E is $3000 \times 0.4 = 1200$ bps. The weight of region F is 0.2, and a bandwidth allocated to region F is $3000 \times 0.2 = 600$ bps. It is assumed that 50 events are generated in region A, 80 events are generated in region B, 60 events are generated in region C, 90 events are generated in region D, 100 events are generated in region E, and 80 events are generated in region F in one second.

Region A: For region A, the control circuit first determines, based on the maximum bit width 2 bits of region A, that the event generation rate is $50 \times 2$ bps and is less than 150 bps. Considering 32 bits corresponding to a quantity of events and 4 bits corresponding to a size of a bit width that need to be transmitted, the bandwidth limit is still not exceeded. Therefore, the control circuit controls an encoding unit corresponding to region A to encode an event by using two bits. For example, the pixel circuit 1900 is a pixel circuit in region A, and the control circuit 2106 controls the first encoding unit 1907 to encode an event by using two bits. $32 + 4 + 50 \times 2 = 136$ bits need to be transmitted in region A in total.

Region B: For region B, the control circuit first determines, based on the maximum bit width 3 bits of region B, that the event generation rate is 80×3 bps and is less than 300 bps. Considering 32 bits corresponding to a quantity of events and 4 bits corresponding to a size of a bit width that need to be transmitted, the bandwidth limit is still not exceeded. Therefore, the control circuit controls an encoding unit corresponding to region B to encode an event by using three bits. For example, the pixel circuit 2100 is a pixel circuit in region B, and the control circuit 2106 controls the second encoding unit 2107 to encode an event by using three bits. 32+4+80×3=276 bits need to be transmitted in region B in total.

Region C: For region C, the control circuit first determines, based on the maximum bit width 2 bits of region C, that the event generation rate is 60×2 bps and is less than 150 bps. Considering 32 bits corresponding to a quantity of events and 4 bits corresponding to a size of a bit width that need to be transmitted, the bandwidth limit is exceeded。. Therefore, the control circuit controls an encoding unit corresponding to region C to encode an event by using one bit. 32+4+60×1=96 bits need to be transmitted in region C in total.

Region D: The bandwidth is 3000×0.2=600 bps, and encoding is performed based on 6 bits. 32+4+90×6=576 bits need to be transmitted in region D in total.

Region E: The bandwidth is 3000×0.4=1200 bps. If encoding is performed based on 12 bits, the bandwidth limit is exceeded. In this case, encoding is performed based on 11 bits. 32+4+100×11=1136 bits need to be transmitted in region E in total.

Region F: The bandwidth is 3000×0.2=600 bps, and encoding is performed based on 6 bits. 32+4+80×6=516 bits need to be transmitted in region F in total.

To sum up, a total quantity of bits transmitted in one second is 2736 bits. Compared with an amount of raw data in a solution in which event loss is not considered and each event is encoded based on 12 bits, in this solution, the data amount can be reduced by 50.4%.

FIG. 25 is a possible block diagram of a control circuit according to an embodiment of this application. The control circuit may be configured to implement the control circuit 1906 and the like in FIG. 21 and FIG. 23. As shown in FIG. 25, the control circuit includes at least one processor 2301, at least one memory 2302 coupled to the processor 2301, and a communication mechanism 2303 coupled to the processor 2301. The memory 2302 is configured to store at least a computer program and a data signal obtained from a reading circuit. The control circuit may be communicatively coupled to the reading circuit 2105 of the vision sensor or a reading circuit outside the vision sensor, the first encoding unit 1907, and the second encoding unit 2109 shown in FIG. 21 and FIG. 23 through the communication mechanism 2303, to implement a control function on the reading circuit, the first encoding unit, and the second encoding unit. After reading the computer program stored in the memory 2302, the processor performs the actions performed by the control circuit described in FIG. 21 to FIG. 24.

It should be noted that the control circuit shown in FIG. 25 may further include a statistical model 231 and a policy module 232 that are preconfigured. Historical statistics collection is performed on light intensity change events that are generated by the pixel array circuit in a time period (for example, in unit time) and that are provided by the reading circuit 2105. The statistical model 231 may then transmit statistics data to the policy module 232. The statistics data may indicate a quantity of light intensity change events, or may indicate a total data amount of light intensity change events.

In some embodiments, the processor may include a plurality of statistical models and policy modules corresponding to the plurality of statistical models. For example, the control circuit shown in FIG. 25 may be combined with the control circuit shown in FIG. 8. For example, in some embodiments, the processor of the control circuit includes the statistical model 606, the policy module 608, the statistical model 231, and the policy module 232.

FIG. 26 is a possible block diagram of an electronic device according to an embodiment of this application. As shown in FIG. 26, the electronic device includes a vision sensor chip 2400, a control circuit 2401, and a parsing circuit 2402. It should be understood that an electronic device is used for example purposes and may be implemented with any suitable device, including various sensor devices currently known and to be developed in the future. Embodiments of this application may be further embodied in different sensor systems. In addition, it should be further understood that the electronic device may further include other elements, modules, or entities that are not shown for clarity. However, it does not mean that embodiments of this application do not have these elements, modules, or entities.

For the vision sensor chip 2400 and the control circuit 2401, refer to the vision sensor and the control circuit described in FIG. 21 to FIG. 25 for understanding. Details are not described herein again. The parsing circuit 2402 may be configured to parse a data signal read by a reading circuit that is in the vision sensor chip 2400. In a possible embodiment of this application, the parsing circuit 2402 may parse, by using a bit width adaptive with a bit width of a data format currently used by the vision sensor chip 2400, the data signal transmitted by the vision sensor. To better understand how the parsing circuit parses the data signal transmitted by the vision sensor chip, the following provides descriptions with reference to two specific examples.

An example is mentioned above. It is assumed that the maximum bit width B is 12 bits, the bandwidth is limited to 3000 bps (where a maximum of 3000 bits are allowed to be transmitted per second), 32 bits are used to encode the quantity of events, and 4 bits are used to encode the bit width representing the feature information of the light intensity.

The vision sensor generates 100 events at the 1st second, 300 events at the 2nd second, 400 events at the 3rd second, and 180 events at the 4th second. According to the solution provided in this application, an event is encoded by using 12 bits at the 1st second, an event is encoded by using 9 bits at the 2nd second, an event is encoded by using 7 bits at the 3rd second, and an event is encoded by using 12 bits in the 4th second. With reference to this example, the following continues to describe how the parsing circuit parses the data signal transmitted by the vision sensor chip.

The data output by the vision sensor chip may be a binary data stream. The binary data stream may include three parts, respectively representing a quantity of events, a bit width, and each encoded event. FIG. 27 is a schematic diagram of a binary data stream. The first s bits of the binary data stream output by the vision sensor chip represent the quantity of events. For example, in the foregoing example, s is 32. In this case, the parsing circuit may read the first 32 bits of the binary data stream to obtain the quantity of events through parsing. By parsing the first 32 bits of the binary data stream corresponding to the 1st second, the parsing circuit may learn, through parsing, that the quantity of events at the 1st second is 100. Then, the parsing circuit parses i bits to obtain the bit width representing the feature information of the light intensity. In the foregoing example, i is 4. By parsing the four bits at the corresponding locations of the binary data stream corresponding to the 1st second, the parsing circuit may obtain, through parsing, that the bit width representing the feature information of the light intensity at the 1st second is 12 bits, that is, one event is represented based on 12 bits at the 1st second, and then sequentially obtains, through parsing based on 12 bits, 100 events from the binary data stream corresponding to the 1st second.

Similar to the parsing process at the 1st second, by parsing the first 32 bits of a binary data stream corresponding to the 2nd second, the parsing circuit may learn, through parsing, that the quantity of events at the 2nd second is 300; then reads 4 bits to learn, through parsing, that the bit width is 9 bits; and finally sequentially obtains 300 events through parsing based on 9 bits. By parsing the first 32 bits of a binary data stream corresponding to the 3rd second, the parsing circuit may learn, through parsing, that the quantity of events at the 3rd second is 400; then reads 4 bits to learn, through parsing, that the bit width is 7 bits; and finally sequentially obtains 400 events through parsing based on 7 bits. By parsing the first 32 bits of a binary data stream corresponding to the 4th second, the parsing circuit may learn, through parsing, that the quantity of events at the 4th second is 180; then reads 4 bits to learn, through parsing, that the bit width is 12 bits; and finally sequentially obtains 180 events through parsing based on 12 bits.

In some possible embodiments, in a reading mode based on an event stream, each event is represented as <x, y, t, m>, (x, y) represents a pixel location at which the event is generated, t represents time at which the event is generated, and m represents feature information of a light intensity. It is assumed that x is represented by $b_x$ bits, y is represented by $b_y$ bits, t is represented by $b_t$ bits, and m is a bit width representing the feature information of the light intensity. Correspondingly, in an initial state, the parsing circuit may obtain, through parsing, the first $b_x$ bits that indicate the coordinates x of a pixel, next $b_y$ bits that indicate the coordinates y of the pixel, subsequent $b_t$ bits that indicate reading time, following s bits that represent a quantity of events, and the last i bits that represent the bit width representing the feature information of the light intensity. Then, the parsing circuit obtains the event through parsing based on the bit width indicated by the i bits, and specifically, obtains the feature information of the light intensity of the event through parsing.

In some possible embodiments, if different encoding schemes are used in different regions of the pixel array circuit, for each region, a data signal is parsed by using a bit width that corresponds to the region and that represents the feature information of the light intensity. An example is mentioned in FIG. 24 above, and the following continues to provide descriptions with reference to the example. For region A, the parsing circuit reads 32 bits to learn through parsing that the quantity of events is 50, and then reads 4 bits to learn through parsing that the size of the bit width is 2. Then, the parsing circuit sequentially obtains 50 events through parsing based on 2 bits for each event. For region B, the parsing circuit reads 32 bits to learn through parsing that the quantity of events is 80, and then reads 4 bits to learn through parsing that the size of the bit width is 3. Then, the parsing circuit sequentially obtains 80 events through parsing based on 3 bits for each event. For region C, the parsing circuit reads 32 bits to learn through parsing that the quantity of events is 60, and then reads 4 bits to learn through parsing that the size of the bit width is 1. Then, the parsing circuit sequentially obtains 60 events through parsing based on one bit for each event. For region D, the parsing circuit reads 32 bits to learn through parsing that the quantity of events is 90, and then reads 4 bits to learn through parsing that the size of the bit width is 6. Then, the parsing circuit sequentially obtains 90 events through parsing based on 6 bits for each event. For region E, the parsing circuit reads 32 bits to learn through parsing that the quantity of events is 100, and then reads 4 bits to learn through parsing that the size of the bit width is 11. Then, the parsing circuit sequentially obtains 100 events through parsing based on 11 bits for each event.

In a possible implementation, the parsing circuit 2400 may determine, by using the same control policy as that in the vision sensor chip 2400, a parsing mode adapted to a current event representation manner of the reading circuit. In an example, if an event is represented by R bits in an initial state of the vision sensor chip 2400, the parsing circuit accordingly parses the event based on a quantity (for example, R in the initial state) that is of bits and that is associated with the representation manner. If the vision sensor adjusts the event representation manner based on an amount of data that needs to be transmitted and a preset maximum bandwidth of the vision sensor, the parsing circuit 2400 determines, according to the same adjustment policy as that of the vision sensor, to parse the event based on the associated quantity of bits.

An embodiment of this application further provides a method for operating a vision sensor chip. FIG. 28 is a possible flowchart of a method for operating a vision sensor chip according to an embodiment of this application. The method may include the following steps.

2601: Generate, by measuring a light intensity variation, at least one data signal corresponding to a pixel that is in a pixel array circuit.

The pixel array circuit generates, by measuring the light intensity variation, the at least one data signal corresponding to the pixel that is in the pixel array circuit, where the at least one data signal indicates a light intensity change event, and the light intensity change event indicates that the light intensity variation measured at the corresponding pixel that is in the pixel array circuit exceeds a predetermined threshold.

For step 2601, refer to step 1801 in the embodiment corresponding to FIG. 20 for understanding, and details are not described herein again.

2602: Encode the at least one data signal based on a first bit, to obtain first encoded data.

A first encoding unit is configured to encode the at least one data signal based on the first bit, to obtain the first encoded data. For the first encoding unit, refer to the steps performed by the first encoding unit 1907 in FIG. 21 for understanding.

2603: When receiving a first control signal from a control circuit, encode the at least one data signal based on a second bit indicated by the first control signal, where the first control signal is determined by the control circuit based on the first encoded data.

When receiving the first control signal from the control circuit, the first encoding unit encodes the at least one data signal based on the second bit indicated by the first control signal, where the first control signal is determined by the control circuit based on the first encoded data.

For the first encoding unit, refer to the steps performed by the first encoding unit 1907 in FIG. 21 for understanding.

In some possible embodiments, the control signal is determined by the control circuit based on first encoded data and a preset bandwidth of the vision sensor chip.

In some possible embodiments, when a data amount of the first encoded data is not less than the bandwidth, the second bit indicated by the control signal is less than the first bit, so that a total data amount of the at least one data signal encoded based on the second bit is not greater than the bandwidth.

In some possible embodiments, when a data amount of the first encoded data is not greater than the bandwidth, the second bit indicated by the control signal is greater than the first bit, so that a total data amount of the at least one data signal encoded based on the second bit is not greater than the bandwidth.

In some possible embodiments, a pixel array may include Y regions, at least two of the Y regions have different maximum bits, and the maximum bit indicates a preset maximum bit for encoding at least one data signal generated in one region. The first encoding unit is specifically configured to encode, based on the first bit, at least one data signal generated in a first region, to obtain the first encoded data, where the first bit is not greater than a maximum bit of the first region, and the first region is any one of the Y regions. The first encoding unit is specifically configured to: when receiving the first control signal from the control circuit, encode, based on the second bit indicated by the first control signal, the at least one data signal generated in the first region, where the first control signal is determined by the control circuit based on the first encoded data.

In some possible embodiments, the control circuit is further configured to send the first control signal to the first encoding unit when determining that a total data amount of the at least one data signal encoded based on a third bit is greater than the bandwidth and the total data amount of the at least one data signal encoded based on the second bit is not greater than the bandwidth, where a difference between the third bit and the second bit is one bit unit. This ensures that events are encoded based on larger bits and all events are transmitted as much as possible when a bandwidth limit is met.

To transmit all events generated by the vision sensor when the bandwidth limit is met, in the foregoing solution, precision of event representation is adjusted, and all the events are transmitted with greater representation precision when the bandwidth limit is met. However, if event representation precision is reduced, in other words, a bit width representing an event is reduced, an amount of information that can be carried by the event is reduced, and this is unfavorable to event processing and analysis in some scenarios. Therefore, a manner of reducing event representation precision may not be applied to all scenarios. In other words, in some scenarios, an event needs to be represented by using a bit width of a high bit. However, as described above, although the event represented by the bit width of the high bit may carry more data, an amount of the data is also relatively large. When the preset maximum bandwidth of the vision sensor is fixed, event data may fail to be read, resulting in data loss. To resolve this problem, an embodiment of this application further provides a vision sensor that is specifically described below.

FIG. 29-a is a block diagram of another visual sensor according to this application. The vision sensor in this application may be implemented as a vision sensor chip. Details are not described herein again. As shown in FIG. 29-a, the vision sensor includes a pixel array circuit 2701 and a reading circuit 2702. The reading circuit 2702 may read a data signal output by the pixel array circuit 2701, and transmit the data signal to a third encoding unit 2703, so that the third encoding unit 2703 encodes the obtained data signal. How the third encoding unit 2703 encodes the obtained data signal is described below. The data signal encoded by the third encoding unit 2703 may be read to the outside of the vision sensor.

In some possible embodiments, the third encoding unit 2703 may be disposed inside the vision sensor. FIG. 29-b is a block diagram of another vision sensor according to an embodiment of this application. As shown in FIG. 29-b, the vision sensor 2800 further includes a third encoding unit 2703. The third encoding unit 2703 may be implemented by software, or may be implemented by hardware. This is not limited in this embodiment of this application.

In some possible embodiments, the vision sensor may further include a control circuit. FIG. 29-c is a block diagram of another vision sensor according to an embodiment of this application. As shown in FIG. 29-c, the vision sensor 2900 further includes a control circuit 2704. The control circuit 2704 may be configured to be in a mode of controlling the reading circuit 2702 to read the data signal. For example, the reading circuit 905 may perform reading in one of a first reading mode and a second reading mode, where the first reading mode corresponds to one of a reading mode based on frame scanning and a reading mode based on an event stream, and the second reading mode corresponds to the other mode. It should be noted that the control circuit 2704 may not be disposed inside the vision sensor. In addition, in some possible embodiments, the reading circuit 2704 may alternatively read, in only one signal reading mode, the data signal output by the pixel circuit. For example, the reading circuit 2704 is configured to read, in only a reading mode based on frame scanning, the data signal output by the pixel circuit. Alternatively, the reading circuit 2704 is configured to read, in only a reading mode based on an event stream, the data signal output by the pixel circuit.

As mentioned above, each pixel array circuit may include one or more pixel arrays, and each pixel array includes a plurality of pixels. Each pixel may be considered as one pixel circuit, and each pixel circuit is configured to generate a data signal corresponding to the pixel. FIG. 30 is a schematic diagram of another pixel circuit according to an embodiment of this application. The pixel circuit 3000 includes a light intensity detection unit 3001, a threshold comparison unit 3002, a readout control unit 3003, and a light intensity capturing unit 3004.

The light intensity capturing unit 3001 is configured to convert an obtained optical signal into an electrical signal. For the light intensity detection unit 3001, refer to the light intensity detection unit 901 in the embodiment corresponding to FIG. 11 for understanding, and details are not described herein again.

The threshold comparison unit 3002 is configured to determine whether a first electrical signal is greater than a first target threshold, or whether the first electrical signal is less than a second target threshold. The first electrical signal is an electrical signal currently output by the light intensity capturing unit. When the first electrical signal is greater than the first target threshold, or the first electrical signal is less than the second target threshold, the threshold comparison unit 3002 outputs polarity information, where the polarity information indicates whether a light intensity variation is enhanced or reduced. For example, the polarity information may be +1 or - 1, where +1 indicates light intensity enhancement, and -1 indicates light intensity reducing. The threshold comparison unit 3002 is configured to compare whether a difference between a current light intensity and a light intensity used when a previous event is generated exceeds a predetermined threshold, which may be understood with reference to Formula 1-1. The first target threshold may be understood as a sum of a first predetermined threshold and a second electrical signal, and the second target threshold may be understood as a sum of a second predetermined threshold and the second electrical signal. The second electrical signal is an electrical signal output by the light intensity detection unit 3001 when the previous event occurs. The threshold comparison unit in embodiments of this application may be implemented by hardware, or may be implemented by software.

When obtaining the polarity information, the readout control unit 3003 controls the light intensity capturing unit 3004 to collect the first electrical signal.

The reading control unit 3003 is further configured to: indicate the reading circuit to read the first electrical signal stored in the light intensity capturing unit 3004, and indicate the reading circuit 3005 to read the polarity information output by the threshold comparison unit 3002.

The reading circuit 3005 may be configured to scan pixels in the pixel array circuit in a predetermined order to read data signals generated at the corresponding pixels. In some possible embodiments, for the reading circuit 3005, refer to the reading circuit 220, the reading circuit 320, and the reading circuit 720 for understanding. To be specific, the reading circuit 905 is configured to be capable of reading, in more than one signal reading mode, the data signal output by the pixel circuit. For example, the reading circuit 3005 may perform reading in one of a first reading mode and a second reading mode, where the first reading mode corresponds to one of a reading mode based on frame scanning and a reading mode based on an event stream, and the second reading mode corresponds to the other mode. In some possible embodiments, the reading circuit 905 may alternatively read, in only one signal reading mode, the data signal output by the pixel circuit. For example, the reading circuit 3005 is configured to read, in only a reading mode based on frame scanning, the data signal output by the pixel circuit. Alternatively, the reading circuit 3005 is configured to read, in only a reading mode based on an event stream, the data signal output by the pixel circuit.

The third encoding unit 3007 encodes the polarity information and the differential value between the light intensity variation and the predetermined threshold based on the data signal obtained from the reading circuit 3005. The foregoing describes a working principle of a bionic vision sensor. ADVS is used as an example. By comparing the current light intensity with the light intensity used when the previous event is generated, an event is generated and output when a variation of the light intensity reaches a predetermined issuing threshold C. In other words, when the difference between the current light intensity and the light intensity used when the previous event is generated exceeds the predetermined threshold C, the DVS generates an event. In this application, the working principle of the bionic vision sensor is fully considered, and the predetermined threshold is used to reduce event representation costs. The following describes the principle thereof. An absolute light intensity L of light intensity information is encoded in an initial state (in other words, when an initial event is read out), and thereafter, if a new event is generated, only a differential value K between a light intensity variation and a predetermined threshold and polarity information need to be encoded. The principle is that the new event is generated when the light intensity variation between the light intensity of the current moment and that of the previous event reaches the predetermined threshold. Considering an impact of possible delays and noise, the light intensity variation is not completely equal to the predetermined threshold, but the differential value fluctuates around 0. Therefore, encoding and transferring the differential value significantly reduces data representation costs. In addition, to ensure decoding accuracy, the polarity information further needs to be transferred to assist in determining a change trend (namely, positive or negative) of the current light intensity compared with that of the previous event, so as to rebuild the light intensity at the current moment.

FIG. 31 is a schematic block diagram of a third encoding unit according to this application. The third encoding unit 2703 may include a storage module 271, a comparison module 272, and an encoding module 273. The storage module 271 may be configured to store a data signal obtained from the reading circuit 2702, where the data signal may include the polarity information obtained by the reading circuit 2702 from the threshold comparison unit 3002 and light intensity information obtained from the light intensity capturing unit 3004. The comparison module 272 is configured to compare a light intensity variation, to be specific, compare a difference between the currently obtained light intensity information and previously obtained light intensity information. The difference between the currently obtained light intensity information and the previously obtained light intensity information is referred to as the light intensity variation below. The comparison module 272 is further configured to determine a difference between the light intensity variation and a predetermined threshold, where a value of the predetermined threshold may be different depending on whether a light intensity indicated by the polarity information is enhanced or reduced. Hereinafter, the difference between the light intensity variation and the predetermined threshold is referred to as a differential value, which may be expressed as a differential value $K = |L - L'| - C$ according to a formual. The encoding module 273 encodes the polarity information stored in the storage module, for example, encode the polarity information by using one bit or two bits. The encoding module 273 is further configured to encode the differential value output by the comparison module. This encoding scheme is referred to as differential encoding below. In a implementation, a quantity of bits for encoding the differential value may be determined based on the predetermined threshold. For example, if the predetermined threshold is 30, the differential value is theoretically not greater than the predetermined threshold 30. Therefore, a maximum quantity of bits required for the differential value is $[log_2\ 30] = 5$ bits. In a possible implementation, the differential value may still be greater than the predetermined threshold. In this case, a remaining differential value (a difference between the differential value and the predetermined threshold) may be continuously encoded until a remaining differential value is not greater than the predetermined threshold. For example, if a differential value (referred to as a first differential value below) calculated for the first time is greater than the predetermined threshold, the first differential value may be encoded into a second differential value and the predetermined threshold, where the second differential value is a difference between the first differential value and the predetermined threshold. In this case, absolute light intensity information is represented based on the second differential value and two predetermined thresholds. In other words, the second differential value is encoded, and the predetermined threshold is encoded twice, to obtain encoded absolute light intensity information. To better understand a process of encoding the differential value in this embodiment of this application, the following provides descriptions with reference to FIG. 32 and a specific example.

It is assumed that the absolute light intensity information is represented by 10 bits, in other words, a maximum bit width representing feature information of a light intensity is 10 bits, and the predetermined threshold is 30. According to the foregoing analysis, theoretically, the differential value is less than or equal to the event issuing threshold 30, and therefore, the maximum quantity of bits required for encoding the differential value is $[log_2\ 30] = 5\ bits$ bits. If a quantity of events is 10, costs of representing the events based on the light intensity information are 10×10=100 bits. According to the encoding scheme provided in this application, event representation costs can be reduced, that is, an amount of data that needs to be transmitted is reduced. Specific descriptions are as follows: It is assumed that absolute light intensities of the 10 events to be transmitted are {80, 112, 150, 100, 65, 24, 81, 123, 170, 211}. In this case, in the initial state, the event is encoded based on the maximum bit width, and the absolute light intensity 80 of the 1st event is encoded based on 10 bits.

Starting from the 2nd event, polarity information is encoded based on one bit, and a differential value of a light intensity variation and the issuing threshold 30 is encoded based on five bits. A light intensity variation of the absolute light intensity of the 2nd event and the absolute light intensity 80 of the 1st event is |112-80|=32, and a differential value between the light intensity variation and the issuing threshold 30 is 32-30=2. Because the light intensity is enhanced compared with that of the 1st event, that is, 112>80, the polarity information is +1. In this case, the polarity information +1 is encoded by using one bit, and the differential value 2 is encoded by using five bits.

A light intensity variation of the absolute light intensity of the 3rd event and the absolute light intensity 112 of the 2nd event is |150-112|=38, a differential value between the light intensity variation and the issuing threshold is 38-30=8, and the polarity information is still +1. In this case, the polarity information +1 is encoded by using one bit, and the differential value 8 is encoded by using five bits.

A light intensity variation of the absolute light intensity of the 4th event and the absolute light intensity 150 of the 3rd event is |100-150|=50, and a differential value between the light intensity variation and the issuing threshold is 50-30=20. Because the current absolute light intensity is reduced compared with the absolute light intensity of the 3rd event, that is, 100<150, the polarity information is -1. In this case, the polarity information -1 is encoded by using one bit, and the differential value 20 is encoded by using five bits.

A light intensity variation of the absolute light intensity of the 5th event and the absolute light intensity 100 of the 4th event is |100-65|=35, and a differential value between the light intensity variation and the issuing threshold is 35-30=5. Because the current absolute light intensity is reduced compared with the absolute light intensity of the 4rd event, that is, 65<100, the polarity information is -1. In this case, the polarity information -1 is encoded by using one bit, and the differential value 5 is encoded by using five bits.

A light intensity variation of the absolute light intensity of the 6th event and the absolute light intensity 65 of the 5th event is |65-24|=41, and a differential value between the light intensity variation and the issuing threshold is 41-30=11. Because the current absolute light intensity is reduced compared with the absolute light intensity of the 5th event, that is, 24<65, the polarity information is -1. In this case, the polarity information -1 is encoded by using one bit, and the differential value 11 is encoded by using five bits.

A light intensity variation of the absolute light intensity of the 7th event and the absolute light intensity 24 of the 6th event is |81-24|=57, and a differential value between the light intensity variation and the issuing threshold is 57-30=27. Because the current absolute light intensity is enhanced compared with the absolute light intensity of the 6th event, that is, 81>24, the polarity information is +1. In this case, the polarity information +1 is encoded by using one bit, and the differential value 27 is encoded by using five bits.

A light intensity variation of the absolute light intensity of the 8th event and the absolute light intensity 81 of the 7th event is |123-81|=42, and a differential value between the light intensity variation and the issuing threshold is 42-30=12. Because the current absolute light intensity is enhanced compared with the absolute light intensity of the 7th event, that is, 123>81, the polarity information is +1. In this case, the polarity information +1 is encoded by using one bit, and the differential value 12 is encoded by using five bits.

A light intensity variation of the absolute light intensity of the 9th event and the absolute light intensity 123 of the 8th event is |170-123|=47, and a differential value between the light intensity variation and the issuing threshold is 47-30=17. Because the current absolute light intensity is enhanced compared with the absolute light intensity of the 8rd event, that is, 170>123, the polarity information is +1. In this case, the polarity information +1 is encoded by using one bit, and the differential value 17 is encoded by using five bits.

A light intensity variation of the absolute light intensity of the 10th event and the absolute light intensity 170 of the 9th event is |211-170|=41, and a differential value between the light intensity variation and the issuing threshold is 41-30=11. Because the current absolute light intensity is enhanced compared with the absolute light intensity of the 9rd event, that is, 211> 170, the polarity information is +1. In this case, the polarity information +1 is encoded by using one bit, and the differential value 11 is encoded by using five bits.

In this example, the 1st event in the initial state is encoded based on 10 bits; for the following 9 events, light intensity polarities are encoded based on one bit, and the differential values between the light intensity variations and the issuing threshold 30 are encoded based on five bits. In this case, $10+(1+5)\times9=64$ bits are encoded in total. By contrast, originally, a total of $10\times10=100$ bits are required to encode the absolute light intensities based on fixed 10 bits. In the data encoding scheme provided in this application, a data amount is reduced by at least 36%. An existing vision sensor does not consider an efficient encoding policy in event transmission and storage, and usually encodes coordinate information (x, y) of a pixel, time t at which feature information of a light intensity is read, and the feature information of the light intensity based on a fixed bit width. When the feature information of the light intensity is light intensity information, the light intensity information usually needs to be represented by a large quantity of bits. According to a DVS sampling principle, light intensity information of a current event and a subsequent event is correlated to some extents, especially considering that the predetermined threshold is determined. Such information can be used to reduce redundancy of event data and implement efficient compression. In the solution provided in this application, the foregoing data correlation is used, and the correlation is reduced through event differential encoding, thereby reducing a data amount. Specific improvement includes: After full encoding is performed in the initial state, only the polarity information and the differential value between the light intensity variation and the predetermined threshold need to be encoded in a subsequent event, so that a data amount of encoding can be effectively reduced. Full encoding means encoding an event by using a maximum bit width predefined by the vision sensor. In addition, light intensity information of a current moment may be rebuilt without loss by using light intensity information of a previous event and polarity information and a differential value that are of the previous event and that are obtained through decoding. The following describes a decoding process with reference to FIG. 33.

FIG. 33 is a possible block diagram of an electronic device according to an embodiment of this application. As shown in FIG. 33, the electronic device includes a vision sensor chip 3100 and a parsing circuit 3101. It should be understood that an electronic device is used for example purposes and may be implemented with any suitable device, including various sensor devices currently known and to be developed in the future. Embodiments of this application may be further embodied in different sensor systems. In addition, it should be further understood that the electronic device may further include other elements, modules, or entities that are not shown for clarity. However, it does not mean that embodiments of this application do not have these elements, modules, or entities.

For the vision sensor chip 3100, refer to the vision sensor described in FIG. 29-a to FIG. 32 for understanding. Details are not described herein again. The parsing circuit 3101 may be configured to parse a data signal read by a reading circuit that is in the vision sensor chip 3100. In a possible embodiment of this application, the parsing circuit 3101 may decode the polarity information and the differential value according to a preset decoding method, to obtain the light intensity information at the current moment. To better understand how the parsing circuit 3101 parses the data signal transmitted by the vision sensor chip, the following provides descriptions with reference to the foregoing example.

In the initial state, the parsing circuit 3101 decodes the obtained binary data stream, and decodes the 1st event based on the maximum bit width, to obtain the absolute light intensity at a moment corresponding to the 1st second. For example, in the foregoing example, the absolute light intensity 80 of the 1st event is obtained through decoding based on 10 bits.

In a subsequent decoding process, the polarity information is first parsed. For example, the parsing circuit 3101 reads the first one bit in the binary data stream, decodes the bit to obtain the polarity information, and decodes a differential value based on a bit width representing light intensity information in differential encoding. Then, an absolute light intensity at the current moment is rebuilt based on an absolute light intensity of the previous event of a same pixel and the predetermined threshold.

For example, for the 2nd event, a light intensity polarity is first obtained through decoding based on one bit, to obtain +1, and then the differential value 2 is obtained through decoding based on five bits. In this case, because the light intensity polarity is positive, it indicates that the light intensity of the 2nd event is enhanced compared with that of the 1st event. Therefore, the absolute light intensity of the 2nd event is calculated as 80+2+30=112, where 80 is the absolute light intensity that is of the 1st event and that is obtained through decoding, 2 is the differential value, and 30 is the event issuing threshold.

For the 3rd event, the light intensity polarity first obtained through decoding based on one bit is +1, and then the differential value obtained through decoding based on five bits is 8. In this case, the absolute light intensity of the 3rd event is rebuilt as 112+8+30=150.

For the 4th event, the light intensity polarity first obtained through decoding based on one bit is -1, and then the differential value obtained through decoding based on five bits is 20. Because the light intensity polarity is negative, it indicates that the light intensity is reduced compared with that of the 3rd event, and the absolute light intensity is rebuilt as 150-20-30=100.

For the 5th event, the light intensity polarity first obtained through decoding based on one bit is -1, and then the differential value obtained through decoding based on five bits is 5. Because the light intensity polarity is negative, it indicates that the light intensity is reduced compared with that of the 4th event, and the absolute light intensity is rebuilt as 100-5-30=65.

For the 6th event, the light intensity polarity first obtained through decoding based on one bit is -1, and then the differential value obtained through decoding based on five bits is 11. Because the light intensity polarity is negative, it indicates that the light intensity is reduced compared with that of the 5th event, and the absolute light intensity is rebuilt as 65-11-30=24.

For the 7th event, the light intensity polarity first obtained through decoding based on one bit is +1, and then the differential value obtained through decoding based on five bits is 27. Because the light intensity polarity is positive, it indicates that the light intensity is enhanced compared with that of the 6th event, and the absolute light intensity is rebuilt as 24+27+30=81.

For the 8th event, the light intensity polarity first obtained through decoding based on one bit is +1, and then the differential value obtained through decoding based on five bits is 12. Because the light intensity polarity is positive, it indicates that the light intensity is enhanced compared with that of the 7th event, and the absolute light intensity is rebuilt as 81+12+30=123.

For the 9th event, the light intensity polarity first obtained through decoding based on one bit is +1, and then the differential value obtained through decoding based on five bits is 17. Because the light intensity polarity is positive, it indicates that the light intensity is enhanced compared with that of the 8th event, and the absolute light intensity is rebuilt as 123+17+30=170.

For the 10th event, the light intensity polarity first obtained through decoding based on one bit is +1, and then the differential value obtained through decoding based on five bits is 11. Because the light intensity polarity is positive, it indicates that the light intensity is enhanced compared with that of the 9th event, and the absolute light intensity is rebuilt as 170+11+30=211.

In some possible embodiments, full encoding may be performed once at an interval of preset duration, to reduce decoding dependency and prevent bit errors. The following further uses the foregoing example as an example for further description. In the foregoing example, it is mentioned that the polarity information is encoded based on one bit, and the parsing circuit 3101 may obtain a change trend of a light intensity by reading the bit. Because in an implementation, full encoding is added, whether the parsing circuit 3101 currently uses full encoding or differential encoding further needs to be indicated. For example, two bits may indicate whether the parsing circuit 3101 uses full encoding or differential encoding. For example, when the parsing circuit 3101 obtains +1 or -1 through decoding based on the two bits, it is determined that decoding is performed in a decoding scheme corresponding to differential encoding. For example, +1 indicates that a light intensity is enhanced, and -1 indicates that a light intensity is reduced. If the parsing circuit 3101 obtains 0 through decoding based on the two bits, it is determined that decoding is performed in a decoding scheme corresponding to full encoding. The following uses an example for description. The 1st event is encoded by using 10 bits. For the 2nd event to the 7th event, polarity information is encoded by using 2 bits, and a differential value is encoded by using five bits. Because it is set that full encoding needs to be performed at the interval of preset duration, to prevent decoding dependency and a bit error, it is assumed that an interval between the 1st event and the 8th event is the preset duration. In this case, a differential encoding scheme is no longer used for the 8th event. To be specific, polarity information is no longer encoded by using 2 bits, and a differential value is no longer encoded by using five bits. Instead, full encoding is used, to be specific, the light intensity information 123 corresponding to the 8th event is represented based on 10 bits. The 9th event and the 10th event still use differential encoding, where polarity information is encoded by using 2 bits and a differential value is encoded by using five bits.

A total data amount in the foregoing encoding process is 10+(2+5)×6+(2+10)+(2+5)×2=78 bits. Compared with an original solution in which a total of 10×10=100 bits are required for encoding absolute light intensities based on fixed 10 bits, in the solution of performing full encoding at the interval of preset duration, at least 22% of the data amount can be saved.

For the foregoing solution in which full encoding is performed at the interval of preset duration, during decoding, the parsing circuit 3101 may determine, based on the polarity information, which decoding scheme needs to be used, and rebuild the light intensity at the current moment based on the differential value, the polarity information, the predetermined threshold, and the light intensity that has been obtained through decoding and that is used when the previous event is issued. The following continues to provide descriptions with reference to the foregoing example.

For the 1st event, decoding is performed based on the maximum bit width of 10 bits, to obtain the absolute light intensity at a moment corresponding to the 1st second. Then, light intensity polarities of all subsequent events are first obtained through decoding based on two bits. If the polarity information indicates that differential encoding is used, for example, if the polarity information is not 0, the differential value is obtained through decoding based on five bits. If the polarity information indicates that full encoding is used, for example, if the polarity information is 0, the light intensity information is obtained through decoding based on 10 bits.

Specifically, for the 2nd event, the light intensity polarity first obtained through decoding based on 2 bits is +1. Because the light intensity polarity is non-zero, the differential value obtained through decoding based on five bits is 2, and the absolute light intensity is rebuilt as 80+2+30=112.

For the 3rd event, the light intensity polarity obtained through decoding based on 2 bits is +1, and then the differential value obtained through decoding based on five bits is 8. In this case, the absolute light intensity of the 3rd event is rebuilt as 112+8+30=150.

For the 4th event, the light intensity polarity first obtained through decoding based on 2 bits is -1, and then the differential value obtained through decoding based on five bits is 20. Because the light intensity polarity is negative, it indicates that the light intensity is reduced compared with that of the 3rd event, and the absolute light intensity is rebuilt as 150-20-30=100.

For the 5th event, the light intensity polarity first obtained through decoding based on 2 bits is -1, and then the differential value obtained through decoding based on five bits is 5. Because the light intensity polarity is negative, it indicates that the light intensity is reduced compared with that of the 4th event, and the absolute light intensity is rebuilt as 100-5-30=65.

For the 6th event, the light intensity polarity first obtained through decoding based on 2 bits is -1, and then the differential value obtained through decoding based on five bits is 11. Because the light intensity polarity is negative, it indicates that the light intensity is reduced compared with that of the 5th event, and the absolute light intensity is rebuilt as 65-11-30=24.

For the 7th event, the light intensity polarity first obtained through decoding based on 2 bits is +1, and then the differential value obtained through decoding based on five bits is 27. Because the light intensity polarity is positive, it indicates that the light intensity is enhanced compared with that of the 6th event, and the absolute light intensity is rebuilt as 24+27+30=81.

For the 8th event, the light intensity polarity first obtained through decoding based on 2 bits is 0, which indicates that the event corresponds to full encoding. Then, the absolute light intensity obtained through decoding based on 10 bits is 123.

For the 9th event, the light intensity polarity first obtained through decoding based on 2 bits is +1, and then the differential value obtained through decoding based on five bits is 17. In this case, the absolute light intensity is rebuilt as 123+17+30=170.

For the 10th event, the light intensity polarity first obtained through decoding based on 2 bits is +1, and then the differential value obtained through decoding based on five bits is 11. In this case, the absolute light intensity is rebuilt as 170+11+30=211.

So far, decoding and light intensity rebuilding of 10 events are completed.

In the foregoing embodiments, it is assumed that a difference between the light intensity variation and the differential value is not less than 0. In some possible implementations, if a difference between the light intensity variation and the differential value is less than 0, full encoding is used. To be specific, when the difference between the light intensity variation and the differential value is less than 0, full encoding is used; when the difference between the light intensity variation and the differential value is not less than 0, differential encoding is used.

In some possible embodiments, because the vision sensor may have a specific delay, an event may be generated only when a case in which the light intensity variation is greater than the predetermined threshold is met twice or more. There may be a problem that the differential value is greater than or equal to the predetermined threshold, and the light intensity variation is at least twice over the predetermined threshold. To resolve this problem, a recursive index encoding scheme may be used, and this is described below.

The third encoding unit 2703 may first determine whether the differential value exceeds the predetermined threshold. Assuming that the differential value is less than the predetermined threshold, the third encoding unit 2703 directly encodes the differential value based on the foregoing differential encoding method. Assuming that the differential value is not less than the predetermined threshold, and a difference (the first remaining differential value) between the differential value and the predetermined threshold is M1, if the first remaining differential value M1 is less than the predetermined threshold, M1 is encoded, and the differential value is encoded. To better understand this solution, the following provides descriptions with reference to an example.

Assuming that a maximum bit width representing feature information of a light intensity is 10 bits, there are four events that need to be transmitted, absolute light intensities of the four events are {80, 150, 100, 200}, and the predetermined threshold is 30, a specific encoding process of the third encoding unit 2703 is as follows.

In the initial state, for the 1st event, the absolute light intensity 80 is encoded based on 10 bits.

For the 2nd event, the absolute light intensity of the event is 150, a light intensity variation compared with the 1st event is |150-80|=70, and polarity information is +1. A differential value between the light intensity variation and the predetermined threshold is 70-30=40, the remaining differential value exceeds the predetermined threshold 30, and the remaining differential value cannot be directly encoded. In this case, 40 subtracts 30 to obtain 10, where 10 is less than the predetermined threshold, and the remaining differential value 10 is encoded. One predetermined threshold 30 is subtracted from the differential value 40 to obtain the remaining differential value 10. In this case, one predetermined threshold 30 is encoded, and the remaining differential value 10 is encoded. That is, the polarity information +1, the predetermined threshold 30, and the remaining differential value 10 are encoded.

For the 3rd event, the absolute light intensity of the event is 100. Compared with the 2nd event, a light intensity variation is |100-150|=50, and polarity information is -1. A differential value between the light intensity variation and the predetermined threshold is 50-30=20, and 20 is less than the predetermined threshold. In this case, only the polarity information -1 and the differential value 20 are encoded.

A total data amount in the foregoing encoding process is 10+(1+5+5)+(1+5)=27 bits, and a total data amount required for encoding based on fixed 10 bits is $3 \times 10=30$ bits. In the method in this embodiment, at least 10% of the data amount can be saved.

As mentioned above, if the first remaining differential value M1 is less than the predetermined threshold, M1 is encoded, and the differential value is encoded. In addition, the first remaining differential value M1 may still be greater than the predetermined threshold. If the first remaining differential value M1 is still greater than the predetermined threshold, the third encoding unit 2703 determines to use full encoding for the event. The reason is as follows: If a difference between the first remaining differential value M1 and the predetermined threshold is further calculated until a remaining differential value is less than the predetermined threshold, where for example, a second remaining differential value M2 is less than the predetermined threshold, and M2 is obtained by subtracting n predetermined thresholds from the differential value, the predetermined threshold is encoded for n times to obtain n encoded predetermined thresholds, and M2 is encoded. In such an encoding scheme, costs of event representation may exceed costs of full encoding. Therefore, when the first remaining differential value M1 is still greater than the predetermined threshold, the third encoding unit 2703 determines to use full encoding for the events. The following uses an example for description. It is assumed that in the foregoing example, there is the 4th event, and light intensity information of the 4th event is 200. Compared with the 3rd event, a light intensity variation is |200-100|=100, and polarity information is +1. A differential value between the light intensity variation and the predetermined threshold is 100-30=70, 70 exceeds the predetermined threshold 30, the remaining differential value is not less than the predetermined threshold, and the remaining differential value cannot be encoded. In this case, 70-30=40 is calculated, and 40 still exceeds the predetermined threshold 30. Then, 40-30=10 is calculated, and 10 is less than the predetermined threshold. Two predetermined thresholds 30 are subtracted from the differential value 70 to obtain the remaining differential value 10. In this case, the two predetermined thresholds are encoded, and the remaining differential value 10 is encoded. That is, the polarity information +1, a first predetermined threshold 30, a second predetermined threshold 30, and the remaining differential value 10 are encoded. If the differential encoding scheme is still used, a total data amount in the foregoing encoding process is 10+(1+5+5)+(1+5)+(1+5+5+5)=43 bits, and an original solution requires 4×10=40 bits for encoding event data based on fixed 10 bits. Therefore, when the first remaining differential value M1 is still greater than the predetermined threshold, the third encoding unit 2703 determines to perform full encoding on the events, so that the data amount can be further reduced.

The following describes a decoding scheme corresponding to the recursive index encoding scheme. The parsing circuit 3101 decodes the obtained binary data stream, and decodes the 1st event based on the maximum bit width, to obtain the absolute light intensity at a moment corresponding to the 1st second. For example, in the foregoing example, the absolute light intensity 80 of the 1st event is obtained through decoding based on 10 bits. In a subsequent decoding process, the polarity information is first parsed. For example, the parsing circuit 3101 reads the first one bit in the binary data stream, decodes the bit to obtain the polarity information, and decodes a differential value based on a bit width representing light intensity information in differential encoding. If the differential value obtained through decoding is equal to the predetermined threshold, decoding continues based on the bit width representing the light intensity information in differential encoding, to obtain a remaining differential value. The following provides descriptions with reference to the foregoing example.

In the initial state, the absolute light intensity 80 of the 1st event is decoded based on 10 bits.

For the 2nd event, the light intensity polarity first decoded based on one bit is +1, and then the differential value decoded based on five bits is 30. It is found that the differential value is equal to the issuing threshold. In this case, the remaining differential value 10 is further decoded based on five bits. Therefore, the light intensity differential value of the 2nd event is actually 30+10=40, and the absolute light intensity is rebuilt as 80+40+30=150.

For the 3rd event, the light intensity polarity first obtained through decoding based on one bit is -1, and then the differential value obtained through decoding based on five bits is 20. In this case, the absolute light intensity is rebuilt as 150-20-30=100.

So far, decoding and light intensity rebuilding of three events are completed.

An embodiment of this application further provides a method for operating a vision sensor chip. FIG. 34 is a possible flowchart of a method for operating a vision sensor chip according to an embodiment of this application. The method may include the following steps.

3201: Generate, by measuring a light intensity variation, at least one data signal corresponding to a pixel that is in a pixel array circuit.

The pixel array circuit generates, by measuring light intensity variations, a plurality of data signals corresponding to a plurality of pixels that are in the pixel array circuit, where the plurality of data signals indicate at least one light intensity change event, and the at least one light intensity change event indicates that the light intensity variation measured at the corresponding pixel that is in the pixel array circuit exceeds a predetermined threshold.

3202: Encode a differential value based on a first preset bit width.

A third encoding unit encodes the differential value based on the first preset bit, where the differential value is a difference between the light intensity variation and the predetermined threshold. For the third encoding unit, refer to the third encoding unit 2703 for understanding, and details are not described herein again.

In some possible embodiments, the pixel array circuit includes a plurality of pixels. Each pixel includes a threshold comparison unit. The threshold comparison unit is configured to output polarity information when the light intensity variation exceeds the predetermined threshold. The polarity information indicates whether the light intensity variation is enhanced or reduced. The third encoding unit is further configured to encode the polarity information based on a second preset bit width.

In some possible embodiments, each pixel further includes a light intensity detection unit, a readout control unit, and a light intensity capturing unit. The light intensity detection unit is configured to output an electrical signal corresponding to an optical signal irradiated on the light intensity detection unit, and the electrical signal indicates a light intensity. The threshold comparison unit is specifically configured to output the polarity information when determining, based on the electrical signal, that the light intensity variation exceeds the predetermined threshold. The readout control unit is configured to: in response to reception of a polarity signal, indicate the light intensity capturing unit to capture and buffer an electrical signal corresponding to a receiving moment of the polarity information. The third encoding unit is further configured to encode a first electrical signal based on a third preset bit width, where the first electrical signal is an electrical signal that is collected and buffered by the light intensity capturing unit and that corresponds to a first receiving moment of the polarity information, and the third preset bit width is a maximum bit width that is preset by a vision sensor and that represents feature information of a light intensity.

In some possible embodiments, the third encoding unit is further configured to encode the differential value at an interval of preset duration based on the third preset bit width.

In some possible embodiments, the third encoding unit is specifically configured to: when the differential value is greater than the predetermined threshold, encode the differential value based on the first preset bit width.

In some possible embodiments, the third encoding unit is further configured to: when the differential value is not greater than the predetermined threshold, encode a remaining differential value and the predetermined threshold based on the first preset bit width, where the remaining differential value is a difference between the differential value and the predetermined threshold.

To better demonstrate that a manner of encoding a differential value can reduce a data amount required for transmitting an event, the following provides descriptions based on experimental data. A CeleX sensor is an existing vision sensor. The CeleX sensor uses an asynchronous reading mode, namely, a reading mode based on an event stream. Events transmitted by the CeleX sensor are represented based on light intensity information. Generally, the CeleX sensor uses 8-13 bits to represent the light intensity information. In other words, a maximum bit width representing feature information of a light intensity is 8 - 13 bits. In an experiment, parameters of the CeleX sensor are set to 1280×800 spatial resolution, 14 μs temporal resolution, and Fixed Event-Intensity Mode sampling mode, and the maximum bit width representing the feature information of the light intensity is set as 12 bits. Seven groups of event data collected by the CeleX sensor in the Event-Intensity mode are used for the experiment. Experimental results are shown in Table 1. Compared with direct transmission of raw data, namely, direct transmission for encoding based on 12 bits, transmission of encoded data can greatly reduce the amount of data required in transmission. In addition, compared with an existing encoding scheme in the conventional technology, in the encoding scheme provided in this application, because a correlation between the light intensity variation and the predetermined threshold is fully considered, only the differential value between the two and the polarity information are transmitted, and the light intensity at the current moment can be rebuilt. Compared with an existing encoding scheme, the data amount can also be significantly saved by a large quantity. Refer to the experimental data in Table 1. An average value of compression ratios corresponding to seven groups of data is 1.485. In the differential encoding scheme proposed in this application, an average lossless compression ratio of 1.663 times is obtained, and a data amount of about 41.1% is saved. By contrast, in the existing encoding scheme, an average compression ratio of only 1.306 times can be obtained (a data amount of about 26.6% is saved).

**Table 1**

| Total quantity of events | Data amount required for encoding based on 12 bits (unit: byte) | Data amount required for encoded data (unit: byte) | | Compression ratio (compared to the raw data) | |
|---|---|---|---|---|---|
| | | Existing encoding scheme | Encoding scheme provided in this application | Existing encoding scheme | Encoding scheme provided in this application |
| 4,993,612 | 19,992,964 | 16,534,330 | 12,583,246 | 1.209 | 1.589 |
| 74,306,962 | 263,121,541 | 191,603,470 | 140,442,213 | 1.373 | 1.874 |
| 44,804,938 | 159,586,611 | 117,769,454 | 94,024,868 | 1.355 | 1.697 |
| 38,540,362 | 141,021,727 | 98,871,275 | 89,473,037 | 1.426 | 1.576 |
| 45,384,813 | 167,083,968 | 124,805,345 | 104,025,632 | 1.339 | 1.606 |
| 3,174,240 | 16,422,794 | 13,416,735 | 11,194,303 | 1.224 | 1.467 |
| 535,520 | 3,470,925 | 2,851,842 | 1,894,238 | 1.217 | 1.832 |

In addition, it should be noted that the reading circuit outside the vision sensor may read a data signal encoded by the encoding module 273 into the outside of the vision sensor. For example, the vision sensor is assembled in an electronic device, and the electronic device may include a processor and a memory. A reading circuit of the electronic device may read the data signal encoded by the third encoding unit 3007 into the processor or the memory of the electronic device. It should be noted that, all descriptions related to encoding in this specification refer to encoding feature information of a light intensity, and encoding or another processing manner of another information row used to represent an event is not limited in this application. For example, the other information may include coordinate information (x, y) of a pixel at which the event is generated, time t at which the feature information of the light intensity is read, and the like.

The visual sensor provided in this embodiment of this application is described above. By using the solution provided in this application, the visual sensor can adaptively switch between a plurality of data reading modes, so that a data reading rate always does not exceed a predetermined data reading rate threshold. The vision sensor can also adaptively switch between two event representation manners, so that the data reading rate always does not exceed the predetermined data reading rate threshold, thereby reducing costs of data transmission, parsing, and storage of the vision sensor, and significantly improving performance of the sensor. The vision sensor provided in this application may further adjust event representation precision, and transmit all events with higher representation precision when a bandwidth limit is met. The vision sensor provided in this application may further use a manner of encoding a differential value, so that costs of data transmission, parsing, and storage of the vision sensor is reduced, and an event can be transmitted with highest precision, thereby significantly improving performance of the sensor.

The vision sensor provided in this application may be installed on any device that needs to use visual information. For example, the vision sensor provided in this application may be installed on a smartphone, a television, a tablet device, a monitoring device, a camera module, a security device, and the like.

2. Image optimization

After data collection and data encoding and decoding are performed, available data such as an RGB image, an event image, or a video may be obtained. Further, the collected data may be used for further optimization, so as to perform subsequent application. For example, the RGB image may be collected via an RGB camera, and data is encoded in the foregoing encoding and decoding scheme. When the RGB image needs to be used, the data may be decoded to obtain the available RGB image. For another example, the event image may be collected via a DVS, and the event image is stored in a storage medium in the foregoing encoding scheme. When the event image needs to be used, a DVS image may be read in the foregoing decoding scheme, so as to perform subsequent processing. The following describes an example of a procedure of an image optimization method provided in this application.

Before describing procedures of some methods provided in this application, the following first describes some relatively common concepts.

For ease of understanding, some general concepts used in the methods provided in this application are first described.

a. Motion sensor

With reference to the foregoing related descriptions in FIG. 1B, a motion sensor may monitor, due to a change of a light intensity, that movement of a target object in a specific range causes a series of pixels to generate an event output, to obtain an event stream in a time period. For movement information mentioned in implementations of this application, the motion sensor may be used to monitor movement of the target object in a preset range, to obtain information about a movement of the target object in a detection range.

That the motion sensor is a DVS is used as an example. An event generation manner may be shown in FIG. 35. The DVS responds to a movement change and generates an event. Because an event is not excited in a static region, most events are generated in a region in which a moving object exists. Generally, when a difference between a current light intensity and a light intensity used when a previous event is generated exceeds a threshold, the DVS generates an event, such as the event N1, N2, or N3 as shown in FIG. 3, and generation of the event is only related to a relative change in the light intensity. Each event may be represented as <x, y, t, f>, where (x, y) represents a pixel location at which the event is generated, t represents time at which the event is generated, and f represents feature information of a light intensity. In some DVS sensors (like a DAVIS sensor and an ATIS sensor), f represents a change trend of the light intensity, may also be referred to as a polarity, and is generally represented based on one bit. A value may be ON/OFF, where ON indicates that the light intensity is enhanced, and OFF indicates that the light intensity is reduced. In a scenario in which some DVS sensors like a CeleX sensor monitor a moving object, f indicates an absolute light intensity, and is usually represented by a plurality of bits. For example, 9 bits indicate a light intensity value in a range of 0 to 511.

This may be understood as that the DVS generates an event only when a light intensity variation exceeds a threshold. Therefore, a moving object may be detected via the DVS, but the DVS is insensitive to a static region.

b. Event image

An event image may include an image generated based on data collected by the foregoing motion sensor, and specifically includes an image generated based on movement trajectory information that is of a target object and that is generated when the target object moves in a monitoring range of the motion sensor, in other words, the event image may be used to identify information generated when the target object moves in a detection range of the motion sensor in a time period.

For example, if hand waving is performed in a detection range of a DVS, a monitored event at one of moments is shown in FIG. 36. White in FIG. 36 indicates the event monitored by the DVS, in other words, the DVS may monitor an outline and a location of a moving object in a preset range.

Specifically, for example, an image formed by data collected by the DVS may be represented as $F_d(x,y) = \Sigma_{t_1 \leq t \leq t_2}$ events(x,y,t), where events

$$(x, y, t) = \begin{cases} 0, if\ no\ data \\ 1, if\ have\ data \end{cases}$$

, (x,y) represents coordinates of a location in the image, t represents a moment, $t_1$ is obtained by subtracting 50 milliseconds (namely, a time window) from a moment at which an exposure image starts to be shot, $t_2$ is the moment at which the exposure image starts to be shot, and events represents the data collected by the motion sensor such as the DVS.

c. Movement information

Movement information may include information about movement of a target object in a preset range.

A motion sensor may monitor movement of the target object in the preset range, to obtain the movement information of the target object in the preset range. The target object is an object moving in the preset range, there may be one or more target objects, and the movement information may include information that is about a movement trajectory of the target object and that is generated when the target object moves in the preset range.

For example, the movement information may include information, for example, a size of a region in which the target object is located and coordinates of a border or a corner point of the region in the preset range, generated when the target object moves in the preset range.

Specifically, a time window may be generated based on data monitored by a DVS. Then, for events in the time window, the time window is segmented into short-time windows, events in the short-time windows are accumulated, and a movement trajectory obtained in connected domain is calculated. Further, a series of movement trajectories in the time window are analyzed, and an optical flow or a movement vector is calculated to obtain a movement feature of the moving target object, for example, information such as a movement direction and a movement speed.

For example, as shown in FIG. 37, the time window may be divided into a plurality of short-time windows, for example, k short-time windows shown in FIG. 37. A segmentation manner may be performing segmentation based on set duration, or may be performing segmentation based on random duration or performing segmentation based on a movement trajectory change status, or the like. This may be specifically adjusted based on an actual application scenario. After the k short-time windows are obtained through segmentation, a location of an event in each short-time window is analyzed, and a region in which the target object is located in each short-time window is determined. For example, a movement region in short-time window 1 is movement region 1 shown in FIG. 37, and a movement region in short-time window k is movement region k shown in FIG. 37. Then, a movement region and the movement feature such as the movement direction or the movement speed of the target object are determined based on changes of the movement regions in the short-time windows 1 to k.

Generally, the movement feature included in the movement information may include the movement speed, the movement direction, and the like. Specifically, the movement speed may be a change trend of a speed of the target object in a current short-time window compared with a speed in a previous short-time window, and includes but is not limited to a speed trend state variable such as faster or slower or even speed trend state variables at more levels such as fast, relatively fast, very fast, slow, relatively slow, and very slow. The movement direction may also be a change in direction compared with that in a previous short-time window, and includes but is not limited to a direction trend state variable of left, right, up, down, unchanged, or even direction trend state variables at more levels such as upper left, lower left, upper right, lower right, left, right, up, down, and unchanged.

The foregoing general concept may be used in the following implementations provided in this application, and details are not described in the following.

The following describes some possible implementations of image enhancement or reconstruction.

An objective of image enhancement and reconstruction is to obtain a clearer RGB image or event image. The following describes some possible implementations.

(1) Motion compensation

Generally, information collected by a motion sensor may be used for scenarios such as image rebuilding, target detection, shooting of a moving object, shooting by using a moving device, shooting deblurring, movement estimation, depth estimation, or target detection and recognition. Therefore, how to obtain more accurate movement information has become an urgent problem to be resolved.

This application provides an image processing method, to update movement information by using a movement parameter, to obtain more accurate movement information.

First, in this scenario, a specific procedure of the image processing method provided in this application may include: collecting, by using the motion sensor, movement information generated when a target object moves in a detection range, where the movement information may be from frame-based motion detection, event-based motion detection, or the like; then generating an event image based on the movement information, and then calculating a movement parameter, where the movement parameter includes a parameter of relative movement between the motion sensor and the target object; and then updating the event image based on the movement parameter, to obtain an updated event image.

In the image processing method provided in this application, a plurality of implementations are provided for a process of updating the event image. The following separately describes different implementations and combined implementations thereof.

In a possible implementation, the event image may be updated based on a preset optimization model. For example, the event image is updated with an objective of optimizing a value of the optimization model, to obtain an updated event image. In a process of updating the event image, an initial value of the optimization model may be determined based on the movement parameter, so that the value of the optimization model may be initialized by using, as a constraint, the movement information monitored by the motion sensor, so that the initial value used when the event image is updated may be more accurate. Compared with performing a plurality of times of global iterative updates on the event image, in the method provided in this application, the optimization model is initialized based on the obtained movement parameter, so that an update speed of the event image can be significantly improved, update efficiency of the event image can be improved, and a relatively good initialization update direction can be provided. An optimization effect is improved with a limited quantity of iteration times.

In a possible implementation, in a process of updating the event image, iterative updating may usually be performed for a plurality of times, so that a finally obtained event image is better. In each iterative update process, a movement parameter output from a previous iterative update may be used to perform a current iterative update, so that a movement parameter is not recalculated during each iterative update, and update efficiency is improved.

The following describes a process of initializing the value of the optimization model and a process of iteratively updating the event image.

Process 1: Process of initializing the optimization model by using the movement parameter

FIG. 38 is a schematic flowchart of an image processing method according to this application.

3801: Obtain movement information.

A motion sensor may monitor movement of a target object in a preset range, to obtain the movement information of the target object in the preset range. The target object is an object moving in the preset range, there may be one or more target objects, and the movement information may include information that is about a movement trajectory of the target object and that is generated when the target object moves in the preset range.

For example, the movement information may include information, for example, a size of a region in which the target object is located and coordinates of a border or a corner point of the region in the preset range, generated when the target object moves in the preset range.

For ease of understanding, a region in which the target object is located at each detected moment when the target object moves in the preset range is referred to as a movement region of the target object below. For example, if the target object is a pedestrian and the pedestrian is performing a whole-body movement, the movement region may include a whole body of the pedestrian; if the pedestrian moves only an arm, the target object may be only an arm of the pedestrian, and the movement region may include an arm part of the pedestrian.

Generally, the preset range is related to a focal length, a field of view, or the like of a camera. For example, a larger field of view of the camera indicates a larger area of a shooting range, and a smaller field of view of the camera indicates a smaller area of the shooting range. For another example, a larger focal length of the camera indicates a farther shooting range. This may also be understood as clearer shot object at far distance, and a smaller focal length of the camera indicates a closer shooting range.

In this implementation of this application, a range monitored by the motion sensor includes a shooting range of the camera, the preset range may be the shooting range of the camera, and the range monitored by the motion sensor includes the preset range, in other words, the range monitored by the motion sensor may be greater than or equal to the preset range.

In a possible implementation, the movement information may include a region in which the target object is currently located and a region in which the target object is historically located after the target object enters the preset range, and may further include a movement speed, a movement direction, or the like of the target object.

With reference to the foregoing data collection and data encoding, the movement information in this embodiment may be data obtained in the foregoing data collection and encoding/decoding schemes. For example, an event stream may be obtained by performing collection via a DVS, and available movement information is obtained in the processing manner of data encoding/decoding provided above.

3802: Generate at least one frame of event image based on the movement information.

After the movement information is obtained, the at least one frame of event image may be generated based on information collected by the motion sensor in the detection range. Generally, the movement information may include information about a trajectory of movement of the target object in the detection range in a time period. Therefore, an image corresponding to the detection range is generated, and the trajectory that is of the target object and that is included in the movement information is mapped to the image, to obtain the at least one frame of event image. The at least one frame of event image may be understood as an image indicating the movement trajectory that is of the target object and that is generated when the target object moves in the detection range.

For example, for the event image, refer to FIG. 35 to FIG. 37 and related descriptions thereof.

When the at least one frame of event image mentioned in this application is a plurality of frames of event images, the at least one frame of event image may be an event image in a same time window, or may be an event image in different event windows. For example, event image 1 is an event image in a time period [t1, t2], and event image 2 is an event image in a time period [t2, t3]. Certainly, the at least one frame of event image may alternatively be event images of different regions in a same time period. For example, a monitoring region of the DVS may be divided into a plurality of regions, and a corresponding event image is generated based on an event detected in each region.

It should be further noted that, according to the method provided in the foregoing data collection, encoding, and decoding, the event image may be directly read from the storage medium. In this case, steps 3801 and 3802 do not need to be performed, and the at least one frame of event image may be directly read from the storage medium. This application is merely an example for description herein, and is not intended as a limitation.

3803: Obtain a movement parameter.

The movement parameter indicates a parameter, related to relative movement between the sensor and the target object, for example, a movement speed of the target object on an image plane, a movement direction of the target object on an image plane, a movement acceleration of the target object on an image plane, optical flow information of the target object on an image plane, a depth of the target object from the motion sensor, an acceleration of the motion sensor, or an angular velocity of the motion sensor, where the optical flow information represents a speed of relative movement between the motion sensor and the target object.

In addition, there may be a plurality of manners for calculating the movement parameter. For example, if the movement parameter includes not only a related parameter of the motion sensor, but also the movement speed, the movement direction, the movement acceleration, or the like of the target object, the movement parameter may be obtained through calculation based on the information collected by the motion sensor.

For another example, if the movement parameter includes a related parameter of the motion sensor, for example, the optical flow information, the acceleration of the motion sensor, or the angular velocity or depth of the motion sensor, the related parameter of the motion sensor may be obtained based on the information collected by the motion sensor or via an IMU, a gyroscope, an accelerometer, or the like.

For still another example, if the movement parameter does not include a related parameter of the motion sensor, but includes the movement speed, the movement direction, the movement acceleration, the depth, or the like of the target object, the movement parameter may be obtained through calculation based on the information collected by the motion sensor. For yet another example, if the movement parameter includes a related parameter of the motion sensor, for example, the optical flow information, the acceleration of the motion sensor, or the angular velocity of the motion sensor, the related parameter of the motion sensor may be obtained based on the information collected by the motion sensor or via an IMU, a gyroscope, an accelerometer, or the like.

For example, the movement parameter is obtained from data collected by the IMU. The data collected by the IMU may include an angular velocity $\omega$, an acceleration $\alpha$, or the like of the IMU. One or more of the angular velocity $\omega$, the acceleration $\alpha$, or the like may be selected as the movement parameter.

In a possible implementation, the movement parameter may be collected by the motion sensor. In some scenarios, when the motion sensor collects the movement parameter, the movement parameter may be affected by noise, an offset, or the like. Consequently, the movement parameter is offset. Therefore, some error correction parameters may be used to correct the movement parameter, so as to improve accuracy of the movement parameter. After determining the movement parameter, the motion sensor may perform correction on the movement parameter to obtain a corrected movement parameter. Alternatively, when collecting data, the motion sensor may be configured to perform correction based on the correction parameter to obtain corrected data. A de-biased movement parameter can be directly extracted from the data collected by the motion sensor. Therefore, in this implementation of this application, the corrected movement parameter may be obtained, so that the movement parameter is more accurate.

For example, the data of the IMU is easily affected by noise or a zero-bias parameter, where the zero-bias parameter is affected by a random walk and therefore needs to be constantly updated and corrected. Therefore, when the movement parameter is extracted, influence of the noise or the zero-bias parameter may be removed from the data collected by the IMU. For example, a true value of the angular velocity is generally expressed as: $\hat{\omega} = \omega + b_g + n_g$, and a true value of the acceleration is expressed as: $\hat{a} = R_{WB}^{\mathsf{T}} \cdot (\alpha - g) + b_\alpha + n_\alpha$ . $R_{WB}^{\mathsf{T}}$ represents a transfor-

mation matrix, where a transformation matrix of a camera from moment i to each moment j is $T_{i,j} = \begin{bmatrix} R_{WB} & t \\ 0 & 1 \end{bmatrix}$,

and may specifically represent a transformation from a spatial coordinate system to a camera body coordinate system, g represents a gravitational acceleration, n is noise, and b is a zero-bias parameter.

Specifically, for example, a uniform linear movement model may be used to represent relative movement between the target object and the motion sensor, and the movement parameter may be a speed vector v. It should be noted that different movement models may be selected in different scenarios, and therefore correspond to a plurality of movement parameters. For example, in a uniform acceleration linear movement, the movement parameter is a movement vector v and an acceleration $a_p$ . An initial velocity vector $v = \dfrac{\pi\left((T_{t_i, t_i + \Delta t} - E) \cdot O_{z_0}\right)}{\Delta t}$ is obtained through calculation based on a depth Z of a phase plane, a projection model $\pi$, and the transformation matrix calculated based on the IMU data, where E represents a unit matrix, $O_{z_0}$ represents an origin of the phase plane, and $\Delta t$ is a time period.

In addition, for example, the movement parameter is calculated based on the data collected by the DVS. In FIG. 36, white indicates an event monitored by the DVS, in other words, the DVS may monitor an outline and a location of the moving object in the preset range. In this way, based on the movement trajectory that is of the target object in the preset range and that is monitored by the DVS, the movement speed of the target object may be calculated, and the movement direction of the target object is extracted.

Specifically, a time window may be generated based on data monitored by the DVS. Then, for events in the time window, the time window is segmented into short-time windows, events in the short-time window are accumulated, and an image corresponding to events accumulated in each time window may be understood as one frame of event image. Further, a series of movement trajectories in the time window may further be analyzed, and a manner of calculating an optical flow or a movement vector is used to obtain a movement feature of the moving target object, for example, information such as a movement direction and a movement speed.

For example, as shown in FIG. 37, the time window may be segmented into a plurality of short-time windows, such as k short-time windows shown in FIG. 37. Each time window may correspond to one frame of event image. A segmentation manner may be performing segmentation based on set duration, or may be performing segmentation based on random duration or performing segmentation based on a movement trajectory change status, or the like. This may be specifically adjusted based on an actual application scenario. After the k short-time windows are obtained through segmentation, a location of an event in each short-time window is analyzed, and a region in which the target object is located in each short-time window is determined. For example, a movement region in short-time window 1 is movement region 1 shown in FIG. 37, and a movement region in short-time window k is movement region k shown in FIG. 37. Then, a movement region and the movement feature such as the movement direction or the movement speed of the target region are determined based on changes of the movement regions in the short-time windows 1 to k.

In a possible implementation, after the movement parameter is obtained and before the optimization model is initialized, the movement parameter may be used to compensate for the event image, to obtain a compensated event image. For example, the movement trajectory of the target object is uniform linear movement, the motion sensor is the DVS, and a location captured by the DVS at a $t_k$ moment in a time window [t, t + $\Delta t$] is $x_k$, and the movement trajectory of the target object may be divided into a plurality of segments of linear movement. $\theta$ (namely, the movement parameter) is used to represent the movement speed of the target object in the event image. In this case, a location $x_k$', in the event

image, obtained by performing motion compensation on the target object is: $x_k' = x_k - \left(t_k - t_{ref}\right) \cdot \theta$. After motion compensation is performed on all events in the event image, a compensated event image may be obtained.

3804: Initialize a preset value of the optimization model based on the movement parameter, to obtain the value of the optimization model.

After the movement parameter is obtained, the movement parameter may be used to compensate for the event image to obtain the compensated event image, and then the initial value, or referred to as an initial optimal value, of the optimization model is calculated based on the compensated event image.

There may be a plurality of optimization models, and different optimization models may be selected based on different scenarios. For example, the optimization model may include but is not limited to one or more of the following: a variance (variance), a mean square (mean square), an image entropy (image entropy), a gradient magnitude (gradient magnitude), a Laplacian (Laplacian), an SoS loss function, an R2 loss function, a uniform straight line movement model, or the like. The variance may also be referred to as a contrast. An algorithm for maximizing the contrast may include a gradient rise, a Newton method, and the like. An updated movement parameter is calculated through iteration once, and then the foregoing process is repeated until an optimal contrast is achieved.

It should be noted that, in this embodiment of this application, a contrast algorithm is merely used as an example for description of the optimization model. Generally, a larger contrast of the event image indicates a better compensation effect or a better update effect of the event image. In another scenario, the optimal value of the optimization model may be a minimum value. To be specific, a smaller value of the optimization model indicates a better update effect of the event image.

3805: Update the at least one frame of event image based on the value of the optimization model, to obtain updated at least one frame of event image.

After the optimization model is initialized by using the movement parameter to obtain the value of the optimization model, an iterative update is performed on the at least one frame of event image based on the value of the optimization model, to obtain the updated at least one frame of event image.

Specifically, after the initial value of the optimization model is obtained, in a process of iteratively updating the event image, the movement parameter may be inferred back based on the initial value, and the event image may be compensated for based on the movement parameter obtained through back inferring, to obtain the compensated event image. Then, the optimal value of the optimization model is calculated based on the compensated event image, and the above steps are repeated until a condition for terminating iteration is satisfied. For example, when a quantity of iteration times reaches a preset quantity of times, iteration duration reaches preset duration, a difference between event images obtained in adjacent iteration is less than a preset value, or a difference between optimal values that are of the optimization model and that are obtained in adjacent iteration is less than a preset difference, a finally obtained event image is output.

For example, a contrast (or referred to as a variance) F is selected as the optimization model. An example in which the movement parameter is a uniform speed is used. After the movement parameter $\theta$ is initialized, to obtain an event image with maximized F, updated solution $\theta = \arg_{min}F(\theta,x)$ needs to be performed on the movement parameter $\theta$ by using F as a target function.

A process of compensating for a movement image may be understood as that an event image in the time window [t, t + $\Delta$t] is inferred back to an event image at a moment t based on the movement model, so as to implement motion compensation. For example, the movement trajectory of the target object is uniform linear movement, and a location captured by the DVS at a $t_k$ moment in a time window [t, t + $\Delta$t] is $x_k$, and the movement trajectory of the target object may be divided into a plurality of segments of linear movement. $\theta$ is used to represent the movement speed of the target object in the event image. In this case, a location $x_k$', in the event image, obtained by performing motion compensation on the target object is: $x'_k = x_k - (t_k - t_{ref}) \cdot \theta$. Locations, in the event image, obtained by performing motion compensation on the target object are accumulated, to obtain an event image that is updated once.

Then, an image contrast of the event image obtained by performing motion compensation is calculated as $F(x, \theta) = = \frac{1}{N_p}\sum_{i,j}(h_{ij} - \mu)^2$. $h_{i,j}$ represents a pixel in the event image formed by performing motion compensation on events in the time window, $N_p$ represents a pixel quantity in a frame, and $\mu$ represents an average value of the frame. Then, a $\theta$ value $\theta = \arg_{min}F(\theta,x)$ that optimizes $F(x, \theta)$ is calculated according to an optimization algorithm, and an optimal movement parameter $\theta$ is calculated through a plurality of pieces of iteration. Then, the event image is compensated for based on the optimal movement parameter to obtain a better event image. The optimization algorithm may use an algorithm such as a gradient ascending method, a Newton method, a conjugate gradient method (Conjugate Gradient), or a momentum optimization method (Momentum), and may be specifically adjusted based on an actual application scenario. This is not limited in this application.

For ease of understanding, step 3805 may be understood as: After the movement parameter is obtained, compensation is performed on the event image by using the movement parameter, the optimal value (namely, the initial value) of the optimization model is calculated based on the compensated event image, and then the optimal movement parameter is inferred back based on the optimal value. The event image is compensated again by using the optimal movement parameter obtained through back inferring, and the foregoing steps are iterated to obtain a final updated event image.

More specifically, for a process of iteratively updating the at least one frame of event image, refer to the following Implementation 2. Details are not described herein.

Therefore, in this implementation of this application, before the event image is updated, the optimization model may be initialized by using the movement parameter, so that the event image may be updated based on a value of the initialized optimization model, and the event image does not need to be updated from a minimum value of the optimization model or a random initial value. Therefore, a quantity of iterative updating times of the event image can be reduced, iterative updating efficiency of the event image can be improved, and an optimal event image can be quickly obtained.

In a possible implementation, each time the optimal value of the optimization model is obtained through calculation, the correction parameter may be updated, and the correction parameter may be used to obtain a corrected movement parameter. For example, after the motion sensor collects data, the correction parameter is used to correct the collected data, so as to obtain corrected data, so that a more accurate movement parameter can be subsequently extracted from the corrected data. Alternatively, after the movement parameter is extracted from data collected by the motion sensor, the correction parameter may be used to correct the movement parameter, to obtain a more accurate movement parameter. For example, the movement parameter may be obtained by collection performed by the IMU. In a process of obtaining the optimal value of the optimization model through calculation each time, an IMU parameter, or referred to as the correction parameter, may be updated. The IMU parameter may be used by the IMU for collecting data. For example, the data of the IMU is easily affected by noise n and a zero-bias parameter b, where the zero-bias parameter is affected by a random walk and therefore needs to be constantly updated and corrected. A true value of the angular velocity is generally expressed as: $\hat{\omega} = \omega + b_g + n_g$, and a true value of the acceleration is expressed as:

$$\hat{a} = R_{WB}^{\mathsf{T}} \cdot (\alpha - g) + b_\alpha + n_\alpha$$

. b and $n_g$ are IMU parameters for correcting the collected data, to obtain a more accurate movement parameter. Therefore, in an implementation of this application, in a process of updating the event image, the IMU parameter may be further updated, so that an updated IMU parameter may be used, to obtain a more accurate movement parameter. Generally, the movement parameter may be obtained by integrating the data collected by the IMU. Errors are gradually accumulated, and longer time indicates a larger drift of the movement parameter obtained through calculation. Generally, the data of the IMU cannot be calibrated in short time. However, in this implementation of this application, after the optimal value of the optimization model is obtained, the IMU parameter may be updated by using the optimal value, so that the movement parameter may be subsequently obtained based on a more accurate IMU parameter, thereby improving accuracy of the movement parameter.

Refer to FIG. 39, a procedure of an image processing method provided in this application is described below by using an example in which the movement parameter is obtained from the data collected by the IMU, and the motion sensor is the DVS.

First, IMU data 3901 is the data collected by the IMU, and may specifically include an angular velocity, an acceleration, a speed, or the like of the IMU. Generally, the IMU and the DVS may be disposed in a same device or have a connection relationship. Therefore, the angular velocity, the acceleration, the speed, or the like of the IMU may also be expressed as an angular velocity, an acceleration, a speed, or the like of the DVS.

A movement parameter 3902 may be data obtained from the IMU data, for example, the angular velocity, the acceleration, or the speed. Generally, the data collected by the IMU is easily affected by noise n and a zero-bias parameter b, where the zero-bias parameter is affected by a random walk and therefore needs to be constantly updated and corrected. A true value of the angular velocity is generally expressed as $\hat{\omega} = \omega + b_g + n_g$, and a true value of the acceleration is expressed as: $$\hat{a} = R_{WB}^{\mathsf{T}} \cdot (\alpha - g) + b_\alpha + n_\alpha$$ . $R_{WB}^{\mathsf{T}}$ represents a transformation matrix, where a transformation matrix of a camera from moment i to each moment j is $$\mathrm{T}_{i,j} = \begin{bmatrix} R_{WB} & t \\ 0 & 1 \end{bmatrix}$$ , and may specifically represent a transformation from a spatial coordinate system to a camera body coordinate system, g represents a gravitational acceleration, n is noise, and b is a zero-bias parameter.

Before an event image is updated, the movement parameter 3901 may be used to initialize a contrast 3904. In addition, the movement parameter may be used to compensate for an event image 3903 to obtain a compensated event image.

When the event image is compensated for, an event image in the time window [t, t + Δt] is inferred back to an event image at a moment t based on a movement model, so as to implement motion compensation. For example, a compensated location $x_k'$ is $x_k' = x_k -$ $(t_k - t_{ref}) \cdot \theta$. The compensated image may be obtained by accumulating locations, of the target object in the image, obtained by performing compensation on the target object. Herein, a pixel of the compensated event image is represented as $h_{ij}$.

It should be noted that, in this embodiment of this application, an example in which the optimization model is a contrast (or referred to as variance) algorithm is used for description. In an actual application scenario, the contrast may be replaced with another indicator, such as a variance (variance), a mean square (mean square), an image entropy (image entropy), a gradient amplitude (gradient magnitude), or a Laplacian (Laplacian), and may be specifically adjusted based on an actual application scenario.

After the compensated event image is obtained, a maximized contrast may be calculated based on the compensated event image, the movement parameter is updated by using the maximized contrast, and an updated movement parameter continues to be used for compensating for the event image, to obtain an updated event image. The foregoing steps are repeated until the condition for terminating iteration is met, and the final event image is output.

After the compensated event image $h_{ij}$ is obtained, the image contrast F(x, θ) = $\frac{1}{N_p}\sum_{i,j}\left(h_{ij} - \mu\right)^2$ is calculated, where $N_p$ represents the pixel quantity in the event image, and μ represents an average value of pixels of the event image. Then, the movement parameter θ that maximizes F(x, θ) is calculated, in other words, which θ can maximize F is calculated. Therefore, further iterative compensation may be performed on the event image based on the movement parameter θ obtained during maximization, so as to obtain an updated image.

In a process of maximizing the contrast, the IMU parameter may be also updated at the same time. The IMU parameter may be used by the IMU for collecting the data, be for correcting the data collected by the IMU, or the like.

For example, a true value of the angular velocity is expressed as $\hat{\omega} = \omega + b_g + n_g$, and a true value of the acceleration is expressed as $\hat{a} = R_{WB}^{\mathsf{T}} \cdot (\alpha - g) + b_\alpha + n_\alpha$. In this case, the IMU parameter may include noise $n$ and a zero-bias parameter $b$. The process of calculating the movement parameter from the IMU data is considered as θ = G($b_a$, $b_g$, $a$, $\omega$), where $b_a', b_g' = arg_{min}F(G(b_a, b_g),x)$. Therefore, updated noise n and zero-bias parameter b are obtained.

Therefore, in this implementation of this application, the movement parameter may be obtained based on the data collected by the IMU, so that contrast initialization is performed based on the movement parameter, and then the event image is updated based on the initialized contrast, to obtain an updated event image. This is equivalent to setting the initial value of the contrast based on the movement parameter, and this reduces a quantity of times of iteration performed on the event image for a plurality of times, and improves efficiency of obtaining the final event image.

Process 2: Iterative update process

FIG. 40 is a schematic flowchart of another image processing method according to this application, and is described below.

4001: Obtain a target task, and determine iteration duration based on the target task.

The target task may include the duration for iteratively updating at least one frame of event image, or the target task may be performed by using at least one frame of event image, and includes duration for iteratively updating the at least one frame of event image, or the like.

For example, the target task may directly carry the duration for iteratively updating the at least one frame of event image. For example, a user may set duration for iteratively updating each frame of event image to 30 ms.

For another example, the target task may be a task, such as target detection, image rebuilding, or shooting of a moving object, performed by using the at least one frame of event image. The target task may further include that duration of iteratively updating each frame of event image is 50 ms or the like, or total iteration duration of the at least one frame of event image is 3900 ms or the like.

It should be noted that step 4001 in this application is an optional step. In some scenarios, the iteration duration of the event image may not be set, for example, when a quantity of iteration times of iteratively updating the event image reaches a preset quantity of times, or a change value of an output value of an optimization model does not exceed a preset value. This may be specifically adjusted based on an actual application scenario, and is not limited herein.

4002: Obtain movement information.

4003: Generate the at least one frame of event image based on the movement information.

Steps 4002 and 4003 are similar to the foregoing steps 3801 and 3802, and details are not described herein again.

After the event image is obtained, an iterative update may be performed on the event image. A process of the iterative update may be described in the following steps 4004 to 4006.

It should be further noted that a sequence of performing step 4001 and step 4003 is not limited in this application. Step 4001 may be performed first, or step 4003 may be performed first, or step 4001 and step 4003 may be performed simultaneously. This may be specifically adjusted based on an actual application scenario, and is not limited herein.

4004: Obtain a movement parameter obtained in previous iteration based on the optimization model.

The movement parameter indicates a parameter related to relative movement between a sensor and a target object, for example, a movement speed of the target object, a movement direction of the target object, a movement acceleration of the target object, optical flow information of the target object, an acceleration of the motion sensor, and an angular velocity or a depth of the motion sensor. The optical flow information represents a speed of relative movement between the motion sensor and the target object.

If current iteration is the 1st iteration, the movement parameter may be set to an initial value, for example, set to 0 or a preset value, or the movement parameter may be calculated based on information collected by the motion sensor.

If current iteration is not the 1st iteration, a value of the movement parameter may be inferred back based on an optimal value of the optimization model in a previous iteration process, and then a value obtained through back inferring is used as the value of the movement parameter. Alternatively, weighted fusion is performed on the movement parameter obtained through back inferring and the movement parameter determined in the foregoing manner in step 3803 to obtain a fused movement parameter.

For example, in each iterative update process of the event image, after an optimal value F(x, θ) is obtained through calculation, a value of a movement parameter θ is back inferred as $\theta = \arg_{min} F(\theta, x)$, to obtain an updated movement parameter through calculation.

For another example, in addition to the movement parameter (which is referred to as movement parameter 1 for ease of differentiation) obtained based on the optimal value of the optimization model in a previous iterative update of the event image, a movement parameter (which is referred to as movement parameter 2 for ease of differentiation) may be further obtained based on data collected by the motion sensor. For a manner of obtaining movement parameter 2, refer to the foregoing step 3803, and details are not described herein again. The movement parameter used in this iterative update in this embodiment of this application may be obtained by performing weighted fusion on movement parameter 1 and movement parameter 2. For example, a weight value of movement parameter 1 may be set to 0.8, movement parameter 2 may be a parameter collected by the IMU, and a weight value of movement parameter 2 may be set to 0.2. In this case, the movement parameter used in this iterative update is=0.2*movement parameter 2+0.8*movement parameter 1.

In addition, if the foregoing at least one frame of event image is a plurality of frames of event images, and an event image in the current iterative update is different from an event image in the previous iterative update, the movement parameter obtained when the previous iterative update is performed on the event image may be used to update the event image in the current iterative update. Therefore, in this implementation of this application, when different event images are updated, the movement parameter obtained by iteratively updating a previous frame of event image may be used to update a current event image, so that a more accurate movement parameter may be used for the update. Compared with re-initializing a value of the movement parameter, in this embodiment of this application, an effective movement parameter is provided, so that update efficiency of the event image can be significantly improved.

4005: Update the at least one frame of event image based on the movement parameter, to obtain updated at least one frame of event image.

After the movement parameter in the current iteration is obtained, compensation is performed on the event image based on the movement parameter, to obtain at least one frame of event image obtained in the current iterative update.

Specifically, when the at least one frame of event image is one frame of event image, in each iteration process, an iterative update may be performed on the frame of event image. If the at least one frame of event image is a plurality of frames of event images, after updating one frame of event image is completed, a next frame of event image may continue to be updated, or different event images may be updated in each piece of iteration, so as to complete an iterative update of all the event images. For example, a plurality of times of iterative updates may be first performed on an event image in a time period [t0, t1]. After the updates of the event image in the time period [t0, t1] are completed, a final movement parameter is calculated. Based on the movement parameter, an event image in a time period [t1, t2] is updated. Other event images can be deduced by analogy. For another example, in the 1st iteration process, an event image in a time period [t0, t1] may be updated. After a movement parameter is obtained through calculation, an event image in a time period [t1, t2] is updated based on the movement parameter. Other event images can be deduced by analogy.

For ease of understanding, one frame of event image (or referred to as a target event image) is used as an example for description in this embodiment of this application.

For example, after the movement parameter $\theta$ is determined, compensation is performed for a location of each event in the target event image, for example, $x'_k = x_k - (t_k - t_{ref}) \cdot \theta$, where $x'_k$ is a compensated location of $x_k$, and transformed events at each location can be accumulated to form an updated target event image

$$\text{H}(x, \theta) = \sum_{k=1}^{N_e} b_k \delta(x - x'_k)$$

, where $N_e$ represents a quantity of events in the target event image; and $b_k$ represents a representation manner of the target event image, and a value may be 0 or 1.

For example, as shown in FIG. 41, the event image is represented in different forms. It is clear that as a quantity of iteration times increases, the obtained event image becomes clearer.

After compensation is performed on the event image, quality of the event image may be measured based on a value of the optimization model. The optimization model may include but is not limited to one or more of the following: a variance (variance), a mean square (mean square), an image entropy (image entropy), a gradient magnitude (gradient magnitude), a Laplacian (Laplacian), an SoS loss function, an R2 loss function, or the like. An optimization algorithm may be used to calculate the optimal value of the optimization model, and then a new movement parameter may be calculated based on the optimal value.

For ease of understanding, step 4005 may be understood as: After compensation is performed for the event image, quality of the event image is measured by using a preset evaluation indicator, such as the variance, mean square,

$$f(\theta) = \sigma^2\big(H(x, \theta)\big) = \frac{1}{N_p} \sum_{i,j} \big(h_{ij} - \mu\big)^2$$

image entropy, gradient amplitude, or Laplacian, for example, . An updated movement parameter obtained in the current iterative update process can be obtained by calculating, according to an optimization algorithm, a $\theta$ value that maximums F(x, $\theta$) as $\theta = \arg_{min} F(\theta, x)$. That F is a contrast is used as an example. An optimization algorithm for maximizing the contrast may use a method such as a gradient ascent or Newton method for calculating an updated movement parameter, and then an updated event image or a next frame of event image is updated by using the movement parameter. The foregoing process repeats, and the final updated at least one frame of event image is obtained.

4006: Determine whether iteration ends, and if the iteration ends, perform step 4007, or if the iteration does not end, perform step 4004.

In each iterative update process of the event image, after the event image is updated, it may be determined whether an iterative update of the event image ends. If iteration ends, updated at least one frame of image may be output. If iteration does not end, the iterative update may continue to be performed on the event image, that is, step 4004 is performed.

Specifically, a manner of determining whether the iteration ends may include: determining whether a result of the current iteration meets a preset condition, and terminating the iteration if the result of the current iteration meets the preset condition, where the termination condition includes one or more of the following: a quantity of times of iterative updates performed on the at least one frame of event image reaches a preset quantity of times, duration of the iterative update performed on the at least one frame of event image reaches preset duration, a change of the optimal value of the optimization model in a process of updating the at least one frame of event image is less than a preset value, or the like. The preset duration may be determined based on the target task in step 4001, or may be duration that is preset, for example, 100 ms or 50 ms. For example, the user may set iterative update duration of each frame of event image on an interactive interface of a terminal.

Therefore, in some scenarios, a quantity of iteration times may be determined based on an actual requirement, efficiency of event image processing and quality of the event image are both considered, and the event image is updated when a real-time processing requirement is met, so as to achieve a balance between the efficiency and the quality.

4007: Output the updated at least one frame of event image.

After the iterative update of the event image is terminated, the updated at least one frame of event image may be output.

Optionally, subsequent analysis may be performed by using the updated at least one frame of event image subsequently. For example, the updated event image may be for performing depth estimation, optical flow estimation, image rebuilding, target detection, shooting of a moving object, shooting by using a moving device, shooting deblurring, movement estimation, depth estimation, or target detection and recognition.

In an implementation of this application, in each iteration process, the movement parameter used in the current iteration may be obtained by using the optimal value that is of the optimization model and that is obtained in the previous iteration, and the event image is compensated for based on the movement parameter to obtain a compensated event image. Therefore, efficiency of updating the event image can be improved, and an event image with higher quality can be quickly obtained. In addition, a quantity of iteration times may be adjusted based on a specific scenario, so that an event image meeting a requirement can be quickly and efficiently obtained by considering both the update efficiency and the quality of the event image.

For ease of understanding, the following uses several specific iteration processes as an example to describe a procedure of the image processing method provided in this application.

One frame of event image is used as an example. FIG. 42 is a schematic flowchart of another image processing method according to this application, and is described below.

First, data 4204 collected by the DVS may be obtained, and an event image 4202 may be initialized based on the data collected by the DVS, to obtain an initial event image. Generally, the event image may be represented based on polarity (b=-1 or +1) information. For example, 1 indicates that an event exists at a pixel, and -1 indicates that no event exists at a pixel. Alternatively, the event image may be represented by counting only events (b=0 or 1). For example, 1 indicates that an event exists at a pixel, and 0 indicates that no event exits at a pixel.

If the current iteration is the 1st iteration, a movement parameter 4201 may be an initialized parameter, for example, initialized to 0 or a preset value, or the movement parameter may be initialized based on data collected by an IMU. For example, an acceleration or a speed collected by the IMU may be used as the initialized movement parameter. In addition, in a subsequent iteration process, the movement parameter may be a movement parameter obtained in previous iteration, may be a movement parameter obtained based on data collected by a motion sensor (such as the DVS, the IMU, an accelerometer, or a gyroscope), or may be a movement parameter that is used in the current iteration and that is obtained by performing weighted operation on the movement parameter obtained in the previous iteration and the movement parameter obtained from the data collected by the motion sensor (such as the DVS, the IMU, the accelerometer, or the gyroscope).

After the movement parameter 4201 is obtained, the event image 4202 is compensated for by using the movement parameter to obtain a compensated event image. For example, after the movement parameter $\theta$ is determined, compensation is performed on a location of each event in the target event image, for example,

$$x'_k = x_k - (t_k - t_{ref}) \cdot \theta$$

, where $x'_k$ is a compensated location of $x_k$, and transformed events at each location can be accumulated to form an updated target event image $H(x, \theta) = \sum_{k=1}^{N_e} b_k \delta(x - x'_k)$.

After the event image is compensated for by using the movement parameter 4201, the compensated event image is used to maximize the contrast. For example, $f(\theta) = \sigma^2(H(x, \theta)) = \frac{1}{N_p} \sum_{i,j} (h_{ij} - \mu)^2$. A $\theta$ value that maximizes F(x, $\theta$) is calculated as $\theta = \arg_{min} F(x, \theta)$ according to an optimization algorithm, to update the movement parameter.

When a quantity of iteration times of the event image reaches a preset quantity of times, or iteration duration of the event image reaches preset duration, or a change value of the maximized contrast value does not exceed a preset change value, the iterative update of the event image may be terminated, and a final event image is output.

Therefore, in this implementation of this application, the movement parameter may be back inferred by using a maximized contrast obtained in previous iteration, so that when the event image is updated next time, the movement parameter may be used to compensate for the event image, and an updated event image may be quickly obtained. When update efficiency is ensured, the event image with better quality can be obtained.

The foregoing uses an example in which one frame of event image is updated as an example for description. The following uses an example in which a plurality of frames of event images are updated as an example for description.

For example, as shown in FIG. 43, an iterative update process of three frames of event images (event image 1, event image 2, and event image 3 shown in FIG. 43) is used as an example. The three frames of event images may be generated based on data collected by a DVS in different time periods. For example, events collected in a time period [t0, t1] may be accumulated, to obtain event image 1; events collected in a time period [t1, t2] may be accumulated, to obtain event image 2; events collected in a time period [t2, t3] may be accumulated, to obtain event image 3.

In a process of iterative update 1, if current iteration is the 1st iteration, a movement parameter $\theta_1$ may be initialized based on data collected by a motion sensor, or may be initialized to a preset value. For example, the movement parameter $\theta_1$ may be extracted from data collected by an IMU. For example, the IMU may collect an acceleration, an angular velocity, or a speed of the IMU, and one or more of the acceleration, angular velocity, or speed of the IMU may be directly selected as the movement parameter $\theta_1$. For another example, the initialization value of the movement parameter may be set to 0 or another value in advance.

In a process of updating the event image 1, the event image 1 may be compensated for by using the movement

parameter $\theta_1$ to obtain a compensated event image, then a maximized contrast is calculated based on the compensated event image and an optimization algorithm, and the movement parameter $\theta_1$ is updated by using the maximized contrast.

A specific process of iteratively updating event image 1 to event image 3 is similar to the update process in FIG. 42, and details are not described herein again.

After the iterative update of event image 1 is terminated, movement parameter $\theta_1$ updated by using the contrast obtained by final iteration may be used to initialize movement parameter $\theta_2$. After the iterative update of event image 2 is terminated, movement parameter $\theta_2$ updated by using the contrast obtained by final iteration may be used to initialize movement parameter $\theta_3$.

In a possible implementation, in addition to updating a next frame of event image after each frame of event image is updated, all frames of event image may be updated once cyclically, so as to update the plurality of frames of event images.

Therefore, in this implementation of this application, after updating one frame of event image, a movement parameter used for updating a next frame of event image may be initialized based on a movement parameter obtained by updating the event image, so that each time the event image is updated, an existing movement parameter can be used for updating, so that the event image can be updated efficiently.

Process 3: Initialize an optimization model by using a movement parameter and perform an iterative update

The foregoing separately describes processes of initializing the movement parameter and performing the iterative update on the event image. In some scenarios, in the image processing method provided in this application, the process of initializing the movement parameter and performing the iterative update on the event image may be combined together for implementation. The following describes a combination method for implementation.

For example, in some scenarios, for example, one terminal device may include a plurality of motion sensors. For example, the terminal device may include both a DVS and an IMU, an event image may be generated based on data collected by the DVS, data collected by the IMU may be used to initialize a movement parameter, and then the iterative update is performed on the event image based on an initialized movement parameter.

The following uses an example in which the movement parameter is initialized based on the data obtained by the IMU as an example for description. In some scenarios, the initialized movement parameter may alternatively be determined based on data collected by another sensor such as an accelerometer, a gyroscope, a gravity sensor, or a DVS. FIG. 44 is a schematic flowchart of another image processing method according to this application.

4401: Obtain the data collected by the IMU.

The IMU may be configured to measure a triaxial angular velocity and an acceleration of the IMU, and the data collected by the IMU may include the angular velocity $\omega$, the acceleration $\alpha$, or the like of the IMU.

For example, in a scenario, a user may perform shooting via a mobile phone. In addition to an RGB camera (or referred to as an RGB sensor), the mobile phone may further include the DVS and the IMU. The data collected by the DVS may be used to provide another auxiliary function for shooting by the RGB camera, for example, focus or compensation for an RGB image captured by the RGB camera. When the user performs shooting via the mobile phone, the IMU may simultaneously detect a movement change of the IMU, for example, the angular velocity or the acceleration.

4402: Initialize the movement parameter.

The movement parameter may be selected from the data collected by the IMU. For example, the data collected by the IMU may include the angular velocity $\omega$, the acceleration $\alpha$, or the like of the IMU. One or more of the angular velocity $\omega$, the acceleration $\alpha$, or the like may be selected as the movement parameter.

4403: Obtain a target task, and determine iteration duration based on the target task.

4404: Obtain movement information.

4405: Generate the at least one frame of event image based on the movement information.

For steps 4403 to 4405, refer to the descriptions in the foregoing steps 4001 to 4003, and details are not described herein again.

4406: Update the event image based on the movement parameter, to obtain an updated event image.

For step 4406, refer to the descriptions in step 4005, and details are not described herein again.

4407: Determine whether the iteration duration is reached, and if the iteration duration is reached, perform step 4409, or if the iteration duration is not reached, perform step 4408.

After a current update of the event image is completed, if iteration duration of the event image reaches the preset iteration duration, an iterative update of the event image may be terminated, and a final event image is output.

In addition, if an iterative update needs to be performed on a plurality of frames of event images, it may be determined whether the preset iteration duration is reached after the event image is updated each time, and updated at least one frame of event image may be output after all the event images are updated.

4408: Update the movement parameter.

If the iterative update of the event image is not completed, after each update is completed, an updated event may be used as an input of the optimization model, an optimal value of the optimization model is calculated by using a preset optimization algorithm, and the movement parameter is updated based on the optimal value.

It should be noted that, if the current iteration is the last iterative update of the at least one frame of event image, step 4408 may be performed, or step 4408 may not be performed. This may be specifically adjusted based on an actual application scenario.

In a possible implementation, in addition to updating the movement parameter by using the optimal value of the optimization model, a more accurate movement parameter may be obtained based on the data collected by the IMU. For example, a movement parameter obtained in back inferring by using the optimal value of the optimization model is referred to as movement parameter 1, and a movement parameter obtained based on the data collected by the IMU is referred to as movement parameter 2. After movement parameter 1 and movement parameter 2 are obtained, a weighted operation may be performed on movement parameter 1 and movement parameter 2, to obtain a final movement parameter. Alternatively, one of movement parameter 1 and movement parameter 2 may be selected as a final movement parameter. This may be specifically adjusted based on an actual application scenario.

For example, this application may be applied to a movement photography scenario. For example, the movement parameter is a movement speed of a camera. Movement parameter 1 may be obtained through calculation based on the optimal value of the optimization model as $v1 = \arg_{min}F(v1, x)$, and movement parameter 2 may be $v2$ selected from the data collected by the IMU. In this case, after iteration is performed on the event image, the movement parameter is updated to $\theta = \omega1 * v1 + \omega2 * v2$, where $\omega1$ is a weight value of movement parameter 1, and $\omega2$ is a weight value of movement parameter 2. Of course, one of $v1$ and $v2$ may be selected as a new movement parameter.

Specifically, for a specific process of updating the movement parameter, refer to the related descriptions in the foregoing step 4004, and details are not described herein again.

In addition, after it is determined to terminate the iterative update of the event image, step 4408 may be performed, that is, the movement parameter is updated, or step 4408 may not be performed, that is, the movement parameter is not updated. This may be specifically adjusted based on an actual application scenario.

4409: Output the updated at least one frame of event image.

After the iterative update of all the event images in the at least one frame of event image is completed, the final updated at least one frame of event image may be output.

Specifically, for step 4409, refer to the descriptions in step 4007. Details are not described herein again.

Therefore, in this implementation of this application, data collected by a motion sensor such as the IMU, an accelerometer, or a gyroscope may be used to initialize the movement parameter, so that the event image can be subsequently updated based on an initalized movement parameter. This is equivalent to providing a higher starting point for updating the event image, so that the updated event image can be efficiently obtained. In an update process, the iteration duration may be determined based on the target task, so that the event image can be updated online based on an actual application scenario, more application scenarios are met, and a generalization capability is strong. In addition, in a process of updating the plurality of frames of event images, a next frame of event image may be updated by reusing a movement parameter obtained when a current frame of event image is updated, so that the event image can be updated by using a more accurate movement parameter, and a clearer event image can be efficiently obtained.

The foregoing describes in detail a procedure of the method for optimizing an event image in a motion compensation manner provided in this application. The following describes a structure of an image processing apparatus provided in this application. The image processing apparatus is configured to perform steps in the foregoing process 1, process 2, or process 3.

First, refer to FIG. 112. This application provides an image processing apparatus, configured to perform steps in the foregoing process 2 or process 3. The image processing apparatus may include:

an obtaining module 11201, configured to obtain movement information, where the movement information includes information about a movement trajectory that is of a target object and that is generated when the target object moves in a detection range of a motion sensor 11203; and
a processing module 11202, configured to generate at least one frame of event image based on the movement information, where the at least one frame of event image is an image indicating the movement trajectory that is of the target object and that is generated when the target object moves in the detection range, where
the obtaining module 11201 is further configured to: obtain a target task, and obtain iteration duration based on the target task; and
the processing module 11202 is further configured to perform an iterative update on the at least one frame of event image to obtain updated at least one frame of event image, where duration of the iterative update of the at least one frame of event image does not exceed the iteration duration.

In a possible implementation, the processing module 11202 is specifically configured to: obtain a movement parameter, where the movement parameter indicates a parameter of relative movement between the motion sensor and the target object; and perform an iterative update on one frame of target event image (for example, referred to as a target event image) in the at least one frame of event image based on the movement parameter, to obtain an updated target event image.

In a possible implementation, the processing module 11202 is specifically configured to: obtain a value that is of an optimization model and that is preset in a previous iterative update process; and obtain the movement parameter through calculation based on the value of the optimization model.

In a possible implementation, the processing module 11202 is specifically configured to: compensate, based on the movement parameter, for a movement trajectory of the target object that is in the target event image, to obtain a target event image obtained in a current iteration update.

In a possible implementation, the movement parameter includes one or more of the following: depth, optical flow information, acceleration of movement performed by the motion sensor, or angular velocity of movement performed by the motion sensor, where the depth indicates a distance between the motion sensor and the target object, and the optical flow information indicates information about a movement speed of the relative movement between the motion sensor and the target object.

In a possible implementation, the processing module 11202 is further configured to: terminate iteration if a result of current iteration meets a preset condition, where the termination condition includes at least one of the following: a quantity of times of iteratively updating the at least one frame of event image reaches a preset quantity of times, or a value change of the optimization model in a process of updating the at least one frame of event image is less than a preset value.

This application further provides an image processing apparatus. Refer to FIG. 113. The image processing apparatus may be configured to perform steps in the foregoing process 1 or process 3. The image processing apparatus includes:

a processing module 11302, configured to: generate at least one frame of event image based on movement information, where the movement information includes information about a movement trajectory that is of a target object and that is generated when the target object moves in a detection range of a motion sensor, and the at least one frame of event image is an image representing the movement trajectory generated when the target object moves in the detection range; and

an obtaining module 11301, configured to obtain a movement parameter, where the movement parameter indicates a parameter of relative movement between the motion sensor 11303 and the target object, where

the processing module 11302 is further configured to initialize a preset value of an optimization model based on the movement parameter, to obtain a value of the optimization model; and

the processing module 11302 is further configured to update the at least one frame of event image based on the value of the optimization model, to obtain updated at least one frame of event image.

In a possible implementation, the movement parameter includes one or more of the following: depth, optical flow information, acceleration of movement performed by the motion sensor, or angular velocity of movement performed by the motion sensor, where the depth indicates a distance between the motion sensor and the target object, and the optical flow information indicates information about a movement speed of the relative movement between the motion sensor and the target object.

In a possible implementation, the obtaining module 11302 is specifically configured to: obtain data collected by an inertial measurement unit IMU sensor; and obtain the movement parameter through calculation based on the data collected by the IMU sensor.

In a possible implementation, the processing module 11302 is further configured to: after initializing the preset value of the optimization model based on the movement parameter, update a parameter of the IMU sensor based on the value of the optimization model, where the parameter of the IMU sensor is used by the IMU sensor to collect the data.

(2) Image rebuilding

The foregoing describes a manner of compensating for and optimizing the event image based on the movement parameter. For the manner of optimizing the event image, in another possible implementation, an RGB image may be rebuilt based on data collected by a motion sensor, so that a rebuilt RGB image may be subsequently used for further application, for example, license plate recognition, QR code recognition, or road sign recognition.

Generally, in an image rebuilding process, a neural network may be used to output a rebuilt image. However, higher complexity of the image indicates higher calculation complexity. For example, a higher dimension of a QR code indicates higher calculation complexity, and lower efficiency of image rebuilding. Therefore, this application provides an image processing method, to perform image rebuilding on information collected by the motion sensor, to efficiently and accurately obtain the rebuilt image.

First, a specific procedure of the image processing method provided in this application may include: obtaining movement information, where the movement information includes information about a movement trajectory that is of a target object and that is generated when the target object moves in a detection range of a motion sensor; generating an event image based on the movement information, where the event image is an image representing the movement trajectory that is of the target object and that is generated when the target object moves in the detection range; and determining, based on at least one event included in the event image, a color type corresponding to each pixel that is in the event image, to obtain a first rebuilt image, where a color type of a first pixel is different from that of at least one second pixel, the first pixel is a pixel corresponding to any one of the at least one event in the first rebuilt image, and the at least one second pixel is included in a plurality of pixels that are in the first rebuilt image and that are adjacent to the first pixel. Therefore, in this implementation of this application, image rebuilding may be performed by using information collected by the motion sensor, to obtain a rebuilt image, and the rebuilt image may be subsequently used for performing image recognition, target detection, and the like.

Specifically, the event image may be an image obtained by accumulating N events in a time period at locations corresponding to the events (or locations obtained by performing compensation and correction along a movement trajectory). Generally, a value of a location at which no event is generated and that is in the image is 0.

In some scenarios in which the target object moves or a photography apparatus shakes, image rebuilding may be performed by using information collected by the motion sensor such as a DVS, so that subsequent operations such as image recognition or target detection may be performed based on the rebuilt image.

For example, in some garage license plate recognition scenarios, when a vehicle enters a garage entrance, a license plate recognition system disposed at the entrance may shoot a license plate via an RGB camera, and then recognize a license plate number from a shot image. Generally, an RGB image shot by the vehicle may be unclear due to movement of the vehicle, resulting in low license plate recognition efficiency. That a motion sensor disposed in the license plate recognition system is a DVS is used as an example. According to the image processing method provided in this application, the license plate recognition system can perform image rebuilding based on information collected by the DVS, and quickly rebuild an image of the license plate, thereby improving license plate recognition efficiency.

For another example, in some QR code recognition scenarios, there may be a case in which a terminal held by a user by hand shakes or a QR code is not fixed, a shot QR code image may be unclear, and the QR code cannot be recognized. Alternatively, in a scenario with a high light ratio, for example, when a camera is turned on to scan a QR code in the dark at night, a flash on a terminal causes the QR code to be overexposed. Consequently, the QR code cannot be recognized. That a motion sensor disposed in the terminal is a DVS is used as an example. In this implementation of this application, the terminal may quickly perform image rebuilding by using information collected by the DVS, to obtain a rebuilt QR code image, thereby implementing efficient recognition of the QR code.

The following describes in detail the image processing method provided in this application.

FIG. 45 is a schematic flowchart of another image processing method according to this application.

4501: Obtain movement information.

A motion sensor may monitor movement of a target object in a detection range of the motion sensor, to obtain the movement information of the target object in the detection range. The target object is an object moving in the detection range, there may be one or more target objects, and the movement information may include information that is about a movement trajectory of the target object and that is generated when the target object moves in the detection range.

It should be noted that, the object mentioned in this embodiment of this application is an object or object that has relative movement with the motion sensor. It may be understood that the movement mentioned in this application is movement with respect to the motion sensor.

For example, the movement information may include information, for example, a size of a region in which the target object is located and coordinates of a border or a corner point of the region in the detection range, generated when the target object moves in the detection range.

For ease of understanding, a region in which the target object is located at each detected moment when the target object moves in the detection range is referred to as a movement region of the target object below. For example, if the target object is a pedestrian and the pedestrian is performing a whole-body movement, the movement region may include a whole body of the pedestrian; if the pedestrian moves only an arm, the target object may be only an arm of the pedestrian, and the movement region may include an arm part of the pedestrian.

4502: Generate an event image based on the movement information.

After the movement information is obtained, at least one frame of event image may be generated based on information collected by the motion sensor in the detection range. Generally, the movement information may include information about a trajectory of movement of the target object in the detection range in a time period. Therefore, an image corresponding to the detection range is generated, and the trajectory that is of the target object and that is included in the movement information is mapped to the image, to obtain the event image.

For example, for the event image, refer to FIG. 35 to FIG. 37 and related descriptions thereof. Alternatively, the event image may be an image obtained by performing optimization in the foregoing motion compensation manner.

In a possible implementation, the method provided in this application may further include: compensating for the event image based on a movement parameter of relative movement between the target object and the motion sensor, to obtain a compensated event image. The movement parameter represents a parameter related to relative movement between the sensor and the target object. For example, the movement parameter includes one or more of the following: depth, optical flow information, acceleration of movement performed by the motion sensor, or angular velocity of movement performed by the motion sensor, where the depth indicates a distance between the motion sensor and the target object, and the optical flow information indicates information about a movement speed of the relative movement between the motion sensor and the target object. Therefore, in this implementation of this application, the event image may be compensated for based on the movement parameter, to obtain a clearer event image, so that a clearer rebuilt image can be obtained during subsequent image rebuilding.

For example, the movement trajectory of the target object is uniform linear movement, the motion sensor is a DVS, and a location captured by the DVS at a $t_k$ moment in a time window [t, t + Δt] is $x_k$, and the movement trajectory of the target object may be divided into a plurality of segments of linear movement. $\theta$ (namely, the movement parameter) is used to represent the movement speed of the target object in the event image. In this case, a location $x_k'$, in the event image, obtained by performing motion compensation on the target object is: $$x_k' = x_k - (t_k - t_{ref}) \cdot \theta.$$ After motion compensation is performed on all events in the event image, a compensated event image may be obtained.

In a possible implementation, the movement parameter may be extracted from data collected by an IMU, or may be obtained through calculation based on data collected by the motion sensor such as the DVS.

For example, if the movement parameter not only includes a related parameter of the motion sensor, but also includes the movement speed, a movement direction, a movement acceleration, or the like of the target object, the movement parameter may be obtained through calculation based on the information collected by the motion sensor.

For another example, if the movement parameter includes a related parameter of the motion sensor, for example, the optical flow information, the acceleration of the motion sensor, or the angular velocity or depth of the motion sensor, the related parameter of the motion sensor may be obtained based on the information collected by the motion sensor or via the IMU, a gyroscope, an accelerometer, or the like.

For example, the movement parameter is obtained from the data collected by the IMU. The data collected by the IMU may include an angular velocity $\omega$, an acceleration $\alpha$, or the like of the IMU. One or more of the angular velocity $\omega$, the acceleration $\alpha$, or the like may be selected as the movement parameter.

Optionally, the event image may be further optimized according to the method corresponding to FIG. 38 to FIG. 44, to obtain a clearer event image. For details, refer to related descriptions of FIG. 38 to FIG. 44, and details are not described herein again.

4503: Determine, from a preset color pool based on at least one event included in the event image, a color type corresponding to each pixel that is in the event image, to obtain a first rebuilt image.

The event image may be any frame of image in the foregoing at least one frame of image, or may be one frame of image selected from the at least one frame of image. For example, information collected by the DVS in a time period may be converted into a plurality of frames of event images. One frame of event image may be randomly selected from the plurality of frames of event images to perform color rebuilding, to obtain one frame of rebuilt image. Alternatively, one frame (such as the 1st frame, the 5th frame, or the last frame) may be selected from the plurality of frame event images to perform color rebuilding, to obtain one frame of rebuilt image. Alternatively, a plurality of frames of event images or all event images may be selected from the plurality of frames of event images to perform color rebuilding, to obtain a plurality of frames of rebuilt images. A process of performing color rebuilding for each frame of event image is similar.

The color pool is optional, in other words, the color pool may not be used for determining the color type of the pixel. For example, when the event image is scanned, a default start color type is white, and when an event at a next pixel is scanned, the next pixel is black by default, that is, the color type can be a default color type, and does not need to be selected from the color pool. In this embodiment of this application, for ease of understanding, an example in which the color type is selected from the color pool is used for example for description, and this is not intended as a limitation. For example, in an actual application scenario, that the color pool is set or a color type of a pixel is a fixed color type by default or the like may be determined based on an actual requirement.

For example, for ease of understanding, an example of a process of rebuilding one frame of event image to obtain a rebuilt image is used for example description in this application.

A color type corresponding to a pixel corresponding to each event and a color type corresponding to a pixel adjacent to the event may be determined from the preset color pool based on a location of the event included in the event image, to obtain the first rebuilt image. Specifically, one pixel at which an event exists is used as an example. The pixel is referred to as a first pixel below. In at least one pixel adjacent to the first pixel, there is at least one pixel whose corresponding color type is different from a color type of the first pixel. A pixel that is adjacent to the first pixel and that has a color type different from the color type corresponding to the first pixel is referred to as a second pixel. If a region in the event image is consecutive pixels at which no event exists, color types corresponding to the pixels in the region are the same, or a light intensity changes slightly, where for example, a variation is less than a threshold.

Specifically, a specific manner of obtaining the first rebuilt image may include: scanning each pixel in the event image in a first direction, and determining, from the preset color pool, a color type corresponding to each pixel that is in the event image, to obtain the first rebuilt image. If an event is detected by scanning at the first pixel, it is determined that the color type of the first pixel is a first color type. If there is no event at the second pixel arranged before the first pixel in the first direction, the color type corresponding to the second pixel is a second color type. The first color type and the second color type are two color types included in the color pool.

For example, the color pool may include color type 1 and color type 2. Pixels in the event image may be scanned in a row-by-row or column-by-column manner. Before an event is detected through scanning, color type 2 is rebuilt for each pixel. When it is detected through scanning that an event exists at a pixel, color type 1 may be rebuilt for the pixel. If there is no event at a segment of consecutive pixels scanned subsequently, color types corresponding to the segment of consecutive pixels are also color type 1. After the consecutive pixels, if a pixel at which an event exists is detected again through scanning, color type 2 may be rebuilt for the pixel, and color type 2 may be rebuilt for a segment of consecutive pixels that are subsequently scanned and at which no event exists. The other pixels may be deduced by analogy, so as to obtain a rebuilt image.

In a possible implementation, if there is no event at a plurality of consecutive third pixels arranged after the first pixel in the first direction, color types corresponding to the plurality of third pixels are the same as the color type of the first pixel, in other words, the color types corresponding to the plurality of third pixels are the first color type.

For example, for ease of understanding, the event image may be represented as shown in FIG. 46A. Each "a" represents that there is an event at a pixel, for example, S1 to S5 in FIG. 46A, and "o" represents that there is no event at a pixel. After the event image is obtained, a color type corresponding to each pixel is determined. For example, an obtained rebuilt image may be shown in FIG. 46B, where the event image may be scanned in a row-by-row manner. When the 1st row is scanned, an initial color type may be set to the second color type, and when the event (S1) is detected through scanning, the color type is changed, and a color type of a pixel corresponding to S 1 is rebuilt as the first color type. If there is no event at a plurality of consecutive pixels after the pixel, color types of the segment of consecutive pixels are the same as the color type of the first event, and are all the first color type. When the 2nd row is scanned, an initial color type is also set to the second color type. When the event S2 is detected through scanning, a color type of a pixel corresponding to S2 is set to the first color type. There is no event at a plurality of pixels after the pixel corresponding to S2, and therefore color types of the plurality of pixels are all set to the first color type. A rebuilding manner of the 3rd row is similar to that of the 2nd row, and details are not described again. When the 4th row is scanned, an initial color type is also set to the second color type. When the first event S4 is detected through scanning, a color type of a pixel at which S4 is located is set to the first color type, and a color type of a pixel between pixels at which S4 and S5 are located is also the first color type. After S5 is detected through scanning, the rebuilding color type is changed to the second color type, a color type of a pixel corresponding to S5 is the second color type, and a pixel after the pixel corresponding to S5 is also the second color type. When the 5th row is scanned, because no event exists in the 5th row, color types of pixels in the 5th row are all the second color type.

In a possible implementation, if there is an event at a fourth pixel that is arranged after the first pixel in the first direction and that is adjacent to the first pixel, and if there is no event at a fifth pixel that is arranged after the fourth pixel in the first direction and that is adjacent to the fourth pixel, color types corresponding to both the fourth pixel and the fifth pixel are the first color type. It may be understood that, when at least two consecutive pixels in the event image have events, when the second event is detected through scanning, a rebuilding color type may not be changed, thereby avoiding an unclear edge of a rebuilt image caused by an excessively wide edge of the target object.

For example, an event image in which there are events at two consecutive pixels may be shown in FIG. 47A. FIG. 47A is similar to the event image shown in FIG. 46A, and similarities are not described herein again. Some differences lie in that in the 1st row of FIG. 47A, there are two consecutive pixels with events S 1 and S2, and a rebuilt image obtained by scanning the event image may be shown in FIG. 47B. In the 1st row, the event image is scanned by using the second color type as an initial color type. When the event S 1 is obtained through scanning, the rebuilding color type is changed to the first color type. When the event S2 is obtained through scanning, because S2 is adjacent to S 1, the rebuilding color type may not be changed. In other words, a color type of a pixel corresponding to S2 is also the first color type, so as to avoid a phenomenon of an edge with different colors, and improve accuracy of a rebuilt image.

In a possible implementation, a direction of scanning the event image may be preset, or may be determined based on information collected by the motion sensor.

For example, scanning may be performed based on rows or columns of the event image in advance.

For another example, if a terminal is used to shoot a QR code, and a DVS and an IMU are disposed in the terminal, when the QR code is shot, movement information collected by the DVS may be used to generate an event image, and a movement direction of the terminal may be determined by using the IMU. The movement direction is then set to a direction in which the event image is scanned.

For another example, a DVS is disposed in a terminal. When a QR code is shot, movement information collected by the DVS may be used to generate an event image. In addition, a movement direction of the terminal may be calculated based on the information collected by the DVS. The movement direction is then set to a direction in which the event image is scanned. Alternatively, a movement direction of the terminal may be recognized based on information shot by an RGB camera, so that the movement direction is set to a direction in which the event image is scanned.

For another example, if a license plate recognition system is used to recognize a license plate, an image of the license plate needs to be shot. The event image may be generated based on information collected by a DVS, and a movement direction of a vehicle may be calculated based on the information collected by the DVS, so that the movement direction is set to a direction in which the event image is scanned. Alternatively, a movement direction of a terminal may be recognized based on information shot by an RGB camera, and the movement direction is set to a direction in which the event image is scanned.

In a possible implementation, color types included in the color pool may be set before rebuilding is performed based on the event image. There may be a plurality of setting manners. For example, two or more default color types (for example, black and white) may be preset. Alternatively, after an RGB image shot by the RGB camera is obtained, a color histogram of the RGB image is generated, and two or more color types that account for maximum proportions are selected from the histogram and added to the color pool. Alternatively, input data of a user is received, and color types are determined from the input data and added to the color pool.

In a possible implementation, after the event image is obtained, fusion may be further performed based on the event image and the RGB image collected by the RGB camera, to obtain a clearer image, so as to facilitate subsequent tasks such as recognition or classification.

Specifically, the event image and the RGB image may be divided into a plurality of regions, and locations of the plurality of regions divided in the event image and the plurality of regions in the RGB image are the same, and then a blur degree of each region in the RGB image is measured (for example, measured by using a variance or a Laplace transform). When it is determined that a blur degree of a region is lower than a preset blur degree, image rebuilding is performed based on a region that corresponds to the region and that is in the event image. For a rebuilding process, refer to the rebuilding process in step 4503, so as to obtain a rebuilt image in the region. Then, the rebuilt image in the region is spliced with the RGB image. For example, a region whose blur degree is lower than the preset blur degree and that is in the RGB image is replaced with the rebuilt image in the region, to obtain a final rebuilt image. For example, compensation rebuilding may be performed on a portion of poor quality in the RGB image, and a portion of good quality remains unchanged. Specifically, for example, for a QR code that generates a highlight part, the highlight part may be rebuilt, and a part in which no highlight exists may remain unchanged.

It may be understood that during image rebuilding, rebuilding can be performed on only a region in the event image, the event image does not need to be completely rebuilt, and a rebuilt image in the region and the RGB image are fused to obtain a new rebuilt image, namely, a new first rebuilt image. Therefore, a size of the region in which image rebuilding needs to be performed is reduced, and efficiency of obtaining a rebuilt image is further improved.

After the first rebuilt image is detected through scanning, other operations may be further performed on the first rebuilt image, as shown in the following steps 4504 and 4506. It may be understood that steps 4504 and 4506 in this embodiment of this application are optional steps. Either of steps 4504 and 4506 may continue to be performed, or steps 4504 and 4506 may not be performed. This may be specifically adjusted based on an actual application scenario. This is not limited in this application.

4504: Scan the event image for a plurality of times in different directions to obtain a plurality of frames of rebuilt images, and fuse the plurality of frames of rebuilt images to obtain an updated first rebuilt image.

It should be noted that step 4504 in this embodiment of this application is an optional step. Specifically, it may be determined, based on an actual application scenario, whether the plurality of times of scanning need to be performed. This is not limited in this application. For example, a scenario of QR code recognition is used as an example. If a QR code cannot be recognized after a frame of rebuilt image including the QR code is rebuilt, the event image may be scanned for a plurality of times in different directions, to obtain an updated rebuilt image.

In a possible implementation, a same frame of event image may be scanned and rebuilt in a plurality of different directions, to obtain a plurality of frames of rebuilt images, and then the plurality of frames of rebuilt images may be fused to output a final more accurate rebuilt image.

Specifically, there may be a plurality of manners of fusing the plurality of frames of rebuilt images. For example, fusion may be performed by using each pixel in the plurality of frames of rebuilt images as a unit. One pixel is used as an example. If a value of the pixel in each frame of rebuilt images is the same, the same value is used as a value of the pixel in the final rebuilt image. If a value of the pixel in each frame of rebuilt image is different, weighted fusion may be performed on the value of the pixel in each frame of rebuilt image, to obtain a value of the pixel in the final rebuilt image. Alternatively, a value of the pixel is determined according to a voting method. For example, if values of pixels at a same location in four frames of rebuilt images are 1, 1, 1, 0, a quantity of 1s is greater than a quantity of 0s, and it is determined that a value of the pixels at the same location in a final rebuilt image is 1.

4505: Determine whether the first rebuilt image meets a preset condition, and if the first rebuilt image meets the preset condition, perform step 4506, or if the first rebuilt image does not meet the preset condition, perform step 4501.

In the method provided in this embodiment of this application, it may be further determined whether the first rebuilt image meets a preset requirement. If the first rebuilt image does not meet the preset requirement, movement information may be re-obtained, and a new event image is obtained based on the new movement information, to obtain a new rebuilt image. The preset requirement may include but is not limited to: a definition degree of the rebuilt image does not reach a preset value, information included in the rebuilt image is not recognized, accuracy of a recognition result in the rebuilt image is lower than a threshold, or the like.

For example, in a process of scanning a QR code by using a terminal, the terminal generates one frame of event image based on information collected by a DVS, and performs image rebuilding based on the event image to obtain one frame of rebuilt image. If recognition is performed on the rebuilt image but the QR code is not recognized, information collected by the DVS may be re-obtained, a new event image is obtained, and a new rebuilt image is further obtained. Other recognition processes can be deduced by analogy until the QR code is recognized.

4506: Other processing.

After the first rebuilt image that meets the preset requirement is obtained, other processing may be performed on the first rebuilt image. For example, information included in the first rebuilt image is recognized, or the first rebuilt image is stored. In different scenarios, manners of processing the first rebuilt image may also be different, and this may be adjusted based on an actual application scenario.

Therefore, in this implementation of this application, image rebuilding may be performed by using the information collected by the motion sensor, to efficiently and quickly obtain a rebuilt image, thereby improving efficiency of subsequently performing image recognition, image classification, and the like on the rebuilt image. Even if a clear RGB image cannot be shot in some scenarios in which a moving object is shot, there is a shooting shake, and the like, image rebuilding may be performed based on the information collected by the motion sensor, so that a clearer image can be quickly and accurately rebuilt, so as to facilitate a subsequent task such as recognition or classification.

The foregoing describes in detail a procedure in the image processing method provided in this application. For ease of understanding, a specific application scenario is used as an example, and the following describes, with reference to the foregoing procedure, in more detail the image processing method provided in this application.

FIG. 48 is a schematic flowchart of another image processing method according to this application, and is described below.

First, event image obtaining (4801) is performed.

An event image may be obtained based on data collected by a DVS. The data of the DVS is accumulated into frames. A specific framing manner may be accumulated by time, by an event quantity, or by a time plane, to obtain the event image.

Generally, a shot object may be an object having two or more colors, for example, a QR code, an applet code, a bar code, a license plate, or a road sign. The DVS may respond to a brightness change region. For example, the shot object a two-color object, and a brightness change is generated at only an edge of the object. In this case, features of the DVS and the two-color object may be used to obtain an event image with a sharper edge.

Preprocessing 4802 may mean performing an operation such as denoising or motion compensation on the event image. An objective of denoising is to remove noise irrelevant to an edge of a target object. A denoising manner may include a plurality of manners, such as neighborhood denoising and point cloud denoising. The motion compensation may be performed on the event image by using a movement parameter. The movement parameter may include a movement speed, an angular velocity, an acceleration, and the like of the DVS, and may further include a parameter such as a movement speed or an acceleration of the target object. Through motion compensation, the edge of the target object can be clearer in the event image, and the edge is compensated for based on a temporal event, so as to obtain a clearer and more accurate event image.

Image rebuilding 4803 is performing image rebuilding based on the event image obtained through preprocessing 4802, to obtain a rebuilt two-color image.

For ease of understanding, in this embodiment of this application, an example in which the rebuilt image is a two-color image having two colors is used as an example for description. This is not limited. For rebuilding 4803 of the two-color image, refer to a rebuilding process shown in FIG. 49.

First, two colors are initialized (4901).

For example, a color pool includes two color types, and the two colors are initialized (4901), that is, color types used for image rebuilding are initialized. The two colors are colors in the two-color image. The two colors may be obtained in a plurality of manners. For example, the two-color image is a black and white image by default. Alternatively, a type of the two-color image is recognized to determine the colors. For example, if the type of image is a bar code, the image includes black and white colors by default. Alternatively, the two colors are obtained from another sensor (sensor). For example, an RGB camera is invoked to collect an image, a region of the two-color image in an RGB image is determined based on a region of a DVS two-color image, then statistics about two main colors in the region are collected (for example, according to a method of a histogram), and the two colors are used as an initial color pool. For example, in a scenario in which a QR code is scanned, the two color types may be initialized as black and white, so that during subsequent image rebuilding, an image that includes the QR code and that has white and black may be rebuilt. For another example, in a scenario in which a license plate is scanned, two colors may be selected from a histogram of a region of a license plate included in the RGB image. If the license plate is white characters on a blue background, the two color types may be initialized to blue and white. If the license plate is black characters on a yellow background, the two color types may be initialized to yellow and black. This may be specifically adjusted based on an actual application scenario or requirement, and is not limited herein.

Then, the event image is scanned (4902). The event image may be scanned in a manner such as a movement direction of the target object, a movement direction of the DVS, row-by-row, or column-by-column, and whether there is an event at each pixel is scanned.

In a process of scanning the event image, it may be determined whether the scanning ends (4903). If the scanning ends, step 4907 is performed. If the scanning does not end, steps 4902 to 4906 may be performed.

If the scanning does not end, it may be determined whether a current pixel includes an event (4904). If the current pixel includes an event, a color may be changed (4905), to be specific, a color type different from that of a previous pixel is set for the current pixel. For example, if a color corresponding to the previous pixel is white, a color corresponding to the current pixel is different and is black.

If the current pixel does not include an event, a color type corresponding to the current pixel does not need to be changed, to be specific, a color corresponding to the current pixel is the same as a color type corresponding to a previous pixel. For example, if the color type corresponding to the previous pixel is white, the color type corresponding to the current pixel is also white.

After the color type corresponding to the current pixel is determined, a color of the current pixel in the two-color image may be rebuilt (4906). For example, if the color type of the current pixel is white, a color type of the pixel is set to white in the two-color image.

For example, in a scenario in which the target object is a QR code, row-by-row scanning is performed on the event image in a QR code rebuilding region. In a process of scanning pixels in each row, before an event is detected through scanning, a color of a scanned pixel is rebuilt as black. When an event is detected for the first time during scanning, a color is rebuilt as white. In subsequent scanning, when there is an event at a scanned pixel, and no event is generated before the pixel or no event is generated at subsequent pixels, a color is changed, and a new color is placed at a location of the pixel. If a color of a previous pixel is white, the color of the current pixel is changed to black.

Subsequently, the event image continues to be scanned, and colors of pixels in the two-color image are rebuilt, that is, steps 4902 to 4906 are cyclically performed until scanning of the event image ends, to be specific, all pixels in the event image are scanned, and colors of all pixels in the two-color image are rebuilt, to obtain the two-color image.

After the two-color image is obtained, it may be further determined whether the two-color image meets a requirement (4907). If the two-color image meets the requirement, the two-color image may be output (4908). If the two-color image does not meet the requirement, it may be selected to change a scanning direction (4909), and then the event image is re-scanned, in other words, steps 4902 to 4907 are repeatedly performed until a two-color image that meets the requirement is obtained.

The requirement may be that recognition precision of the two-color image exceeds a preset precision value, information included in the two-color image is recognized, a blur degree of the two-color image is lower than a preset blur degree, a quantity of times of performing image rebuilding exceeds a preset quantity of times, or the like. For example, if a rebuilding object is a QR code, the two-color image may be recognized. If the QR code is recognized, and information included in the QR code is obtained, the two-color image meets the requirement, and a process of image rebuilding may be terminated.

For example, scanning a QR code is used as an example. An event image obtained based on data collected by the DVS may be shown in FIG. 50. Each pixel in the event image may be scanned row by row or column by column, to obtain a final two-color image. The two-color image is shown in FIG. 51.

In addition, after the scanning direction is changed and the event image is re-scanned, a new two-color image may be obtained. The new two-color image may be fused with one or more frames of two-color images obtained before the scanning direction is changed, to obtain a fused two-color image. It may be understood that the event image is scanned in a plurality of different directions, to complete a plurality of times of image rebuilding, and then rebuilt images in the different directions are fused. A fusion manner may be, for example, a per-pixel voting method, to obtain the final two-color image.

Therefore, in this implementation of this application, the two-color image can be quickly rebuilt. In the foregoing embodiment, the two-color image and a DVS triggering mechanism are repeatedly used, and fast rebuilding may be implemented in a manner of simply scanning the image. Moreover, complexity of an algorithm is low, and rebuilding can be implemented without relying on a complex algorithm. When there is relative movement between the two-color image and a DVS sensor, based on an event (event) that is generated by the two-color image and that is in the DVS, the original two-color image can be quickly obtained, and this is used for fast rebuilding and detection and recognition. In a scenario with a fast speed, a high dynamic range, or a low latency requirement, and on a device with a low computing capability, high rebuilding precision can be obtained. By fully utilizing features of the two-color image and a DVS event triggering mechanism, the two-color image can be quickly rebuilt by scanning the image, and this is conducive to rapid recognition and detection. Recognition precision of the two-color image can be improved in a high dynamic range environment and a fast movement scenario. A simple rebuilding algorithm with low computational complexity and higher robustness can improve a recognition speed of the two-color image.

In addition, image rebuilding may be performed based on the RGB image collected by the RGB camera. Specifically, after the RGB image is obtained, a region in which image rebuilding needs to be performed is determined, a corresponding region is determined from the event image, and then the corresponding region in the event image is scanned, to rebuild a two-color image. A rebuilding process is similar to that of the foregoing 4901 to 4909. Details are not described herein again. After the two-color image of the region is obtained, the two-color image and the RGB image are fused. For example, the region in the RGB image is replaced with the two-color image, or a pixel value of the two-color image and a pixel value of the region in the RGB image are weighted and fused, so that a final obtained fused image is clearer than the RGB image.

In addition, it should be noted that there may be a parallax between the RGB camera and the DVS, in other words, a field of view of the RGB camera and a field of view of the DVS may be different. Before image rebuilding is performed, registration may be further performed on the RGB image and the event image. For example, the RGB image and the event image are aligned by using an identical coordinate system, so that the RGB image and the event image are in the same coordinate system.

Specifically, for example, when the RGB and the DVS directly have no parallax, a region of relatively poor quality in the RGB image may be directly rebuilt, and a region of relatively good quality is directly used. For example, for a highlight region in the RGB image, a two-color image has poor quality in the RGB image and is difficult to distinguish. However, the DVS has a high dynamic range and can distinguish boundaries. In this case, the highlight part may be rebuilt in the rebuilding manner of fast scanning provided in this application, and data of the RGB may be directly used for a non-highlight part. Image quality can be measured by using a contrast. If the contrast is less than a threshold, a region is considered as having poor quality. In embodiments of this application, a difference between two types of data: RGB data and DVS data may also be used to distinguish between quality of the original RGB image. Specifically, edge information of the RGB image is extracted, and then compared with the event image. A comparison manner includes pixel-by-pixel difference, and the like. A contrast may also be calculated by dividing the event image into blocks. A place with a large contrast difference between the two types of data is a place of poor image quality, and rebuilding needs to be performed in a fast rebuilding manner; and the RGB data is used in other regions.

Therefore, in this implementation of this application, image rebuilding may be performed based on the RGB image, and a relatively poor-quality part in the RGB image is rebuilt based on information collected by the DVS, so as to quickly and accurately obtain a clear image, and efficiently perform a task such as image recognition or image classification subsequently.

This application further provides an image processing apparatus. Refer to FIG. 114. The image processing apparatus may be configured to perform steps of the foregoing method procedures corresponding to FIG. 45 to FIG. 51. The image processing apparatus may include:

an obtaining module 11401, configured to obtain movement information, where the movement information includes information about a movement trajectory that is of a target object and that is generated when the target object moves in a detection range of a motion sensor 11403; and

a processing module 11402, configured to generate an event image based on the movement information, where the event image is an image indicating the movement trajectory that is of the target object and that is generated when the target object moves in the detection range, where

the processing module 11402 is further configured to obtain a first rebuilt image based on at least one event included in the event image, where a color type of a first pixel is different from that of at least one second pixel, the first pixel is a pixel corresponding to any one of the at least one event in the first rebuilt image, and the at least one second pixel is included in a plurality of pixels that are in the first rebuilt image and that are adjacent to the first pixel.

Optionally, the image processing apparatus may further perform steps of the foregoing method procedures corresponding to FIG. 38 to FIG. 44.

In a possible implementation, the processing module 11402 is specifically configured to: scan each pixel in the event image in a first direction, and determine the color type corresponding to each pixel that is in the event image, to obtain the first rebuilt image, where if it is found, through scanning, that there is an event at the first pixel, a color type of the first pixel is determined as a first color type; and if there is no event at a second pixel arranged before the first pixel in the first direction, a color type corresponding to the second pixel is a second color type, where the first color type and the second color type are different color types, and a pixel at which there is an event represents a pixel that corresponds to location change monitored by the motion sensor and that is in the event image.

In a possible implementation, the first direction is a preset direction, or the first direction is a direction determined based on data collected by an IMU, or the first direction is a direction determined based on an image shot by a color RGB camera.

In a possible implementation, if there is no event at a plurality of consecutive third pixels arranged after the first pixel in the first direction, color types corresponding to the plurality of third pixels are the first color type.

In a possible implementation, if there is an event at a fourth pixel that is arranged after the first pixel in the first direction and that is adjacent to the first pixel, and if there is no event at a fifth pixel that is arranged after the fourth pixel in the first direction and that is adjacent to the fourth pixel, color types corresponding to both the fourth pixel and the fifth pixel are the first color type.

In a possible implementation, the processing module 11402 is further configured to: after scanning each pixel in the event image in the first direction, and determining the color type corresponding to each pixel that is in the event image, to obtain the first rebuilt image, scan the event image in a second direction, and determine the color type corresponding to each pixel that is in the event image, to obtain a second rebuilt image, where the second direction is different from the first direction; and fuse the first rebuilt image and the second rebuilt image, to obtain an updated first rebuilt image.

In a possible implementation, the processing module 11402 is further configured to: if the first rebuilt image does not meet a preset requirement, update the movement information, update the event image based on updated movement information, and obtain an updated first rebuilt image based on an updated event image.

In a possible implementation, the processing module 11402 is further configured to: before determining, based on the at least one event included in the event image, the color type corresponding to each pixel that is in the event image, to obtain the first rebuilt image, compensate for the event image based on a movement parameter of relative movement between the target object and the motion sensor, to obtain a compensated event image, where the movement parameter includes one or more of the following: depth, optical flow information, acceleration of movement performed by the motion sensor, or angular velocity of movement performed by the motion sensor, where the depth represents a distance between the motion sensor and the target object, and the optical flow information represents information about a movement speed of the relative movement between the motion sensor and the target object.

In a possible implementation, a color type of a pixel in the rebuilt image is determined based on a color collected by the color RGB camera.

In a possible implementation, the processing module 11402 is further configured to: obtain an RGB image based on data collected by the RGB camera; and fuse the RGB image and the first rebuilt image to obtain an updated first rebuilt image.

3. Application process

The foregoing describes in detail the image optimization method. After an optimized RGB image or event image is obtained, the optimized event image may be used for further application. Alternatively, an RGB image or an event image may be collected in the foregoing data collection and data encoding and decoding part, and the collected RGB image or event image may be used subsequently for further application. The following describes a specific application scenario of the RGB image or the event image.

An application scenario provided in this application corresponds to a plurality of method procedures, and may specifically include scenarios such as movement photography enhancement, fusion of a DVS image and an RGB image, key frame selection, SLAM, or pose estimation. The following separately provides examples for description.

(1) Movement photography enhancement

Shooting is a common function. For example, the terminal may be provided with or connected to a color (red green blue, RGB) camera, for the user to shoot an RGB image. In some scenarios, some moving objects may be shot, shooting may be performed in a scenario with a moving camera, or shooting may be performed in some environments with large differences in a light intensity.

Generally, an RGB image shot by a camera may be represented by using information of a plurality of channels, and each channel is represented by using a limited range, for example, a range of 0 to 255. However, in an actual application scenario, there may be a scenario in which a maximum light intensity differs greatly from a minimum light intensity, and the range of 0 to 255 cannot represent different light intensities presented in an actual scenario. As a result, textures of a finally obtained RGB image are not rich enough, and a case such as blur exists in a visual interface. Alternatively, in an actual application scenario, a case such as a lens shake or a high-speed movement of an object in a shooting range may occur. As a result, a finally shot RGB image is blurred, and an image presented to a user in a visual interface is unclear. This reduces user experience.

In some scenarios, to obtain an image including more information, a high dynamic range image (high dynamic range image, HDR) may be obtained by fusing images of different exposure duration, and texture information of a bright part and a dark part in the scenarios is captured, thereby improving a definition of a finally obtained image. For example, two types of images of short exposure duration and long exposure duration may be shot, and then the images corresponding to the short exposure duration and the long exposure duration are fused to obtain an HDR. The HDR includes richer information. In this way, an image finally presented to the user in the visual interface is clearer. In a shooting scenario, a maximum light intensity may greatly differ from a minimum light intensity (referred to as a large light ratio below), a lens may shake, or an object in a shooting range may move at a high speed. As a result, a finally obtained image is blurred, and user experience is reduced.

The image processing method provided in this application may be applied to various scenarios, such as a shooting scenario and a surveillance scenario, to shoot a clearer image or make a shot image clearer. For example, in a scenario, a user may perform shooting by using a terminal to obtain one or more clearer images, or after shooting a plurality of images, combine the plurality of images into one clearer image. The image processing method provided in this application includes a plurality of implementations. For example, in an implementation 1, one or more images may be shot in a shooting process, for example, a moving object is shot with reference to information collected by a motion sensor. In an implementation 2, a plurality of images are shot and then the plurality of images are combined to produce a higher-definition image. In the implementation 2, for a process of shooting a plurality of images, refer to the image shooting manner in the manner 1. To be specific, the implementation 1 and the implementation 2 provided in this application may be implemented separately, or may be implemented together. This may be specifically adjusted based on an actual application scenario. This application describes a case in which the implementation 1 and the implementation 2 are separately implemented. No limitation is imposed.

Details of the implementation 1 are as follows: The user shoots a scenario with a moving object by using a mobile phone with a shooting function. The user may select a mode for shooting a moving object. After the user taps a shooting button, focusing on the moving object may be automatically completed with reference to information collected by a DVS, to shoot one or more images. In this way, a clearer image of the moving object is shot.

Details of the implementation 2 are as follows: In some high light ratio or movement scenarios, the user may perform shooting by using a mobile phone with a shooting function. After the user taps a shooting button, the mobile phone may automatically set different exposure duration to shoot a plurality of images, and fuse the plurality of shot images to obtain a final HDR. For a manner of shooting a plurality of images separately, refer to the shooting manner in the implementation 1, so that a clear image can be shot efficiently.

The following separately describes the implementation 1 and the implementation 2. The following implementation 1 and the implementation 2 may be implemented separately, or may be implemented together. This may be specifically adjusted based on an actual application scenario.

Implementation 1: Image processing manner used when an object in a movement state exists in a shooting range.

With the rapid development and the wide popularity of smartphones and digital cameras, users have a stronger demand for photography. However, although the existing mobile phone or digital camera can cover most photographing scenarios, snapping of a movement is not satisfactory. Specifically, the user needs to grasp a shooting occasion more accurately, and can grasp the moment of movement. In addition, operation skills such as focusing on a moving region and exposure control affect a final imaging effect. In an existing solution, a color (red green blue, RGB) camera is usually used for shooting, and capture of a movement moment by the RGB camera is usually manually triggered by a user. The user needs to select an area for focusing before shooting. Then, when a movement occurs, a shutter (or a shooting button of a mobile phone) is pressed at an appropriate occasion to record the movement moment. Specifically, a series of processes such as focusing, focus locking, shutter pressing, exposure, and output need to be triggered based on an operation of the user, to finally output an image. However, if the operations such as focusing and focus locking are triggered by the user, an optimal triggering time point may not be determined. As a result, a shot image is unclear, and user experience is reduced.

Therefore, this application provides an image processing method. In a movement scenario, a movement trajectory of a target object during movement is captured, to complete focusing on the moving target object, and improve a definition of an obtained image.

It should be noted that the scenario mentioned in this application in which a moving object exists in a shooting range refers to a case in which a camera moves relative to an object in the shooting range. In an actual application scenario, the camera may move, the object in the shooting range may move, or the camera and the object in the shooting range may move at the same time. This may be specifically adjusted based on an actual application scenario. For the camera, it may be understood that the object in the shooting range is in a movement state.

The following describes in detail the image processing method provided in this application. FIG. 52 is a schematic flowchart of the image processing method according to this application. Details are as follows:

5201: Detect movement information of a target object.

A motion sensor may monitor a movement of the target object in a preset range, to obtain the movement information of the target object in the preset range. The target object is an object moving in the preset range, there may be one or more target objects, and the movement information may include information about a movement trajectory of the target object moving in the preset range.

For example, the movement information may include information such as a size or a border of a region in which the target object is located, and coordinates of a corner point in the preset range, where the information is obtained when the target object moves in the preset range.

For ease of understanding, a region in which the target object is located at each detected moment when the target object moves in the preset range is referred to as a movement region of the target object below. For example, if the target object is a pedestrian and the pedestrian is performing a whole-body movement, the movement region may include a whole body of the pedestrian; if the pedestrian moves only arms, the target object may be only the arms of the pedestrian, and the movement region may include the arm part of the pedestrian.

Generally, the preset range is related to a focal length, a field of view, or the like of the camera, and is usually not less than a detection range of the motion sensor. For example, a larger field of view of the camera indicates a larger area of a shooting range, and a smaller field of view of the camera indicates a smaller area of the shooting range. For another example, a larger focal length of the camera indicates a larger shooting range. This may also be understood that a far-distance object is more clearly shot, and a smaller focal length of the camera indicates a smaller shooting range.

In this implementation of this application, a range monitored by the motion sensor includes the shooting range of the camera, the preset range may be the shooting range of the camera, and the range monitored by the motion sensor includes the preset range, in other words, the range monitored by the motion sensor may be greater than or equal to the preset range.

For example, for the movement information, refer to related descriptions of FIG. 35 to FIG. 37. Details are not described herein again.

In addition, the movement information may further include data, data streams, or the like obtained from data collection or data encoding and decoding mentioned in Part 1.

5202: Determine focusing information based on the movement information.

After the movement information of the target object in the preset range is obtained, the focusing information is determined based on the movement information. The movement information includes the movement trajectory of the target object, that is, the focusing information for focusing on the target object in the preset range may be determined based on the movement trajectory.

Optionally, there are a plurality of manners of determining the focusing information. The manners are separately described in detail below.

Manner 1: Obtain the focusing information by using a predicted region

For ease of understanding, in the following implementations of this application, a region in which at least one focus is located when the target object is shot is referred to as a focus region.

The focusing information may include location information of at least one point in the focus region, for example, information such as coordinates of a border or a corner point of the focus region in the preset range. A specific manner of determining the focus region may include: predicting a movement trajectory of the target object in preset duration based on the movement information, to obtain a predicted region, and then determining the focus region based on the predicted region, where the focus region includes at least one focus for focusing on the target object, and the focusing information includes location information of the at least one focus. The preset duration may be duration set in advance, for example, 10 microseconds or 5 microseconds.

It may be understood that, in some scenarios, because a movement has occurred, if shooting performed by the RGB camera is triggered based only on a current region and a movement feature of the target object, the target object may have entered a next location or state, and in this case, a shot image lags behind. Therefore, a region in which the target object is located in future preset duration needs to be predicted, an incomplete movement is filtered out, and especially cases in which the moving object just enters a field of view of the lens, or the moving object is far away and is unfavorable to shoot are filtered out, so that an optimal shooting occasion is determined, and the RGB camera is triggered to work.

In a specific implementation, the movement trajectory of the target object in the future preset duration may be predicted based on the movement information obtained in step 5201. Specifically, the movement trajectory of the target object in the future preset duration may be predicted based on at least one of the movement trajectory, a movement direction, and a movement speed of the target object moving in the preset range, to obtain a predicted region.

In a more specific implementation, a change function of a center point of a region in which the target object is located varying with time may be fitted based on a detected movement trajectory, a detected movement direction, and/or a detected movement speed of the moving object moving in the preset range, and then a predicted center point is calculated according to the change function. The predicted center point is a center point of the predicted region, and the predicted region is determined based on the predicted center point.

For example, as shown in FIG. 53, a change function $F(x_c, y_c, t)$ may be fitted based on the detected movement trajectory of the target object. $(x_c, y_c)$ is a center point of a region in which the target object is located, and t is time, so that a region location at which the moving object is located in a next time period may be calculated. The center point $(x_c, y_c)$ is obtained by calculating an average value of coordinate locations $(x_i, y_i)$ of all events, $i = 1, 2, ... n$, and $n$ is a quantity of events in a short-time window, where n is a positive integer. A specific calculation manner is, for example,

$$(x_c, y_c) = \left( \frac{1}{n} \sum_{i=1}^{n} x_i , \frac{1}{n} \sum_{i=1}^{n} y_i \right).$$

The change function may be a linear function, an exponential function, or the like, and may be specifically adjusted based on an actual application scenario. This is not limited herein. Then, a future movement trajectory of the target object is predicted according to the change function. A point is selected from the movement trajectory as a predicted center point, and a predicted region is determined based on the predicted center point. A shape of the predicted region may be adjusted based on an actual application scenario. For example, the shape can be an outer rectangle, an outer minimum circle, a polygon, and an irregular shape.

In a possible implementation, if the predicted region meets a preset condition, the focus region is determined based on the predicted region; if the predicted region does not meet a preset condition, the movement trajectory of the target object in the preset duration is re-predicted based on the movement information, to obtain a new predicted region. The focus region is determined based on the new predicted region. The preset condition may be that the target object included in the preset region is in a complete form, that is, the preset region includes a complete target object, an area of the predicted region is greater than a preset value, a distance between the target object and the camera is greater than a preset distance threshold, or the like.

Generally, the predicted center point may be predicted by the motion sensor, for example, a sensor such as DAVIS or CeleX, or may be predicted by a processor of an electronic device. Then, when the preset region meets a preset condition, a camera module of the electronic device may be triggered to focus on the focus region.

In the manner 1, the region in which the target object is located in future preset duration may be predicted by fitting the movement trajectory of the target object in the preset range, to predict the focus region, so that a subsequently shot picture is clearer. Especially in some scenarios in which the target object moves at a high speed, the region in which the target object is located in the future preset duration may be predicted, to predict the focus region, so that a clearer image of the target object in a movement state can be captured in time subsequently, thereby improving user experience.

Manner 2: Directly determine the focusing information based on a region in which the target object is currently located.

After the movement trajectory of the target object moving in the preset range is obtained, the region in which the target object is currently located may be used as the focus region. The focus region includes at least one focus for focusing on the target object, and the focusing information includes location information of the at least one focus. For example, if the region in which the target object is currently located is detected by using the DVS, and a movement speed of the target object is less than a speed threshold, it indicates that the movement speed of the target object is slow, and focusing time is sufficient. Therefore, the region in which the target object is currently located may be directly used as the focus region, and therefore a clear image may be shot.

For a manner of obtaining the region in which the target object is currently located, refer to the foregoing manner 1. Details are not described herein again.

In the manner 2, the region in which the target object is currently located, that is, the current region of the target object, may be used as the focus region, so that the target object can be accurately focused on. Especially in some low-speed movement scenarios, the focusing time is sufficient, and focusing can be performed based only on the current region, so that a clearer image can be obtained. No more prediction is required, so that workload is reduced.

5203: Focus on the target object in the preset range based on the focusing information, and shoot an image in the preset range.

The focusing information may include location information of at least one point in the focus region. After the focus region is determined, focusing is performed on the target object in the preset range based on the focus region, and an image in the preset range is shot.

Specifically, the focus region may be the same as the predicted region, or may be greater than the predicted region. This may be specifically adjusted based on an actual application scenario. For example, after the predicted region is determined, the predicted region may be directly used as the focus region, or a range larger than the predicted region may be selected as the focus region, so that integrity of the shot target object can be ensured. In another scenario, for example, a low-speed movement scenario, the focus region may be a region in which the target object is currently located, and focusing may be directly performed in the region in which the target object is currently located, so that a clear image can be shot, thereby reducing workload of the prediction step.

In a possible implementation, an image may be shot by using a camera, to obtain an image in the preset range. For example, shooting is performed by using the camera 193 shown in FIG. 1B. The camera may include a color (red green blue, RGB) sensor (which may also be referred to as an RGB camera), that is, shooting is performed by using the RGB camera. Correspondingly, a specific focusing manner may include: performing focusing by using, as the focus, at least one focus that has a minimum norm distance from the center point of the focus region and that is in a plurality of focuses of the RGB camera, to complete focusing on the region in which the target object is located or on the predicted region. Then, the target object is shot, to obtain an image shot by using the RGB camera. The image shot by the RGB camera may be referred to as an RGB image below. Certainly, in some scenarios, a center point of the predicted region may be directly used as a focus, so as to complete focusing and shooting and obtain an RGB image.

For example, as shown in FIG. 54, the RGB camera may have a plurality of preset focuses. After the predicted region of the target object is predicted, and the focus region is determined based on the predicted region, one or more focuses that have a minimum norm distance from the center point of the focus region are selected as focuses for focusing, so as to shoot an image of the target object. A method for calculating a distance may include but is not limited to an L1 norm distance or an L2 norm distance. For example, a formula for calculating the L1 norm distance may include $|x_1 - x_2| + |y_1 - y_2|$, and a formula for calculating the L2 norm distance may include $\sqrt{(x_1 - x_2)^2 + (y_1 - y_2)^2}$. $(x_1, y_1)$ is a midpoint of the predicted region. $(x_2, y_2)$ is a preset focus of the RGB camera.

In another possible scenario, the RGB camera may not preset a focus. After determining the focus region, the RGB camera directly uses a center point of the focus region as the focus; uses all pixels in the focus region as the focus; or selects one or more pixels in the focus region as the focus. This may be specifically adjusted based on an actual application scenario.

In a possible implementation, before an image is shot, an exposure parameter may be further obtained, and the image is shot based on the exposure parameter.

The exposure parameter may include but is not limited to an exposure value (exposure value, EV), an exposure amount, exposure duration, an aperture size, an international standardization organization (ISO), or the like. The exposure duration may be understood as duration for which the shutter needs to be open when light is projected onto a photosensitive surface of a photosensitive material of the camera. The exposure duration may be adjusted, so that shooting duration of the camera matches the movement speed of the target object, and the camera can quickly capture a clearer image. The exposure value indicates a combination of an exposure aperture and the exposure duration. The exposure amount represents an integral of a light intensity received by a surface element on a surface of an object in a time period. The IOS is a value determined based on the exposure amount.

In a specific implementation, a manner of obtaining the exposure parameter may include: determining the exposure parameter based on the movement information. For example, the exposure parameter includes the exposure duration, and the exposure duration is in a negative correlation with the movement speed of the target object. For example, a higher movement speed of the target object indicates shorter exposure duration, and a lower movement speed of the target object indicates longer exposure duration, so that the camera can shoot a clearer image in matched exposure duration.

In another specific implementation, a manner of obtaining the exposure parameter may include: determining the exposure parameter based on a light intensity. For example, the exposure parameter includes the exposure duration, and the exposure duration is in a negative correlation with the light intensity. For example, a higher light intensity indicates shorter exposure duration, and a lower light intensity indicates longer exposure duration.

For example, the RGB camera may adjust the exposure parameter based on a predicted movement feature, specifically a change trend of the movement speed. By default, the exposure parameter is set to a plurality of gears to adapt to different movement speeds, such as 1/30s, 1/60s, 1/100s, 1/20s, and 1/500s. When the movement becomes fast, if the exposure time is long, the exposure time is appropriately reduced and the exposure parameter is adjusted to a lower gear. When the movement slows down, if the exposure time is short, the exposure time is appropriately increased and the exposure parameter is adjusted to a higher gear, so that the exposure amount during shooting matches the light intensity, thereby avoiding overexposure or insufficient light.

In a possible implementation, after shooting is performed by using the camera, the method may further include: fusing, by using movement information that of the target object and that is detected by the motion sensor during image shooting, images shot by the camera, to obtain a target image in the preset range.

For example, as shown in FIG. 55, the RGB camera completes exposure and shooting, and outputs an RGB camera image after performing image signal processing in the RGB camera. The DVS records event data in a same time period, accumulates events in the time period, and obtains an outline and a location of the moving object. The outline and the location are registered with the RGB camera image, that is, pixel coordinates are aligned to highlight edge details of the moving object through manners such as filtering and edge sharpening. The enhanced target image is used as a final output, and is presented to the user or stored in the memory of the mobile phone. After that, based on system settings or user settings, the DVS may continue to perform motion detection, and trigger the RGB camera to perform next shooting, that is, continuous shooting of the moving object.

Therefore, in this implementation of this application, focusing may be performed based on the detected movement trajectory that is of the target object and that is generated when the target object moves in the preset range, so that a clearer image is shot. In addition, the focus region is the same as or intersects with the region in which the target object moves or the region in which the target object is predicted to moves, so that a clearer image is shot, thereby improving user experience. In addition, further, the region in which the target object is located in the future preset duration may be predicted based on the movement trajectory of the target object in the preset range, so that focusing may be performed based on the predicted region. This may be understood as determining the focus region in advance. In this way, the shot image of the moving object can be clearer. In addition, enhancement processing may be performed on the shot image based on movement information that is generated at the same time as the shot image, so as to further improve a definition of the obtained target image.

The foregoing describes the procedure of the image processing method provided in this application. For ease of understanding, the following provides more detailed descriptions based on the foregoing method descriptions by using a specific application scenario as an example.

Scenario 1

For example, for a process of shooting a high-speed moving object, refer to FIG. 56.

5601: ADVS performs movement monitoring.

A shooting range of an RGB camera, that is, the foregoing preset range, may be monitored by using the DVS, to monitor one or more objects moving in the shooting range.

It should be noted that the one or more objects may be a person, an animal, a vehicle, an unmanned aerial vehicle, a robot, or the like that moves in the shooting range. There may be different objects in different application scenarios. Specifically, adjustment may be performed based on an actual application scenario. This is not limited in this application.

Specifically, the DVS may respond to a light intensity change in the shooting range, and generate an event. A short-time window may include one or more events. Because static regions do not excite events, events mostly occur in regions in which a movement exists. One or more regions in which a movement exists can be obtained by accumulating events in a short-time window and calculating connected regions of the events. For ease of understanding, the region in which a movement exists is referred to as a movement region below. A form of the movement region includes but is not limited to an outer rectangle, an outer minimum circle, a polygon, an irregular shape, and the like. Generally, if the movement region is less than a preset threshold, the region is filtered out. It may be understood that when a detected movement region is less than a threshold, the movement region may be noise, or a detected moving object is incomplete. Filtering out the region can reduce meaningless workload.

For a specific manner of monitoring the target object by the DVS, refer to the related descriptions of the foregoing step 3801. Details are not described herein again.

For example, as shown in FIG. 57, a shooting range of a camera is the foregoing preset range, and is related to a field of view α of the camera. Generally, a larger field of view of the camera indicates a larger shooting range, and a smaller field of view indicates a smaller shooting range. The monitoring range of the DVS includes the shooting range of the camera, so that a moving object in the preset range is monitored. Events monitored by the DVS are sparse. In addition, each pixel in the DVS responds to continuous light intensity changes independently and asynchronously, and is not affected by synchronous exposure of an RGB camera and is not limited by exposure time and a frame rate. Therefore, the DVS usually has an extremely high time resolution. For example, time precision of DAVIS can reach 1 μs, which is suitable for capturing an object moving at a high speed.

It should be noted that a high speed and a low speed mentioned in this application are relative, and division of the high speed and the low speed may be adjusted based on an actual application scenario. For example, a speed higher than 10 km/h may be referred to as a high speed, and a speed lower than 10 km/h may be referred to as a low speed.

5602: Perform prediction to obtain a predicted region, and determine whether to trigger the RGB camera to perform shooting; and if yes, perform step 4203, or if no, perform step 5601.

The DVS may continuously predict, based on the continuously detected movement trajectory of the target object, a region in which the target object is located in future duration, and determine, based on the predicted region, whether to trigger the RGB camera to perform shooting.

For a specific manner of determining the predicted region, refer to the related descriptions of the foregoing step 3802. Details are not described herein again.

After the predicted region of the target object is determined, whether the predicted region meets a preset condition is determined. If the preset condition is met, the RGB camera is triggered to perform subsequent focusing and shooting, or if the preset condition is not met, the shooting range is continuously monitored, until a predicted region that meets the preset condition is obtained or shooting ends.

For example, as shown in FIG. 58, when a vehicle travels at a high speed on a road, a traveling trajectory of the vehicle may be predicted based on a movement direction and a movement speed that are of the vehicle and that are detected by the DVS, so that a region to which the vehicle is about to travel can be predicted, that is, 5801 as shown in FIG. 58. When the predicted region meets the preset condition, the RGB camera may be triggered to perform focusing; or if the preset region does not meet the preset condition, the RGB camera is not triggered to perform focusing, and the movement trajectory of the vehicle continues to be monitored. The preset condition may be that a vehicle in the predicted region is incomplete, an area of the predicted region is excessively small, and so on. For example, if the vehicle does not fully enter a field of view of a lens, the RGB camera is not triggered to perform shooting.

When the predicted region meets the preset condition, the DVS may transmit the predicted region as a focus region to the RGB camera, to trigger the RGB camera for shooting. Generally, there may be a parallax between the RGB camera and the DVS, so that a registration operation is required. For example, a coordinate system of the predicted region is aligned with a pixel coordinate system of the RGB camera, so that the predicted region has a coordinate system having a same field of view as the RGB camera after registration.

Specifically, the focus region may be a region in which the target object is currently located, or may be the predicted region. The focus region may be described by using a geometric shape parameter. If the focus region is an external rectangle, the DVS may transmit parameters such as coordinates of a vertex of the upper left corner of the focus region, and a width and a height of the focus region to the RGB camera; if the focus region is a polygon, the DVS may sequentially transfer each vertex of the polygon to the RGB camera clockwise (or counterclockwise); if the focus region is the smallest outer circle, the DVS may transfer circle center coordinates and a circle radius to the RGB camera, and the like. Specifically, adjustment may be performed based on an actual application scenario. An example is merely used here for description, and is not used as a limitation.

In addition, the DVS may also transmit movement features of the target object such as a movement speed and a movement direction to the RGB camera. The movement speed may be a change value or a change trend of a speed of the target object compared with that in a previous short-time window. The change trend may include but is not limited to speed trend state quantities such as faster and slower, and include even more levels of speed trend state quantities, such as fast, faster, very fast, slow, slower, and very slow. The movement direction may also be a direction or a direction change compared with that in a previous short-time window. The direction change may include, but is not limited to, a direction trend state variable of left, right, up, down, unchanged, or even direction trend state variables at more levels such as upper left, lower left, upper right, lower right, left, right, up, down, and unchanged.

5603: Perform focusing based on the predicted region.

After the predicted region is determined, the predicted region may be used as the focus region, at least one focus is determined based on the focus region, and focusing is performed based on the at least one focus. Specifically, for example, focusing may be directly performed based on a point included in the focus region, or focusing may be performed by selecting a focus closest to a center point of the focus region.

Generally, the RGB camera has a plurality of focuses. Based on the focus region provided by the DVS, one or more focuses that have a minimum norm distance from the focus region are selected for focusing, and focus locking is performed. That is, focusing of the one or more focuses is maintained. For example, refer to FIG. 54. When receiving the predicted region transmitted by the DVS, the RGB camera may select one or more points that have a minimum norm distance from the center point of the focus region as the focus for focusing, and performs focus locking. A focusing manner includes but is not limited to phase focusing, contrast focusing, or the like.

5604: Adjust the exposure parameter and perform shooting.

After focusing is performed, the exposure parameter may be further adjusted based on the movement features detected by the DVS. For example, a higher movement speed of the target object indicates a smaller exposure parameter, and a lower movement speed of the target object indicates a larger exposure parameter, so that the camera can shoot a clearer image. Specifically, the camera may convert a collected optical signal into an electrical signal, to obtain a shot image of the preset range.

For example, as shown in FIG. 59, a focus region 4401 is determined by predicting a traveling trajectory of a vehicle, then focus locking is performed, and then the exposure duration is adjusted to a proper value. The vehicle travels to the predicted region in a time period in which focusing is performed and the exposure duration is adjusted, so that the moving vehicle is shot to obtain a clear image of the vehicle.

For example, in some scenarios, a mapping relationship between the movement speed of the target object and the exposure duration may be established. After the movement speed of the target object is determined, the exposure duration may be adjusted based on the mapping relationship, so that the exposure duration matches the movement speed of the target object, and a clearer image is shot. Specifically, the mapping relationship may be a preset mapping table. For example, when the movement speed is in a first range, the exposure duration is 1/60 second, and when the movement speed is in a second range, the exposure duration is 1/360 second. Alternatively, the mapping relationship may be a linear relationship, an exponential relationship, an inverse proportional relationship, or the like. Specifically, the mapping relationship may be adjusted based on an actual application scenario. No limitation is imposed herein.

For another example, in some scenarios, a mapping relationship between a change value of the movement speed of the target object and an adjustment manner of the exposure duration may be established. For example, if the movement speed of the target object is increased, the exposure duration is reduced; or if the movement speed of the target object is decreased, the exposure duration is increased, so that the camera can shoot a clearer image. More specifically, an adjustment amount of the exposure duration may be related to a change amplitude of the movement speed. For example, a larger variation of the movement speed indicates a larger adjustment amount of the exposure duration, and a smaller variation of the movement speed indicates a smaller adjustment amount of the exposure duration.

For another example, in some scenarios, the exposure duration may be adjusted with reference to the movement speed and the movement direction of the target object. If the movement speed may be a speed of the target object in an actual environment, a speed of the target object in a direction perpendicular to a shooting direction of the camera may be determined based on the speed and the movement direction, and then the exposure duration is adjusted based on the speed in the direction perpendicular to the shooting direction of the camera. For example, a higher speed in the direction perpendicular to the shooting direction of the camera indicates longer exposure duration, and a lower speed in the direction perpendicular to the shooting direction of the camera indicates shorter exposure duration.

In addition, for how to adjust the exposure parameter, refer to the related descriptions of the following step 7304. Details are not described herein again.

5605: Enhance movement details.

After shooting is performed by using the camera to obtain a shot image, based on information that is about the moving object in the preset range and that is simultaneously detected by using the DVS, and information detected by the DVS, for example, an outline of the target object or a location of the target object in an image, enhanced processing is performed on movement details of an image shot by the camera, to obtain a clearer target image.

It can be understood that while shooting is performed by using a camera (where a time period for shooting performed by using the camera is referred to as a shooting time period below), the DVS may continuously monitor the moving object in the preset range, to obtain information about the moving object in the preset range in the shooting time period, for example, information such as an outline of the target object and a location of the target object in the image. In addition, processing such as noise filtering or edge sharpening is performed on the shot image based on the information, so as to enhance texture details or outlines of the image shot by the camera, and further obtain a clearer image, thereby improving user experience.

Therefore, in this implementation of this application, the movement trajectory of the target object may be fitted by using the collected movement information of the target object. Then, the predicted region of the target object is obtained based on the fitted movement trajectory of the target object. The predicted region is a region to which the target object is about to move in future duration. Focusing and focus locking are performed based on the predicted region, and the exposure parameter is adjusted based on the movement features of the target object. Thus, shooting of the moving target object is completed. It may be understood that after a series of steps such as focusing, focusing locking, and adjusting the exposure parameter are performed, the target object moves to the predicted region, that is, the focus region. In this case, a clearer image may be shot by shooting the target object. Therefore, even if the target object is in a high-speed movement state, focusing on the target object can be accurately completed, to shoot a clearer image.

The foregoing describes in detail a specific procedure of the image processing method provided in this application. For ease of understanding, the following describes some application scenarios of the image processing method provided in this application by using a specific scenario as an example. The following separately describes different application scenarios.

For example, for ease of understanding, the following describes more details of a process of the scenario 1. FIG. 60 is another schematic flowchart of an image processing method according to this application.

First, a DVS performs motion detection, that is, detects a moving object in a shooting range of an RGB camera. A moving target object is used as an example, and event data is generated based on information about the detected target object. The DVS may generate event data in the detection range based on a light intensity change in the detection range. When a difference between a current light intensity and a light intensity generated by a previous event exceeds a threshold, the DVS generates an event to obtain data of the event. Generally, event data of an event may include one or more types of information, such as a location of a pixel that generates a light intensity change in an event, a pixel value of a pixel, or a light intensity change value.

The DVS may fit the movement trajectory of the target object based on the monitored event data, and predict, based on the movement trajectory of the target object, a region to which the target object is about to move, to obtain the predicted region.

Optionally, in a process in which the DVS performs motion detection and obtains the predicted region, the RGB camera may be in an off state, so that power consumption of the RGB camera is reduced. For example, when shooting a high-speed moving object, such as an aircraft, a vehicle, or a high-speed moving user, the movement of the object may be first monitored by using the DVS. Only when an obtained predicted region meets a preset condition, the DVS triggers the RGB camera to perform shooting, so that power consumption generated by the RGB camera is reduced.

After obtaining the predicted region, the DVS transmits the predicted region to the RGB camera, triggers the RGB camera to be enabled, and indicates the RGB camera to perform focusing based on the predicted region. Alternatively, the DVS may determine the focus region based on the predicted region, where a range of the focus region is greater than a range of the predicted region, and then indicate the RGB camera to perform focusing based on the focus region. The following describes an example in which the RGB camera is indicated to perform focusing based on the predicted region.

Generally, before transmitting the predicted region to the RGB camera, the DVS may further perform registration on the predicted region. To be specific, a coordinate system in which the predicted region is located is consistent with a coordinate system of the RGB camera, so that the RGB camera can accurately obtain a location of the predicted region in a shooting range, so as to accurately determine a focus.

The RGB camera can be enabled under the trigger of the DVS and perform focusing based on the predicted region. For example, the RGB camera may select one or more focuses that have a minimum norm distance from a center point of the predicted region to perform focusing, and lock a focus, that is, maintain the focus.

In addition, the DVS further transmits a movement feature of the target object to the RGB camera, where the movement feature may include information such as a movement speed or a movement direction of the target object.

The RGB camera adjusts an exposure parameter based on the received movement feature, including exposure duration, an exposure value, and the like. For example, a mapping relationship between the movement speed of the target object and corresponding exposure duration may be set. When the movement speed of the target object is received, the exposure duration associated with the movement speed may be determined according to the mapping relationship, so as to adjust the exposure duration. For example, for details, refer to Table 2.

**Table 2**

| Movement speed | Exposure duration(s) |
|---|---|
| [0, 5) | 1/60 |
| [5, 10) | 1/200 |
| [10, 15) | 1/500 |
| [15, 20) | 1/800 |

The movement speed may be calculated by using coordinates of the target object in the shooting range. For example, a coordinate system may be established based on the shooting range. The coordinate system may be a two-dimensional coordinate system, or may be a three-dimensional coordinate system. This may be specifically adjusted based on an actual application scenario. Then, the movement speed of the target object is calculated based on a change value of the target object in the coordinate system.

After the exposure duration is adjusted, an image signal in the shooting range is collected by using a photosensitive element of the RGB camera, and the collected image signal is processed. For example, a collected analog signal is converted into an electrical signal, to obtain a shot image.

When the RGB camera performs shooting, the DVS may continuously monitor the movement of the target object in the shooting range, and therefore may obtain event data in the shooting time period.

After the RGB camera shoots the image in the shooting range, the image and the event data in the same time period may be fused, so as to perform movement detail enhancement on the shot image, to obtain a clearer target image.

For example, as shown in FIG. 61, a DVS event in a shooting time period may include an outline of a moving vehicle. Images shot by the RGB camera, that is, RGB images shown in FIG. 61, may be fused based on the DVS event, to enhance movement details of the RGB images. For example, processing such as noise filtering and edge sharpening is performed to obtain a target image with enhanced movement details. The enhanced image may be used as a final output, and is displayed in a display interface or stored in a storage medium of an electronic device.

For example, for a more specific manner of obtaining a target image by using the RGB camera and the DVS, refer to FIG. 62. The DVS monitors the moving object in the shooting range, collects a long-time window, then fits the movement trajectory of the target object in a manner of dividing the time window, and predicts, based on the fitted movement trajectory, a region in which the target object is located in future duration, to obtain the predicted region. When the predicted region meets the preset condition, the RGB camera is triggered to be enabled and perform focusing based on the predicted region.

Second, the DVS further calculates a running feature such as the movement speed or the movement direction of the target object based on the detected movement trajectory of the target object, and transmits the running feature to the RGB camera. The RGB camera adjusts the exposure parameter based on the movement feature, to use the exposure parameter that matches the movement feature, for example, the exposure duration and an exposure value.

After the exposure parameter is adjusted, shooting is performed, and a signal captured by the photosensitive element is converted into an electrical signal, to obtain a shot RGB image.

When the RGB camera performs focusing, adjusts the exposure parameter, and outputs an RGB image, the DVS continuously monitors the moving object in the shooting range, to obtain event data in the shooting time period. The event data includes an outline of the target object during movement, a location of the target object in a preset region, and the like.

Then, a processor of an electronic device may perform enhancement processing, for example, noise filtering and edge sharpening on the RGB image based on the event data collected by the DVS, to obtain a clearer target image.

Therefore, in this scenario, for a high-speed moving object, focusing may be performed in advance by predicting a region in which the target object is located in future duration, so that a clear image can be shot during movement. In addition, exposure matching the movement speed may be performed on the target object by adjusting the exposure parameter, so that the camera further shoots a clearer image. In addition, movement details of a shot image may be enhanced based on an event detected by the DVS in the same time period, to obtain a clearer target image.

Scenario 2

For example, for a process of shooting a non-high-speed movement, refer to FIG. 63. A non-high-speed movement scenario includes security protection and access control scenarios.

6301: ADVS performs movement monitoring.

In this scenario, a target object may be an object moving at a low speed.

Specifically, for step 6301, refer to related descriptions of the foregoing step 5201. Details are not described herein again.

For example, this scenario 2 may be an access control scenario. As shown in FIG. 64, an RGB camera and a DVS may be set for access control, and an apparatus such as an ISP or a display may be further disposed. Here are merely example descriptions. Details are not described one by one.

6302: Determine, based on a region in which the target object is currently located, whether to trigger shooting of the RGB camera, and if yes, perform step 6303, or if no, perform step 6301.

In this scenario, because the target object moves at a low speed, it may be determined, based on a region in which the target object is currently located, whether to trigger the RGB camera to perform shooting. Specifically, it may be determined whether the region in which the target object is currently located meets a preset condition, and if yes, step 6303 is performed, or if no, step 6301 is performed.

For example, it may be determined whether the target object in the current region is complete, and whether an area of the current region is greater than a preset value. When the target object in the current region is complete, or the area of the current region is greater than the preset value, the DVS may send the current region as a focus region to the RGB camera, to trigger the RGB camera to be enabled, and perform shooting based on the current region.

For example, as shown in FIG. 65, when the target object enters a monitoring range of an access control system and an abnormal movement occurs, for example, the object approaches the access control system or touches the access control system, an area of the object may cover shooting ranges of the DVS and the RGB cameras, the DVS detects a light intensity change. For example, a public region of a community is outside the access control system. When people enter the front of the access control system, light in a corridor may be blocked, resulting in a decrease in a light intensity in the whole field of view. When the DVS detects a moving object based on a light intensity change, as shown in 1801 in FIG. 65, the DVS may monitor a region in which the target object is currently located, and then determine whether an area of the region in which the target object is currently located is greater than a preset value, or determine whether the target object in the region in which the target object is currently located is complete, to determine whether to trigger the RGB camera to perform shooting. When determining to trigger the RGB camera to perform shooting, the DVS may transmit the region in which the target object is currently located to the RGB camera as the focus region. The RGB camera may perform focusing based on the region in which the target object is currently located, adjust the exposure parameter based on the movement feature of the target object, and complete shooting of the target object, to obtain an RGB image of the target object. In addition, the DVS can continuously monitor the region in which the target object is located during the shooting time period.

6303: Perform focusing based on the region in which the target object is currently located.

A manner of performing focusing based on the current movement region is similar to a manner of performing focusing based on a preset region. Details are not described herein again. Step 6303 is similar to step 5203. Details are not described herein again.

6304: Adjust the exposure parameter and perform shooting.

In this scenario, the exposure parameter may be adjusted based on the light intensity. Specifically, the exposure parameter may include exposure duration, and the exposure duration is in a negative correlation with the light intensity in the shooting range.

In addition, a light intensity value used for adjusting the exposure parameter may be a light intensity value collected by the DVS, or may be a light intensity value collected by the RGB camera or another device. This may be specifically adjusted according to an actual application scenario. No limitation is imposed herein.

For example, a change of an average light intensity may be estimated based on an overall event occurrence rate of the DVS, and the average light intensity L is in a positive correlation with the DVS event occurrence rate R, that is, $L \propto R$. The exposure parameter may be adjusted according to this relationship. When an estimated average light intensity is decreased, the exposure duration is increased, for example, from 1/100 second to 1/30 second. When the estimated average light intensity increases, the exposure duration is reduced, for example, reduced from 1/30 second to 1/100 second.

For another example, a value of the average light intensity may be calculated, and then the exposure parameter is determined based on the value of the average light intensity. A larger value of the average light intensity indicates shorter exposure duration, and a smaller value of the average light intensity indicates longer exposure duration. Therefore, the exposure duration of the camera matches the value of the average light intensity, so that an image in the shooting range can be fully shot to obtain a clearer image, thereby improving user experience.

6305: Enhance movement details.

Step 6305 is similar to the foregoing step 5205. Details are not described herein again.

Therefore, in this application scenario, focusing may be performed based on the region in which the target object detected by the DVS is currently located, and the region in which the moving object is located may be accurately identified, thereby performing accurate focusing. In addition, the exposure parameter may also be adjusted based on the light intensity, so that the RGB camera can accurately adapt to the light intensity, so as to shoot a clearer image. In addition, in this application scenario, movement details of a shot image may also be enhanced based on an event detected by the DVS in a same time period, to obtain a clearer target image.

In addition, in this scenario, especially in some surveillance scenarios, if the RGB camera is continuously used for surveillance, large power consumption is generated. For example, power consumption of continuous shooting performed by the RGB camera is usually hundreds of milliwatts to tens of watts, and a large amount of data is generated. According to the image processing method provided in this application, the RGB camera may be triggered to enable shooting only when the DVS detects a moving object. Power consumption of the DVS is usually tens of milliwatts. For example, power consumption of a DAVIS346 model sensor is 10 milliwatts to 30 milliwatts. Therefore, power consumption can be reduced. In addition, the DVS obtains only an outline of the moving object, so that not all data, such as privacy data, of the user is monitored, thereby improving user experience. In addition, an abnormal movement may be shot, and a subsequent alarm operation may be performed based on a shot image. Specifically, adjustment may be performed based on an actual application scenario, to improve security. It may be understood that, according to the image processing method provided in this application, an external movement is monitored in real time by using the DVS with low power consumption, and the RGB camera is triggered to work only when an abnormal movement is detected, so that this method has an advantage in power consumption. In addition, an event output by the DVS does not contain specific texture details, but only includes the outline and the location of the moving object, so that this method has advantages in privacy and security.

This application further provides a graphical user interface (graphical user interface, GUI). The GUI may be used in an electronic device, for example, a device such as a terminal, a monitoring device, or an autonomous driving vehicle. The electronic device may include a display, a memory, and one or more processors. The one or more processors are configured to execute one or more computer programs stored in the memory, such as the steps of the image processing method mentioned in FIG. 52 to FIG. 65. The GUI is configured to display, by using the display, an image shot by a camera in FIG. 52 to FIG. 65.

The following describes in detail the GUI provided in this application.

The graphical user interface includes: in response to a trigger operation of shooting a target object, and shooting an image in a preset range based on focusing information, displaying the image in the preset range, where the preset range is a shooting range of a camera, the focusing information includes a parameter for focusing on the target object in the preset range, the focusing information is determined based on movement information of the target object, and the movement information includes information about a movement trajectory of the target object moving in the preset range.

For example, as shown in FIG. 66, the target object may be a vehicle moving at a high speed, and the GUI may specifically include: in response to detecting movement information of the target object, where the movement information may include information about a movement trajectory of the target object in a preset range, and the preset range is a shooting range of the camera, determining focusing information based on the movement information, where the focusing information includes a parameter for focusing on the target object in the preset range; and then focusing on the target object in the preset range based on the focusing information, and after an image of the vehicle is shot by using the camera, displaying the shot image on the display, where the image may include the vehicle moving at a high speed.

Therefore, in this implementation of this application, the movement trajectory of the moving target object in the shooting range of the camera may be detected, and then the focusing information is determined based on the movement trajectory of the target object and focusing is completed, to shot a clearer image. Even if the target object is moving, the target object can be accurately focused on, and a clear image corresponding to a movement state can be shot, thereby improving user experience.

In a possible implementation, the focusing information includes information about a focus region, and the graphical user interface may further include: in response to predicting a movement trajectory of the target object in preset duration based on the movement information to obtain a predicted region, and determining the focus region based on the predicted region, displaying the focus region on the display.

For example, as shown in FIG. 67, when a vehicle is in a high-speed movement state, a movement trajectory of the vehicle in future preset duration may be predicted based on a detected movement trajectory of the vehicle moving in the shooting range, to obtain a predicted region that the vehicle is about to reach in a future time period. The region is used as the focus region 6701, and the focus region 6701 is focused on, as shown in FIG. 68, so that a clearer image of the target object is shot.

Therefore, in this implementation of this application, the movement trajectory of the target object in the future preset duration may be predicted, and the focus region is determined based on the predicted region, so that the target object can be accurately focused on. Even if the target object is moving at a high speed, in this implementation of this application, the target object may be focused on in advance in a prediction manner, to enable the target object to be in the focus region, so that a clearer target object moving at the high speed is shot.

In a possible implementation, the graphical user interface may specifically include: if the predicted region meets a preset condition, displaying the focus region on the display in response to determining the focus region based on the predicted region; or if the predicted region does not meet a preset condition, displaying the focus region on the display in response to re-predicting the movement trajectory of the target object in the preset duration based on the movement information to obtain a new predicted region, and determining the focus region based on the new predicted region.

The preset condition may be that the predicted region includes the complete target object, an area of the predicted region is greater than a preset value, or the like.

For example, as shown in FIG. 69A, when the target object shot by the camera is incomplete, an area of the predicted region for the target object may be small, that is, a focus region 6901 is small, and is smaller than an area of the vehicle. As a result, images of the vehicle shot later may be unclear. However, when the vehicle body completely enters the shooting range, as shown in FIG. 69B, a predicted region whose area meets a requirement, that is, a focus region 6902, may be obtained, so that a complete and clear image of the vehicle is shot based on the focus region 5502, as shown in FIG. 69C.

Therefore, in this implementation of this application, only when the predicted region meets the preset condition, the focus region is determined based on the predicted region, and a camera is triggered to perform shooting; and when the predicted region does not meet the preset condition, the camera is not triggered to perform shooting. Therefore, an incomplete image of the target object can be avoided from being shot, or meaningless shooting can be avoided. In addition, when shooting is not performed, the camera may be in a disabled state, and the camera is triggered to perform shooting only when the predicted region meets the preset condition, so that power consumption generated by the camera can be reduced.

In a possible implementation, the movement information further includes at least one of a movement direction and a movement speed of the target object; and the graphical user interface may specifically include: in response to predicting a movement trajectory of the target object in preset duration based on the movement direction and/or the movement speed and the movement trajectory that is of the target object and that is generated when the target object moves in the preset range to obtain a predicted region, displaying the predicted region on the display.

Therefore, in this implementation of this application, the movement trajectory of the target object in the future preset duration may be predicted based on the movement trajectory of the target object in the preset range, the movement direction and/or the movement speed, and the like, so that the future movement trajectory of the target object can be accurately predicted, and the target object can be more accurately focused on, thereby shooting a clearer image.

In a possible implementation, the graphical user interface may specifically include: fitting, based on the movement direction and/or the movement speed and the movement trajectory of the target object in the preset range, a change function that is of a center point of a region in which the target object is located and that varies with time, obtaining a predicted center point through calculation based on the change function, where the predicted center point is a center point of the region in which the target object is located and that is obtained through prediction, and obtaining the predicted region based on the predicted center point, displaying the predicted region on the display.

In a possible implementation, the image in the prediction range is shot by an RGB camera, and the graphical user interface may specifically include: in response to performing focusing by using, as a focus, at least one focus that is in a plurality of focuses of the RGB camera and that has a minimum norm distance from the center point of the focus region, displaying, on the display, an image that is shot by performing focusing based on the at least one focus that is used as the focus.

In a possible implementation, the focusing information includes information about the focus region, the movement information includes a current region of the target object, and the graphical user interface may specifically include: in response to using a region in which the target object is currently located as the focus region, displaying the focus region on the display.

For example, as shown in FIG. 70, the target object may be a pedestrian moving at a low speed. In this case, the movement speed of the target object is low, a current region of the target object may be directly used as the focus region 7001, and then the focus region 5601 is focused on, to obtain a clear image.

Therefore, in this implementation of this application, the information about the movement trajectory of the target object in the preset range may include the region in which the target object is currently located and a region in which the target object is historically located. The region in which the target object is currently located may be used as the focus region, so as to complete focusing on the target object. In this way, a clearer image can be shot.

In a possible implementation, the graphical user interface may specifically include: in response to obtaining an exposure parameter before the image in the preset range is shot, displaying the exposure parameter on the display; and in response to shooting the image in the preset range based on the exposure parameter, displaying, on the display, the image that is shot in the preset range based on the exposure parameter. Therefore, in this implementation of this application, the exposure parameter may be further adjusted, so as to complete shooting based on the exposure parameter, to obtain a clear image.

Specifically, the exposure parameter may include parameters such as an EV, exposure duration, an exposure amount, an aperture size, or an ISO. When an image is shot, the exposure parameter may be displayed on a shooting interface, so that a user can obtain a current shooting status based on the displayed exposure parameter, thereby improving user experience.

For example, as shown in FIG. 71, the exposure parameter may include an EV. When an image is shot, ifEV = 6, " EV: 6" may be displayed on the display interface, so that user experience is improved by using the display interface or by displaying a specific value of the EV

In a possible implementation, the exposure parameter is determined based on the movement information, the exposure parameter includes exposure duration, and the exposure duration is in a negative correlation with the movement speed of the target object.

Therefore, in this implementation of this application, the exposure duration may be determined based on the movement speed of the target object, so that the exposure duration matches the movement speed of the target object. For example, a faster movement speed indicates shorter exposure duration, and a slower movement speed indicates longer exposure duration. Overexposure, underexposure, or the like can be avoided, so that a clearer image can be subsequently shot, and user experience can be improved.

In a possible implementation, the exposure parameter is determined based on a light intensity, where the light intensity may be a light intensity detected by the camera, or may be a light intensity detected by a motion sensor, the exposure parameter includes exposure duration, and a value of the light intensity in the preset range is in a negative correlation with the exposure duration.

Therefore, in this implementation of this application, the exposure duration may be determined based on the detected light intensity. When the light intensity is higher, the exposure duration is shorter; when the light intensity is lower, the exposure duration is longer. Therefore, a proper amount of exposure can be ensured, and a clearer image can be shot.

In a possible implementation, the graphical user interface may further include: in response to fusing images in the preset range based on the monitored target object and movement information corresponding to the object to obtain a target image in the preset range, displaying the image on the display.

Therefore, in the implementation method of this application, when an image is shot, movement of the target object in the preset range may be further monitored, to obtain the information about movement corresponding to the target object in the image, for example, information such as an outline of the target object and a location of the target object in the preset range. In addition, enhancement processing is performed on the shot image based on the information to obtain a clearer image.

For example, the DVS may collect the outline of the moving target object, so that the DVS may perform, based on the outline of the target object captured by the DVS, enhancement processing on the image collected by the RGB camera. The image captured by the RGB camera may be that shown in FIG. 72A. For example, noise of the outline of the target object is eliminated, and the outline of the target object is enhanced, to obtain a clearer image of the target object, as shown in FIG. 72B.

In a possible implementation, the movement information is obtained by monitoring the movement of the target object in the preset range via a dynamic vision sensor DVS.

Therefore, in this implementation of this application, the moving object may be monitored in the shooting range of the camera via the DVS, to obtain accurate movement information. Even if the target object is in a high-speed movement state, the movement information of the target object may be captured in a timely manner via the DVS.

Implementation 2: Manner of obtaining an image in an HDR mode shooting scenario.

First, for the HDR mode shooting scenario, refer to FIG. 73 that is a schematic flowchart of an image processing method according to this application. It should be noted that nouns, steps, and the like that are the same as or similar to those in the implementation 1 above are not described in detail below.

7301: Obtain a first event image and a plurality of shot RGB images.

The first event image may be an image collected via a motion sensor, and includes information about an object moving in a preset range. The preset range may be understood as a detection range of the motion sensor, and the preset range includes a shooting range of a camera. For ease of understanding, the event image mentioned in this application may be understood as a dynamic image generated based on information collected via the motion sensor in a time period, and indicates a movement change of an object that moves relative to the motion sensor in the detection range of the motion sensor in a time period.

It should be noted that the first event image and a second event image mentioned in the second implementation refer to the event images used in the shooting scenario in FIG. 73 to FIG. 80. The first event image and the second event image may be the same as or different from the first event image and the second event image mentioned below in FIG. 95 to FIG. 108 or FIG. 118 to FIG. 120 corresponding to the SLAM. This may be specifically adjusted based on an actual application scenario.

The plurality of RGB images (or referred to as first images) may be images shot by using different exposure duration. For example, the plurality of images may be images shot by using short exposure duration and images shot by using long exposure duration. Generally, longer exposure duration indicates that more texture information in a low-light scenario can be collected, and shorter exposure duration indicates that more texture information in a strong-light scenario can be collected. Therefore, images with richer textures can be collected by using different exposure duration.

For example, refer to FIG. 36. The first event image may be collected by a DVS when a camera shoots a plurality of RGB images. The first event image may include information such as a size of a region in which the target object is located, a border, and coordinates of a corner point in the preset range in a time period when an object moves in a shooting range of the camera.

Specifically, for example, an image formed by data collected by the DVS may be represented as $F_d(x, y) =$

$$events(x, y, t) = \begin{cases} 0, if \ no \ data \\ 1, if \ have \ data \end{cases}$$

$\sum_{t_1 \le t \le t_2} events(x, y, t)$. , $(x, y)$ represents coordinates of a location in the image, t represents a moment, $t_1$ is obtained by subtracting 50 milliseconds from a moment at which an exposure image starts to be shoot, $t_2$ is the moment at which the exposure image starts to be shot, and *events* represents data collected by the motion sensor such as the DVS.

More specifically, the first event image is similar to the movement information mentioned in the foregoing step 5201. Details are not described herein again.

Optionally, the event image mentioned in this embodiment may be optimized by using the foregoing method procedures corresponding to FIG. 38 to FIG. 44, to obtain a clearer event image.

It should be noted that, in this implementation of this application, for ease of understanding, an image shot by an RGB camera is referred to as an RGB image, and information collected by the motion sensor is referred to as an event image.

7302: Calculate, based on the first event image, a shake degree corresponding to each RGB image.

After the first event image and the plurality of RGB images are obtained, the shake degree corresponding to each RGB image is calculated by using the first event image. The shake degree may be understood as a shake degree of the camera that shots the RGB image, or a blurry degree of an image that is blurred because an object in the shooting range is in a movement state when the RGB image is shot. Alternatively, both cases may exist.

Specifically, the first event image includes information such as a location and an outline of an object that is in a movement state in the shooting range of the camera in a time period, and the time period covers shooting time periods of a plurality of RGB images. Therefore, the shake degree of each RGB image may be calculated based on the information about the object that is in the movement state and that is included in the shooting time period of each RGB image in the first event image.

For example, a manner of quantizing the shake degree at which the RGB image is shot may include:

$$Blur_e = \frac{\sum_{x,y} r(x,y)}{H*W} \in [0,1] \quad \text{and} \quad r_e(x, y) = \frac{\sum_{t_{e0} \le t \le t_{e0}+t_e} events(x,y,t)}{\alpha*t_e}$$

. $Blur_e$ is for measuring a blur degree of an eth RGB exposure image, that is, a shake degree at which each image is shot. $t_{e0}$ is a moment at which shooting of the exposure image starts. $t_e$ is exposure duration of a current RGB image. $H*W$ indicates a length and a width of a current RGB image. $(x, y)$ indicates a location of a local part in an RGB image. $r_e(x, y)$ indicates a local blur degree in the eth RGB exposure image. *events* indicates data collected by the DVS. $\alpha$ is a normalization factor and is used to normalize $r(x, y)$ to a range of [0, 1].

It should be noted that a manner of quantizing the shake degree in this application is merely an example. Specifically, another manner such as a Brenner gradient function, a variance function, or an entropy function may be used to quantize the shake degree. Specifically, adjustment may be performed based on an actual application scenario. This is not limited in this application.

7303: Determine whether an RGB image needs to be re-shot, and if yes, perform step 7304, or if no, perform step 7306.

After the shake degree of shooting each RGB image is calculated, it is determined, based on the shake degree corresponding to each RGB image, whether the RGB image needs to be re-shot. If the RGB image needs to be re-shot, step 7304 may continue to be performed. If the RGB image does not need to be re-shot, step 7306 may continue to be performed.

Specifically, it may be determined whether the shake degree of each RGB image exceeds a first preset value. If a shake degree of an image exceeds the first preset value, an RGB image may be re-shot. If shake degrees of all RGB images do not exceed the first preset value, the RGB image does not need to be re-shot. If shake degrees of a plurality of RGB images exceed the first preset value, the plurality of RGB images may be re-shot.

In a possible implementation, in addition to determining whether the shake degree of each RGB image exceeds the first preset value, it may be further determined whether a quantity of re-shooting times of re-shooting the RGB image exceeds a specific quantity of times. If the quantity of re-shooting times exceeds the specific quantity of times, re-shooting may not be performed. If the quantity of re-shooting times does not exceed the specific quantity of times, the RGB image may continue to be re-shot. For example, the quantity of re-shooting times may be preset to be less than 5. When the quantity of re-shooting times reaches 5, the RGB image is not re-shot even if a shake degree of the RGB image is high.

For example, a manner of quantizing the shake degree at which the RGB image is shot may include:

$$Blur_e = \frac{\sum_{x,y} r_e(x,y)}{H*W} \in [0,1] \text{ and } r_e(x, y) = \frac{\sum_{t_{e0} \leq t \leq t_{e0}+t_e} events(x,y,t)}{\alpha * t_e}.$$ When $Blur_e \geq threshold_2$, the RGB image needs to be re-shot, and $threshold_2$ is a first preset value.

In another possible implementation, when shake degrees of one or more RGB images (but not all RGB images) are greater than the first preset value, no re-shooting is required, and remaining RGB images whose shake degrees are not greater than the first preset value are fused, to obtain a final image, thereby improving efficiency of obtaining an image.

For ease of understanding, for example, an image with a low shake degree may be that shown in FIG. 74, and an image with a high shake degree may be that shown in FIG. 75. Apparently, information included in an image with a high shake degree is inaccurate, and is blurred in a visual interface. If an image with a high shake degree is used for fusion, information included in a finally obtained target image is also inaccurate, and even blurred. Therefore, in this case, one or more RGB images need to be re-shot. For another example, in a scenario in which a ratio of a strongest light intensity to darkest a light intensity is large, as shown in FIG. 76, a shot RGB image may be overexposed, and an image of a part with the strongest light intensity is unclear. However, a definition of an image captured by the DVS is high. Therefore, information collected by the DVS may be used to determine whether an RGB image needs to be re-shot, to obtain a clearer RGB image.

In a possible implementation, a manner of determining whether the RGB image needs to be re-shot may further include: dividing the first event image into a plurality of regions, and correspondingly dividing an RGB image (or referred to as a third image) with a smallest exposure value in the plurality of RGB images into a plurality of regions. Shapes and locations of the plurality of regions in the first event image correspond to shapes and locations of the plurality of regions in the RGB image. For example, if the first event image is divided into 16 rectangular regions, an RGB image with a smallest exposure value may be divided into 16 rectangular regions whose shapes, sizes, and locations are the same as those of the regions in the first event image. The exposure value may include one or more of exposure duration, an exposure amount, or an exposure level. Then, whether each region in the first event image includes texture information (or referred to as first texture information) is calculated, and whether each region in the RGB image with a smallest exposure value includes texture information is calculated. Then, each region in the first event image is compared with each region in the RGB image with the smallest exposure value. If a region in the first dynamic region includes the texture information, and a region that is in the RGB image with the smallest exposure value and that is the same as the region does not include the texture information, it means that this region in the RGB image is quite blurred and the RGB image can be re-shot. If each region in the first event image does not include the texture information, an RGB image does not need to be re-shot.

For example, in a scenario in which a ratio between a maximum light intensity and a minimum light intensity is large, that is, in a scenario in which a difference between light and dark is large, the first event image and the RGB image with the smallest exposure value are divided into regions of a same shape and size. Then, whether each area in the first event image and the RGB image with the smallest exposure value includes the texture information is calculated.

As shown in FIG. 77, the first event image and the RGB image with the smallest exposure value may be segmented into a plurality of macroblocks. If a macroblock whose variance is greater than a preset threshold $threshold_o$ exists on the first event image, the macroblock is recorded as a macroblock set $\{MB_i\}$, that is, the macroblock $MB_i$ includes texture information. Correspondingly, a corresponding macroblock region is found on the RGB image $I_e$ with the smallest exposure value, and whether a texture included in the first event image is captured by the RGB image with the smallest exposure value is determined by calculating pixel variances of these macroblock regions on $I_e$. If there is a macroblock $MB_i$ whose pixel variance on $I_e$ is less than a preset threshold $threshold_1$, it indicates that a texture of the region is not completely captured by the RGB image, and the RGB image needs to be re-shot.

In a possible implementation, texture features included in the first event image and features in the third image may be further extracted, and the features included in the first event image and the features in the third image are matched. For example, Euclidean distances between the features are compared. A closer Euclidean distance indicates a higher matching degree, and a farther Euclidean distance indicates a lower matching degree. If the matching degree is low, for example, lower than 0.8, it indicates that texture information of a moving object may not be completely captured in the RGB image, and the RGB image needs to be re-shot. The features extracted from the first event image or the RGB image may be features extracted through scale invariant feature transform (scale invariant feature transform, SIFT) or a deep neural network, or a generated grayscale histogram. Specifically, this may be adjusted based on an actual application scenario. No limitation is imposed in this application.

Alternatively, in a possible implementation, a size of a region detected in the first event image may be calculated, where in the region, an event exists. If the size of the region in which the event exists exceeds a preset size, it is determined that the RGB image needs to be re-shot. If the size of the region in which the event exists does not exceed the preset size, the RGB image may not need to be re-shot. Alternatively, whether the RGB image needs to be re-shot may be determined in another implementation.

In addition, in some scenarios, if a location of the event region is located in the center region of the first event image or the RGB image, for example, covers the center point of the RGB image, the RGB image needs to be re-shot. If the region is in a peripheral region of the RGB image, for example, close to a boundary line of the RGB image, and an area of the event region is less than a specific value, the RGB image may not need to be re-shot. Alternatively, whether the RGB image needs to be re-shot may be further determined based on a distance between the event region and the center point of the event image. For example, if the distance between the event region and the center point of the event image is less than a preset distance, if the distance is less than 200 pixels, the RGB image needs to be re-shot, or if the distance is not less than 200 pixels, the RGB image does not need to be re-shot. Specifically, this may be adjusted based on an actual application scenario.

Specifically, for example, the event image corresponding to the RGB image may be represented as: $F_e(x, y) = \sum_{t_{e0} \leq t \leq t_{e0}+t_e} events(x, y, t)$. The event image is divided into a plurality of macroblocks that are of a same size and that do not overlap, and a size of the movement region is calculated by using a quantity of movement macroblocks. When and only when a quantity of non-zero pixels included in the macroblock on the event image is greater than a preset threshold $threshold_3$, the macroblock is determined as a movement macroblock. If the event image contains 16 x 16 macroblocks, thresholds may be set to 128. When a quantity of moving macroblocks included in the movement region exceeds 128, the RGB image needs to be re-shot. When the quantity does not exceed 128, the RGB image does not need to be re-shot, or whether the RGB image needs to be re-shot is determined in another manner.

In a possible implementation, a range shot by the motion sensor may be different from the shooting range of the RGB camera. In this scenario, before step 7302, the first event image and the plurality of RGB images further need to be aligned, so that the shooting range corresponding to the first event image matches the shooting range corresponding to the RGB image.

7304: Calculate an exposure parameter.

The exposure parameter may include one or more of the exposure duration, the exposure amount, the exposure level, and the like.

For example, a manner of calculating the exposure duration may include: estimating a real pixel value $I'_e(x, y) = \sum_{t_{e0} \leq t \leq t_{e0}+t_e} p(x, y, t) * C$ of an overexposed region by using DVS data corresponding to an image with shortest exposure time. C is a threshold of a DVS camera. C is usually 2. p(x, y, t)={-1, 0, 1} is a signed event at a pixel location (x, y) at time t. Compared with a previous moment, when a light intensity decreases, the event is -1; when a light intensity increases, the event is 1; or when a light intensity remains unchanged, no event occurs, it is recorded as 0. Based on a camera response function (Camera Response Function, CRF), an exposure value of an exposure

region is $\widehat{x_e}(x,y) = CRF^{-1}(\exp(I'_e(x,y)))$ , and optimal exposure duration $t^{opt} = \sum_{x,y} t_e * \frac{1}{2} * (Vmin + Vmax)/\widehat{x_e}(x,y)$ is estimated based on the exposure value. *Vmin=0* and *Vmax=255.*

In addition, if the shake degree of an RGB image is higher than the first preset value, when an exposure parameter used for re-shooting is calculated, the exposure parameter corresponding to the RGB image may be directly used.

For another example, for a manner of calculating the exposure parameter herein, refer to the manner of adjusting the exposure parameter in the foregoing implementations, for example, the exposure adjustment manner mentioned in the foregoing embodiment corresponding to step 5604, step 7404, FIG. 60, or FIG. 62.

It should be noted that step 7304 is an optional step. The exposure parameter such as the exposure duration, the exposure amount, or the exposure level may be re-calculated, re-shooting may be performed by using an exposure parameter corresponding to an RGB image whose shake degree is greater than the first preset value, and so on.

7305: Perform re-shooting to obtain an RGB image whose shake degree is not higher than the first preset value.

When the RGB image is re-shot, the motion sensor may be used to capture an image of a moving object in the shooting range, and then a shake degree corresponding to the re-shot RGB image is calculated by using the event image captured by the motion sensor when the RGB image is re-shot. When the shake degree is higher than the first preset value, step 7303 may continue to be performed until the shake degree of the re-shot RGB image is not higher than the first preset value, the quantity of times of re-shooting reaches the preset quantity of times, and so on.

If step 7304 is performed before step 7305, that is, the exposure parameter is calculated, the RGB image may be re-shot by using the exposure parameter; or if step 7304 is not performed, the exposure parameter corresponding to the RGB image whose shake degree is greater than the first preset value may be used for shooting, to obtain a new RGB image, or referred to as a second image.

In addition, if the RGB image is re-shot in a scenario in which a moving object exists in the shooting range, refer to the foregoing implementation 1 for a specific manner of re-shooting the RGB image. For example, a movement trajectory of the object in the shooting range may be predicted by using data collected by the DVS. Therefore, focusing is performed based on the predicted result, to shoot a clearer image. Details are not described herein again.

Therefore, in this implementation of this application, an exposure policy is adaptively adjusted by using information collected by a dynamic sensing camera (namely, a motion sensor). To be specific, by using a high dynamic range sensing feature of dynamic sensing information on a texture in a shooting range, an image with proper exposure duration is adaptively re-shot, so that a capability of a camera on capturing texture information in a strong or dark light region is improved.

7306: Calculate a fusion weight based on the shake degree of each RGB image, and fuse a plurality of RGB images based on the fusion weight of each image to obtain a target image.

After a plurality of RGB images whose shake degrees do not exceed the first preset value are obtained, a fusion weight corresponding to each RGB image is calculated based on the shake degree of each RGB image, and the plurality of RGB images are fused based on the fusion weight of each RGB image, to obtain a high-definition target image.

In a process of fusing the plurality of RGB images, RGB images of different exposure duration may be aligned, so that a target image obtained through fusing is clearer. Generally, relative locations of the plurality of RGB images may be searched based on a pixel point or a feature point or by calculating an optical flow, and offsets may be calculated, so that RGB images are aligned based on the offsets.

For example, a specific manner of aligning the RGB images may include: first calculating local optical flow information based on event data. A calculation method is as follows: a It is assumed that event image data p(x, y, t) in

$$\pi = \begin{bmatrix} a \\ b \\ c \\ d \end{bmatrix}$$

a local space $\Omega$ is on a same plane, and $\begin{bmatrix} a \\ b \\ c \\ d \end{bmatrix}$ is used to represent parameters of the plane. Parameters a, b, c, and d may be solved by optimizing the following formulas:

$$\pi_0 = arg \min_{\pi \in \mathbb{R}^4} \sum_i \left| \pi^T \begin{pmatrix} x_i \\ y_i \\ t_i \\ 1 \end{pmatrix} \right|$$

According to the plane $\Sigma_e = ax + by + ct + d$, a local offset (u, v) of the local space $\Omega$ is solved, where the local offset is ($\frac{\partial x}{\partial \Sigma_e}, \frac{\partial y}{\partial \Sigma_e}$), Images are aligned based on values of u and v, that is, $I_e(x, y) = I_{e+N}(x + u, y + v)$. $I_e$ is an exposure image shot earlier. $I_{e+N}$ is an exposure image shot after $I_e$, where N=1, 2, .... p(x, y, t) is data of events occurring in a local space $\Omega$ between $I_e$ and $I_{e+N}$. A spatial resolution of $\Omega$ is 8*8. A local offset is estimated for each local space $\Omega$ on the image to complete the alignment of the whole RGB image. In particular, when a resolution of $\Omega$ is H*W, a global offset of the entire image is calculated.

In a process of calculating the fusion weight of each RGB image, a high fusion weight may be set for an RGB image with a low shake degree, and a low fusion weight may be set for an RGB image with a high shake degree, so that information included in a finally obtained target image is clearer.

There may be a plurality of manners of setting the fusion weight for each image. For example, the fusion weight of each RGB image is set by using a ratio of shake degrees of a plurality of RGB images, or the fusion weight of each RGB image is set by using a shake degree of each RGB image.

For example, a manner of setting an initial fusion weight for each RGB image may be expressed as:

$$w_e(x, y) = \begin{cases} I_e(x, y) - Vmin, for \; I_e(x, y) \leq 1/2(Vmin + Vmax) \\ Vmax - I_e(x, y), for \; I_e(x, y) > 1/2(Vmin + Vmax) \end{cases}$$

$w_e(x, y)$ indicates a fusion weight of the RGB image. *Vmin*=0 and *Vmax*=255.

If a camera shakes or an object in a shooting range is in a movement state when an RGB image is shot, a fusion weight of each image may be adjusted based on a shake degree of each image. For example, an adjusted fusion weight may be expressed as:

$$w'_e(x, y) = g(Blur_e, BS_e, Blur_e(x, y), w_e(x, y))$$
$$= \frac{(1 - Blur_e) * (1 - BS_e) * (1 - r(x, y)) * w_e(x, y)}{\sum_e (1 - Blur_e) * (1 - BS_e) * (1 - r(x, y)) * w_e(x, y)}$$

$Blur_e$ is a shake degree of each RGB image, and $BS_e$ indicates a size of a movement region.

Generally, if the shake degree of the RGB image is high, that is, the whole image is blurred, and the RGB image has a large movement region in a time period corresponding to the event image, the fusion weight of the RGB image may be greatly reduced, to avoid a blurred region in a finally obtained target image. However, if the shake degree of the RGB image is low, that is, the whole image is clear, and the RGB image has a small or no movement region in a time period corresponding to the event image, the fusion weight of the RGB image may be increased on the basis of the initial fusion weight, so as to make a final target image clearer.

In a possible implementation, if a first shake degree of each RGB image is not higher than a first preset value but is higher than a second preset value, de-shaking processing is performed on each first image to obtain each de-shaked first image. Specifically, the de-shaking manner may include an AI de-shaking algorithm, an optical flow-based de-shaking algorithm, a USM (Unsharp Mask) sharpening algorithm, and the like. Specifically, the de-shaking manner may be adjusted based on an actual application scenario. This is not limited in this application. Therefore, in this implementation of this application, a shaking case may be distinguished based on dynamic data. When there is no shake, direct fusion is performed. When shaking is not strong, adaptively de-shaking is performed on an RGB image. When shaking is strong, an RGB image is re-shot. Scenarios including a plurality of shake degrees are used, and there is a strong generalization capability.

For example, a frame of image may be directly shot, as shown in FIG. 78. According to the method provided in this application, a target image obtained by fusing a plurality of RGB images with reference to an event image may be that shown in FIG. 79. Apparently, an image obtained by using the method provided in this application is clearer, and user experience is improved.

Therefore, in this implementation of this application, a shake degree that is of an RGB image and that exists when the RGB image is shot may be quantified based on the event image, and a fusion weight of each RGB image may be determined based on a shake degree of each RGB image. Generally, an RGB image with a lower shake degree corresponds to a higher fusion weight, so that information included in the finally obtained target image is more inclined to be a clearer RGB image, so as to obtain a clearer target image. Moreover, for an RGB image with a high shake degree, an RBG image may be re-shot to obtain a clearer RGB image with a lower shake degree, so that the clearer image may be used for subsequent image fusion, thereby making the final target image clearer.

For ease of understanding, a procedure of the image processing method provided in this application is described in detail below by using a more specific scenario.

The image processing method provided in this application may be performed by a device, such as a mobile phone or a camera on which a camera and a motion sensor such as a DVS are disposed or connected. The following uses a mobile phone as an example for description.

As shown in FIG. 80, in a scenario in which the user performs shooting by using a mobile phone, the user may enable an HDR mode, and shoot a clearer image by using the HDR mode.

After the user taps a shooting button, the mobile phone remains still for a short time period. In this case, the mobile phone may shoot a plurality of RGB images by using different exposure duration. In this process, if shake degrees of one or more RGB images are higher than a preset value, the RGB images may be re-shot, so as to add new RGB images. In a process of re-shooting an RGB image, exposure duration corresponding to an RGB image whose shake degree is higher than a preset value may be used, or exposure duration obtained by reducing an exposure level based on the exposure duration may be used, so as to obtain a clearer re-shot RGB image.

If the shake degree of the RGB image is not higher than the preset value but is greater than 0, de-shaking processing may be performed on the RGB image, to obtain a clearer RGB image. In addition, compared with re-shooting the RGB image, performing de-shaking processing can improve efficiency of obtaining a final target image. If shake degrees of all RGB images do not exceed the preset value, there is no need to re-shot the RGB image and perform de-shaking processing.

Then, a fusion weight is assigned to each RGB image based on the shake degree of each RGB image. Generally, an RGB image with a higher shake degree corresponds to a smaller weight value, and an RGB image with a lower shake degree corresponds to a larger weight value, so that the information included in the finally obtained target image is more inclined to be information included in a clearer RGB image. In this way, the final obtained target image is clearer, and user experience is improved. In addition, if the target image is used for subsequent image recognition, feature extraction, or the like, an obtained recognition result or an extracted feature is more accurate.

In addition, in the above method (the manner of obtaining an image in the HDR mode shooting scenario), the manner of using a DVS sensor and an RGB camera to collaboratively generate a high-quality image may be further applied to an application scenario of a high frame rate video (High frame rate video, HFR video), and image quality of each frame in the HFR is improved through movement-blurry removal and an HDR feature of the DVS, to enhance the quality of the image. In addition, the RGB sensor shoots an image sequence (video) at a fixed frame rate, and a DVS event between two RGB images is used to reconstruct a high-frame-rate video, so that a video frame rate can be improved.

FIG. 115 is a schematic diagram of a structure of an image processing apparatus provided in this application. The image processing apparatus may include the following components.

A motion sensor 11501 is configured to detect movement information of a target object, where the movement information includes information about a movement trajectory of the target object moving in a preset range, and the preset range is a shooting range of a camera.

A calculation module 11502 is configured to determine focusing information based on the movement information, where the focusing information includes a parameter for focusing on the target object in the preset range.

The shooting module 11503 is configured to: focus on the target object in the preset range based on the focusing information, and shoot an image in the preset range.

In a possible implementation, the calculation module 11502 may be a module coupled to the motion sensor 11501, or a module disposed inside the motion sensor 11501.

In a possible implementation, the focusing information includes information about a focus region. The calculation module 11502 is specifically used to: predict a movement trajectory of the target object in preset duration based on the movement information, to obtain a predicted region; and determine the focus region based on the predicted region.

In a possible implementation, the calculation module 11502 is specifically used to: if the predicted region meets a preset condition, use the predicted region as the focus region and trigger the shooting module 11503 for focusing; or if the predicted region does not meet a preset condition, re-predict the movement trajectory of the target object in the preset duration based on the movement information to obtain a new predicted region, and determine the focus region based on the new predicted region.

It may be understood that when determining that a preset region meets the preset condition, the calculation module 11502 uses the preset region as the focus region, for example, uses the preset region as the focus region, or determines a range larger than the preset region as the focus region, and triggers the shooting module to perform shooting. Before that, the shooting module may be in a disabled state. For example, if the shooting module includes a camera, before the calculation module 11502 triggers shooting, if the preset region does not meet the preset condition, the camera may be in a disabled state, so that power consumption of the camera is reduced and resources are saved.

In a possible implementation, the movement information further includes at least one of a movement direction or a movement speed of the target object.

The calculation module 11502 is specifically configured to predict the movement trajectory of the target object in the preset duration based on the movement trajectory of the target object moving in the preset range, and the movement direction and/or the movement speed, to obtain the predicted region.

In a possible implementation, the calculation module 11502 is specifically configured to: fit a change function of a center point of a movement region of the target object over time based on the movement region, and the movement direction and/or the movement speed; calculate a predicted center point based on the change function, where the predicted center point is a center point that is predicted and that is of a region in which the target object is located in the preset duration; and obtain the predicted region based on the predicted center point.

In a possible implementation, the shooting module 11503 includes an RGB camera.

The shooting module 11503 is specifically configured to use at least one point that is in a plurality of focuses of the RGB camera and that has a smallest norm distance from the center point of the focus region for focusing.

In a possible implementation, the focusing information includes information about the focus region, the movement region includes a current region of the target object, and the calculation module 11502 is specifically configured to use the current region of the target object as the focus region.

In a possible implementation, the shooting module 11503 is further configured to: obtain an exposure parameter before the shooting module 11503 shoots an image in the preset range, and shoot the image in the preset range based on the exposure parameter.

In a possible implementation, the shooting module 11503 is specifically configured to obtain the exposure parameter based on the movement information, where the exposure parameter includes exposure duration, and the exposure duration is in a negative correlation with the movement speed of the target object.

In a possible implementation, the shooting module 11503 is specifically configured to obtain the exposure parameter based on a light intensity, where the exposure parameter includes the exposure duration, and a value of the light intensity in the preset range is in a negative correlation with the exposure duration.

In a possible implementation, the image processing apparatus may further include the following module.

An enhancement module 11504 is configured to: after the shooting module shoots images in the preset range, fuse the images in the preset range based on the movement information that is of the monitored target object and that corresponds to the images, and obtain a target image in the preset range.

In a possible implementation, the motion sensor 11501 can include a dynamic vision sensor DVS, and the DVS is configured to monitor movement of the target object in the preset range to obtain the movement information.

Refer to FIG. 116. This application further provides an image processing apparatus, including the following modules.

An obtaining module 11601 is configured to obtain a first event image and a plurality of shot first images, where the first event image includes information about an object moving in a preset range in a shooting time period of the plurality of first images, the information may be specifically obtained by using a motion sensor 11603, the plurality of first images correspond to different exposure duration, and the preset range is a shooting range of a camera.

A processing module 11602 is configured to calculate, based on the first event image, a first shake degree corresponding to each of the plurality of first images, where the first shake degree indicates a degree of camera shake when the plurality of first images are shot.

The processing module 11602 is further configured to determine, based on the first shake degree corresponding to each first image, a fusion weight of each first image in the plurality of first images, where the first shake degree corresponding to the plurality of first images is in a negative correlation with the fusion weight.

The processing module 11602 is further configured to fuse the plurality of first images based on the fusion weight of each first image, to obtain a target image.

In a possible implementation, the processing module 11602 is further configured to before determining the fusion weight of each of the plurality of first images based on the first shake degree, if the first shake degree is not greater than a first preset value and is greater than a second preset value, perform de-shaking processing on each first image to obtain each first image after de-shaking.

In a possible implementation, the obtaining module 11601 is further configured to: if the first shake degree is greater than the first preset value, re-shoot a second image, where a second shake degree of the second image is not greater than the first preset value.

The processing module 11602 is specifically configured to: calculate the fusion weight of each first image based on the first shake degree of each first image, and calculate a fusion weight of the second image based on the second shake degree.

The processing module 11602 is specifically configured to fuse the plurality of first images and the second image based on the fusion weight of each first image and the fusion weight of the second image, to obtain the target image.

In a possible implementation, the obtaining module 11601 is further configured to: obtain a second event image before re-shooting the second image, where the second event image is obtained before obtaining the first event image; and calculate an exposure parameter based on information included in the second event image, where the exposure parameter is used for shooting the second image.

In a possible implementation, the obtaining module 11601 is specifically configured to divide the first event image into a plurality of regions and divide a third image into a plurality of regions, where the third image is the first image with a smallest exposure value in the plurality of first images, and locations of the plurality of regions included in the first event image correspond to locations of the plurality of regions included in the third image, the exposure value includes at least one of exposure duration, an exposure amount, or an exposure level; calculate whether each region in the first event image includes first texture information, and whether each region in the third image includes second texture information; and if a first region in the first event image includes the first texture information, and a region that corresponds to the first region and that is in the third image does not include the second texture information, perform shooting based on the exposure parameter to obtain the second image, where the first region is any region in a first dynamic region.

(2) Fusion of a DVS image and an RGB image.

A shooting technology is commonly used in terminal devices such as mobile phones and cameras, and is a process in which a photosensitive component receives photons (natural light) in a time period (specified exposure time) and quantizes the photons into digital signals (for example, 0-255). The photosensitive component may also be referred to as a photosensitive component or an image sensor, and is an important part of a digital camera. The photosensitive component can be divided into two types: a charge coupled device (CCD) and a complementary metal-oxide semiconductor (CMOS) based on different components. The photosensitive component can be divided into two types: a color sensor and a motion sensor based on different types of shot optical images. The color sensor may also be referred to as an RGB sensor, and the motion sensor may be a motion detection vision sensor (MDVS), or referred to as a dynamic vision sensor (DVS) for short.

Driven by intelligent terminal devices such as mobile phones, image sensors develop rapidly. With the continuous enrichment of use types of image sensors, more types of image sensors and more sensing functions are provided on one terminal device. As a result, use scenarios that the terminal device can process become more extensive. Therefore, how to construct an image sensor with rich sensing functions, and how to process data obtained by the image sensor in different use scenarios in a shooting process, how to output data, and what data to output become problems that need to be urgently resolved.

Generally, the information collected by the image sensor may be used in scenarios such as image rebuilding, target detection, shooting of a moving object, shooting by using a moving device, shooting for deblurring, movement estimation, depth estimation, or target detection and recognition. Currently, driven by intelligent terminal devices such as mobile phones, image sensors develop rapidly. With the continuous enrichment of use types of image sensors, more types of image sensors and more sensing functions are provided on one terminal device. As a result, use scenarios that the terminal device can process become more extensive. Therefore, how to construct an image sensor with rich sensing functions, and how to process data obtained by the image sensor in different use scenarios in a shooting process, how to output data, and what data to output become problems that need to be urgently resolved.

Based on this, in embodiments of this application, a new image sensor is constructed and a new data processing method is provided with reference to respective advantages of a color sensor and a motion sensor, to implement data collection and data output in a plurality of application modes. The newly constructed image sensor supports richer and more powerful functions and more widely used scenarios. The following describes content of embodiments of this application from the following three aspects. A first aspect relates to how to construct a new structure of an image sensor with a more powerful sensing function based on an existing photosensitive unit (that is, a sensor pixel) or an existing image sensor, and relates to a chip architecture, a circuit structure, and a corresponding working flow of a new image sensor. A second aspect relates to how to implement data collection and data output based on a newly constructed image sensor, and relates to a new data processing algorithm and different application modes, and relates to developing an adapted algorithm for different data fusion manners to process a corresponding data stream. A third aspect relates to an application example of outputting data, that is, how to efficiently and accurately remove a moving object (which may also be referred to as a moving foreground) from a shot image. Specifically, specific implementations of the second aspect may further include the following points: (1) how to collect data in different application modes based on a newly constructed image sensor; (2) how to output data in different application modes and what type of data to output. Specifically, in different output modes, high-quality image rebuilding, for example, high-frame-rate image rebuilding and high dynamic range (HDR) image rebuilding may be implemented with reference to a new algorithm, or a low-power target detection and recognition function may be implemented. The semantic information is associated with an image, to provide better experience for the user. It should be noted that, for ease of understanding, in the following embodiments, an example in which the motion sensor is a DVS is used for description.

(1) Construct a new structure and a work flow of an image sensor.

Embodiments of this application relate to a lot of image sensor related knowledge. To better understand the solutions in embodiments of this application, the following first describes related terms and concepts that may be used in embodiments of this application. It should be understood that a related concept explanation may be limited due to a specific situation of embodiments of this application, but it does not mean that this application is limited only to this specific situation. Specific situations of different embodiments may also vary. Specifically, no limitation is imposed herein.

Since a purpose of any imaging system is to obtain a picture that can meet a requirement, in an imaging system, a task of a graphics processor is to extract picture information of sufficient high quality for the corresponding imaging system. Specifically, an imaging objective lens images a scenario irradiated by external illumination light (or self-emitting light) on an image plane of the objective lens to form two-dimensional light intensity distribution (optical image). A sensor that can convert an optical image of the two-dimensional light intensity distribution into a one-dimensional time sequence electrical signal is referred to as an image sensor. In an image sensor, each photosensitive unit corresponds to a pixel (Pixel). A larger quantity of pixels included in the image sensor indicates that the image sensor can sense more object details, and therefore an image is clearer. In other words, an image resolution provided by the image sensor is higher. Most of the mainstream cameras on the market use 300,000 pixel image sensors. In other words, there are about 300,000 photosensitive units in the image sensor. A corresponding imaging resolution is 640 x 480 (equivalent to 307200 pixels). As shown in FIG. 81, two conventional color sensors are shown. A sensor A includes 5 x 5 = 25 photosensitive units (only used as an example). A corresponding shot image A includes 25 pixel values, and each pixel value is obtained based on a photosensitive unit at a corresponding location. A sensor B includes 10 x 10 = 100 photosensitive units (only used as an example). Similarly, a corresponding shot image B includes 100 pixel values, and each pixel value is also obtained based on a photosensitive unit at a corresponding location.

It should be noted herein that a DVS is similar to the color sensor corresponding to FIG. 81. One DVS also includes a plurality of photosensitive units, and each photosensitive unit also corresponds to one pixel on an image. A difference between the DVS and the conventional color sensor lies in that working principles of photosensitive units in the two types of image sensors are different. Specifically, a conventional color sensor outputs a full-frame image in a frame format, while the DVS uses a three-layer model of human retina, each pixel works independently and asynchronously, and there is no concept of frame and exposure time. The DVS can only capture dynamic changes, and when a shooting scenario does not change, the camera has no output (no noise is considered), so that static information cannot be captured.

When at least one frame of event image mentioned in this embodiment of this application is a plurality of frames of event images, the at least one frame of event image may be event images in a same time window, or may be event images in different time windows. For example, an event image 1 is an event image in a time period [t1, t2], and an event image 2 is an event image in a time period [t2, t3]. Certainly, the at least one frame of event image may alternatively be event images of different regions in a same time period. For example, a monitoring region of the DVS may be divided into a plurality of regions, and a corresponding event image is generated based on an event detected in each region. In addition, events at different pixel locations and in a time period form an event data stream, which may also be referred to as an event stream for short.

For example, as shown in FIG. 37, a time window may be divided into a plurality of short-time windows, for example, k short-time windows shown in FIG. 37. Each time window may correspond to one frame of event image. A segmentation manner may be performing segmentation based on set duration, or may be performing segmentation based on random duration or performing segmentation based on a movement trajectory change status, or the like. This may be specifically adjusted based on an actual application scenario. After k short-time windows are obtained through segmentation, a location of an event in each short-time window is analyzed, and a region in which the target object is located in each short-time window is determined. For example, a movement region in a short-time window 1 is the movement region 1 shown in FIG. 37, and a movement region in a short-time window k is the movement region k shown in FIG. 37. Then, a movement region and a movement feature such as a movement direction or a movement speed, of the target region are determined based on changes of the movement region in the short-time windows 1 to k. In addition, events of locations of different pixels in the entire time window (namely, the solid-line rectangular box at the bottom of FIG. 37) form the event data stream.

In a daily shooting activity of a user, a moving object (which may be referred to as a moving foreground) often appears unexpectedly in a shooting range, affecting a shooting effect. Currently, there are some methods for removing the moving object in the market. For example, a Lumia mobile phone shoots a dynamic photo for a time period (for example, two seconds), and stitches the dynamic photo, so that the moving object can be removed in a specific scenario. This manner has a high requirement on a shooting occasion: Shooting needs to be performed stably for a time period (for example, two seconds described above). However, a removal effect is poor: A high-speed moving object cannot be identified and removed. Based on this, how to efficiently and accurately remove a moving object from a shot image becomes an urgent problem to be resolved.

An embodiment of this application provides a data processing method. Specifically, an image processing method is provided, to efficiently and accurately remove a moving object from a shot image.

First, a specific procedure of the image processing method provided in this application may include: first, obtaining an event stream and a frame of first RGB image, where the event stream includes at least one frame of event image, and each of the at least one frame of event image is generated based on movement trajectory information of a target object moving in a monitoring range of a motion sensor, where the first RGB image is superposition of shooting scenarios captured by a camera at each moment during exposure duration; constructing a mask based on the event stream, where the mask is used to determine a movement region of each frame of event image; and obtaining a second RGB image based on the event stream, the first RGB image, and the mask, where the second RGB image is an RGB image obtained by removing the target object (for example, a moving objects). In this embodiment of this application, the moving object may be removed based only on one RGB image and an event stream to obtain an RGB image without the moving objects. Compared with a manner in the existing technology of removing a moving object based on a plurality of RGB images and an event stream, this manner requires only one RGB image shot by a user, and provides better user experience.

Moving object removal has high significance in application such as photography, detection and recognition, background modeling, and panoramic stitching. For example, in an application scenario such as mobile phone photography, when a user wants to shot some landscape photos, sometimes in a shooting process, there are many pedestrians in a shooting region (for example, in a scenic region with many people), and a landscape photo that meet a requirement of the user can be obtained by removing the moving object. For another example, in a surveillance scenario, a background and a foreground (that is, a moving foreground) may be separated by using a background subtraction manner, so that an objective of detecting the moving object can be quickly achieved. For another example, in a panoramic splicing scenario, panoramic splicing involves splicing of a plurality of photos of a moving object, and the moving foreground needs to be removed.

The following describes in detail the image processing method provided in this application. For details, refer to FIG. 82. FIG. 82 is a schematic flowchart of the image processing method provided in an embodiment of this application. The method may include the following steps.

8201: Obtain an event stream and a frame of first RGB image.

First, an event stream and a frame of RGB image (which may be referred to as the first RGB image) are respectively obtained via a motion sensor (such as a DVS) and an RGB sensor of a camera. The obtained event stream includes at least one frame of event image, and each of the at least one frame of event image is generated based on information about a movement trajectory that is of a target object (namely, a moving object) and that is generated when the target object moves in a monitoring range of the motion sensor, and the first RGB image is superposition of shooting scenarios captured by the camera at each moment during exposure duration.

For ease of understanding, the following separately describes how to obtain the event stream and the first RGB image.

a. Process of obtaining the event stream

First, movement information is obtained by using the motion sensor. Specifically, the motion sensor may monitor movement of the target object in a detection range of the motion sensor, to obtain the movement information of the target object in the detection range. The target object is an object moving in the detection range, there may be one or more target objects, and the movement information may include information about a movement trajectory of the target object moving in the detection range. For example, the movement information may include information such as a movement outline of the target object, a size of a region in which the target object is located, or coordinates of a corner point in the detection range when the target object moves in the detection range.

For ease of understanding, a region in which the target object is located at each detected moment when the target object moves in the detection range is referred to as a movement region of the target object below. For example, if the target object is a pedestrian and the pedestrian is performing a whole-body movement, the movement region may include a whole body of the pedestrian; if the pedestrian move only an arm, the target object may be only the arms of the pedestrian, and the movement region may include an arm part of the pedestrian.

Then, an event image is generated based on the movement information. That is, after the movement information is obtained, at least one frame of event image is generated based on information collected by the motion sensor in the detection range. Generally, the movement information may include information about a movement trajectory of the target object in the detection range in specific duration. The movement information may be considered as an event, and the movement information obtained in a time period forms an event stream. All movement information corresponding to one time window in the event stream is mapped to a same image based on corresponding coordinates, to obtain the event image.

For example, for the event image, refer to FIG. 35 to FIG. 37 and related descriptions thereof. Details are not described herein again.

Optionally, the event image mentioned in this embodiment may be optimized by using the foregoing method procedures corresponding to FIG. 38 to FIG. 44, to obtain a clearer event image.

For ease of understanding, the following describes an example. Refer to FIG. 83. Because the motion sensor does not require exposure, the motion sensor may capture lightning in movement at an extremely high time resolution. For example, in an extremely short time window (which may be considered as a moment $t_k$), the motion sensor can capture a clear outline of a lightning location. In this case, a movement trajectory of lightning is continuously captured in exposure time (for example, $[t_1, t_2]$), so that an event stream shown in FIG. 83 is formed.

b. Process of obtaining a frame of first RGB image

The first RGB image may be obtained by using a color sensor. When the color sensor is enabled, the camera may obtain a frame of first RGB image by using the color sensor. When the color sensor obtains an image, a principle of the color sensor determines that the image obtained by the color sensor is superposition of a scenario in exposure time. Assuming that the first RGB image is denoted as I, the image I represents an exposure result of a shooting scenario f from a moment $t_1$ to a moment $t_2$. Herein, it is assumed that exposure duration is $[t_1, t_2]$. In addition, the shooting scenario f refers to an image of a real and clear scenario in a shooting range of a camera. FIG. 84 shows an image I, a shooting scenario $f(t_1)$ corresponding to the image I at an exposure moment $t_1$, and a shooting scenario $f(t_2)$ corresponding to the image I at an exposure moment $t_2$. The image I represents superposition of exposure results of the shooting scenario f from the moment $t_1$ to the moment $t_2$. It can be learned that the image I obtained through exposure superposition of a plurality of shooting scenarios is a blurred image.

8202: Construct a mask based on the event stream.

After the event stream and the first RGB image are obtained, the mask may be constructed based on the event stream, where the mask is for determining a movement region of each frame of event image in the event stream, in other words, is for determining a location of a moving object in the RGB image. As shown in FIG. 85, a gray region is a static region which may also be referred to as a background area, and a black region is a movement region.

It should be noted that, in this application, a process of constructing a mask M(t) based on an event stream $E$ is recorded as g(x),. For a shooting scenario $f(x)$ at $x$ moment, because the movement of the moving object has been recorded in the event stream $E$ by the motion sensor, the mask M(t) may be represented as M(t) = $g(E(t + \Delta t))$. $E(t + \Delta t)$ may be represented as $\int_{x-\Delta t}^{x+\Delta t} e(s)\, ds$, as shown in FIG. 86. g(x) is used as a method for constructing a mask, and may have many implementations. For example, a connected region may be constructed by using location information of an event image in a morphological manner. Alternatively, a function with time attenuation may be selected to allocate different weights to regions of event images generated in a time period, so that a mask is obtained accordingly. Alternatively, a region in which a quantity of event images generated in a time period in a spatial neighborhood exceeds a preset threshold is recorded as 0 (indicating a movement region), and a region in which the quantity of event images generated in the time period does not exceed the preset threshold is recorded as 1 (indicating a background region), so that a mask is obtained in this way. In this embodiment of this application, a specific implementation of constructing a mask is not limited.

For ease of understanding, a specific implementation of constructing a mask is described herein. First, a monitoring range of a motion sensor may be divided into a plurality of preset neighborhoods (set as neighborhoods k). Then, in a range of each neighborhood k, if a quantity of event images of an event stream in a preset duration range $\Delta t$ exceeds a threshold P, the corresponding neighborhood is determined as a movement region, and the movement region may be marked as 0; if the quantity of event images of the event stream in the preset duration range $\Delta t$ does not exceed the threshold P, the corresponding neighborhood is determined as a background region, and the background region may be marked as 1. For details, refer to the following formula (18):

$$M_{xy}(t) = \begin{cases} 1, \text{if} \displaystyle\sum_{t-\Delta t < s < t+\Delta t}\ \sum_{|i-x|<k, |j-y|<k} e_{ij}(s) < P \\ 0, \text{else} \end{cases} \quad (18)$$

$M_{xy}(t)$ represents a value of a mask M at a location (x, y) at a moment t, and $e_{ij}(s)$ represents an event (belonging to an event stream) recorded at a location (i, j) of an event image e at a $s$ moment in an event stream.

8203: Obtain a second RGB image based on the event stream, the first RGB image, and the mask, where the second RGB image is an RGB image obtained by removing the target object.

After the event stream, the first RGB image, and the mask are obtained according to the foregoing steps, the second RGB image may be obtained based on the event stream, the first RGB image, and the mask. The second RGB image is an RGB image obtained by removing the target object. FIG. 87 is an image I' that corresponds to the image I and that is obtained by removing a moving object.

The following specifically describes how to obtain the second RGB image based on the event stream, the first RGB image (which may also be referred to as the image I), and the mask.

How to calculate an image $f(t_1)$ without movement blur based on the image I with the movement blur and an event stream E is first described. Specifically, the following may be obtained according to the following series of formulas:

$$I = \frac{1}{T} \int_{t_1}^{t_2} f(t)dt \quad (19)$$

$$e_{xy}(t) = \sigma \, \delta_{t_0}(t) \quad (20)$$

$$E(t) = \int_{t_1}^{t} e(s)ds \quad (21)$$

$$\log f(t) = \log f(t_1) + c \cdot E(t) \quad (22)$$

$$I = \frac{1}{T} \int_{t_1}^{t_2} f(t_1) \cdot e^{c \cdot E(t)}dt \quad (23)$$

$$I = \frac{f(t_1)}{T} \int_{t_1}^{t_2} e^{c \cdot \int_{t_0}^{t} e(s)ds}dt \quad (24)$$

$$\log f(t_1) = \log I - \log \frac{1}{T} \int_{t_1}^{t_2} e^{c \cdot \int_{t_0}^{t} e(s)ds}dt \quad (25)$$

A shooting principle of a color sensor determines that a shooting result of the color sensor is superposition of scenarios corresponding to all moments in exposure time. That is, if a standard definition image corresponding to a shooting scenario at a moment t is f(t), the image I is obtained by integrating f(t) from a moment $t_1$ to a moment $t_2$, and is $I = \frac{1}{T} \int_{t_1}^{t_2} f(t)dt$ as shown in the foregoing formula (19). As shown in the image I in FIG. 84, each lightning represents a real location of a moving object at a moment. Because the exposure time is long, the lightning moves to different locations and is captured by the camera for a plurality of times, and finally a blurred photo is shot.

However, because the motion sensor does not require exposure, the motion sensor can capture lightning in movement at an extremely high time resolution. Specifically, as shown in the foregoing formula (20), the motion sensor captures discrete movement information, that is, discrete events (x, y, σ, $t_0$). x and y indicate coordinates of a light intensity change, p indicates a direction of the light intensity change, and t indicates time of the change. $e_{xy}(t)$ is used to represent a continuous function with respect to time t at a location (x, y), and $e_{xy}(t) = \sigma \delta_{t_0}(t)$. $\delta_{t_0}(t)$ represents an impulse function with an integral of 1 at time t0, $\sigma$ represents whether there is a light intensity change at a moment $t_0$. That is, if the light intensity change in the logarithmic domain compared with a reference light intensity change is greater than a threshold c, σ = 1, or if the change is less than an opposite quantity -c of the threshold, σ = -1. In other cases, σ = 0. Subsequently, e(t) represents $e_{xy}(t)$ at a location of (x, y). For example, in an extremely short-time window (which may be considered as a moment $t_k$), the DVS may capture a clear outline of a location of lightning, and a point on the outline may be represented as $e(t_k)$, as an outline of each lightning in FIG. 83. Then, a movement of lightning is continuously captured during the exposure time, thus forming an event image. A value of each pixel in a specific event image may be represented by $E(t) = \int_{t_1}^{t} e(s)ds$ according to the foregoing formula (21).

In addition, a principle of generating an event is that a log value of a light intensity change at a corresponding pixel location reaches a value of c, that is, as shown in the following formula (29):

$$e_{xy} := \begin{cases} 1, if\ (\log_{xy} f(t) - \log_{xy} f(t_0)) > c \\ -1, if\ (\log_{xy} f(t) - \log_{xy} f(t_0)) \le c \end{cases} \quad (26)$$

A real and clear image $f(t_1)$ and a real and clear image $f(t)$ at a moment t may be expressed as a result obtained by continuously superimposing $f(t_1)$ with light intensity changes, that is, as shown in the foregoing formula (22) $\log f(t) = \log f(t_1) + c \cdot E(t)$. The formula (22) is substituted into the formula (19) to obtain the formula (23), and then the formula (21) is substituted into the formula (23) to obtain the formula (24). Operations such as shifting items are performed on the formula (24), the formula (25) of obtaining the real and clear image $f(t_1)$ from the blurred image I and the event stream e is shown as:

$$\log f(t_1) = \log I - \log \frac{1}{T} \int_{t_1}^{t_2} e^{c \cdot \int_{t_0}^{t} e(s)ds} dt \quad .$$

Therefore, when a plurality of images at different moments are shot by using a camera, where two frames of shot images $I_1$ and $I_2$ are used as an example for description herein, as shown in FIG. 88, if it is known that a location of a moving object in each image is $ROI_1$ and $ROI_2$, a mask $M_1$ and $M_2$ with a background area of 1 and a movement region of 0 can be obtained. In this case, an image without a moving object may be obtained by combining images of different movement regions at different moments. The image without a moving object may be expressed as I', which may be specifically shown in the following formula (27):

$$I' = \frac{I_1 * M_1 + I_2 * M_2}{M_1 + M_2} \quad (27)$$

It can be deduced from the case of two images that if n images are shot, an expression of an image I' without a moving object is obtained, as shown in FIG. 28:

$$I = \frac{\sum_{i=1,2,\dots\ n} I_i * M_i}{\sum_{i=1,2,\dots\ n} M_i} \quad (28)$$

In both the foregoing formula (27) and formula (28), at least two images need to be manually shot by the user to obtain the image I' without a moving object. In some cases in which allowed shooting time is very short, for example, cases of shooting an image of fireworks blooming in the air and an image of an airplane flying through a window at a high speed, these shooting scenarios exist in an allowed shooting range for very short time, and the user may only have time to shoot one image. In this case, the image I' without a moving object can be obtained by using the following methods: First, it is assumed that a shot image is denoted as I, the image I represents an exposure result of a shooting scenario f from a moment $t_1$ to a moment $t_2$. Herein, it is assumed that exposure duration is $[t_1, t_2]$. In addition, the shooting scenario f refers to an image of a real and clear scenario in the shooting range of the camera. That is, f(t) represents an ideal image without any movement blur. In this case, the image I' obtained by removing a movement foreground may be represented as the following formula (29):

$$I' = \frac{\int_{t_1}^{t_2} f(t) \cdot M(t)dt}{\int_{t_1}^{t_2} M(t)} \quad (29)$$

$M(t)$ represents a mask of the image I at the moment t. A construction manner of the mask may be that shown in the foregoing formula (18). Details are not described herein again.

It is known that a process of obtaining an ideal real and clear image $f(t_1)$ from the blurred image I and the event stream e is shown in the foregoing formula (25), that is, the following formula (30) to formula (32) may be obtained by performing a series of transformations:

$$f(t) = f(t_1) \cdot e^{c \cdot \int_{t_1}^{t_2} e(s)ds} \quad (30) \qquad f(t_1) = I / \frac{1}{T} \int_{t_1}^{t_2} e^{c \cdot \int_{t_1}^{t} e(s)ds} dt \quad (31)$$

$$f(t) = \frac{I \cdot e^{c \cdot \int_{t_1}^{t_2} e(s)ds}}{\frac{1}{T} \int_{t_1}^{t_2} e^{c \cdot \int_{t_1}^{t} e(s)ds} dt} \quad (32)$$

With reference to the foregoing formula (29) and formula (32), it may finally be learned that when only one image I is shot, how to obtain a corresponding image I' without a moving object may be specifically shown in formula (33):

$$I' = \frac{I \cdot \int_{t_1}^{t_2} e^{c \cdot \int_{t_1}^{t_2} e(s)ds} \cdot M(t)dt}{\int_{t_1}^{t_2} M(t) \cdot \int_{t_1}^{t_2} e^{c \cdot \int_{t_1}^{t} e(s)ds} dt} \quad (33)$$

It should be noted that, in the foregoing process of obtaining the image I' without a moving object based on the image I, first, the user needs to manually trigger the camera to shot the image I. However, in some application scenarios, as shown in FIG. 89, when the moving object moves slightly in a shooting process, at a moment $t_1$ and a moment $t_2$, an overlapping region of the moving object at the two moments is excessively large. As a result, the moving object cannot be removed in the foregoing manner, or a removal effect is poor. Therefore, in some implementations of this application, an image processing method is further provided. A difference between the image processing method and the foregoing image processing method lies in that: Whether a sudden movement change exists in movement data collected by the motion sensor may be determined. When the sudden movement change exists, the camera is triggered to shoot a third RGB image (as shown in FIG. 90). Then, an event stream and a frame of first RGB image are obtained in a manner similar to the foregoing step 8201 and step 8202, and a mask is constructed based on the event stream (refer to the foregoing steps 8201 and 8202, and details are not described herein again). Finally, a second RGB image without a moving foreground is obtained based on the event stream, the first RGB image, the third RGB image, and the mask. The obtained third RGB image is automatically captured by triggering the camera in a case of sudden movement change, and has high sensitivity. Therefore, a frame of image can be obtained at the beginning when the user perceives a change of a moving object. The solution may be combined with the method for removing a moving object from a single image I provided in the foregoing formula (33), to obtain a method for removing a moving object from an image based on the third RGB image (that is, an image $B_k$) automatically captured by the camera as shown in the following formula (34) and the first RGB image (that is, the image I) manually captured by the user:

$$I' = \frac{I \cdot \int_{t_1}^{t_2} e^{c \cdot \int_{t_1}^{t_2} e(s)ds} \cdot M(t)dt + \sum_{k=1,2,\ldots} B_k * M_k}{\int_{t_1}^{t_2} M(t) \cdot \int_{t_1}^{t_2} e^{c \cdot \int_{t_1}^{t} e(s)ds} dt + \sum_{k=1,2,\ldots} M_k} \quad (34)$$

The image $B_k$ represents a third RGB image that is shot in the exposure time when the camera is triggered at a moment k. If there are three sudden movement changes in the exposure time, the camera is triggered to shoot a third RGB image at each of three moments k. $M_k$ represents a mask constructed based on the image $B_k$ at the moment k. Therefore, as shown in FIG. 91, the image I' without a moving object may be obtained by using the foregoing formula (34) based on the image $B_k$ (one or more images) captured by the camera triggered by a sudden movement change, and the image I that is actively shot by the user in specific exposure time.

To facilitate understanding of the two manners in this embodiment of this application, the following uses examples to describe the two manners of removing a moving foreground from an image in this embodiment of this application. FIG. 92 is a schematic flowchart of obtaining a second RGB image (that is, the image I') without a moving object based on a frame of first RGB image (that is, the image I) and the event stream E, and an expression form of the image I'. FIG.

93 is a schematic flowchart of obtaining a second RGB image (that is, the image $I'$) without a moving object based on a frame of first RGB image (that is, the image I), a third RGB image (that is, one or more images $B_k$) that is obtained through shooting triggered by a sudden movement change, and an event stream E, and an expression form of the image $I'$. It can be learned from the above that, in the mode in FIG. 92, a relationship between the single image I and the event stream E is established, and the image $I'$ obtained by removing a moving object is calculated based on the correspondingly constructed mask M. A specific process may be summarized as follows: An event camera obtains the event stream E, a user shoots an image, an RGB camera obtains the image I, the mask M is generated for different moments in the event stream E, and the image $I'$ obtained by removing a moving object is calculated based on the image I, the event stream E, and the mask M by using the foregoing formula (33). In the mode in FIG. 93, it is determined, by using movement data collected by a motion sensor, that an RGB camera is triggered to capture an image $B_k$ when a sudden movement change occurs, to subsequently remove a moving object from the image I. A specific process may be summarized as follows: The event camera obtains the event stream E, and by analyzing the event stream E, determines whether a sudden movement change occurs (for example, a new moving object occurs) in the monitoring range, and the RGB camera is triggered to capture an image $B_k$. The user shoots an image, obtains the image I by using the RGB camera, and generates the mask M for different moments in the event stream E. The image $I'$ obtained by removing the moving object is calculated by using the foregoing formula (34) based on the image I, the image $B_k$, the event stream E, and the mask M.

It should be noted that, in some implementations of this application, the event camera and the RGB camera may be integrated into one camera, or two independent cameras may work separately. This is not specifically limited herein.

In addition, in a shooting scenario to which this application is applied, sensors used in combination during shooting may be further displayed on a display interface. For example, choices such as DVS, IMU, or infrared may be displayed on the display interface, and the user chooses whether to enable these sensors, to obtain an image that meets expectations of the user. For example, as shown in FIG. 94A, when the user opens a shooting interface, the user may select a shooting configuration from a setting option. As shown in FIG. 94B, the user may choose whether to enable the DVS, the IMU, the infrared, or the like, to obtain an image or a video that meets the expectations of the user.

Based on embodiments corresponding to FIG. 81 and FIG. 94, to better implement the foregoing solutions in embodiments of this application, the following further provides related devices configured to implement the foregoing solutions. For details, FIG. 117 is a schematic diagram of a structure of an image processing apparatus according to an embodiment of this application. The image processing apparatus 11700 includes an obtaining module 11701, a construction module 11702, and a processing module 11703. The obtaining module 11701 is configured to obtain an event stream and a frame of first RGB image. The event stream includes at least one frame of event image, each of the at least one frame of event image is generated based on movement trajectory information of a target object moving in a monitoring range of a motion sensor, and the first RGB image is superposition of shooting scenarios captured by a camera at each moment in exposure duration. The construction module 11702 is configured to construct a mask based on the event stream, where the mask is used to determine a movement region of each frame of event image. The processing module 11703 is configured to obtain a second RGB image based on the event stream, the first RGB image, and the mask, where the second RGB image is an RGB image obtained by removing the target object.

In the foregoing implementation of this application, the moving object may be removed based only on one RGB image and the event stream, to obtain an RGB image without the moving object. Compared with a manner in the existing technology of removing a moving object based on a plurality of RGB images and an event stream, this manner requires only one RGB image shot by a user, and provides better user experience.

In a possible design, the obtaining module 11701 is further configured to trigger the camera to shoot a third RGB image when the motion sensor detects a sudden movement change at a first moment in the monitoring range. The processing module 11703 is further configured to obtain a second RGB image based on the event stream, the first RGB image, the third RGB image, and the mask.

In the foregoing implementation of this application, it may be determined whether there is a sudden movement change in movement data collected by the motion sensor. When there is a sudden movement change, the camera is triggered to shoot the third RGB image. Then, the event stream and a frame of first RGB image are obtained in a manner similar to the foregoing manner, and the mask is constructed based on the event stream. Finally, the second RGB image without a movement foreground is obtained based on the event stream, the first RGB image, the third RGB image, and the mask. The third RGB image is obtained by triggering the camera to automatically take snapshots during a sudden movement change, and sensitivity is high. Therefore, a frame of image can be obtained at a beginning when the user perceives that there is a change on the moving object. In this case, a better removal effect can be implemented on the moving object based on the third RGB image and the first RGB image.

In a possible design, that the motion sensor detects a sudden movement change at a first moment in the monitoring range includes: within the monitoring range, an overlapping part between a generation region of a first event stream collected by the motion sensor at the first moment and a generation region of a second event stream collected by the motion sensor at a second moment is less than a preset value.

In the foregoing implementations of this application, a condition for determining a sudden movement change is specifically described, and is feasible.

In a possible design, the construction module 11702 is specifically configured to: divide the monitoring range of the motion sensor into a plurality of preset neighborhoods; and in a target preset neighborhood, when a quantity of event images of the event stream in preset duration exceeds a threshold, determine that the target preset neighborhood is a movement sub-region, where the target preset neighborhood is any one of the plurality of preset neighborhoods, and each movement sub-region forms the mask.

In the foregoing implementation of this application, a mask construction method is specifically described, and is simple and easy to operate.

(3) SLAM

A conventional APS (Advanced Photo System) camera locates a moving object and analyzes key information of such a part based on a method similar to background subtraction. A simplest implementation method is a frame difference algorithm. A DVS can capture a moving object by detecting a brightness change of a single pixel, has almost an identical effect as that of the frame difference algorithm, but has a lower delay. The DVS camera can quickly locate a rectangular region/mask in which a foreground moving object is located in a single moving object scenario, for example, in a surveillance scenario in which the lens is fixed and the shooting background is clean. For example, FIG. 95 is a schematic diagram of comparison between scenarios shot by a conventional camera and a DVS provided in an embodiment of this application. (a) in FIG. 95 is a schematic diagram of a scenario shot by a conventional APS camera. (b) in FIG. 95 is a schematic diagram of a scenario shot by a DVS.

Specifically, a procedure of detecting a moving object by using the DVS is described below.

When a moving object appears in an image or light changes in a scenario, events are generated in a corresponding region of the DVS. A binary image shown in (b) in FIG. 95 is obtained by setting, to 1, pixel locations at which events occur in a time period (for example, one second), and setting, to 0, pixel locations at which no events occur. A connected rectangular box region is found on the binary image. Then, a size of the rectangular box region is determined. When an area of the rectangular box region > a threshold 1, it is considered that light in a scenario changes. When a threshold 2 > the area of the rectangular box region, it is considered that the area of the rectangular box region is excessively small and is a movement region generated by noise, for example, a shake of a leaf caused by wind. When the threshold 1 > the area of the rectangular box region > the threshold 2, whether the object is a moving object is further determined based on movement continuity.

Optionally, a procedure of detecting and recognizing a moving object by using a DVS sensor and an RGB camera is shown in the figure below.

When a moving object appears in an image or light changes in a scenario, events are generated in a corresponding region of the DVS. A binary image shown in (b) in FIG. 95 is obtained by setting, to 1, pixel locations at which events occur in a time period (for example, 1 second), and setting, to 0, pixel locations at which no events occur. A connected rectangular box region is found on the image. After the rectangular box region is expanded by one circle (h*w*0.1), a corresponding rectangular region on a frame corresponding to the RGB camera is found, and the rectangular region is used as a moving object region. An existing RGB image deep learning network is used to recognize categories of objects in the moving object region.

Generally, the DVS is used for detecting a moving object, and has an advantage of low delay because the DVS is sensitive to a high-speed moving object and can quickly capture a moving event and perform response analysis. The DVS has a time resolution higher than that of an APS. In addition, the DVS sensor is highly sensitive to a movement of an object and is not greatly affected by a light intensity of a scenario. In other words, the DVS sensor can still recognize information about a moving object in an over-bright or over-dark scenario.

The DVS is used in the SLAM technology to provide accurate positioning and map rebuilding functions. This function is useful in AR scenarios. In addition, based on the DVS, the user can view virtual information of physical space through virtual-physical fusion.

For example, some examples of enabling the user to see the virtual information of the physical space based on the DVS are described below.

1. Virtual signage of actual buildings, virtual display of building entrances and exits, and virtual signage of campus service facilities, such as railway stations, canteens, coffee shops, convenience stores, mother and child rooms, gymnasiums, charging piles, ATMs, and toilets.

2. Display smart information, such as indoor temperature and humidity, air quality, quantity of people in a building, conference room names, and conference topics. For details, FIG. 96 is a schematic diagram of an indoor navigation system using a DVS provided in an embodiment of this application.

3. 3D walking navigation, supporting real-time indoor and outdoor walking navigation. For details, FIG. 97 is a schematic diagram of an outdoor navigation using a DVS according to an embodiment of this application; FIG. 98a is a schematic diagram of a station navigation using a DVS according to an embodiment of this application; FIG. 98b is a schematic diagram of a scenic spot navigation using a DVS according to an embodiment of this application; and FIG. 99 is a schematic diagram of a shopping mall navigation using a DVS according to an embodiment of this application.

Specifically, in full-scenario space computing, a fusion architecture of a DVS camera and a conventional sensor (such as a camera) invented in this patent may be used for pose estimation, to improve precision in an environment of fast movement, high dynamic environment collection, and a large light intensity change. For example, since the DVS camera is sensitive to changes in a light intensity, image matching points can be found at night, making night positioning possible.

Based on features of the DVS such as a high speed, a high dynamic range, and a capability of detecting light intensity changes caused by a movement, problems that the existing SLAM is easy to fail in a fast movement and a high dynamic environment can be resolved. In addition, the DVS detects only the light intensity changes, and has low data redundancy and low collection power consumption (20 mW) and bandwidth (100 kB/s). A small amount of data is input to the SLAM, so that power consumption of the SLAM can be significantly reduced.

After the pose estimation information is obtained in the full-scenario space, the pose estimation information may be used for environment or scenario recognition and understanding.

Optionally, to improve accuracy of strong scenario understanding, precise positioning may be further performed with reference to a high-precision map.

Finally, based on the map information, location estimation information, and current application requirements, virtual information can be rendered and imaged at corresponding locations in a real environment.

FIG. 100 is a schematic flowchart of executing SLAM according to an embodiment of this application. As shown in FIG. 100, a SLAM system is deployed on a terminal. The terminal may be, for example, a robot, an unmanned aerial vehicle, or an unmanned vehicle. The terminal obtains input data by running the SLAM system, and executes a series of SLAM procedures based on the input data, to complete the SLAM. The input data for executing the SLAM procedure may include but is not limited to one or more of an event image, an RGB image, a depth image, and IMU data. For example, if an event image sensor (for example, a DVS) and an RGB camera are deployed on the terminal, input data of the SLAM system on the terminal is the event image and the RGB image. For another example, if a DVS, an RGB camera, and a depth camera are deployed on the terminal, input data of the SLAM system on the terminal is the event image, the RGB image, and the depth image.

Optionally, the event image mentioned in this embodiment may be optimized by using the foregoing method procedures corresponding to FIG. 38 to FIG. 44, to obtain a clearer event image. Details are not described below.

Optionally, in an actual application, a plurality of devices configured to obtain different types of input data may be deployed on the terminal. For example, a DVS, an RGB camera, and a depth camera are deployed on the terminal, and the terminal may adaptively select, based on a current scenario, data for SLAM. For example, in a high-speed movement scenario or a sudden illumination scenario, the terminal may select only an event image as data for the SLAM. That is, in this scenario, the terminal may choose to enable only the event image sensor, and disable the RGB camera and the depth camera. Alternatively, in a process of performing the SLAM, the SLAM system in the terminal may obtain only data transmitted by the event image sensor, but does not obtain data transmitted by the RGB camera and the depth camera.

In a process in which the SLAM system of the terminal executes the SLAM procedure, the terminal may perform pose estimation based on input data, and determine whether the input data is a key frame. When the input data is the key frame, a map is constructed based on the determined key frame. In addition, the terminal may further continuously perform closed-loop detection based on the determined key frame, and perform global optimization when a closed-loop is detected, so as to continuously execute the SLAM procedure.

For ease of understanding, the following separately describes steps in which the terminal performs the SLAM procedure.

a. Pose estimation

FIG. 101 is a schematic flowchart of a pose estimation method 10100 according to an embodiment of this application. As shown in FIG. 101, the pose estimation method 10100 includes the following steps.

Step 10101: Obtain a first event image and a target image, where the target image includes an RGB image or a depth map.

In this embodiment, the pose estimation method 10100 may be applied to a SLAM scenario, and the pose estimation method 10100 may be performed by a terminal (or the foregoing electronic device in FIG. 1B), for example, a robot terminal, an unmanned vehicle terminal, or an unmanned aerial vehicle terminal for performing SLAM.

In this embodiment, the first event image is generated based on information about a movement trajectory that is of the target object and that is generated when the target object moves in the monitoring range of the motion sensor. For example, the first event image may be a DVS event image. A DVS may be connected to or preset on the terminal. The terminal monitors an environment by using the DVS, and obtains a DVS event image corresponding to the environment. to obtain the first event image. A red green blue (RGB) camera or a depth camera for capturing environment information may be connected to or preset on the terminal. The terminal may obtain an RGB image or a depth image in the environment by using the RGB camera or the depth camera, for example, obtain the foregoing target image. The RGB image is also referred to as a true color image that uses three components R, G, and B to identify a color of a pixel. R, G, and B respectively represent three different basic colors: red, green, and blue. Any color can be synthesized based on the three primary colors.

A single event output by the DVS usually carries little information and is susceptible to noise. Therefore, in actual application, an event image may be formed based on a plurality of consecutive events output by the DVS.

In a possible embodiment, the terminal may obtain N consecutive DVS events output by the DVS, and integrate the N consecutive DVS events into the first event image, where N is an integer greater than 1. In actual application, a value of N may be adjusted based on an actual situation. For example, the value of N is determined as a value such as 4, 5, or 10 according to sensitivity of the DVS and a precision requirement of the SLAM. The value of N is not specifically limited in this embodiment.

In this embodiment, after obtaining the event image and the RGB image, the terminal may perform a time sequence alignment operation on the event image and the RGB image to obtain an event image and an RGB image that are aligned in time sequence, to subsequently perform pose estimation based on the event image and the RGB image that are aligned in time sequence. In a process of capturing the event image and the RGB image, the terminal continuously moves, and the event image and the RGB image are collect by different apparatuses. Therefore, to ensure that the event image and the RGB image can be jointly used for subsequent pose estimation, the time sequence alignment operation needs to be performed. After the time sequence alignment operation is performed, it can be ensured that the event image and the RGB image that are aligned in time sequence are obtained by collecting at a same moment or a close moment, that is, it is ensured that environment information collected by the event image and the RGB image is the same.

For example, after obtaining the first event image and the target image, the terminal may determine obtaining time of the first event image and obtaining time of the target image. Then, the terminal may determine, based on that a time difference between the obtaining time of the target image and the obtaining time of the first event image is less than a second threshold, that the first event image is aligned with the target image in time sequence. The second threshold may be determined based on precision of the SLAM and frequency of capturing the RGB image by the RGB camera. For example, a value of the second threshold may be 5 milliseconds or 10 milliseconds. The value of the second threshold is not specifically limited in this embodiment.

Because the first event image is obtained by integrating the N consecutive DVS events, the terminal may determine the obtaining time of the first event image based on the obtaining time corresponding to the N consecutive DVS events, in other words, determine that the obtaining time of the first event image is a time period from obtaining the $1^{st}$ DVS event to obtaining the last DVS event in the N consecutive DVS events. The obtaining time of the target image may be a moment at which the terminal receives the target image from the RGB camera. Actually, the obtaining time corresponding to the first event image is a time period, and the obtaining time of the target image is a moment. Therefore, the terminal may determine, depending on whether the obtaining time of the target image falls in a range of the obtaining time corresponding to the first event image, the time difference between the obtaining time of the target image and the obtaining time of the first event image. For example, if the obtaining time of the target image is in a time period range of the obtaining time corresponding to the first event image, it may be determined that the time difference between the obtaining time of the target image and the obtaining time of the first event image is 0 (that is, the time difference is less than the second threshold). If the obtaining time of the target image does not fall in the time period range of the obtaining time corresponding to the first event image, the time difference may be determined based on the obtaining time of the first DVS event or the obtaining time of the last DVS event of the first event image.

For example, it is assumed that N is 4, and moments at which the terminal obtains four consecutive DVS events that are integrated into the first event image are respectively t1, t2, t3, and t4. In this case, the terminal may determine that the obtaining time of the first event image is a time period from t1 to t4. In addition, a moment at which the terminal obtains the target image is t5, and the time point t5 falls out of a time period range of t1 to t4. In this way, the terminal may determine a time difference 1 between the moment t5 and the moment t1 and a time difference 2 between the moment t5 and the moment t4. If either the time difference 1 or the time difference 2 is less than the second threshold, it may be determined that the first event image is aligned with the target image in time sequence.

For example, FIG. 102 is a schematic diagram of integrating DVS events into an event image according to an embodiment of this application. As shown in FIG. 102, each point in the first row in FIG. 102 represents each DVS event obtained by the DVS camera. In FIG. 102, every four DVS events are integrated into one event image, and the event images obtained by integration are, for example, Wk, Wk+1, Wk+2, Wk+3, Wk+4, Wk+5, and Wk+6 in FIG. 102. It can be seen that, because time intervals between every two DVS events are different, integration time of an event image obtained by integrating four different DVS events are different. In FIG. 102, vertical dotted lines represent RGB images captured by the RGB camera, and tk, tk+1, tk+2, tk+3, and tk+4 are respectively time points at which the RGB camera captures an RGB image k, an RGB image k+1, an RGB image k+2, an RGB image k+3, and an RGB image k+4. It can be learned from FIG. 102 that a time difference between obtaining time of the event image Wk and obtaining time of the RGB image k is less than the second threshold, and it may be determined that the event image Wk is aligned with the RGB image k in time sequence. Time differences between obtaining time of the event image Wk+1 and obtaining time of the RGB image k and obtaining time of the RGB image k+1 are both greater than the second threshold. Therefore, it may be determined that the event image Wk (that is, the second event image) does not have an RGB image that is aligned with the event image in time sequence.

Step 10102: Determine integration time of the first event image.

When the first event image is obtained by integrating a plurality of consecutive DVS events, the integration time of the first event image may be time intervals between the plurality of consecutive DVS events. In short, the terminal may determine the integration time of the first event image by determining a time interval between the last DVS event and the first DVS event in the plurality of consecutive DVS events.

For example, assuming that N is 4, and moments at which the terminal obtains four consecutive DVS events that are integrated into the first event image are respectively t1, t2, t3, and t4, the terminal may determine that the integration time of the first event image is t4-t1.

Step 10103: If the integration time is less than a first threshold, determine that the target image is not for performing pose estimation.

In this embodiment, when the terminal is in a high-speed movement scenario or a sudden illumination change scenario, because environment information changes rapidly, the DVS may capture a large quantity of events in short time, that is, output a large quantity of events in short time. Thus, integration time corresponding to the event image obtained based on a fixed quantity of events is short. In this case, because the environment information changes rapidly, it is often difficult for the RGB camera to capture effective environment information. For example, in a scenario in which a high-speed moving object exists, the high-speed moving object is usually difficult to be captured in the RGB image collected by the RGB camera. That is, a region corresponding to the high-speed moving object in the RGB image is a blurred region.

Therefore, when the integration time corresponding to the first event image is less than the first threshold, the terminal may determine that quality of the RGB image is low or even effective information of the environment cannot be captured, so that the terminal may determine not to perform pose estimation by using the target image. The value of the first threshold may be determined based on a precision requirement of the SLAM. For example, the value of the first threshold may be 5 ms or 7 ms. The value of the first threshold is not specifically limited in this embodiment. In other words, when the terminal calculates a pose at the obtaining time corresponding to the first event image, even if the terminal can determine that the first event image has a target image aligned with the first event image in time sequence, the terminal performs pose estimation based only on the first event image. In this way, when the first event image and the target image are used for joint pose estimation, a poor pose estimation effect caused by low quality of the target image can be effectively avoided.

In a possible embodiment, in addition to determining, by the terminal, not to use the target image to perform pose estimation based on an integral of the first event image that is less than the first threshold after determining the target image that is aligned with the first event image in time sequence, the terminal may determine not to use the RGB image corresponding to the first event image to perform pose estimation after obtaining the first event image and determining that the integration time of the first event image is less than the first threshold. In other words, the terminal may not perform the time sequence alignment operation on the first event image, but directly perform the pose estimation operation by using the first event image, thereby reducing resource overheads for the time sequence alignment operation.

Step 10104: Perform pose estimation based on the first event image.

After determining not to use the target image to perform pose estimation, the terminal may perform pose estimation based on the first event image, to calculate a corresponding pose of the terminal at the obtaining moment of the first event image.

In this embodiment, when the terminal determines, based on a case in which integration time of an event image is less than a threshold, that the terminal is currently in a scenario in which it is difficult for the RGB camera to collect effective environment information, the terminal determines that an RGB image with poor quality is not for performing pose estimation, thereby improving pose estimation precision.

The foregoing describes in detail a process in which the terminal performs pose estimation when the terminal is in the high-speed movement scenario or the sudden illumination change scenario. The following describes a process in which the terminal performs pose estimation when the terminal is in a static scenario or a low-speed movement scenario.

In a possible embodiment, when an input signal obtained by the terminal includes DVS events, an RGB image, and IMU data, the terminal integrates the DVS events to obtain an event image, and performs time sequence alignment on the event image, the RGB image, and the IMU data, to perform pose estimation based on a time sequence alignment result.

Specifically, a process in which the terminal performs a time sequence alignment operation is as follows:

When the terminal obtains the event image by integrating N consecutive DVS events, the terminal determines whether a time difference between obtaining time of an RGB image and IMU data adjacent to the event image and obtaining time of the event image is less than a second threshold, to determine whether the event image has an RGB image and/or IMU data that is aligned with the event image in time sequence.

Because frequency at which an IMU collects data is far greater than frequency at which an RGB camera captures an image, it may be considered that there is IMU data aligned with the RGB image in time sequence at any moment. In this way, when the terminal obtains the RGB image, the terminal may determine whether the time difference between the obtaining time of the RGB image and the obtaining time of the adjacent event image is less than the second threshold, to determine whether there is an event image aligned with the RGB image in time sequence.

Based on the foregoing process in which the terminal performs the time sequence alignment operation, after performing the time sequence alignment operation, the terminal may obtain a plurality of possible signal combinations that may be aligned in time sequence. Specifically, the plurality of possible signal combinations aligned in time sequence are shown as follows.

1. Event image, RGB image, and IMU data.

After the terminal obtains an event image, the terminal determines obtaining time of an RGB image adj acent to the event image. When a time difference between the obtaining time of the RGB image and obtaining time of the event image is less than a second threshold, the terminal determines that the event image is aligned with the RGB image in time sequence. Because frequency at which an IMU collects data is far greater than frequency at which an RGB camera captures an image, it may be considered that there is IMU data aligned with the RGB image in time sequence at any moment. Therefore, after it is determined that the event image is aligned with the RGB image in time sequence, the IMU data that is aligned with the event image and the RGB image in time sequence may be obtained.

In this case, the terminal may perform pose estimation based on the event image, the RGB image, and the IMU data.

2. RGB image and IMU data.

After the terminal obtains an RGB image, the terminal determines whether there is an event image that is aligned with the RGB image in time sequence, that is, determines whether a time difference between obtaining time of the RGB image and obtaining time of an adjacent event image is less than a second threshold. If the time difference between the obtaining time of the RGB image and the obtaining time of the adjacent event image is not less than the second threshold, the terminal determines that there is no event image aligned with the RGB image in time sequence, that is, only IMU data is aligned with the RGB image in time sequence.

In this case, the terminal may perform pose estimation based on the RGB image and the IMU data.

3. Event image and IMU data

After the terminal obtains an event image, the terminal determines obtaining time of an RGB image adjacent to the event image. When a time difference between obtaining time of the event image and the obtaining time of the RGB image adjacent to the event image is not less than a second threshold, the terminal determines that no RGB image is aligned with the event image in time sequence. After determining that no RGB image is aligned with the event image in time sequence, the terminal may continue to determine whether IMU data is aligned with the event image in time sequence. Specifically, the terminal determines the obtaining time of the IMU data adjacent to the event image. If a time difference between the obtaining time of the IMU data adjacent to the event image and the obtaining time of the adjacent event image is less than a third threshold, the terminal determines that the event image is aligned with the IMU data in time sequence.

In this case, the terminal may perform pose estimation based on the event image and the IMU data.

4. Event image

Similarly, after the terminal obtains an event image, the terminal determines obtaining time of an RGB image adjacent to the event image. When a time difference between obtaining time of the event image and the obtaining time of the RGB image adjacent to the event image is not less than a second threshold, the terminal determines that no RGB image is aligned with the event image in time sequence. After determining that no RGB image is aligned with the event image in time sequence, the terminal may continue to determine whether IMU data is aligned with the event image in time sequence. Specifically, the terminal determines obtaining time of the IMU data adjacent to the event image. If a time difference between the obtaining time of the IMU data adjacent to the event image and obtaining time of an adjacent event image is not less than a third threshold, the terminal determines that no IMU data is aligned with the event image in time sequence.

In this case, the terminal may perform pose estimation based on the event image.

For example, the terminal obtains a second event image, where the second event image is an image indicating a movement trajectory that is of a target object and that is generated when the target object moves in a detection range of a motion sensor. A time period corresponding to the second event image is different from a time period corresponding to the first event image. That is, a time period in which the motion sensor detects the first event image is different from a time period in which the motion sensor detects the second event image. If no target image is aligned with the second event image in time sequence, it is determined that the second event image does not have an event image for jointly performing pose estimation. Therefore, the terminal performs pose estimation based on the second event image. For example, the terminal performs pose estimation based only on the second event image, or the terminal performs pose estimation based on the second event image and the IMU data.

In a possible embodiment, when sliding window-based visual inertial pose estimation is used, a pose estimation process is essentially a joint optimization process of a cost function. Based on the foregoing plurality of possible combinations of signals aligned in time sequence, cost functions under different signal combinations may be obtained.

For example, for a combination of signals aligned in time sequence that includes an event image, an RGB image, and IMU data, the cost function includes three items: a weighted projection error of an event camera, a weighted projection error of an RGB camera, and an inertia error term. Specifically, the cost function is that shown in Formula 35.

$$J = \sum_{i=0}^{1} \sum_{k=1}^{K} \sum_{j \in \mathcal{J}(i,k)} \mathbf{e}^{i,j,k^T} \mathbf{W}_r^{i,j,k} \mathbf{e}^{i,j,k} + \sum_{k=1}^{K-1} \mathbf{e}_s^{k^T} \mathbf{W}_s^{k} \mathbf{e}_s^{k} \tag{35}$$

J represents a cost function. i indicates a camera index, when i is 0, it indicates an event camera, and when i is 1, it indicates an RGB camera. k indicates a frame index. j represents a roadmap index. $\mathcal{J}(j,k)$ represents a roadmap index reserved by a sensor i in a $k^{th}$ frame. $\mathbf{W}_r^{i,j,k}$ represents an information matrix of a roadmap measurement value. $\mathbf{W}_s^{k}$ represents an information matrix of a $k^{th}$ IMU error. $\mathbf{e}_s$ represents an inertia error term.

Optionally, when integration time of an event image is less than a first threshold, that is, when the terminal is in a high-speed movement scenario or a sudden illumination change scenario, the cost function is not solved by using the RGB image, to improve pose estimation precision. That is, the cost function includes two items, namely, the weighted projection error of the event camera and the inertia error term. In short, modifications may be made based on Formula 35, so that a value range of i is 0, so as to obtain a formula corresponding to the cost function.

If a combination of signals aligned in time sequence is an RGB image and IMU data, the terminal solves the cost function only by using the RGB image and IMU data. That is, the cost function includes two items, namely, the weighted projection error of the RGB camera and the inertia error term. In short, modifications may be made based on Formula 35, so that a value range of i is 1, so as to obtain a formula corresponding to the cost function.

If a combination of signal aligned in time sequence is an event image and IMU data, the terminal solves the cost function only by using the event image and the IMU data. That is, the cost function includes two items, namely, the weighted projection error of the event camera and the inertia error term.

If a combination of signals aligned in time sequence is an event image, the terminal solves the cost function only by using the event image. That is, the cost function includes only one item, that is, the weighted projection error of the event camera.

In a pose estimation process, pose estimation is usually a recursive process, that is, a pose of a current frame is solved based on a pose of a previous frame. In this way, an error in the pose estimation process will be transferred frame by frame, causing a cumulative error. Therefore, in the pose estimation process, the terminal may further perform loopback detection, to reduce the cumulative error of pose estimation and improve precision of pose estimation. Loopback detection, also referred to as closed-loop detection, refers to a process of identifying a scenario that a terminal once reaches, so that a map is closed. Through the loopback detection, it can be determined whether the terminal has returned to a previous location. If a loopback is detected, information is passed to a back end for optimization processing, to eliminate the cumulative error.

In a possible embodiment, the terminal performs loopback detection based on a first event image and a dictionary, where the dictionary is a dictionary constructed based on an event image.

Optionally, before performing loopback detection, the terminal may construct a dictionary based on an event image in advance, so that loopback detection can be performed based on the dictionary in a process of performing loopback detection. Specifically, a process of constructing a dictionary by the terminal includes: obtaining, by the terminal, a plurality of event images, where the plurality of event images are event images used for training, and the plurality of event images may be event images shot by the terminal in different scenarios. The terminal obtains visual features of the plurality of event images by using a feature extraction algorithm. The visual features may include, for example, features such as textures, patterns, or grayscale statistics of the images. Event images shot in different scenarios have different visual features. Therefore, each element in a scenario may be represented by using a visual feature. After obtaining the visual features of the plurality of event images, the terminal clusters the visual features by using a clustering algorithm, to obtain a clustered visual feature, where the clustered visual feature has a corresponding descriptor. By clustering the visual features, similar visual features may be classified into one category, so as to facilitate subsequent matching of the visual features, and constructing the dictionary based on the clustered visual feature.

For example, after extracting the visual features in the plurality of event images, the terminal may obtain a descriptor corresponding to each visual feature, for example, an ORB descriptor or a BRIEF descriptor. The descriptor is for representing the visual feature. Then, a plurality of visual features are classified into k clusters by using a hierarchical k-means (Hierarchical K-means) clustering algorithm or a K-means++ clustering algorithm, and each cluster is described by using a centroid of the cluster. That is, a descriptor of each cluster is obtained. Quality of visual feature clustering may generally be represented by using a sum of squared errors (SSE) of a same cluster. A smaller SSE indicates that a data point of a same cluster is closer to a centroid of the cluster, and indicates a better clustering effect. "Close to" herein may be implemented by using a distance measurement method, and different distance measurement methods also affect a clustering effect.

In a process of constructing a dictionary, all N clustered descriptors may be distributed on a leaf node of a k-branch and d-depth k-tree, so as to obtain a tree structure with $k^d$ leaf nodes. In actual application, values of k and d may be adjusted based on a scenario size and an effect to be achieved. In this way, when a visual feature of an event image is retrieved, a corresponding cluster center may be found by using logarithmic time complexity (d times=$log_k N$), and brute-force retrieval with high complexity is required.

After the dictionary is obtained, that the terminal performs loopback detection based on a first event image and a dictionary may specifically include: The terminal determines a descriptor of the first event image. For example, the terminal extracts a visual feature in the first event image by using a feature extraction algorithm, and determines a descriptor of the extracted visual feature. The terminal determines, in the dictionary, a visual feature corresponding to the descriptor of the first event image. For example, the terminal retrieves, from a k-tree of the dictionary, a visual feature that matches the descriptor of the first event image. The terminal determines, based on the visual feature, a bag of words vector (BoW vector) corresponding to the first event image, and determines a similarity between the bag of words vector corresponding to the first event image and a bag of words vector of another event image, to determine an event image that matches the first event image.

In short, the dictionary constructed by the terminal based on the event image may be considered as a set of all visual features in an entire scenario. Determining, by the terminal, a corresponding visual feature in the dictionary based on a current event image is equivalent to: searching, by the terminal, the dictionary for a visual feature included in the current event image. A bag of words vector may be formed based on a visual feature included in the current event image. For example, in the bag of words vector, the visual feature included in the current event image is represented as 1, and a visual feature not included in the current event image is represented as 0. Finally, by comparing a similarity of bag-of-word vectors between different event images, it can be determined whether two event images match. If a similarity of bag of words vectors between two event images is greater than or equal to a preset threshold, it may be determined that the two event images match. If a similarity of bag of words vectors between two event images is less than a preset threshold, it may be determined that the two event images do not match.

b. Key frame

A key frame is an image frame that is in a video or an image set and that can represent key information of the video or the image set. Generally, two segments of content connected by the key frame change greatly. As an amount of video data increases, key frames are widely used in video analysis, video coding, security monitoring, and robot vision fields.

Key frame selection is a fundamental part of video analysis. Through key frame selection, appropriate video abstracts can be provided for video indexing, browsing, retrieval, detection, and so on. The use of key frames reduces content and time redundancy of video data streams. The key frame not only can reflect video content effectively, but also can reduce video analysis time significantly.

During video encoding, a key encoding frame needs to be dynamically added to ensure that image quality and an encoding bit rate meet requirements. Generally, a key frame needs to be inserted when image content changes significantly.

As an effective means of security protection, video surveillance is widely used in many fields. All-day surveillance generates a large amount of video data, but users are interested in only a small part of the video data that significantly changes. Therefore, a key frame extraction technology can filter out key frame sequences that the users are interested in.

In recent years, as devices such as robots, unmanned aerial vehicles, unmanned vehicles, and AR/VR become increasingly popular, as one of key technologies in this field, visual simultaneous localization and mapping (visual simultaneous localization and mapping, VSLAM) is well known. The VSLAM is a process in which a moving object calculates its location and constructs an environment map based on sensor information. The VSLAM can be used by the moving object to locate itself, plan paths, and understand scenarios. In the VSLAM, key frames are usually used to create images and perform locating. This can avoid problems of a decrease in real-time performance of a system, increased computing costs, and excessive consumption of a system memory caused by frame-by-frame insertion.

In the foregoing fields such as video analysis, video encoding, security monitoring, and robot vision, corresponding event images may be obtained by using a DVS, and a required key frame is selected from the plurality of obtained event images.

In a related technology, a manner of selecting a key frame of an event image is determining whether the event image is a key frame only after complex calculation such as feature extraction and pose estimation are performed on all event images. Because complex calculation needs to be performed on all the event images, a calculation amount of this scheme is large.

FIG. 103 is a schematic flowchart of a key frame selection method 10300 according to an embodiment of this application. As shown in FIG. 103, the key frame selection method 10300 includes the following steps.

Step 10301: Obtain an event image.

In this embodiment, the key frame selection method 10300 may be applied to a scenario such as video analysis, video encoding and decoding, or security surveillance. The key frame selection method 10300 may be performed by a terminal or a server, for example, a server for video analysis, a terminal or a server that executes video encoding and decoding, or a terminal for monitoring. For ease of description, the following describes the key frame selection method 10300 provided in this embodiment of this application by using an example in which the terminal is an execution body.

In this embodiment, a DVS may be connected to or preset on the terminal. The terminal monitors a target environment by using the DVS, and obtains an event image corresponding to the target environment.

Step 10302: Determine first information of the event image.

The first information may include an event and/or a feature in the event image, and the terminal may determine the first information by detecting the event and/or the feature in the event image.

In a possible example, if a pixel in the event image represents a light intensity change trend, the event image is a binary image, and the terminal may determine that a pixel whose pixel value is not 0 is an event in the event image. That is, a quantity of pixels whose values are not 0 is a quantity of events in the event image.

In another possible example, if a pixel in the event image represents an absolute light intensity, the event image is a grayscale image. In this way, the terminal may determine that a pixel whose pixel value exceeds a specific threshold in the event image is an event in the event image, that is, a quantity of pixels whose pixel value exceeds a specific threshold is a quantity of events in the event image. Alternatively, the terminal may subtract a pixel value in a current event image from a corresponding pixel value in an adjacent event image at a previous moment, and obtain an absolute value, to determine that a pixel whose absolute value exceeds a specific threshold is an event in the event image.

For a feature in the event image, the terminal may extract the feature in the event image by using the feature extraction algorithm. The feature extraction algorithm may include but is not limited to algorithms such as a feature from accelerated segment test (FAST) algorithm, an oriented fast and rotated brief (ORB) algorithm, a speeded up robust features (SURF) algorithm, and a scale-invariant feature transform (SIFT) algorithm. After extracting the feature in the event image, the terminal may determine a quantity of features in the event image by collecting statistics on the extracted feature.

Step 10303: If it is determined, based on the first information, that the event image meets a first condition, determine that the event image is a key frame.

In a possible example, the first condition may include one or more of the following: a quantity of events is greater than a first threshold, a quantity of event-effective regions is greater than a second threshold, a quantity of features is greater than a third threshold, and a quantity of feature-effective regions of is greater than a fourth threshold. That is, when the terminal determines, based on the first information, that the event image meets one or more of the following: the quantity of events is greater than the first threshold, the quantity of event-effective regions is greater than the second threshold, the quantity of features is greater than the third threshold, and the quantity of feature-effective regions is greater than the fourth threshold, the terminal may determine that the event image is the key frame.

When the first condition includes that the quantity of event-effective regions is greater than the second threshold, the terminal may divide the event image into a plurality of regions, and determine a quantity of events in each region. When the quantity of events in a region is greater than a specific threshold, the terminal may determine that the region is a valid region. In this way, the terminal may determine whether the event image meets the first condition by collecting statistics on whether the quantity of valid regions is greater than the second threshold. A threshold corresponding to a quantity of events in a region may be determined based on a region division manner, and the threshold is not specifically limited in this embodiment.

The terminal may divide the event image into a plurality of regions in a plurality of manners. In a possible implementation, the terminal may evenly divide the event image into a plurality of regions, for example, evenly divide the event image into 1030 regions, and all regions have a same area. In another possible implementation, the terminal may unevenly divide the event image into a plurality of regions. For example, an area of a region obtained by dividing a central location of the event image is small, and an area of a region obtained by dividing an edge location of the event image is large. For example, FIG. 104 is a schematic diagram of region division of an event image according to an embodiment of this application; As shown in (a) in FIG. 104, the event image is evenly divided into 1030 regions, and all the regions have a same area. As shown in (b) in FIG. 104, the event image is unevenly divided into a plurality of regions, and an area of a region at an edge location of the event image is four times an area of a region at a central location.

When the first condition includes that the quantity of feature-effective regions is greater than the fourth threshold, the terminal may divide the event image into a plurality of regions, and determine a quantity of features in each region. When a quantity of features in a region is greater than a specific threshold, the terminal may determine that the region is a feature-effective region. In this way, the terminal may determine whether the event image meets the first condition by collecting statistics on whether the quantity of feature-effective regions is greater than the fourth threshold. A threshold corresponding to a quantity of features in a region may be determined based on a region division manner, and the threshold is not specifically limited in this embodiment.

In addition, a manner in which the terminal divides the event image into a plurality of regions is similar to the foregoing division manner of determining an event-effective region. For details, refer to the foregoing descriptions. Details are not described herein again.

In a possible embodiment, the terminal may obtain event images that are generated by a plurality of DVSs and that are aligned in time sequence. In this case, one frame is selected from the event images to perform key frame selection. If the foregoing first condition is met, the plurality of current event images are determined as key frames.

In a possible embodiment, the event image may further have a depth image aligned with the event image in time sequence. For example, when a depth camera is configured, a depth image aligned with the event image in time sequence may be generated by the depth camera. In this case, if the event image meets the first condition, both the event image and the depth map that is aligned with the event image in time sequence may be determined as key frames.

In a possible embodiment, the event image may further have a corresponding RGB image, and the RGB image is aligned with the event image in time sequence. That is, the terminal may obtain the event image and the RGB image that are aligned in time sequence. In this case, the terminal may obtain the quantity of features and/or the feature-effective region corresponding to the RGB image. Whether the RGB image meets a specific condition is determined by determining whether the quantity of features corresponding to the RGB image is greater than a specific threshold and/or whether the feature-effective region corresponding to the RGB image is greater than a specific threshold. In this way, the terminal may determine, by determining whether the RGB image meets a specific condition and/or whether the event image meets the first condition, whether to determine the RGB image and the event image as key frames. It should be noted that the specific threshold corresponding to the quantity of features of the RGB image and the specific threshold corresponding to the feature-effective region of the RGB image may be different thresholds.

For example, when the terminal determines that a quantity of features corresponding to an RGB image is greater than a specific threshold or a feature corresponding to the RGB image is greater than a specific threshold, the terminal may determine that the RGB image and a corresponding event image are key frames. When the terminal determines that an event image meets the first condition, the terminal may alternatively determine that the event image and a corresponding RGB image are key frames.

In this embodiment, whether a current event image is a key frame is determined by determining information such as a quantity of events, event distribution, a quantity of features, and/or feature distribution in the event image, a key frame can be quickly selected, an algorithm quantity is small, and a key frame in scenarios such as video analysis, video encoding and decoding, or security surveillance can be quickly selected.

FIG. 105 is a schematic flowchart of a key frame selection method 10500 according to an embodiment of this application. As shown in FIG. 105, the key frame selection method 10500 includes the following steps.

Step 10501: Obtain an event image.

Step 10502: Determine first information of the event image, where the first information includes an event and/or a feature in the event image.

In this embodiment, the key frame selection method 10500 may be applied to a VSLAM scenario, and the key frame selection method 10500 may be performed by a terminal, for example, a robot terminal, an unmanned vehicle terminal, or an unmanned aerial vehicle terminal.

Step 10501 and step 10502 are similar to the foregoing step 10301 and step 10302. For details, refer to the foregoing step 10301 and step 10302. Details are not described herein again.

Step 10503: If it is determined, based on the first information, that the event image meets a first condition, determine second information of the event image, where the second information includes a movement feature and/or a pose feature in the event image, and the first condition is related to a quantity of events and/or a quantity of features.

In this embodiment, the step of determining, based on the first information, that the event image meets a first condition is similar to the foregoing step 10303. For details, refer to the foregoing step 10303. Details are not described herein again.

The second information may include the movement feature and/or the pose feature in the event image, and the terminal may determine the first information by detecting an event and/or a feature in the event image.

In a possible embodiment, the terminal may determine the second information in a manner of using an epipolar constraint method. The epipolar constraint method includes the following steps.

The terminal initializes a three-dimensional pose of a first key frame (namely, an event image first determined as a key frame) as a coordinate system origin.

The terminal determines a feature of a current event image, and matches the feature of the event image with a feature of a previous key frame, to obtain a matching point pair. A manner in which the terminal matches the feature of the event image with the feature of the previous key frame includes but is not limited to a brute-force search manner. The brute-force search manner is traversing features in the event image, and determining, one by one, whether each feature has a match feature in the previous key frame.

The terminal selects, by using a random sample consistency algorithm (RANSAC) from the matching point pair, subsample sets as many as possible that conform to a six degrees of freedom relative movement model. When a quantity of matching point pairs that conform to the relative movement model is greater than a preset threshold, a least square method is performed on the found matching point pairs, to calculate a relative movement matrix in a three-dimensional space between a current event image and a key frame image. The terminal may calculate a movement change, that is, a movement feature and a pose feature, of the current event image relative to the previous key frame based on the calculated relative movement matrix in the three-dimensional space.

Step 10504: If it is determined, based on the second information, that the event image meets a second condition, determine that the event image is a key frame, where the second condition is related to a movement variation and/or a pose variation.

The second condition may include one of more of the following: a distance between a current event image and a previous key frame exceeds a preset distance value (where the preset distance value may be, for example, 10 mm), an angle of rotation between a current event image and a previous key frame exceeds a preset angle value (where the preset angle value may be, for example, 10°), a distance between a current event image and a previous key frame exceeds a preset distance value and a rotation angle exceeds a preset angle value, and a distance between a current event image and a previous key frame exceeds a preset distance value or a rotation angle exceeds a preset angle value.

In other words, the terminal may determine, based on one or more of the movement variation and the pose variation in the event image, whether the event image meets the second condition, so as to determine whether the event image can be used as a key frame.

In this embodiment, by setting a coarse screening condition, coarse screening is performed on an image by using a small calculation amount, an image that meets the coarse screening condition is added to a key frame sequence, and then an image in the key frame sequence is filtered out based on a fine screening condition, thereby selecting a key frame. Because some images that do not meet the condition are filtered in advance with a small calculation amount, and then a key frame is selected from images that meet the condition, not all images need to be calculated with a large calculation amount, and the calculation amount can be reduced.

In a possible embodiment, when an input obtained by the terminal is a plurality of event image streams, the terminal may select any one of the event image streams to calculate the movement feature and the pose feature according to the foregoing method. Alternatively, the terminal may select any two or more event image streams, and calculate the movement feature and the pose feature in a binocular or multi-view manner.

In a possible embodiment, the event image may further have a synchronous depth image. For example, when a depth camera is configured, a depth image synchronized with the event image may be generated by the depth camera. In this case, if the event image meets the first condition and the second condition, the terminal may determine the event image and the corresponding depth map as key frames. In addition, in step 10503, when a depth image corresponding to the event image is obtained, the terminal can obtain corresponding depth information. Therefore, the terminal may alternatively calculate the movement feature and the pose feature by using a perspective-N-points (Perspective-N-Points, PnP) algorithm or an iterative closest point (Iterative Closest Point, ICP) algorithm.

In a possible embodiment, the event image may further have a synchronous RGB image, and the RGB image is aligned with the event image in time sequence. That is, the terminal may obtain the event image and the RGB image that are aligned in time sequence. In this case, after the terminal determines, based on the first information, that the event image meets the first condition, the terminal may determine, by determining whether the event image meets the second condition and/or whether the RGB image meets the second condition, whether to determine the event image and the RGB image corresponding to the event image as key frames. For example, when the terminal determines that the RGB image meets the second condition, the terminal may determine the event image and the RGB image corresponding to the event image as key frames. Alternatively, when determining that both the event image and the RGB image meet the second condition, the terminal may determine that the event image and the RGB image corresponding to the event image are key frames. In a process in which the terminal determines whether the RGB image meets the second condition, the terminal may first determine a corresponding movement feature and a corresponding pose feature based on the RGB image. A process in which the terminal determines the movement feature and the pose feature corresponding to the RGB image is similar to a process in which the terminal determines the movement feature and the pose feature corresponding to the event image. For details, refer to the descriptions of the foregoing steps 10503. Details are not described herein again.

In a possible embodiment, when the event image has a synchronous RGB image, in some scenarios, for example, a 3D rebuit scenario in which a high-quality texture image needs to be generated, a high requirement is imposed on definition and brightness consistency of the RGB image. Therefore, in this case, the definition and brightness consistency of the RGB image may further be considered when a key frame is selected.

Specifically, the terminal may determine, by determining whether the event image meets the second condition, whether a definition of the event image or the RGB image is greater than a definition threshold, and/or whether a brightness consistency indicator of the event image or the RGB image is greater than a preset indicator threshold, whether to determine the event image and the RGB image corresponding to the event image as key frames.

For example, the terminal may determine that the event image and the RGB image corresponding to the event image are key frames based on that the event image meets the second condition. Alternatively, the terminal may determine that the event image and the RGB image corresponding to the event image are key frames based on that the definition of the event image or the RGB image is greater than the definition threshold. Alternatively, the terminal may determine that the event image and the RGB image corresponding to the event image are key frames depending on whether the brightness consistency indicator of the event image or the RGB image is greater than the preset indicator threshold. In addition, the terminal may alternatively determine that the event image and the RGB image corresponding to the event image are key frames based on that the event image meets the second condition and the definition of the event image or the RGB image is greater than the definition threshold, or the definition of the RGB image is greater than the definition threshold and the brightness consistency indicator of the event image or the RGB image is greater than the preset indicator threshold.

Specifically, a method for determining the definition of the RGB image by the terminal may include but is not limited to a Brenner gradient method, a Tenengrad gradient method, a Laplacian gradient method, a variance method, and the like. Using the Brenner gradient method as an example, the terminal may calculate a square of a grayscale difference between two adjacent pixels, and the function is defined as follows:

$$D(f) = \sum_y \sum_x |f(x+2, y) - f(x, y)|^2$$

f(x, y) represents a grayscale value of a pixel (x, y) corresponding to an image f, and D(f) is a calculation result of an image definition.

It can be learned from the foregoing function that, in a process of calculating the definition of the RGB image, all pixels in the RGB image participate in the calculation, and a calculation amount is large.

In this embodiment, a method for determining the definition of the event image by the terminal may also include but is not limited to the foregoing methods such as the Brenner gradient method, the Tenengrad gradient method, the Laplacian gradient method, and the variance method. In addition, the terminal calculates the definition based on the event image, and may divide a calculation result by a quantity of pixels participating in the calculation for normalization, and use a normalized result as a final definition calculation result. In this way, in a process of calculating the definition of the event image, only a pixel responding to an event participates in the foregoing calculation, so that a calculation amount of the terminal can be reduced as much as possible.

A method for calculating the brightness consistency indicator of the RGB image by the terminal includes but is not limited to the following method:

1. Calculate average brightness of a current RGB image, that is, first sum up brightness values of all pixels of the RGB image, and then divide the sum by a quantity of pixels to obtain an average brightness value of the RGB image. Similarly, average brightness of a key frame of an adjacent RGB image is calculated in the foregoing manner. Finally, an absolute value of a difference between the average brightness of the current RGB image and the average brightness of the adjacent key frame is calculated, and the absolute value is used as the brightness consistency index of the RGB image.

2. Calculate a difference between a current RGB image and a key frame of an adjacent RGB image pixel by pixel (in other words, calculate a brightness difference between pixels corresponding to each group), and calculate an absolute value of the difference. Then, a sum operation is performed on absolute values corresponding to each group of pixels, and finally an obtained sum result is divided by a quantity of pixels to obtain a normalization result. The normalization result may be used as the brightness consistency index.

It can be learned from the foregoing method for calculating the brightness consistency indicator of the RGB image by the terminal that when the brightness consistency indicator is calculated based on the RGB image, all pixels in the RGB image participate in the calculation, and a calculation amount is large. In this embodiment, the terminal may calculate the brightness consistency indicator based on the event image, so that only a pixel responding to an event participates in the foregoing calculation, and a calculation amount of the terminal can be reduced as much as possible. For example, a method for calculating the brightness consistency indicator of the event image by the terminal is as follows:

1. If pixels in the event image represent a change polarity of a light intensity, the terminal may first calculate an absolute value of a difference between a quantity of events in a current event image and a quantity of events in a key frame of an adjacent event image, and then use a result obtained by dividing the absolute value by a quantity of pixels in the event image as the brightness consistency indicator.

2. If pixels in the event image represent a light intensity, calculate a difference between a current event image and a key frame of an adjacent event image pixel by pixel (in other words, calculate a brightness difference between pixels corresponding to each group), and calculate the absolute value of the difference. Then, a sum operation is performed on absolute values corresponding to each group of pixels, and finally an obtained sum result is divided by a quantity of pixels to obtain a normalization result. The normalization result may be used as the brightness consistency index.

In a possible embodiment, in addition to a corresponding RGB image, the event image may further have a synchronous depth image. For example, when a depth camera is configured, a depth image synchronized with the event image may be generated by the depth camera. In this case, if the event image meets the first condition and the second condition, the terminal may determine the event image, the RGB image, and the corresponding depth image as key frames. In addition, when the depth image corresponding to the event image is obtained, the terminal can obtain corresponding depth information. Therefore, the terminal may alternatively calculate the movement feature and the pose feature by using the PnP algorithm or the ICP algorithm.

c. Dynamic SLAM

For a moving object that uses a SLAM technology, to implement autonomous movement, the moving object needs to have functions of sensing an environment and accurately estimating a pose of the moving object. In a related technology, the moving object collects an environment image by using a camera in a moving process, and performs feature point extraction and inter-frame matching on the environment image, to obtain observation data of a coordinate change of a key point. Then, a function relationship between observation information and a pose is established, and an extremum of the function is solved by using an optimization method. Finally, estimated pose information can be obtained.

Currently, an algorithm for pose estimation in the related technology is applicable to a static scenario, that is, a scenario without a dynamic object. It is usually difficult for the algorithm to implement accurate pose estimation in a dynamic scenario.

In view of this, an embodiment of this application provides a pose estimation method. A dynamic region in a scenario is captured based on an event image, and a pose is determined based on the dynamic region, so that pose information can be accurately determined.

FIG. 106 is a schematic flowchart of a pose estimation method 1060 according to an embodiment of this application. As shown in FIG. 106, the pose estimation method 1060 may include the following steps.

Step 10601: Obtain an event image and an image corresponding to the event image, where environment information captured by the event image and environment information captured by the image are the same.

In this embodiment, the pose estimation method 1060 may be applied to a SLAM scenario, and the pose estimation method 1060 may be executed by a terminal, for example, a robot terminal, an unmanned vehicle terminal, or an unmanned aerial vehicle terminal for performing SLAM.

In this embodiment, the event image is generated based on information about a movement trajectory that is of a target object and that is generated when the target object moves in a monitoring range of a motion sensor. For example, the event image may be a DVS event image. A DVS may be connected to or preset on the terminal. The terminal monitors an environment by using the DVS, and obtains a DVS event image corresponding to the environment. Alternatively, the terminal may be connected to or preset with a camera configured to capture environment information, for example, a depth camera or an RGB camera. The terminal may obtain a corresponding environment image via the camera, for example, obtain a depth image in the environment via the depth camera, or obtain a red green blue (RGB) image in this environment via the RGB camera. The RGB image is also referred to as a true color image that uses three components R, G, and B to identify a color of a pixel. R, G, and B respectively represent three different basic colors: red, green, and blue. Any color can be synthesized based on the three primary colors.

In a possible embodiment, after the terminal obtains the event image and the target image, the terminal may align the event image with the target image, to obtain the target image corresponding to the event image. For example, the terminal may align the event image with the target image in time domain in a manner of matching a nearest neighbor signal in time domain and calibration. In other words, the aligned event image and target image may be considered as capturing environment information in a same scenario at a same moment.

Step 10602: Determine a first movement region that is in the event image.

It may be understood that, because the DVS captures only a dynamically changing part in the scenario, and the DVS strongly responds to a dynamically changing object edge, the terminal may determine the movement region in the event image based on a response of the event image, that is, determine the region in which the dynamic change occurs.

During capture of the event image, the DVS may be still or move. When the DVS is still, an event in the event image captured by the DVS includes an object that moves in the current scenario. When the DVS moves, both a still object and a moving object in the current scenario move relative to the DVS. Therefore, events in the event image captured by the DVS may include the still object and the moving object in the current scenario. That is, for event images collected by the DVS in different movement states, manners of determining movement regions in the event images by the terminal may be different.

In a possible embodiment, when the DVS captures the event image in a still state, the terminal may first perform binarization processing on the event image, to be specific, a pixel at which there is an event response and that is in the event image is set to 1, and a pixel at which there is no event response and that is in the event image is set to 0, so as to obtain a binary image corresponding to the event image. Then, the terminal detects an outline in the binary image. If an area surrounded by the outline is greater than a set threshold, the terminal may determine that a region surrounded by the outline is the movement region. The set threshold may be, for example, 10 pixels or 106 pixels. That is, if more than 10 pixels or 106 pixels exist in the region surrounded by the outline, the terminal may determine that the region surrounded by the outline is the movement region.

It should be understood that specific noise may exist in the event image obtained by the terminal, in other words, a region in which no movement occurs in the scenario may also have a corresponding pixel in the event image. In this way, the movement region in the event image is determined by setting the threshold in advance, so that the noise in the event image can be removed as much as possible, thereby avoiding determining a noise region in the event image as the movement region.

In another possible embodiment, when the DVS collects the event image in the movement state, the terminal may obtain a current event image (namely, an event image captured at a current moment) and a previous frame of event image (namely, an event image captured at a previous moment), and calculates optical flows of the current event image and the previous frame of event image. The optical flow is a 2D vector field representing a displacement vector of relative locations between each pixel in adjacent frames. After the optical flow is obtained through calculation, the terminal may traverse displacement vectors of all pixels of the current event image. If a displacement direction of a current pixel is inconsistent with that of a surrounding pixel, or the displacement direction of the current pixel is consistent with that of the surrounding pixel, but a difference between displacement magnitudes is greater than a preset threshold, the pixel is marked as belonging to the movement region (where for example, the pixel is marked as 1 to indicate that the pixel belongs to the movement region); otherwise, a pixel is marked as belonging to a still region (where for example, the pixel is marked as 0 to indicate that the pixel belongs to the still region), so as to obtain a marked image (to be specific, obtain a binary image with pixels each marked as 1 or 0). The preset threshold may be, for example, 5 pixels or 10 pixels. To be specific, when a difference between a displacement magnitude of a pixel and a displacement magnitude of a surrounding pixel of the pixel is greater than 5 pixels or 10 pixels, the pixel may be marked as belonging to the movement region. After obtaining the marked image, the terminal may detect pixels that are in the image and that are marked as belonging to the movement region, to obtain an outline formed by these pixels. In addition, the terminal may determine that a region surrounded by the outline is the first movement region, and a region other than the first movement region is the still region.

Step 10603: Determine, based on the first movement region, a corresponding second movement region that is in the image.

For the image, each pixel in the image has a corresponding pixel in the event image. Therefore, the terminal may determine, based on the first movement region in the event image, the second movement region that corresponds to the first movement region and that is in the image. Environment information corresponding to the second movement region is the same as that corresponding to the first movement region. For example, the event image may be an event image captured by the DVS in an indoor scenario, and there is a moving pedestrian in the indoor scenario, to be specific, the first movement region in the event image is a region in which the pedestrian is located, and the second movement region in the image corresponding to the event image is also the region in which the pedestrian is located.

For example, a region obtained by the terminal by reserving pixels that are in the image and that correspond to the first movement region that is in the event image and removing other pixels is the second movement region in the image.

Step 10604: Perform pose estimation based on the second movement region that is in the image.

In this embodiment, in a process in which a camera captures an image, the camera may be still, or may be moving. To be specific, the image obtained by the terminal may be an image collected by the camera in a still state, or may be an image collected by the camera in a movement state. For images collected by the camera in different states, manners in which the terminal determines a pose based on the image may also be different.

Manner 1: The image is an image captured by the camera in a still state.

When the camera is in the still state, the camera captures a plurality of different images in a same scenario. Therefore, for a still object in the scenario, a pose of the camera relative to the object does not change, in other words, a location and a posture of the camera relative to the object do not change. However, for a moving object in the scenario, a pose of the camera relative to the object is changed, in other words, a location or a posture of the camera is changed. For example, when the camera captures environment information in an indoor scenario, and the camera is in the still state, a pose of the camera does not change relative to an indoor still column, and a pose of the camera changes relative to an indoor moving person.

In this way, because the pose of the camera relative to the still object does not change, the terminal may determine the pose of the camera based on the moving object. In other words, the terminal may determine the pose of the camera based on the second movement region that is in the obtained image, and does not need to determine the pose of the camera based on a still region that is in the image.

Specifically, when the image is an RGB image, the terminal may extract feature points of the second movement region that is in the image, and perform matching with feature points in a previous frame of image, to obtain a plurality of pairs of feature points. Alternatively, the terminal may perform matching based on optical flows, to obtain a plurality of pairs of feature points. Then, for each pair of feature points, the terminal may perform posture estimation according to a VSLAM method in a static scenario, and for a non-feature point in a movement region of a current frame, the terminal calculates a pose through interpolation.

The feature point refers to a point whose grayscale value changes sharply in an image or a point (namely, an intersection point of two edges) whose curvature is relatively large and that is on an image edge. An image feature point plays a very important role in a feature point-based image matching algorithm. The image feature point can reflect an essential feature of an image, and can identify a target object in the image. Image matching can be completed based on feature points.

When the image is a depth image, an ICP algorithm is used for matching, and then posture estimation is performed for each pair of matching points according to a VSLAM method in a static scenario. If there are no matched pixels in a movement region of a current frame, a pose is calculated through interpolation. The foregoing pose estimation method has a relatively large calculation amount. An optional method is to first sample a movement region of the depth image (for example, perform equal-interval sampling or keypoint detection), and perform posture estimation on the sampling points, where a pose of a non-sampling point is obtained through interpolation on a pose of the sampling points.

Manner 2: The image is an image captured by the camera in a movement state.

When the camera is in the movement state, a pose of the camera changes for both a still object and a moving object in a scenario, and a pose variation of the camera relative to the still object is different from a pose variation of the camera relative to the moving object. For example, when the camera collects environment information in an indoor scenario, and the camera is in a rightward movement state, a pose of the camera changes relative to an indoor still column, and a pose of the camera also changes relative to a person moving left indoors, where a pose variation of the camera relative to the person is greater than a pose variation of the camera relative to the column.

In this way, the terminal may determine the pose of the camera based on the still object and/or the moving object in the scenario, to be specific, the terminal may determine the pose of the camera based on the second movement region that is in the obtained image and/or a still region that is in the image. The following describes a process in which the terminal determines the pose of the camera based on different regions that are in the image.

1. The terminal determines the pose of the camera based on the still region that is in the image.

FIG. 107 is a schematic flowchart of performing pose estimation based on a still region of an image according to an embodiment of this application. As shown in FIG. 107, the terminal may detect the still region of the image based on the event image and the depth image or the RGB image. Specifically, after determining the movement region that is in the depth image or the RGB image, the terminal removes pixels corresponding to the movement region that is in the depth image or the RGB image, and a remaining region is a still region that is in the depth image or the RGB image. Then, the terminal may perform pose estimation on the still region in the depth image or the RGB image according to the VSLAM method in the static scenario.

2. The terminal determines the pose of the camera based on the movement region that is in the image.

FIG. 108a is a schematic flowchart of performing pose estimation based on a movement region of an image according to an embodiment of this application. As shown in FIG. 108a, the terminal may detect the still region of the image based on the event image and the depth image or the RGB image. Specifically, after determining the movement region that is in the depth image or the RGB image, the terminal removes pixels other than pixels corresponding to the movement region that is in the depth image or the RGB image, and a remaining region is the movement region that is in the depth image or the RGB image. Then, the terminal may perform pose estimation on the movement region in the depth image or the RGB image according to the VSLAM method in the static scenario.

3. The terminal determines the pose of the camera based on the movement region and the still region that are in the image.

FIG. 108b is a schematic flowchart of performing pose estimation based on an entire region of an image according to an embodiment of this application. As shown in FIG. 108b, the terminal may perform, based on the event image and the depth image or the RGB image, detection on the still region and the dynamic region that are in the image, to separately obtain, through detection, the still region and the dynamic region that are in the depth image or the RGB image. A process in which the terminal detects the still region of the image is similar to the process in the embodiment corresponding to FIG. 107. For details, refer to the embodiment corresponding to FIG. 107. A process in which the terminal detects the movement region of the image is similar to the process in the embodiment corresponding to FIG. 108a. For details, refer to the embodiment corresponding to FIG. 108a. Details are not described herein again. Then, the terminal may separately perform pose estimation on the still region and the movement region that are in the depth image or the RGB image according to the VSLAM method in the static scenario.
In addition, in addition to the foregoing application scenarios, the method provided in this application may be further applied to another more detailed scenario like a scenario such as eye tracking or detection and recognition. The eye tracking may include remote eye tracking, AR/VR near-eye eye tracking, gaze response interaction, and the like. The detection and recognition may include movement' target positioning, face detection and recognition, in-vehicle detection and recognition, gesture recognition, detection and recognition in a security scenario, and the like. For example, after a clearer event image is obtained, further processing may be performed based on the event image, and application scenarios like eye tracking, gaze response, detection and recognition in a security scenario, and in-vehicle detection and recognition are performed based on the clearer event image. The following describes, for example, some more detailed application scenarios of the method provided in this application.

Scenario 1: Eye tracking

First, for wearable AR/VR glasses, a camera is close to an eye, and a distance between the camera and the eye is relatively fixed, so that eye action information can be easily captured. A DVS camera tracks a dynamic object more quickly, can output movement change information, and facilitates eye tracking compared with a conventional camera.
In an eye tracking scenario, the AR/VR glasses may be constructed by using a DVS sensor and an infrared sensor, and a structure of the AR/VR glasses may be shown in FIG. 109. There may be one or more DVS sensors. For example, one DVS sensor is disposed in each glasses frame. There may also be one or more infrared light sources for generating infrared light sources. When the infrared light source is irradiated on a cornea, a flickering point, namely, Purkinje image (Purkinje image), is generated due to reflection (corneal reflection, CR), on an outer surface of the cornea, of a light entering the pupil. Because the eyeball is similar to a sphere, a location of the flickering point generated by irradiation on the eyeball basically does not change with rotation of the eyeball. A corneal curvature center is obtained through calculation by using one or more flickering points and light source locations, and is used as anchor point location information coordinates of eye movement vision. In real-time tracking of eye movement changes, the DVS sensor generates four-tuple information [X, Y, t, e], where X and Y are location information, t is time information, and e is event change information. Then, motion compensation may be performed according to the method provided in this application and by using the information output by the DVS, to obtain a clearer event image. Then, rotation angles of the eyeball on a horizontal plane and a vertical plane may be deduced based on a relative location relationship between the DVS and the user eyeball, a geometric model of the eyeball, an iris, and the pupil, and pixel coordinates (x, y) of the event in the event image, to calculate a line-of-sight angle of the human eye relative to the DVS camera. The event image may be optimized in the foregoing motion compensation manner in this application, to obtain a clearer event image. Subsequently, based on a relative relationship between the DVS camera and a screen (where for example, there is a binocular camera on the screen, and the binocular camera can locate a spatial location of the head relative to the screen), and the line-of-sight angle of the human eye relative to the DVS camera, a location of a viewpoint falling on the screen is estimated to implement eye tracking.

In another eye tracking scenario, a DVS may be used together with an eye tracker to implement more accurate eye tracking. For example, the eye tracker collects a viewpoint at frequency of less than 1000 Hz, and the DVS collects a viewpoint at an interval of 1000 Hz. Eye data with higher time precision is obtained based on the viewpoints obtained by both the eye tracker and the DVS.

In another eye tracking scenario, the DVS sensor may be further used for remote eye tracking. For example, as shown in FIG. 13, the DVS sensor may be used to implement eye tracking via a mobile phone and a tablet terminal device. For this type of device, because a distance between an eye and a sensor is relatively long, and the distance is variable, a manner similar to that in the scenario in FIG. 109 may be used to determine a corneal center and an eyeball movement center in a three-dimensional coordinate system via a plurality of sensors, and further interact with a screen.

In a gaze response scenario, the structure shown in FIG. 110 may be further configured to sense eye gaze. If the DVS senses that gaze duration of a user on the screen is greater than t, corresponding eye tracking operation control may be performed, for example, turn on the screen through gazing. A control device may be a mobile phone, a tablet, a wearable watch, or the like. For example, a binary mask image shown in the foregoing figure is obtained by setting pixel locations at which events occur in a time period (for example, 1 second) to 1 and setting pixel locations at which no events occur to 0.

Training phase: Binary mask images shot when the user gazes at the screen from different angles and at different distances are collected, and a human eye region is marked. Binary mask images shot when the user does not gaze at the screen from different angles and at different distances are collected, and a human eye region is marked. Based on the collected data for training a model, the model can locate the human eye region and recognize two states of "gaze" and "non-gaze".

Test phase: The model is used on a current binary mask image to find out the human eye region and recognize whether the user is in the "gaze" state. If the user is in the "gaze" state, the gaze duration is further determined. If the gaze duration is greater than or equal to 1 second, the screen is turned on. If the user is in the "non-gaze" state, it is ensured that the device is in a screen-off state.

In addition, when the gaze duration is longer than specific duration (such as 3 seconds), an eye feature is extracted to implement identity identification for unlocking, thereby implementing quick unlocking of the mobile phone. When a distance between the human eye and the screen exceeds a specific distance (for example, more than 30 cm), an identity identification for unlocking function is not enabled, to ensure security when the user uses the mobile phone.

In this scenario, compared with a conventional camera-based eye tracking solution, the DVS-based eye tracking solution is faster and consumes less power. In addition, when performing remote eye tracking or gaze interactive recognition, the DVS sensor does not need to collect all features of the human face for recognition, and can better protect user privacy than an RGB device. For example, compared with the RGB device used to sense gaze of the user, the DVS sensor only needs to sense an eye change of the user, and power consumption is low.

Scenario 2: Detection and recognition in a security scenario

A conventional advanced photo system (APS) camera locates a moving object and analyzes key information of such a part based on a method similar to background subtraction. A simplest implementation method is a frame difference algorithm. A DVS can capture a moving object by detecting a brightness change of a single pixel, has almost an identical effect as that of the frame difference algorithm, but has a lower delay. A DVS camera can quickly locate a rectangular region or mask in which the foreground moving object is located in a single moving object scenario, for example, in a surveillance scenario in which a lens is fixed and a shooting background is clean. According to the method provided in this application, motion compensation can be performed on an image captured by the DVS, to obtain a clearer event image, so that detection and recognition in the security scenario are more accurate.

In a scenario, for example, of detecting a moving object by using a DVS sensor, a procedure may include: When the moving object appears in an image or light changes in the scenario, events events are generated in a region corresponding to the DVS. Locations of pixels at which events events occur in a time period (for example, one second) are set to 1, and locations of pixels in which no events events occur are set to 0, to obtain a mask image. Motion compensation is performed on the mask image according to the method provided in this application, to obtain a clear event image. A connected rectangle box region on the event image is obtained through filtering. Then, a size of the rectangular box is determined. When an area of the rectangular box is greater than threshold 1, a movement region detected by the DVS is too large, and detection and recognition is not performed. This may be understood as that the change detected by the DVS is a scenario light change. When threshold 2 is greater than the area of the rectangular box, the rectangular box may be understood as a movement region generated due to noise, for example, a movement region generated when the wind blows a leaf and the leaf shakes. When threshold 1>the area of the rectangular box>threshold 2, whether the object is a moving object may be further determined based on movement continuity, so as to determine whether further detection and recognition need to be performed.

In another scenario, for example, of detecting and recognizing a moving object by using a DVS sensor and an RGB camera, a procedure may include: When the moving object appears in an image or light changes in the scenario, events events are generated in a region corresponding to the DVS. A clear event image is obtained according to the method provided in this application. In addition, a rectangular box representing the moving object is determined in the event image. By expanding the rectangular box by a coefficient (h*w*0.1), a corresponding rectangular region on a frame corresponding to the RGB camera is found as a moving object region. An existing RGB image deep learning network is used to recognize categories of objects in the moving object region.

Therefore, in this scenario, because the DVS sensor is sensitive to a high-speed moving object, the DVS sensor can quickly capture movement events and perform response analysis. Time resolution of the DVS sensor is higher than that of the APS. Therefore, the DVS sensor has the advantage of a low latency when being used to detect the moving object. In addition, the DVS sensor is highly sensitive to movement of an object and is not greatly affected by a light intensity of a scenario. In other words, the DVS sensor can still recognize information about the moving object in an over-bright or over-dark scenario.

Scenario 3: In-vehicle detection and recognition

Generally, in a running process of a vehicle, a movement sensing camera can capture a still or moving vehicle outline, license plate information, and lane lines in a field of view. This scenario mainly includes three applications: moving object detection, high-speed license plate recognition, and lane line detection. Specifically, a DVS sensor may be deployed on the vehicle to detect an object outside the vehicle, or may be deployed on a camera in public transportation to perform security surveillance.

More specifically, in moving object detection, real-time target detection of a moving object (a vehicle or a pedestrian) in an in-vehicle scenario is implemented based on movement sensitivity and a low latency of a dynamic sensing chip. In particular, for a fast movement scenario (to avoid movement blur) and a high dynamic range scenario, moving object detection assists a driver in performing obstacle avoidance determining.

For high-speed road sign and license plate recognition, there are two scenarios: ADAS and traffic surveillance. The former is an in-vehicle ADAS, used to recognize a target outside a vehicle, and only simple textures and few colors (such as a two-color image) are required. The DVS is especially suitable for recognizing a high-speed license plate and road sign, and measuring a relative speed of a nearby vehicle. The latter is DVS traffic surveillance in fixed scenarios including highway snapshots, parking violation snapshots, and red-light running snapshots. In general, the DVS is more valuable in the in-vehicle ADAS. In traffic surveillance, the DVS may need to cooperate with other sensors (to compensate for a lack of texture).

Lane line detection is used for functions such as lane keeping and lane change assist for self-driving, and the DVS may be used to detect lane lines in real time.

Another advantage of the DVS is that high dynamic features of the DVS are available all-day in the scenarios above, and the DVS can perform detection and recognition in backlight and night conditions.

A self-driving networking diagram may be shown in FIG. 111. The networking may include a self-driving vehicle (such as a self-driving vehicle A, a self-driving vehicle B, or a self-driving vehicle C shown in FIG. 111) and a centralized control device, and may further include a surveillance camera or another device. The centralized control device may be configured to control or recognize environmental data of a vehicle on a road.

In this scenario, moving object detection, lane line detection, and highway sign or license plate recognition may be performed. Specifically, a clearer event image may be obtained according to the method provided in this application.

Moving object detection: Real-time target detection of a moving object (a vehicle or a pedestrian) in an in-vehicle scenario is implemented based on movement sensitivity and a low latency of a dynamic sensing chip. In particular, for a fast movement scenario (to avoid movement blur) and a high dynamic range scenario, moving object detection assists a driver in performing obstacle avoidance determining.

Lane line detection is used for functions such as lane keeping and lane change assist for self-driving, and the DVS may be used to detect lane lines in real time.

For high-speed road sign and license plate recognition, there are two scenarios: ADAS and traffic surveillance.

The former is an in-vehicle DVS, used to recognize a target outside a vehicle, and only simple textures and few colors (such as a two-color image) are required. The DVS is especially suitable for recognizing a high-speed license plate and road sign, and measuring a relative speed of a nearby vehicle. The latter is DVS traffic surveillance in fixed scenarios including highway snapshots, parking violation snapshots, and red-light running snapshots. In general, the DVS is more valuable in the in-vehicle ADAS. In traffic surveillance, the DVS may need to cooperate with other sensors (for example, to compensate for a lack of texture).

In this scenario, the moving object can be more quickly and accurately recognized based on an image captured by the DVS. Especially for an image with a simple texture, recognition is more accurate and power consumption is lower. The DVS is not affected by a light intensity, so that recognition in scenarios such as night driving or tunnels is also accurate.

Based on embodiments corresponding to FIG. 95, FIG. 108a, and FIG. 108b, to better implement the foregoing solutions in embodiments of this application, the following further provides a related device configured to implement the foregoing solutions. For details, refer to FIG. 118 that is a schematic diagram of a structure of a data processing apparatus according to an embodiment of this application. As shown in FIG. 118, the data processing apparatus includes an obtaining module 11801 and a processing module 11802. The obtaining module 11801 is configured to obtain a first event image and a first RGB image, where the first event image is aligned with the first RGB image in time sequence, and the first event image is an image indicating a movement trajectory that is of a target object and that is generated when the target object moves in a detection range of a motion sensor. The processing module 11802 is configured to determine integration time of the first event image. The processing module 11802 is further configured to: if the integration time is less than a first threshold, determine that the first RGB image is not for performing pose estimation. The processing module 11802 is further configured to perform pose estimation based on the first event image.

In a possible design, the processing module 11802 is further configured to determine obtaining time of the first event image and obtaining time of the first RGB image; and if a time difference between the obtaining time of the first RGB image and the obtaining time of the first event image is less than a second threshold, determine that the first event image is aligned with the first RGB image in time sequence.

In a possible design, the obtaining module 11801 is further configured to obtain N consecutive DVS events. The processing module 11802 is further configured to integrate the N consecutive DVS events into the first event image. The processing module 11802 is further configured to determine the obtaining time of the first event image based on obtaining time of the N consecutive DVS events.

In a possible design, the processing module 11802 is further configured to determine the N consecutive DVS events that are integrated into the first event image. The processing module 11802 is further configured to determine the integration time of the first event image based on obtaining time of a 1st DVS event and obtaining time of a last DVS event in the N consecutive DVS events.

In a possible design, the obtaining module 11801 is further configured to obtain a second event image. The processing module 11802 is further configured to: if there is no RGB image aligned with the second event image in time sequence, determine that the second event image does not have an RGB image for jointly performing pose estimation. The processing module 11802 is further configured to perform pose estimation based on the second event image.

In a possible design, the processing module 11802 is further configured to: if determining that there is inertial measurement unit IMU data that is aligned with the second event image in time sequence, determine a pose based on a second DVS image and the IMU data corresponding to the second event image; or if determining that no inertial measurement unit IMU data is aligned with the second event image in time sequence, determine a pose based only on the second event image.

In a possible design, the obtaining module 11801 is further configured to obtain a second RGB image. The processing module 11802 is further configured to: if no event image is aligned with the second RGB image in time sequence, determine that the second RGB image does not have an event image for jointly performing pose estimation. The processing module 11802 is further configured to determine a pose based on the second RGB image.

In a possible design, the processing module 11802 is further configured to perform loopback detection based on the first event image and a dictionary, where the dictionary is a dictionary constructed based on event images.

In a possible design, the obtaining module 11801 is further configured to obtain a plurality of event images, where the plurality of event images are event images for training. The obtaining module 11801 is further configured to obtain visual features of the plurality of event images. The processing module 11802 is further configured to cluster the visual features based on a clustering algorithm, to obtain clustered visual features, where the clustered visual feature has a corresponding descriptor. The processing module 11802 is further configured to construct the dictionary based on the clustered visual features.

In a possible design, the processing module 11802 is further configured to determine a descriptor of the first event image; determine, in the dictionary, a visual feature corresponding to the descriptor of the first event image; determine, based on the visual feature, a bag of words vector corresponding to the first event image; and determine a similarity between the bag of words vector corresponding to the first event image and a bag of words vector of another event image, to determine an event image matching the first event image.

For details, refer to FIG. 119 that is a schematic diagram of a structure of a data processing apparatus according to an embodiment of this application. As shown in FIG. 119, the data processing apparatus includes an obtaining module 11901 and a processing module 11902. The obtaining module 11901 is configured to obtain an event image. The processing module 11902 is configured to determine first information of the event image, where the first information includes an event and/or a feature in the event image. The processing module 11902 is further configured to: if determining, based on the first information, that the event image meets at least a first condition, determine that the event image is a key frame, where the first condition is related to a quantity of events and/or a quantity of features.

In a possible design, the first condition includes one or more of a quantity of events in the event image is greater than a first threshold, a quantity of event effective regions in the event image is greater than a second threshold, a quantity of features in the event image is greater than a third threshold, and a quantity of feature effective regions in the event image is greater than a fourth threshold.

In a possible design, the obtaining module 11901 is further configured to obtain a depth image aligned with the event image in time sequence. The processing module 11902 is further configured to: if determining, based on the first information, that the event image meets at least the first condition, determine that the event image and the depth image are key frames.

In a possible design, the obtaining module 11901 is configured to obtain the RGB image aligned with the event image in time sequence. The obtaining module 11901 is configured to obtain a quantity of features and/or a quantity of feature effective regions of the RGB image. The processing module 11902 is further configured to: if determining, based on the first information, that the event image meets at least the first condition, and the quantity of features of the RGB image is greater than a fifth threshold and/or the quantity of feature effective regions of the RGB image is greater than a sixth threshold, determine that the event image and the RGB image are key frames.

In a possible design, the processing module 11902 is further configured to: if determining, based on the first information, that the event image meets at least the first condition, determine second information of the event image, where the second information includes a movement feature and/or a pose feature in the event image; and if determining, based on the second information, that the event image meets at least a second condition, determine that the event image is a key frame, where the second condition is related to a movement variation and/or a pose variation.

In a possible design, the processing module 11902 is further configured to determine a definition and/or a brightness consistency indicator of the event image. The processing module 11902 is further configured to: if determining, based on the second information, that the event image meets at least the second condition, and the definition of the event image is greater than a definition threshold and/or the brightness consistency indicator of the event image is greater than a preset indicator threshold, determine that the event image is a key frame.

In a possible design, the processing module 11902 is further configured to: if a pixel in the event image represents a light intensity change polarity, calculate an absolute value of a difference between the quantity of events in the event image and a quantity of events in an adjacent key frame, and divide the absolute value by a quantity of pixels in the event image, to obtain the brightness consistency indicator of the event image; or if a pixel in the event image represents a light intensity, perform pixel-by-pixel subtraction between the event image and an adjacent key frame, calculate an absolute value of a difference, perform a sum operation on the absolute value corresponding to each group of pixels, and divide an obtained sum result by a quantity of pixels, to obtain the brightness consistency indicator of the event image.

In a possible design, the obtaining module 11901 is configured to obtain the RGB image aligned with the event image in time sequence. The processing module 11902 is further configured to determine a definition and/or a brightness consistency indicator of the RGB image. The processing module 11902 is further configured to: if determining, based on the second information, that the event image meets at least the second condition, and the definition of the RGB image is greater than a definition threshold and/or the brightness consistency indicator of the RGB image is greater than a preset indicator threshold, determine that the event image and the RGB image are key frames.

In a possible design, the second condition includes one or more of a distance between the event image and a previous key frame exceeds a preset distance value, a rotation angle between the event image and a previous key frame exceeds a preset angle value, and a distance between the event image and a previous key frame exceeds a preset distance value and a rotation angle between the event image and the previous key frame exceeds a preset angle value.

For details, refer to FIG. 120 that is a schematic diagram of a structure of a data processing apparatus according to an embodiment of this application. As shown in FIG. 120, the data processing apparatus includes an obtaining module 12001 and a processing module 12002. The obtaining module is configured to obtain a first event image and a target image corresponding to the first event image, where environment information captured in the first event image is the same as that captured in the image, the target image includes a depth image or an RGB image, and the first event image is an image indicating a movement trajectory that is of a target object and that is generated when the target object moves in a detection range of a motion sensor. The processing module is configured to determine a first movement region that is in the first event image. The processing module is further configured to determine, based on the first movement region, a corresponding second movement region that is in the image. The processing module is further configured to perform pose estimation based on the second movement region that is in the image.

In a possible design, the obtaining module is further configured to: if a dynamic vision sensor DVS that captures the first event image is still, obtain pixels at which there are event responses and that are in the first event image. The processing module is further configured to determine the first movement region based on the pixels at which there are the event responses.

In a possible design, the processing module is further configured to determine an outline formed by the pixels at which there are the event responses and that are in the first event image; and if an area surrounded by the outline is greater than a first threshold, determine that the region surrounded by the outline is the first movement region.

In a possible design, the obtaining module is further configured to: if a DVS that captures the first event image is moving, obtain a second event image, where the second event image is a previous frame of event image of the first event image. The processing module is further configured to calculate a displacement magnitude and a displacement direction of a pixel in the first event image relative to the second event image. The processing module is further configured to: if the displacement direction of the pixel in the first event image is different from a displacement direction of a surrounding pixel, or a difference between the displacement magnitude of the pixel in the first event image and a displacement magnitude of a surrounding pixel is greater than a second threshold, determine that the pixel belongs to the first movement region.

In a possible design, the processing module is further configured to: determine, based on the first movement region, a corresponding still region that is in the image; and determine a pose based on the still region that is in the image.

FIG. 121 is a schematic diagram of a structure of another electronic device according to this application, as described below.

The electronic device may include a processor 12101, a memory 12102, an RGB sensor 12103, and a motion sensor 12104. The processor 12101, the RGB sensor 12103, and the motion sensor 12104 are interconnected through a line. The memory 12102 is configured to store program instructions and data. The RGB sensor 12103 is used for shooting and converting a collected analog signal into an electrical signal. The motion sensor 12104 is configured to monitor a moving object in a shooting range.

The memory 12102 stores program instructions and data corresponding to the steps in FIG. 3-a to FIG. 108-b.

The processor 12101 is configured to perform the method steps performed by the electronic device shown in any one of the foregoing embodiments in FIG. 3-a to FIG. 108-b.

The RGB sensor 12103 is configured to perform an image shooting step performed by the electronic device in any one of the foregoing embodiments in FIG. 3-a to FIG. 108-b.

The motion sensor 12104 is configured to perform the step that is of monitoring a moving object and that is performed by the electronic device in any one of the foregoing embodiments in FIG. 3-a to FIG. 108-b.

An embodiment of this application further provides a computer-readable storage medium. The computer-readable storage medium stores a program used to generate a traveling speed of a vehicle. When the program is run on a computer, the computer is enabled to perform the steps in the methods described in embodiments shown in FIG. 2 to FIG. 18.

Optionally, the device shown in FIG. 121 may be a chip.

An embodiment of this application further provides an electronic device. The electronic device may also be referred to as a digital processing chip or a chip. The chip includes a processing unit and a communication interface. The processing unit obtains program instructions through the communication interface, and the program instructions are executed by the processing unit. The processing unit is configured to perform the method steps performed by the electronic device shown in any one of the foregoing embodiments in FIG. 3-a to FIG. 108-b.

An embodiment of this application further provides a digital processing chip. The digital processing chip integrates a circuit and one or more interfaces that are configured to implement the foregoing processor 12101 or a function of the processor 12101. When a memory is integrated into the digital processing chip, the digital processing chip may complete the method steps in any one or more embodiments in the foregoing embodiments. When no memory is integrated in the digital processing chip, the digital processing chip may be connected to an external memory through a communication interface. The digital processing chip implements, based on a program code stored in the external memory, actions performed by the electronic device in the foregoing embodiments.

An embodiment of this application further provides a computer program product. When the computer program product runs on a computer, the computer is enabled to perform steps performed by the electronic device in the methods described in embodiments shown in FIG. 3-a to FIG. 108-b.

The electronic device provided in embodiments of this application may be a chip. The chip includes a processing unit and a communication unit. The processing unit may be, for example, a processor, and the communication unit may be, for example, an input/output interface, a pin, a circuit, or the like. The processing unit may execute computer-executable instructions stored in a storage unit, so that the chip in a server performs the image processing methods described in embodiments shown in FIG. 3-a to FIG. 108-b. Optionally, the storage unit is a storage unit in the chip, for example, a register or a cache. Alternatively, the storage unit may be a storage unit located in a wireless access device end and outside the chip, for example, a read-only memory (ROM) or another type of static storage device that can store static information and instructions, or a random access memory (RAM).

Specifically, the foregoing processing unit or processor may be a central processing unit (CPU), a network processor (NPU), a graphics processing unit (GPU), a digital signal processor (DSP), an application-specific integrated circuit (ASIC), a field programmable gate array (FPGA) or another programmable logic device, a discrete gate or transistor logic device, a discrete hardware component, or the like. The general-purpose processor may be a microprocessor, or may be any conventional processor or the like.

In addition, it should be noted that the apparatus embodiments described above are merely examples. The units described as separate parts may or may not be physically separate, and parts displayed as units may or may not be physical units, that is, may be located in one place, or may be distributed on a plurality of network units. Some or all of the modules may be selected based on actual requirements to achieve the objectives of the solutions in embodiments. In addition, in the accompanying drawings of the apparatus embodiments provided in this application, a connection relationship between modules indicates that there is a communication connection between the modules, and may be specifically implemented as one or more communication buses or signal cables.

According to the descriptions of the foregoing implementations, a person skilled in the art may clearly understand that this application may be implemented by using software and necessary general-purpose hardware, or certainly may be implemented by using dedicated hardware including an application-specific integrated circuit, a dedicated CPU, a dedicated memory, a dedicated component, and the like. Generally, all functions completed by a computer program can be easily implemented by corresponding hardware. In addition, specific hardware structures used to implement the same function may also be various, for example, an analog circuit, a digital circuit, or a dedicated circuit. However, in this application, software program implementation is a implementation in more cases. Based on such an understanding, the technical solutions of this application essentially or the part contributing to the conventional technology may be implemented in a form of a software product. The computer software product is stored in a readable storage medium, such as a floppy disk, a USB flash drive, a removable hard disk, a read-only memory (ROM), a random access memory (RAM), a magnetic disk, or an optical disc of a computer, and includes several instructions for instructing a computer device (which may be a personal computer, a server, a network device, or the like) to perform the methods described in embodiments of this application.

All or some of the foregoing embodiments may be implemented through software, hardware, firmware, or any combination thereof. When the software is used to implement embodiments, all or some of embodiments may be implemented in a form of a computer program product.

The computer program product includes one or more computer instructions. When the computer program instructions are loaded and executed on a computer, the procedures or the functions according to embodiments of this application are all or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (such as a coaxial cable, an optical fiber, or a digital subscriber line (DSL)) or wireless (such as infrared, radio, or microwave) manner. The computer-readable storage medium may be any usable medium that can be stored by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like.

In the specification, claims, and accompanying drawings of this application, the terms "first", "second", "third", "fourth", and the like (if existent) are intended to distinguish between similar objects but do not necessarily indicate a specific order or sequence. It should be understood that the data termed in such a way are interchangeable in proper circumstances so that embodiments described herein can be implemented in other orders than the order illustrated or described herein. Moreover, the terms "include", "contain" and any other variants mean to cover the non-exclusive inclusion, for example, a process, method, system, product, or device that includes a series of steps or units is not necessarily limited to those expressly listed steps or units, but may include other steps or units not expressly listed or inherent to such a process, method, product, or device.

Finally, it should be noted that the foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A pose estimation method, comprising:

obtaining a first event image and a first target image, wherein the first event image is aligned with the first target image in time sequence, the first target image comprises an red green bule (RGB) image or a depth image, and the first event image comprises an image indicating a movement trajectory that is of a target object and that is generated when the target object moves in a detection range of a motion sensor; determining integration time of the first event image; if the integration time is less than a first threshold, determining that the first target image is not for performing pose estimation; and performing pose estimation based on the first event image.

2. The pose estimation method according to claim 1, wherein the method further comprises:

determining obtaining time of the first event image and obtaining time of the first target image; and if a time difference between the obtaining time of the first event image and the obtaining time of the first target image is less than a second threshold, determining that the first event image is aligned with the first target image in time sequence.

3. The pose estimation method according to claim 2, wherein the obtaining a first event image comprises:

obtaining N consecutive dynamic vision sensor (DVS) events detected by the motion sensor; and integrating the N consecutive DVS events into the first event image; and the method further comprises: determining the obtaining time of the first event image based on obtaining time of the N consecutive DVS events.

4. The pose estimation method according to any one of claims 1 to 3, wherein the determining integration time of the first event image comprises:

determining the N consecutive DVS events that are integrated into the first event image; and determining the integration time of the first event image based on obtaining time of a $1^{st}$ DVS event and obtaining time of a last DVS event in the N consecutive DVS events.

5. The pose estimation method according to any one of claims 1 to 4, wherein the method further comprises:

obtaining a second event image, wherein the second event image comprises an image indicating a movement trajectory that is of the target object and that is generated when the target object moves in the detection range of the motion sensor; if no target image is aligned with the second event image in time sequence, determining that the second event image does not have a target image for jointly performing pose estimation; and performing pose estimation based on the second event image.

6. The pose estimation method according to claim 5, wherein before the performing pose estimation based on the second event image, the method further comprises:

if determining that there is inertial measurement unit IMU data that is aligned with the second event image in time sequence, determining a pose based on the second event image and the IMU data corresponding to the second event image; or if determining that no inertial measurement unit IMU data is aligned with the second event image in time sequence, determining a pose based only on the second event image.

7. The pose estimation method according to any one of claims 1 to 6, wherein the method further comprises:

obtaining a second target image, wherein the second target image comprises an RGB image or a depth image; if no event image is aligned with the second target image in time sequence, determining that the second target image does not have an event image for jointly performing pose estimation; and determining the pose based on the second target image.

8. The pose estimation method according to any one of claims 1 to 7, wherein the method further comprises: performing loopback detection based on the first event image and a dictionary, wherein the dictionary is a dictionary constructed based on event images.

9. The pose estimation method according to claim 8, wherein the method further comprises:

> obtaining a plurality of event images, wherein the plurality of event images are event images for training;
> obtaining visual features of the plurality of event images;
> clustering the visual features based on a clustering algorithm, to obtain clustered visual features, wherein the clustered visual feature has a corresponding descriptor; and
> constructing the dictionary based on the clustered visual features.

10. The pose estimation method according to claim 9, wherein the performing loopback detection based on the first event image and a dictionary comprises:

> determining a descriptor of the first event image;
> determining, in the dictionary, a visual feature corresponding to the descriptor of the first event image;
> determining, based on the visual feature, a bag of words vector corresponding to the first event image; and
> determining a similarity between the bag of words vector corresponding to the first event image and a bag of words vector of another event image, to determine an event image matching the first event image.

11. The pose estimation method according to any one of claims 1 to 10, wherein the method further comprises:

> determining first information of the first event image, wherein the first information comprises an event and/or a feature in the event image; and
> if determining, based on the first information, that the first event image meets at least a first condition, determining that the first event image is a key frame, wherein the first condition is related to a quantity of events and/or a quantity of features.

12. The method according to claim 11, wherein the first condition comprises one or more of: a quantity of events in the first event image is greater than a first threshold, a quantity of event effective regions in the first event image is greater than a second threshold, a quantity of features in the first event image is greater than a third threshold, or a quantity of feature effective regions in the first event image is greater than a fourth threshold.

13. The method according to claim 11 or 12, wherein the method further comprises:

> obtaining the depth image aligned with the first event image in time sequence; and
> if determining, based on the first information, that the first event image meets at least the first condition, determining that the first event image and the depth image are key frames.

14. The method according to claim 11 or 12, wherein the method further comprises:

> obtaining an RGB image aligned with the first event image in time sequence;
> obtaining a quantity of features and/or a quantity of feature effective regions of the RGB image; and
> if determining, based on the first information, that the first event image meets at least the first condition, and the quantity of features of the RGB image is greater than a fifth threshold and/or the quantity of feature effective regions of the RGB image is greater than a sixth threshold, determining that the first event image and the RGB image are key frames.

15. The method according to any one of claims 11 to 14, wherein the if determining, based on the first information, that the first event image meets at least a first condition, determining that the first event image is a key frame comprises:

> if determining, based on the first information, that the first event image meets at least the first condition, determining second information of the first event image, wherein the second information comprises a movement feature and/or a pose feature in the first event image; and
> if determining, based on the second information, that the first event image meets at least a second condition, determining that the first event image is a key frame, wherein the second condition is related to a movement variation and/or a pose variation.

16. The method according to claim 15, wherein the method further comprises:

> determining a definition and/or a brightness consistency indicator of the first event image; and

if determining, based on the second information, that the first event image meets at least the second condition, and the definition of the first event image is greater than a definition threshold and/or the brightness consistency indicator of the first event image is greater than a preset indicator threshold, determining that the first event image is a key frame.

17. The method according to claim 16, wherein the determining a brightness consistency indicator of the first event image comprises:

if a pixel in the first event image represents a light intensity change polarity, calculating an absolute value of a difference between the quantity of events in the first event image and a quantity of events in an adjacent key frame, and dividing the absolute value by a quantity of pixels in the first event image, to obtain the brightness consistency indicator of the first event image; or
if a pixel in the first event image represents a light intensity, performing brightness subtraction between each group of pixels of the first event image and an adjacent key frame, calculating an absolute value of a difference, performing a sum operation on the absolute value corresponding to each group of pixels, and dividing an obtained sum result by a quantity of pixels, to obtain the brightness consistency indicator of the first event image.

18. The method according to claim 15, wherein the method further comprises:

obtaining the RGB image aligned with the first event image in time sequence;
determining a definition and/or a brightness consistency indicator of the RGB image; and
if determining, based on the second information, that the first event image meets at least the second condition, and the definition of the RGB image is greater than a definition threshold and/or the brightness consistency indicator of the RGB image is greater than a preset indicator threshold, determining that the first event image and the RGB image are key frames.

19. The method according to any one of claims 15 to 18, wherein the second condition comprises one or more of a distance between the first event image and a previous key frame exceeds a preset distance value, a rotation angle between the first event image and a previous key frame exceeds a preset angle value, and a distance between the first event image and a previous key frame exceeds a preset distance value and a rotation angle between the first event image and the previous key frame exceeds a preset angle value.

20. The method according to any one of claims 1 to 19, wherein the method further comprises:

determining a first movement region that is in the first event image;
determining, based on the first movement region, a corresponding second movement region that is in the first target image; and
performing pose estimation based on the second movement region that is in the first target image.

21. The method according to claim 20, wherein the determining a first movement region that is in the first event image comprises:

if a DVS that captures the first event image is still, obtaining pixels at which there are event responses and that are in the first event image; and
determining the first movement region based on the pixels at which there are the event responses.

22. The method according to claim 21, wherein the determining the first movement region based on the pixels at which there are the event responses comprises:

determining an outline formed by the pixels at which there are the event responses and that are in the first event image; and
if an area surrounded by the outline is greater than a first threshold, determining that the region surrounded by the outline is the first movement region.

23. The method according to claim 20, wherein the determining a first movement region that is in the first event image comprises:

if a DVS that captures the first event image is moving, obtaining the second event image, wherein the second event image is a previous frame of event image of the first event image;

calculating a displacement magnitude and a displacement direction of a pixel in the first event image relative to the second event image; and

if the displacement direction of the pixel in the first event image is different from a displacement direction of a surrounding pixel, or a difference between the displacement magnitude of the pixel in the first event image and a displacement magnitude of a surrounding pixel is greater than a second threshold, determining that the pixel belongs to the first movement region.

24. The method according to any one of claims 20 to 23, wherein the method further comprises:

determining, based on the first movement region, a corresponding still region that is in the image; and
determining the pose based on the still region that is in the first target image.

25. A data processing apparatus, comprising an obtaining module and a processing module, wherein

the obtaining module is configured to obtain a first event image and a first target image, wherein the first event image is aligned with the first target image in time sequence, the first target image comprises an RGB image or a depth image, and the first event image comprises an image indicating a movement trajectory that is of a target object and that is generated when the target object moves in a detection range of a motion sensor;
the processing module is configured to determine integration time of the first event image;
the processing module is further configured to: if the integration time is less than a first threshold, determine that the first target image is not for performing pose estimation; and
the processing module is further configured to perform pose estimation based on the first event image.

26. The apparatus according to claim 25, wherein

the processing module is further configured to determine obtaining time of the first event image and obtaining time of the first target image; and
the processing module is further configured to: if a time difference between the obtaining time of the first event image and the obtaining time of the first target image is less than a second threshold, determine that the first event image is aligned with the first target image in time sequence.

27. The apparatus according to claim 26, wherein

the obtaining module is further configured to obtain N consecutive DVS events detected by the motion sensor;
the processing module is further configured to integrate the N consecutive DVS events into the first event image; and
the processing module is further configured to determine the obtaining time of the first event image based on obtaining time of the N consecutive DVS events.

28. The apparatus according to any one of claims 25 to 27, wherein the determining integration time of the first event image comprises:

the processing module is further configured to determine the N consecutive DVS events that are integrated into the first event image; and
the processing module is further configured to determine the integration time of the first event image based on obtaining time of a 1st DVS event and obtaining time of a last DVS event in the N consecutive DVS events.

29. The apparatus according to any one of claims 25 to 28, wherein

the obtaining module is further configured to obtain a second event image, wherein the second event image comprises an image indicating a movement trajectory that is of the target object and that is generated when the target object moves in the detection range of the motion sensor;
the processing module is further configured to: if no target image is aligned with the second event image in time sequence, determine that the second event image does not have a target image for jointly performing pose estimation; and
the processing module is further configured to perform pose estimation based on the second event image.

**30.** The apparatus according to claim 29, wherein

the processing module is further configured to: if determining that there is inertial measurement unit IMU data that is aligned with the second event image in time sequence, determine a pose based on a second DVS image and the IMU data corresponding to the second event image; or

the processing module is further configured to: if determining that no inertial measurement unit IMU data is aligned with the second event image in time sequence, determine a pose based only on the second event image.

**31.** The apparatus according to any one of claims 25 to 30, wherein

the obtaining module is further configured to obtain a second target image, wherein the second target image comprises an RGB image or a depth image;

the processing module is further configured to: if no event image is aligned with the second target image in time sequence, determine that the second target image does not have an event image for jointly performing pose estimation; and

the processing module is further configured to determine the pose based on the second target image.

**32.** The apparatus according to any one of claims 25 to 31, wherein

the processing module is further configured to perform loopback detection based on the first event image and a dictionary, wherein the dictionary is a dictionary constructed based on event images.

**33.** The apparatus according to claim 32, wherein

the obtaining module is further configured to obtain a plurality of event images, wherein the plurality of event images are event images for training;

the obtaining module is further configured to obtain visual features of the plurality of event images;

the processing module is further configured to cluster the visual features based on a clustering algorithm, to obtain clustered visual features, wherein the clustered visual feature has a corresponding descriptor; and

the processing module is further configured to construct the dictionary based on the clustered visual features.

**34.** The apparatus according to claim 33, wherein

the processing module is further configured to determine a descriptor of the first event image;

the processing module is further configured to determine, in the dictionary, a visual feature corresponding to the descriptor of the first event image;

the processing module is further configured to determine, based on the visual feature, a bag of words vector corresponding to the first event image; and

the processing module is further configured to determine a similarity between the bag of words vector corresponding to the first event image and a bag of words vector of another event image, to determine an event image matching the first event image.

**35.** The apparatus according to any one of claims 25 to 34, wherein

the processing module is further configured to determine first information of the first event image, wherein the first information comprises an event and/or a feature in the event image; and

the processing module is further configured to: if determining, based on the first information, that the first event image meets at least a first condition, determine that the first event image is a key frame, wherein the first condition is related to a quantity of events and/or a quantity of features.

**36.** The apparatus according to claim 35, wherein the first condition comprises one or more of a quantity of events in the first event image is greater than a first threshold, a quantity of event effective regions in the first event image is greater than a second threshold, a quantity of features in the first event image is greater than a third threshold, and a quantity of feature effective regions in the first event image is greater than a fourth threshold.

**37.** The apparatus according to claim 35 or 36, wherein

the obtaining module is further configured to obtain the depth image aligned with the first event image in time sequence; and

the processing module is further configured to: if determining, based on the first information, that the first event image meets at least the first condition, determine that the first event image and the depth image are key frames.

**38.** The apparatus according to claim 35 or 36, wherein

the obtaining module is further configured to obtain the RGB image aligned with the first event image in time sequence;

the obtaining module is further configured to obtain a quantity of features and/or a quantity of feature effective regions of the RGB image; and

the processing module is further configured to: if determining, based on the first information, that the first event image meets at least the first condition, and the quantity of features of the RGB image is greater than a fifth threshold and/or the quantity of feature effective regions of the RGB image is greater than a sixth threshold, determine that the first event image and the RGB image are key frames.

**39.** The apparatus according to any one of claims 35 to 38, wherein

the processing module is further configured to: if determining, based on the first information, that the first event image meets at least the first condition, determine second information of the first event image, wherein the second information comprises a movement feature and/or a pose feature in the first event image; and

the processing module is further configured to: if determining, based on the second information, that the first event image meets at least a second condition, determine that the first event image is a key frame, wherein the second condition is related to a movement variation and/or a pose variation.

**40.** The apparatus according to claim 39, wherein

the processing module is further configured to determine a definition and/or a brightness consistency indicator of the first event image; and

the processing module is further configured to: if determining, based on the second information, that the first event image meets at least the second condition, and the definition of the first event image is greater than a definition threshold and/or the brightness consistency indicator of the first event image is greater than a preset indicator threshold, determine that the first event image is a key frame.

**41.** The apparatus according to claim 40, wherein

the processing module is further configured to: if a pixel in the first event image represents a light intensity change polarity, calculate an absolute value of a difference between the quantity of events in the first event image and a quantity of events in an adjacent key frame, and divide the absolute value by a quantity of pixels in the first event image, to obtain the brightness consistency indicator of the first event image; or

the processing module is further configured to: if a pixel in the first event image represents a light intensity, perform pixel-by-pixel subtraction between the first event image and an adjacent key frame, calculate an absolute value of a difference, perform a sum operation on the absolute value corresponding to each group of pixels, and divide an obtained sum result by a quantity of pixels, to obtain the brightness consistency indicator of the first event image.

**42.** The apparatus according to claim 39, wherein

the obtaining module is further configured to obtain the RGB image aligned with the first event image in time sequence;

the processing module is further configured to determine a definition and/or a brightness consistency indicator of the RGB image; and

the processing module is further configured to: if determining, based on the second information, that the first event image meets at least the second condition, and the definition of the RGB image is greater than a definition threshold and/or the brightness consistency indicator of the RGB image is greater than a preset indicator threshold, determine that the first event image and the RGB image are key frames.

**43.** The apparatus according to any one of claims 39 to 42, wherein the second condition comprises one or more of a distance between the first event image and a previous key frame exceeds a preset distance value, a rotation angle between the first event image and a previous key frame exceeds a preset angle value, and a distance between the first event image and a previous key frame exceeds a preset distance value and a rotation angle between the first event image and the previous key frame exceeds a preset angle value.

44. The apparatus according to any one of claims 25 to 43, wherein

the processing module is further configured to determine a first movement region in the first event image;
the processing module is further configured to determine, based on the first movement region, a corresponding second movement region that is in the first target image; and
the processing module is further configured to perform pose estimation based on the second movement region in the first target image.

45. The apparatus according to claim 44, wherein

the processing module is further configured to: if a DVS that captures the first event image is still, obtain pixels at which there are the event responses and that are in the first event image; and
the processing module is further configured to determine the first movement region based on the pixels at which there are the event responses.

46. The apparatus according to claim 45, wherein

the processing module is further configured to determine a an outline formed by the pixels at which there are the event responses and that are in the first event image; and
the processing module is further configured to: if an area surrounded by the outline is greater than a first threshold, determine that the region surrounded by the outline is the first movement region.

47. The apparatus according to claim 44, wherein

the processing module is further configured to: if a DVS that captures the first event image is moving, obtain the second event image, wherein the second event image is a previous frame of event image of the first event image;
the processing module is further configured to calculate a displacement magnitude and a displacement direction of a pixel in the first event image relative to the second event image; and
the processing module is further configured to: if the displacement direction of the pixel in the first event image is different from a displacement direction of a surrounding pixel, or a difference between the displacement magnitude of the pixel in the first event image and a displacement magnitude of a surrounding pixel is greater than a second threshold, determine that the pixel belongs to the first movement region.

48. The apparatus according to any one of claims 44 to 47, wherein

the processing module is further configured to determine, based on the first movement region, a corresponding still region that is in the image; and
the processing module is further configured to determine the pose based on the still region that is in the first target image.

49. A data processing apparatus, comprising a processor and a memory, wherein the processor is coupled to the memory;

the memory is configured to store a program; and
the processor is configured to execute the program that is in the memory, to enable the data processing apparatus to perform the method according to any one of claims 1 to 24.

50. A computer-readable storage medium, comprising a program, wherein when the program is run on a computer, the computer is enabled to perform the method according to any one of claims 1 to 24.

51. A computer program product comprising instructions, wherein when the computer program product runs on a computer, the computer is enabled to perform the method according to any one of claims 1 to 24.

AR/VR glasses

Vehicle

Mobile phone

Security monitoring

Camera

Access point/Base station

Cloud platform

Server

FIG. 1A

Antenna 1

Antenna 2

| Mobile communication module 2G/3G/4G/5G [150] | Wireless communication module BT/WLAN/GNSS/NFC/IR/FM [160] |
|---|---|

Sensor module [180]

| Pressure sensor [180A] |
|---|
| Gyroscope sensor [180B] |
| Atmospheric pressure sensor [180C] |
| Magnetic sensor [180D] |
| Acceleration sensor [180E] |
| Distance sensor [180F] |
| Optical proximity sensor [180G] |
| Fingerprint sensor [180H] |
| Temperature sensor [180J] |
| Touch sensor [180K] |
| Ambient light sensor [180L] |
| Bone conduction sensor [180M] |

Speaker [170A]

Receiver [170B]

Microphone [170C]

Headset jack [170D]

Audio module [170]

Displays 1 to N [194]

**Cameras 1 to N [193]**

Indicator [192]

Motor [191]

Button [190]

Internal memory [121]

SIM card interface 1 to N [195]

External memory interface [120]

Processor [110]

Application processor

Image signal processor ISP

**Image sensor [180N]**

**Color sensor [1801N]**

**Motion sensor [1802N]**

USB port [130]

Charging input

Charging management module [140]

Power management module [141]

Battery [142]

FIG. 1B

EP 4 261 778 A1

Data collection

Data collected by a brain-like camera

Data collected by an RGB camera

Data collected by a combination of the RGB camera and the brain-like camera

...

Data encoding and decoding

Encoding and decoding based on the brain-like camera

Encoding and decoding based on the combination of the brain-like camera and the RGB camera

...

Image optimization

Image rebuilding

Motion compensation

...

Application

Movement photography enhancement

Fusion of a DVS image and an RGB image

Simultaneous localization and mapping SLAM

Key frame selection

Pose estimation

Eye tracking

Detection and recognition

...

FIG. 2

FIG. 3-a

FIG. 3-b

200

210

Pixel array circuit

220

Reading circuit

230

Control circuit

FIG. 4-a

300

310

Pixel array circuit

320

Reading circuit

330

Control circuit

FIG. 4-b

Reading mode based
on frame scanning

Reading mode based
on an event stream

| 8 | 0 | 0 | 0 |
|---|---|---|---|
| 0 | 0 | 10 | 0 |
| 0 | 70 | 0 | 0 |
| 0 | 32 | 0 | 0 |

1ˢᵗ frame

| 0 | 0 | 52 | 0 |
|---|---|---|---|
| 0 | 12 | 0 | 0 |
| 0 | 0 | 0 | 60 |
| 0 | 0 | 0 | 0 |

2ⁿᵈ frame

| Event stream <x, y, t, a> |
|---|
| <1, 1, 1, 8> |
| <2, 3, 1, 10> |
| <3, 1, 1, 70> |
| ... |

FIG. 5

| Event stream <x, y, t, a> |
|---|
| <5, 2, 1, 10> |
| <7, 4, 3, 30> |
| <4, 5, 4, 50> |
| ... |

Pixel array

FIG. 6-a

| 0 | 0 | 0 | 0 | 0 | 0 | 0 | 0 | 13 | 0 | 0 |
|---|---|---|---|---|---|---|---|----|---|---|
| 0 | 0 | 0 | 0 | 0 | 0 | 0 | 0 | 0 | 0 | 0 |
| 0 | 0 | 0 | 0 | 0 | 56 | 0 | 0 | 0 | 0 | 0 |
| 0 | 0 | 0 | 0 | 0 | 0 | 0 | 43 | 0 | 0 | 0 |
| 0 | 0 | 0 | 0 | 0 | 0 | 0 | 0 | 0 | 0 | 0 |
| 0 | 0 | 0 | 0 | 0 | 0 | 0 | 0 | 0 | 0 | 0 |

Pixel array

$i^{th}$ frame

FIG. 6-b

| Event stream <x, y, t, a> |
|---|
| <2, 1, 1, 50> |
| <3, 1, 1, 60> |
| <4, 1, 1, 30> |
| ... |

Pixel array

FIG. 6-c

EP 4 261 778 A1

Pixel array

**1st frame**

| 10 | 11 | 10 | 9 | 6 | 4 | 32 | 13 | 13 | 14 | 16 |
|----|----|----|----|----|----|----|----|----|----|----|
| 21 | 2 | 3 | 5 | 11 | 67 | 57 | 65 | 87 | 12 | 24 |
| 4 | 33 | 14 | 37 | 97 | 56 | 190 | 44 | 14 | 11 | 65 |
| 1 | 13 | 45 | 68 | 47 | 239 | 43 | 43 | 34 | 123 | 43 |
| 109 | 49 | 21 | 46 | 89 | 43 | 27 | 78 | 49 | 90 | 43 |
| 14 | 3 | 5 | 8 | 88 | 54 | 55 | 221 | 90 | 42 | 57 |

**2nd frame**

| 11 | 15 | 10 | 7 | 13 | 4 | 22 | 15 | 17 | 20 | 21 |
|----|----|----|----|----|----|----|----|----|----|----|
| 19 | 22 | 23 | 25 | 9 | 66 | 57 | 65 | 89 | 11 | 23 |
| 5 | 30 | 14 | 33 | 90 | 55 | 190 | 45 | 11 | 13 | 66 |
| 0 | 23 | 41 | 66 | 49 | 240 | 43 | 43 | 34 | 122 | 43 |
| 80 | 40 | 5 | 36 | 83 | 43 | 27 | 78 | 49 | 91 | 43 |
| 10 | 16 | 35 | 28 | 89 | 64 | 35 | 207 | 90 | 40 | 60 |

FIG. 6-d

Generate a plurality of data signals corresponding to a
plurality of pixels that are in a pixel array circuit — 501

Read at least one of the plurality of data signals from
the pixel array circuit in a first reading mode — 502

Provide the at least one data signal for a control
circuit — 503

Switch the first reading mode to a second reading
mode based on a mode switching signal — 504

FIG. 7

FIG. 8

FIG. 9

FIG. 10

900

Pixel circuit

901

Light intensity
detection unit

902

Threshold
comparison unit

903

Readout control unit

904

Light intensity
capturing unit

905

Reading circuit

906

Control circuit

FIG. 11

An output event includes light
intensity information

An output event includes polarity
information

Event represented
based on the light
intensity
information

| <x, y, t, a> |
|---|
| <1, 1, 3, 8> |
| <1, 1, 6, 16> |
| <1, 1, 10, 24> |
| <1, 1, 17, 18> |
| ... |

Event represented
based on the
polarity
information

| <x, y, t, a> |
|---|
| <1, 1, 20, −1> |
| <1, 1, 24, −1> |
| <1, 1, 36, +1> |
| ... |
| ... |

FIG. 11-a

165

FIG. 12-a

902

Threshold
comparison unit

904

Light intensity
capturing unit

905

Reading
circuit

955

Reading component

956

Reading component

906

Control circuit

FIG. 12-b

1101

Processor

111

Statistical
model

112

Policy
module

1103

1102

Memory

FIG. 13

FIG. 14

FIG. 15

FIG. 16

FIG. 17

FIG. 18

1700

Vision sensor chip

1702

Parsing circuit

1701

Control circuit

FIG. 19

1801

Generate, by measuring a light intensity variation, at least one data signal corresponding to a pixel that is in a pixel array circuit

1802

Read the at least one data signal from the pixel array circuit in a first event representation manner

1803

Provide the at least one data signal for a control circuit

1804

When receiving, from the control circuit, a conversion signal generated based on the at least one data signal, convert to reading the at least one data signal from the pixel array circuit in a second event representation manner

FIG. 20

1900

Pixel circuit

1901

Light intensity
detection unit

1902

Threshold
comparison unit

1903

Readout control unit

1904

Light intensity
capturing unit

1905

Reading circuit

1907

First encoding unit

1906

Control circuit

FIG. 21

Encode an event based on a
maximum bit width B

Encode an event based on a
maximum bit width (B–1)

Encode an event based on a
maximum bit width (B–2)

Encode an event based on a
maximum bit width (B–n)

Does
an event
generation rate
exceed a
bandwidth?

No → Encode an
output

Yes

FIG. 22

FIG. 23

| Region A | Region B | Region C |
|---|---|---|
| $B_1=2$ | $B_2=3$ | $B_3=2$ |
| Region D | Region E | Region F |
| $B_4=6$ | $B_5=12$ | $B_6=6$ |

FIG. 24

FIG. 25

2400

Vision sensor chip

2402

Parsing circuit

2401

Control circuit

FIG. 26

Binary data stream

| s bits | i bits | |
|---|---|---|

Quantity of events

Bit width

Events

FIG. 27

2601

Generate, by measuring a light intensity variation, at least one data signal corresponding to a pixel that is in a pixel array circuit

2602

Encode the at least one data signal based on a first bit width, to obtain first encoded data

2603

When receiving a first control signal from a control circuit, encode the at least one data signal based on a second bit width indicated by the first control signal, where the first control signal is determined by a control circuit based on the first encoded data

FIG. 28

2700

2701

Pixel array circuit

2702

Reading circuit

2703

Third encoding unit

FIG. 29-a

2800

2701

Pixel array circuit

2702

Reading circuit

2703

Third encoding unit

FIG. 29-b

2900

2701

Pixel array circuit

2702

Reading circuit

2704

Control circuit

2703

Third encoding unit

FIG. 29-c

3000

Pixel circuit

3001

Light intensity
detection unit

3002

Threshold
comparison unit

3003

Readout control
unit

3004

Light intensity
capturing unit

3005

Reading circuit

3006

Control circuit

3007

Third encoding
unit

FIG. 30

2703

Third encoding unit

2702

Reading
circuit

271

Storage
module

272

Comparison
module

273

Encoding module

FIG. 31

| Event sequence | 80 | 112 | 150 | 100 | 65 | 24 | 81 | 123 | 170 | 211 |
|---|---|---|---|---|---|---|---|---|---|---|

Light intensity variation

32   28   50   35   41   57   42   47   41

Predetermined threshold (30)

Encode polarity information and a differential value

(+1, 2)  (+1, 8)  (−1, 20)  (+1, 5)  (−1, 11)  (+1, 27)  (+1, 12)  (+1, 17)  (+1, 11)

Initial moment: Encode the light intensity information 80

FIG. 32

3100

Vision sensor chip

3101

Parsing circuit

FIG. 33

3201

Generate, by measuring a light intensity variation, at least one data signal corresponding to a pixel that is in a pixel array circuit

3202

Encode a differential value based on a first preset bit width

FIG. 34

Light intensity

2L ┄┄┄┄ N2 ●

L ┄ N1 ●          ● N3

N1

$t_1$ $t_2$          $t_3$          Time

● Event

FIG. 35

FIG. 36

FIG. 37

Obtain movement information — 3801

Generate at least one frame of event image based on the movement information — 3802

Obtain a movement parameter — 3803

Initialize a preset value of an optimization model based on the movement parameter, to obtain a value of the optimization model — 3804

Update the at least one frame of event image based on the value of the optimization model, to obtain updated at least one frame of event image — 3805

FIG. 38

FIG. 39

Obtain a target task, and determine iteration duration based on the target task — 4001

Obtain movement information — 4002

Generate at least one frame of event image based on the movement information — 4003

Obtain a movement parameter obtained in previous iteration based on an optimization model — 4004

Update the event image based on the movement parameter, to obtain an updated event image — 4005

No

Does iteration end? — 4006

Yes

Output updated at least one frame of event image — 4007

FIG. 40

Iteration time=1          Iteration time=3          Iteration time=5

FIG. 41

4201 —

4202 —

4204 —

| Movement parameter | → Compensate → | Event image | ← Initialize ← | Data collected by a DVS |

Update ↑

4203

| Contrast | ← Maximize ← |

FIG. 42

Movement
parameter $\theta_1$

Compensate

Event image 1

Iterative
optimization 1

Update

Contrast

Maximize

Initialize

Movement
parameter $\theta_2$

Compensate

Event image 2

Iterative
optimization 2

Update

Contrast

Maximize

Initialize

Movement
parameter $\theta_3$

Compensate

Event image 3

Iterative
optimization 3

Update

Contrast

Maximize

FIG. 43

```
                                                                    4401
  ┌─────────────────────────────────────────────────────┐
  │           Obtain data collected by an IMU            │
  └─────────────────────────────────────────────────────┘
                           │
                           ▼                              4402
  ┌─────────────────────────────────────────────────────┐
  │            Initialize a movement parameter           │
  └─────────────────────────────────────────────────────┘
                           │
                           ▼                              4403
  ┌ ─ ─ ─ ─ ─ ─ ─ ─ ─ ─ ─ ─ ─ ─ ─ ─ ─ ─ ─ ─ ─ ─ ─ ─ ─ ┐
   Obtain a target task, and determine iteration duration based on the
  │                      target task                    │
  └ ─ ─ ─ ─ ─ ─ ─ ─ ─ ─ ─ ─ ─ ─ ─ ─ ─ ─ ─ ─ ─ ─ ─ ─ ─ ┘
                           │
                           ▼                              8004
  ┌─────────────────────────────────────────────────────┐
  │              Obtain movement information             │
  └─────────────────────────────────────────────────────┘
                           │
                           ▼                              4405
  ┌─────────────────────────────────────────────────────┐
  │     Generate at least one frame of event image based on the
  │                movement information                 │
  └─────────────────────────────────────────────────────┘
                           │
                           ▼                              4406
  ┌─────────────────────────────────────────────────────┐
  │   Update the at least one frame of event image based on the
  │  movement parameter, to obtain updated at least one frame of
  │                     event image                     │
  └─────────────────────────────────────────────────────┘
```

Is the iteration duration reached?    4407

No   4408    Yes

Update the movement parameter

4409

Output optimized at least one frame of event image

FIG. 44

Obtain movement information — 4501

Generate an event image based on the movement information — 4502

Determine, from a preset color pool based on at least one event included in the event image, a color type corresponding to each pixel that is in the event image, to obtain a first rebuilt image — 4503

Scan the event image for a plurality of times in different directions to obtain a plurality of frames of rebuilt images, and fuse the plurality of frames of rebuilt images to obtain an updated first rebuilt image — 4504

No — Determine whether the first rebuilt image meets a preset condition — 4505

Yes

Other processing — 4506

FIG. 45

Scanning
direction

1<sup>st</sup> line

2<sup>nd</sup> line

3<sup>rd</sup> line

4<sup>th</sup> line

5<sup>th</sup> line

S1

S2

S3

S4

S5

Event

No event

FIG. 46A

FIG. 46B

FIG. 47A

1st line

2nd line

3rd line

4th line

5th line

S1  S2

S3

S4  S5

First color type

Second color type

FIG. 47B

4801

4802

4803

Event image
obtaining

Preprocessing

Image
rebuilding

Two-color
image

FIG. 48

Initialize two colors ⎯ 4901

Change a scanning direction ⎯ 4909

Scan an event image ⎯ 4902

Rebuild a color of a pixel that is in a two-color image ⎯ 4906

Does scanning end? ⎯ 4903

Yes

No

Is a requirement met? ⎯ 4907

Does a current pixel include an event? ⎯ 4904

No

No

Yes

Yes

Output the two-color image ⎯ 4908

Change a color ⎯ 4905

FIG. 49

FIG. 50

FIG. 51

```
┌──────────────────────────────────────────────┐      5201
│                                                │
│   Detect movement information of a target object│
│                                                │
└──────────────────────────────────────────────┘
                        │
                        ▼
┌──────────────────────────────────────────────┐      5202
│                                                │
│  Determine focusing information based on the movement│
│                  information                    │
└──────────────────────────────────────────────┘
                        │
                        ▼
┌──────────────────────────────────────────────┐      5203
│                                                │
│   Focus on the target object in a preset range based on the│
│  focusing information, and shoot an image in the preset range│
└──────────────────────────────────────────────┘
```

FIG. 52

Movement
region 1

Movement
region k

Movement
region n

Center
point 1

Center
point k

Center
point n

$F(x_c, y_c, t)$

FIG. 53

Focus distributed on an RGB
pixel array

Nearest
focus

Focus region

FIG. 54

FIG. 55

5601

A DVS performs movement monitoring

5602

Perform prediction to obtain a predicted region, and determine whether to trigger an RGB for shooting

No

Yes

5603

Perform focusing based on the predicted region

5604

Adjust an exposure parameter and perform shooting

5605

Enhance movement details

FIG. 56

Shooting range

FIG. 57

5801

FIG. 58

EP 4 261 778 A1

FIG. 59

FIG. 60

200

RGB image

DVS event in an
identical time period

Enhance movement
details

FIG. 61

RGB camera

Focus lock

Exposure

Output

Trigger

DVS

Motion
detection

Events in an identical time
period of an RGB image

t

Enhance
movement
details

FIG. 62

6301

A DVS performs movement monitoring

No

Determine,
based on a region in which
a target object is currently located,
whether to trigger shooting
of an RGB

6302

Yes

6303

Perform focusing based on the region in
which the target object is currently located

6304

Adjust an exposure parameter and perform
shooting

6305

Enhance movement details

FIG. 63

RGB camera

DVS

FIG. 64

1801

DVS

RGB camera

FIG. 65

FIG. 66

FIG. 67

FIG. 68

FIG. 69A

6902

Aperture  Night  Portrait  Photo  Video  Pro  More

FIG. 69B

FIG. 69C

FIG. 70

FIG. 71

FIG. 72A

FIG. 72B

Obtain a first dynamic image and a plurality of shot RGB images — 7301

Calculate, based on the first dynamic image, a shake degree corresponding to each RGB image — 7302

Does an RGB image need to be re-shot? — 7303

No

Yes

Calculate an exposure parameter — 7304

Perform re-shooting to obtain an RGB image whose shake degree is not higher than a first preset value — 7305

Calculate a fusion weight based on the shake degree of each RGB image, and fuse a plurality of RGB images based on the fusion weight of each RGB image to obtain a target image — 7306

FIG. 73

FIG. 74

FIG. 75

WeChat official
account

RGB image

Dynamic image

FIG. 76

FIG. 77

FIG. 78

FIG. 79

FIG. 80

FIG. 81

Obtain an event stream and a frame of a first RGB image

8201

Construct a mask based on the event stream

8202

Obtain a second RGB image based on the event stream, the first RGB image, and the mask, where the second RGB image is an RGB image obtained by removing a target object

8203

FIG. 82

Event stream: A lightning contour represents an event image

$t_1$        $t_2$    t

FIG. 83

Image I

Shooting scenario f(t₁) at t₁                    Shooting scenario f(t₂) at t₂

FIG. 84

Background region

Movement region

Mask

FIG. 85

Shooting scenario f(x) at
moment x

Mask M(x)

$x-\Delta t$    $x$    $x+\Delta t$    t

FIG. 86

Image I including a moving object

Image I' obtained by removing
the moving object

FIG. 87

X

Image I₁ at
moment t₁

Mask M₁

=

X

Image I₂ at
moment t₂

Mask M₂

=

(Image I₁ at moment t₁ + Image I₂ at moment t₂) ÷ (Mask M₁ + Mask M₂) = Image I' obtained by removing a moving object

Image I₁ at
moment t₁

Image I₂ at
moment t₂

Mask M₁

Mask M₂

Image I' obtained
by removing a
moving object

FIG. 88

Shooting scenario f(t₁) at
t₁

Shooting scenario f(t₂)
at t₂

Event
stream

t₁   t₂

t

An overlapping region
is excessively large

FIG. 89

Shooting scenario
$f(t_1)$ at $t_1$

Shooting scenario
$f(t_1)$ at $t_1$

Shooting scenario
$f(t_2)$ at $t_2$

Event
stream

Detect a sudden movement change based on
the event stream, and trigger shooting of a
third RGB image

Shooting scenarios
in a time period $[t_1,$
$t_2]$ in a normal
exposure process

Third RGB image
automatically
captured

FIG. 90

First RGB image (image I)          Third RGB image (image B$_k$)

Second RGB image (image I') without a moving object

FIG. 91

Application mode of a
single image I

$$I' = \frac{I \cdot \int_{t_1}^{t_2} e^{c \cdot \int_{t_1}^{t_2} e(s)ds} \cdot M(t)dt}{\int_{t_1}^{t_2} M(t) \cdot \int_{t_1}^{t_2} e^{c \cdot \int_{t_1}^{t} e(s)ds} dt}$$

FIG. 92

Application mode of an
image I and an image B$_k$

FIG. 93

$$I' = \frac{I \cdot \int_{t_1}^{t_2} e^{c \cdot \int_{t_1}^{t_2} e(s)ds} \cdot M(t)dt + \sum_{k=1,2,\ldots} B_k * M_k}{\int_{t_1}^{t_2} M(t) \cdot \int_{t_1}^{t_2} e^{c \cdot \int_{t_1}^{t} e(s)ds} dt + \sum_{k=1,2,\ldots} M_k}$$

FIG. 94A

← **Settings**

| | |
|---|---|
| Video resolution | [16:9]1080p > |
| Video frame rate | 30 fps  > |
| Universal | |
| IMU | |
| DVS | |
| Infrared | |
| Mirror reflection | |
| Automatically add a watermark | |
| Record geographical location information | |
| Shooting mute | |
| Floating shutter | |

Restore default values

FIG. 94B

(a)

(b)

FIG. 95

FIG. 96

FIG. 97

FIG. 98a

FIG. 98b

FIG. 99

Input data

Event image

RGB image

Depth image

IMU data

SLAM procedure

Pose estimation → Key frame?

Pose estimation → Mapping

Key frame? → Yes → Closed loop?

Mapping → Global optimization

Closed loop? → Yes → Global optimization

FIG. 100

10100

Obtain a first event image and a target image — 10101

Determine integration time of a first event image — 10102

If the integration time is less than a first threshold, determine that the target image is not for performing pose estimation — 10103

Perform pose estimation based on the first event image — 10104

FIG. 101

FIG. 102

1030

| Obtain an event image | 10301 |

$\downarrow$

| Determine first information of the event image | 10302 |

$\downarrow$

| If it is determined, based on the first information, that the event image meets a first condition, determine that the event image is a key frame | 10303 |

FIG. 103

(a)                                        (b)

FIG. 104

1050

```
┌─────────────────────────────────────────────┐
│                                              │      10501
│            Obtain an event image             │
│                                              │
└─────────────────────────────────────────────┘
                       │
                       ▼
┌─────────────────────────────────────────────┐
│   Determine first information of the event   │      10502
│   image, where the first information         │
│   includes an event and/or a feature in      │
│   the event image                            │
└─────────────────────────────────────────────┘
                       │
                       ▼
┌─────────────────────────────────────────────┐
│  If it is determined, based on the first     │
│  information, that the event image meets a   │      10503
│  first condition, determine second          │
│  information of the event image, where the   │
│  second information includes a movement      │
│  feature and/or a pose feature in the event  │
│  image                                       │
└─────────────────────────────────────────────┘
                       │
                       ▼
┌─────────────────────────────────────────────┐
│  If it is determined, based on the second    │
│  information, that the event image meets a   │      10504
│  second condition, determine that the event  │
│  image is a key frame, where the second      │
│  condition is related to a movement          │
│  variation and/or a pose variation           │
└─────────────────────────────────────────────┘
```

FIG. 105

<u>1060</u>

| Obtain an event image and an image corresponding to the event image, where environment information captured by the event image and environment information captured by the image are the same | ⟋ 10601 |

↓

| Determine a first movement region that is in the event image | ⟋ 10602 |

↓

| Determine, based on the first movement region, a corresponding second movement region that is in the image | ⟋ 10603 |

↓

| Perform pose estimation based on the second movement region that is in the image | ⟋ 10604 |

FIG. 106

Depth image/ RGB image → Still region detection → Still region pose estimation

Event image → Still region detection

FIG. 107

Depth image/
RGB image

Movement
region
detection

Movement
region pose
estimation

Event image

FIG. 108a

Depth image/
RGB image

Still region and
movement region
detection

Entire region
pose
estimation

Event image

FIG. 108b

Infrared
light source

Infrared
light source

DVS sensor

DVS sensor

FIG. 109

FIG. 110

FIG. 111

FIG. 112

Image processing apparatus

11303 — Motion sensor

11301 — Obtaining module

11302 — Processing module

FIG. 113

Image processing apparatus

11403 — Motion sensor

11401 — Obtaining module

11402 — Processing module

FIG. 114

Image processing apparatus

11501 — Motion sensor

11502 — Calculation module

11503 — Shooting module

11504 — Enhancement module

FIG. 115

Image processing apparatus

11603 — Motion sensor

11601 — Obtaining module

11602 — Processing module

FIG. 116

Image processing apparatus 11700

11701

11702

11703

Obtaining module

Construction module

Processing module

FIG. 117

Data processing apparatus 11800

11801

11802

Obtaining module

Processing module

FIG. 118

Data processing apparatus 11900

11901

11902

Obtaining module

Processing module

FIG. 119

Data processing apparatus 12000

12001

Obtaining module

12002

Processing module

FIG. 120

12101

Processor

12102

Memory

12103

RGB sensor

12104

Motion sensor

FIG. 121

## INTERNATIONAL SEARCH REPORT

| | International application No. |
|---|---|
| | **PCT/CN2020/142050** |

**A. CLASSIFICATION OF SUBJECT MATTER**

G06T 7/292(2017.01)i

According to International Patent Classification (IPC) or to both national classification and IPC

**B. FIELDS SEARCHED**

Minimum documentation searched (classification system followed by classification symbols)

H04N,G06T

Documentation searched other than minimum documentation to the extent that such documents are included in the fields searched

Electronic data base consulted during the international search (name of data base and, where practicable, search terms used)

WPI, EPODOC, CNPAT, CNKI, IEEE: 机器人, 无人车, 无人机, 定位, 位姿, 姿态, 估计, 预测, 动态, 拍摄, 图像, 场景, 环境, 状态, 选择, 调整, 传感器, 自适应, 切换, 积分时间, 间隔, 累计, 开启, 关闭, 关键帧, 闭环检测, SLAM, RGB, DVS, IMU, robot, VR, AR, unmanned vehicle, aerial, position, pose, estimation, dynamic, film, image, blur, environment, state, select, sensor, adapt, switch, integration time, on, off, frame

**C. DOCUMENTS CONSIDERED TO BE RELEVANT**

| Category* | Citation of document, with indication, where appropriate, of the relevant passages | Relevant to claim No. |
|---|---|---|
| A | CN 111949027 A (ZHUHAI YIWEIXIAN ROBOT CO., LTD.) 17 November 2020 (2020-11-17) description, paragraphs [0035]-[0086], and figures 1-10 | 1-51 |
| A | CN 111770290 A (CHANGCHUN INSTITUTE OF OPTICS, FINE MECHANICS AND PHYSICS, CHINESE ACADEMY OF SCIENCES) 13 October 2020 (2020-10-13) entire document | 1-51 |
| A | CN 111133473 A (SAMSUNG ELECTRONICS CO., LTD.) 08 May 2020 (2020-05-08) entire document | 1-51 |
| A | CN 104363380 A (BEIJING ZHIGU RUITUO TECHNOLOGY SERVICES CO., LTD.) 18 February 2015 (2015-02-18) entire document | 1-51 |
| A | US 2018359418 A1 (RICOH COMPANY, LTD.) 13 December 2018 (2018-12-13) entire document | 1-51 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **16 September 2021** | **28 September 2021** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2020/142050**

| Patent document cited in search report | | | Publication date (day/month/year) | Patent family member(s) | | | Publication date (day/month/year) |
|---|---|---|---|---|---|---|---|
| CN | 111949027 | A | 17 November 2020 | None | | | |
| CN | 111770290 | A | 13 October 2020 | None | | | |
| CN | 111133473 | A | 08 May 2020 | EP | 3639243 | A1 | 22 April 2020 |
| | | | | US | 2019096081 | A1 | 28 March 2019 |
| | | | | WO | 2019066563 | A1 | 04 April 2019 |
| CN | 104363380 | A | 18 February 2015 | WO | 2016058497 | A1 | 21 April 2016 |
| | | | | US | 2017310866 | A1 | 26 October 2017 |
| US | 2018359418 | A1 | 13 December 2018 | EP | 3413555 | A1 | 12 December 2018 |
| | | | | CN | 109040521 | A | 18 December 2018 |
| | | | | JP | 2018206365 | A | 27 December 2018 |

Form PCT/ISA/210 (patent family annex) (January 2015)

**245**